(19) Europäisches Patentamt
European Patent Office
Office européen des brevets

(11) EP 4 671 413 A1

# (12) EUROPEAN PATENT APPLICATION

(43) Date of publication:
**31.12.2025 Bulletin 2026/01**

(21) Application number: **25166842.2**

(22) Date of filing: **27.03.2025**

(51) International Patent Classification (IPC):
***C23F 11/14*** *(2006.01)* ***C09K 8/54*** *(2006.01)*
***C23F 11/16*** *(2006.01)*

(52) Cooperative Patent Classification (CPC):
**C23F 11/162; C09K 8/54; C23F 11/146; C23F 11/148; C23F 11/149**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.06.2024 US 202418758637**

(71) Applicant: **The Boeing Company**
**Arlington, VA 22202 (US)**

(72) Inventors:
- **SCHUETTE, Waynie M.**
  **Arlington, 22202 (US)**
- **ZWEIG, Andrew M.**
  **Arlington, 22202 (US)**

(74) Representative: **Smart, Jessica Ann et al**
**Kilburn & Strode LLP**
**Lacon London**
**84 Theobalds Road**
**London WC1X 8NL (GB)**

## (54) CORROSION INHIBITION COMPOSITIONS AND ASSOCIATED METHODS FOR INHIBITING CORROSION ON METALLIC SUBSTRATES

(57) A corrosion inhibition composition includes a carrier and a Schiff base in admixture with the carrier. The carrier includes at least one of water, a hydrocarbon solvent, and a binder.

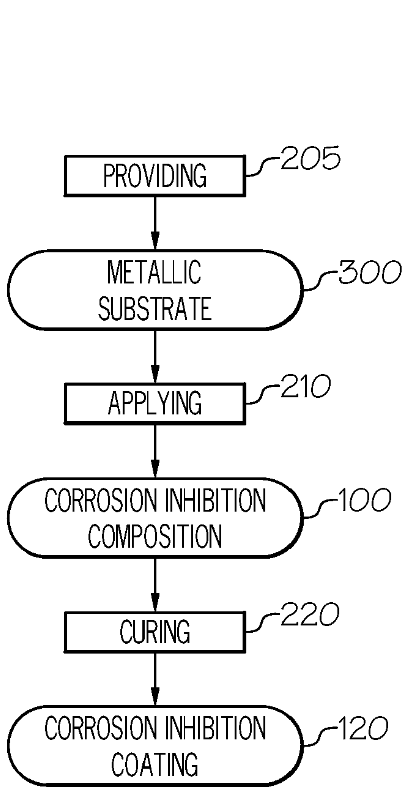


FIG. 1

EP 4 671 413 A1

## Description

GOVERNMENT CONTRACT

This invention was made with Government support under contract number W912HQ-21-C-0067 awarded by SERDP, the Strategic Environmental Research and Development Program, Department of Defense. The government has certain rights in this invention.

PRIORITY

This application is a continuation-in-part of 17/366,242 filed on July 2, 2021, the entire contents of which are incorporated herein by reference.

FIELD

The present disclosure generally relates to corrosion inhibition and, more particularly, to organic corrosion inhibition compositions for use on metallic substrates, such as aluminum and its alloys.

BACKGROUND

Hexavalent chromium is an effective corrosion inhibitor for metals and alloys. However, hexavalent chromium is subject to many safety and compliance restrictions. Consequently, there is a need for alternative corrosion inhibitors that are environmentally friendly, safe, and effective.

Accordingly, those skilled in the art continue with research and development efforts in the field of organic corrosion inhibitors for metals and alloys.

SUMMARY

Disclosed is a corrosion inhibition composition.

In one example, the corrosion inhibition composition includes a carrier and a Schiff base in admixture with the carrier, the carrier includes at least one of water, a hydrocarbon solvent, and a binder.

Also disclosed is a method for inhibiting corrosion on a metallic substrate.

In one example, the method includes applying to the metallic substrate a corrosion inhibition composition including a Schiff base.

Also disclosed is a coated metallic substrate.

In one example, the coated metallic substrate includes a metallic substrate and a coating comprising a Schiff base.

Other examples of the disclosed will become apparent from the following detailed description, the accompanying drawings, and the appended claims. Where the term 'comprises' or 'comprising' has been used, this also provides basis for the term 'consists of' or 'consisting of' throughout the specification.

BRIEF DESCRIPTION OF THE DRAWINGS

Figure 1 is a flowchart of a method for inhibiting corrosion on a metallic substrate;

Figure 2 is a block diagram of aircraft production and service methodology; and

Figure 3 is a schematic illustration of an aircraft.

Figure 4 is a FTIR spectrum of thiosemicarbazone of isophthalaldehyde.

Figure 5 is a 1H NMR spectrum of thiosemicarbazone of isophthalaldehyde.

Figure 6 is a 13 C NMR spectrum of thiosemicarbazone of isophthalaldehyde.

Figure 7 is a FTIR spectrum of thiosemicarbazone of salicylaldehyde.

Figure 8 is a 1H NMR spectrum of thiosemicarbazone of salicylaldehyde.

Figure 9 is a 13C NMR spectrum of thiosemicarbazone of salicylaldehyde.

Figure 10 is a FTIR spectrum of thiosemicarbazone of 2-pyridine carboxyaldehyde.

Figure 11 is a 1H NMR spectrum of thiosemicarbazone of 2-pyridine carboxyaldehyde.

Figure 12 is a 13C NMR spectrum of thiosemicarbazone of 2-pyridine carboxyaldehyde.

Figure 13 is a FTIR spectrum of thiosemicarbazone of 8-hydroxyquinoline-2-carboxyaldehyde.

Figure 14 is a 1H NMR spectrum of thiosemicarbazone of 8-hydroxyquinoline-2-carboxyaldehyde.

Figure 15 is a 13C NMR spectrum of thiosemicarbazone of 8-hydroxyquinoline-2-carboxyaldehyde.

Figure 16 is a FTIR spectrum of 4-phenyl-3-thiosemicarbazone of isophthalaldehyde.

Figure 17 is a 1H NMR spectrum of 4-phenyl-3-thiosemicarbazone of isophthalaldehyde.

Figure 18 is a 13C NMR spectrum of 4-phenyl-3-thiosemicarbazone of isophthalaldehyde.

Figure 19 is a FTIR spectrum of 4-phenyl-3-thiosemicarbazone of pentan-2,4-dione.

Figure 20 is a 1H NMR spectrum of 4-phenyl-3-thiosemicarbazone of pentan-2,4-dione.

Figure 21 is a 13C NMR spectrum of 4-phenyl-3-thiosemicarbazone of pentan-2,4-dione.

Figure 22 is a FTIR spectrum of thiosemicarbazone of mesityl oxide.

Figure 23 is a 1H NMR spectrum of thiosemicarbazone of mesityl oxide.

Figure 24 is a 13C NMR spectrum of thiosemicarbazone of mesityl oxide.

Figure 25 is a FTIR spectrum of thiosemicarbazone of terephthalaldehyde.

Figure 26 is a 1H NMR spectrum of thiosemicarbazone of terephthalaldehyde.

Figure 27 is a 13C NMR spectrum of thiosemicarbazone of terephthalaldehyde.

Figure 28 is a FTIR spectrum of 4-ethyl-3-thiosemicarbazone of isophthalaldehyde.

Figure 29 is a 1H NMR spectrum of 4-ethyl-3-thiosemicarbazone of isophthalaldehyde.

Figure 30 is a 13C NMR spectrum of 4-ethyl-3-thiosemicarbazone of isophthalaldehyde.

Figure 31 is a FTIR spectrum of thiosemicarbazone of pentan-2,4-dione.

Figure 32 is a 1H NMR spectrum of thiosemicarbazone of pentan-2,4-dione.

Figure 33 is a 13C NMR spectrum of thiosemicarbazone of pentan-2,4-dione.

Figure 34 is a FTIR spectrum of 4-methyl-thiosemicarbazone of salicylaldehyde.

Figure 35 is a 1H NMR spectrum of 4-methyl-thiosemicarbazone of salicylaldehyde.

Figure 36 is a 13C NMR spectrum of 4-methyl-thiosemicarbazone of salicylaldehyde.

Figure 37 is a FTIR spectrum of 8-hydroxyquinoline-2-carboxyaldehyde of phenyl thiosemicarbazone.

Figure 38 is a 1H NMR spectrum of 8-hydroxyquinoline-2-carboxyaldehyde of phenyl thiosemicarbazone.

Figure 39 is a 13C NMR spectrum of 8-hydroxyquinoline-2-carboxyaldehyde of phenyl thiosemicarbazone.

Figure 40 is a FTIR spectrum of thiocarbohydrazone of salicylaldehyde (1:1 mol ratio).

Figure 41 is a 1H NMR spectrum of thiocarbohydrazone of salicylaldehyde (1:1 mol ratio).

Figure 42 is a 13C NMR spectrum of thiocarbohydrazone of salicylaldehyde (1:1 mol ratio).

Figure 43 is a FTIR spectrum of thiocarbohydrazone of salicylaldehyde (1:2 mol ratio).

Figure 44 is a 1H NMR spectrum of thiocarbohydrazone of salicylaldehyde (1:2 mol ratio).

Figure 45 is a 13C NMR spectrum of thiocarbohydrazone of salicylaldehyde (1:2 mol ratio).

Figure 46 is a FTIR spectrum of bis-thiosemicarbazone of 2,6-diacetylpyridine.

Figure 47 is a 1H NMR spectrum of bis-thiosemicarbazone of 2,6-diacetylpyridine.

Figure 48 is a 13C NMR spectrum of bis-thiosemicarbazone of 2,6-diacetylpyridine.

Figure 49 is a FTIR spectrum of 2-pyridinecarboxyaldehyde & thiocarbohydrazide.

Figure 50 is a 1H NMR spectrum of 2-pyridinecarboxyaldehyde & thiocarbohydrazide.

Figure 51 is a 13C NMR spectrum of 2-pyridinecarboxyaldehyde & thiocarbohydrazide.

Figure 52 is a FTIR Spectrum of 4-phenyl 3-thiosemicarbazone of Terephthalaldehyde.

Figure 53 is a 1H NMR Spectrum of 4-phenyl 3-thiosemicarbazone of Terephthalaldehyde.

Figure 54 is a 13C NMR Spectrum of 4-phenyl 3-thiosemicarbazone of Terephthalaldehyde.

Figure 55 is a FTIR Spectrum of 4-methylthiosemicarbazone of Terephthalaldehyde.

Figure 56 is a 1H NMR Spectrum of 4-methylthiosemicarbazone of Terephthalaldehyde.

Figure 57 is a 13C NMR Spectrum of 4-methylthiosemicarbazone of Terephthalaldehyde.

Figure 58 is a FTIR Spectrum of 4-phenyl 3-thiosemicarbazone of 2,6-diacetylpyridine.

Figure 59 is a 1H NMR Spectrum of 4-phenyl 3-thiosemicarbazone of 2,6-diacetylpyridine.

Figure 60 is a 13C NMR Spectrum of 4-phenyl 3-thiosemicarbazone of 2,6-diacetylpyridine.

Figure 61 is a FTIR Spectrum of 4-methylthiosemicarbazone of 2,6-diacetylpyridine.

Figure 62 is a 1H NMR Spectrum of 4-methylthiosemicarbazone of 2,6-diacetylpyridine.

Figure 63 is a 13C NMR Spectrum of 4-methylthiosemicarbazone of 2,6-diacetylpyridine.

Figure 64 shows Open Circuit Potential (OCP) Measurements for Al 2024 in 0.9 M NaCl Solution with CI1.

Figure 65 shows OCP Measurements for Al 2024 in 0.9 M NaCl Solution with CI2.

Figure 66 shows OCP Measurements for Al 2024 in 0.9 M NaCl Solution with CI3.

Figure 67 shows OCP Measurements for Al 2024 in 0.9 M NaCl Solution with CI4.

Figure 68 shows OCP Measurements for Al 2024 in 0.9 M NaCl Solution with CI5.

Figure 69 shows OCP Measurements for Al 2024 in 0.9 M NaCl Solution with CI6.

Figure 70 shows OCP Measurements for Al 2024 in 0.9 M NaCl Solution with CI7.

Figure 71 shows OCP Measurements for Al 2024 in 0.9 M NaCl Solution with CI8.

Figure 72 shows final OCP Values for Inhibitors CI1-CI8 in Al 2024.

Figure 73 shows OCP Measurements for LHE ZnNi-Coated Steel in 0.9 M NaCl Solution with CI1, CI2, CI4, CI6, CI9, CI10, and CI11.

Figure 74 shows the final OCP values for LHE ZnNi-coated steel in a 0.9 M NaCl solution with various inhibitors, indicating the electrochemical potential at different inhibitor levels.

Figure 75 is an Evans diagram illustrating the impact of cathodic corrosion inhibitors on the corrosion potential and current density of a metal.

Figure 76 shows corrosion rates of Al 2024 with various inhibitor types and concentrations.

Figure 77 shows inhibitor efficiencies of different corrosion inhibitors at various concentrations, highlighting their performance in reducing corrosion rates for aluminum alloy 2024.

Figure 78 displays the corrosion rates of LHE ZnNi-coated steel in a 0.9 M NaCl solution with different corrosion inhibitors, showing the impact of each inhibitor type.

Figure 79 shows the efficiencies of different corrosion inhibitors for LHE ZnNi-coated steel, indicating their effectiveness in reducing corrosion rates.

Figure 80 presents the Rp response results for the thiosemicarbazide base with different aldehyde levels, showing the effect on polarization resistance.

Figure 81 displays the initial EIS Rp response results for the thiosemicarbazide base with various aldehyde levels.

Figure 82 shows the final EIS Rp response results for the thiosemicarbazide base with different aldehyde levels.

Figure 83 presents the corrosion rate results for the thiosemicarbazide base with varying aldehyde levels.

Figure 84 displays the corrosion rate in mils per year (MPY) for the thiosemicarbazide base with different aldehyde levels.

Figure 85 provides the Rp response results for thiosemicarbazide and phenyl thiosemicarbazide with various aldehydes.

Figure 86 shows the initial EIS Rp response results for thiosemicarbazide and phenyl thiosemicarbazide with different aldehydes.

Figure 87 presents the final EIS Rp response results for thiosemicarbazide and phenyl thiosemicarbazide with various aldehydes.

Figure 88 displays the corrosion rate results for thiosemicarbazide and phenyl thiosemicarbazide with different aldehydes.

Figure 89 shows the corrosion rate in mils per year (MPY) for thiosemicarbazide and phenyl thiosemicarbazide with various aldehydes.

Figure 90 presents the Rp response results for thiosemicarbazide and phenyl thiosemicarbazide with different aldehydes for combinations conducted in the US.

Figure 91 compares the Rp response results for thiosemicarbazide and phenyl thiosemicarbazide with various aldehydes between experiments conducted in India.

## DETAILED DESCRIPTION

Organic corrosion inhibitors are desirable because of their environmentally-friendly material properties and for the safety of those exposed. Further, organic corrosion inhibitors are relatively easy to synthesize thus are advantageous for processing. Dispersion of organic corrosion inhibitors in a polymer/coating composition enhances the corrosion inhibition of metals and alloys, such as aluminum and aluminum alloys. The compositions can be applied easily using existing methods, including immersion, spray, brushing, and the like.

High strength aluminum alloys, such as those used in the aerospace industry, are prone to corrosion due to the intermetallics present. Therefore, the primary purpose of coating aluminum alloys with coatings containing corrosion inhibitors is for corrosion protection. Coating aluminum and aluminum alloys with organic corrosion inhibitors is ideal for manufacturing because it is relatively low cost, lightweight, and utilizes environmentally benign materials. Curing may be achieved by air drying or thermal curing.

Referring to Figure 1, in one or more examples, the disclosed corrosion inhibition composition 100 includes a carrier. The carrier may be (or may include) water, a hydrocarbon solvent, and/or a binder.

The corrosion inhibition composition 100 further includes a Schiff base in admixture with the carrier.

In one expression, the Schiff base of the disclosed corrosion inhibition composition 100 is (or includes) a thiosemicarbazone.

In one expression, the Schiff base of the disclosed corrosion inhibition composition 100 is (or includes) a member selected from the group consisting of thiosemicarbazone of isophthalaldehyde, thiosemicarbazone of terephthalaldehyde, thiosemicarbazone of salicylaldehyde, thiosemicarbazone of pyridine carboxyaldehyde, thiosemicarbazone of 2,6-diacetylpyridine, thiosemicarbazone of 5-hydroxymethyl-2-furaldehyde, thiosemicarbazone of 8-hydroxyquinoline-2-carboxyaldehyde, thiosemicarbazone of pentanedione, thiosemicarbazone of acetonylacetone, thiosemicarbazone of pyruvic aldehyde dimethyl acetal, thiosemicarbazone of mesityl oxide, and mixtures thereof.

In one expression, the Schiff base of the disclosed corrosion inhibition composition 100 is (or includes) an ethyl thiosemicarbazone.

In one expression, the Schiff base of the disclosed corrosion inhibition composition 100 is (or includes) a member selected from the group consisting of ethyl thiosemicarbazone of isophthalaldehyde, ethyl thiosemicarbazone of terephthalaldehyde, ethyl thiosemicarbazone of salicylaldehyde, ethyl thiosemicarbazone of pyridine carboxyaldehyde, ethyl thiosemicarbazone of 2,6-diacetylpyridine, ethyl thiosemicarbazone of 5-hydroxymethyl-2-furaldehyde, ethyl thiosemicarbazone of 8-hydroxyquinoline-2-carboxyaldehyde, ethyl thiosemicarbazone of pentanedione, ethyl thiosemicarbazone of acetonylacetone, ethyl thiosemicarbazone of pyruvic aldehyde dimethyl acetal, ethyl thiosemicarbazone of mesityl oxide, and mixtures thereof.

In one expression, the Schiff base of the disclosed corrosion inhibition composition 100 is (or includes) a methyl thiosemicarbazone.

In one expression, the Schiff base of the disclosed corrosion inhibition composition 100 is (or includes) a member selected from the group consisting of methyl thiosemicarbazone of isophthalaldehyde, methyl thiosemicarbazone of terephthalaldehyde, methyl thiosemicarbazone of salicylaldehyde, methyl thiosemicarbazone of pyridine carboxyaldehyde, methyl thiosemicarbazone of 2,6-diacetylpyridine, methyl thiosemicarbazone of 5-hydroxymethyl-2-furaldehyde, methyl thiosemicarbazone of 8-hydroxyquinoline-2-carboxyaldehyde, methyl thiosemicarbazone of pentanedione, methyl thiosemicarbazone of acetonylacetone, methyl thiosemicarbazone of pyruvic aldehyde dimethyl acetal, methyl thiosemicarbazone of mesityl oxide, and mixtures thereof.

In one expression, the Schiff base of the disclosed corrosion inhibition composition 100 is (or includes) a phenyl thiosemicarbazone.

In one expression, the Schiff base of the disclosed corrosion inhibition composition 100 is (or includes) a member selected from the group consisting of phenyl thiosemicarbazone of isophthalaldehyde, phenyl thiosemicarbazone of terephthalaldehyde, phenyl thiosemicarbazone of salicylaldehyde, phenyl thiosemicarbazone of pyridine carboxyaldehyde, phenyl thiosemicarbazone of 2,6-diacetylpyridine, phenyl thiosemicarbazone of 5-hydroxymethyl-2-furaldehyde, phenyl thiosemicarbazone of 8-hydroxyquinoline-2-carboxyaldehyde, phenyl thiosemicarbazone of pentanedione, phenyl thiosemicarbazone of acetonylacetone, phenyl thiosemicarbazone of pyruvic aldehyde dimethyl acetal, phenyl

thiosemicarbazone of mesityl oxide, and mixtures thereof.

In yet another expression, the Schiff base of the disclosed corrosion inhibition composition 100 is (or includes) a thiocarbohydrazone.

In yet another expression, the Schiff base of the disclosed corrosion inhibition composition 100 is (or includes) a member selected from the group consisting of thiocarbohydrazone of isophthalaldehyde, thiocarbohydrazone of terephthalaldehyde, thiocarbohydrazone of salicylaldehyde, thiocarbohydrazone of pyridine carboxyaldehyde, thiocarbohydrazone of 2,6-diacetylpyridine, thiocarbohydrazone of 5-hydroxymethyl-2-furaldehyde, thiocarbohydrazone of 8-hydroxyquinoline-2-carboxyaldehyde, thiocarbohydrazone of pentanedione, thiocarbohydrazone of acetonylacetone, thiocarbohydrazone of pyruvic aldehyde dimethyl acetal, thiocarbohydrazone of mesityl oxide, and mixtures thereof.

In another expression, the Schiff base of the disclosed corrosion inhibition composition 100 is (or includes) a member selected from the group consisting of (E)-N-methyl-2-((5-methylfuran-2-yl)methylene)hydrazine-1-carbothioamide, (E)-2-((5-methylfuran-2-yl)methylene)hydrazine-1-carbothioamide, (2E)-N-methyl-2-(3-phenylallylidene)hydrazine-1-carbothioamide, (E)-2-(4-isopropylbenzylidene)-N-methylhydrazine-1-carbothioamide, (E)-2-(4-isopropylbenzylidene)hydrazine-1-carbothioamide, (2E)-2-(3-phenylallylidene)hydrazine-1-carbothioamide, and mixtures thereof.

In another expression, the Schiff base of the disclosed corrosion inhibition composition 100 is (or includes) a member selected from the group consisting of (E)-1-(5-methylfuran-2-yl)-N-(4H-1,2,4-triazol-4-yl)methanimine, (E)-4-Hydroxy-N'-((5-methylfuran-2-yl)methylene)benzohydrazide, (E)-N'-((5-methylfuran-2-yl)methylene)benzohydrazide, (E)-2-((5-methylfuran-2-yl)methylene)hydrazine-1-carboxamide, (E)-1-phenyl-N-(4H-1,2,4-triazol-4-yl)methanimine, 4-Hydroxy-N'-[(E)-phenylmethylidene]benzohydrazide, (E)-N'-benzylidenebenzohydrazide, 4-hydroxy-N'-((1E)-3-phenylallylidene)benzohydrazide, N'-((1E)-3-phenylallylidene)benzohydrazide, (E)-1-(4-Ethylphenyl)-N-(4H-1,2,4-triazol-4-yl) methanimine, (E)-N'-(4-ethylbenzylidene)-4-hydroxybenzohydrazide, E (E)-N'-(4-ethylbenzylidene)benzohydrazide, (E)-1-[4-(propan-2-yl)phenyl]-N-(4H-1,2,4-triazol-4-yl)methanimine, 4-Hydroxy-N'-[(E)-[4-(propan-2-yl)phenyl]methylidene]benzohydrazide, N'-[(E)-[4-(propan-2-yl)phenyl]methylidene]benzohydrazide, (E)-2-(4-isopropylbenzylidene)hydrazine-1-carboxamide, (E)-1-(4-isopropylbenzylidene)urea, and mixtures thereof.

In yet another expression, the Schiff base of the corrosion inhibition composition 100 has the following structure:

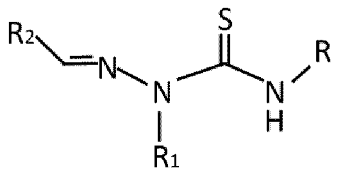

The R2 of the above-referenced structure is one of an alkyl, an aryl/substituted aryl, and a heterocyclic/substituted heterocyclic group. The R is one of a hydrogen, an aryl/substituted aryl, and an alkyl group. Further, the R1 is one of a hydrogen, an aryl/substituted aryl, and an alkyl group.

The Schiff base of the corrosion inhibition composition 100 may be present in the corrosion inhibition composition 100 at a concentration of approximately 0.1 mmol to approximately 25 mmol. In one particular example, the Schiff base of the corrosion inhibition composition 100 is at a concentration of approximately 1 mmol to approximately 10 mmol.

The carrier of the corrosion inhibition composition 100 may be (or may include) a polymeric binder. In one example, the polymeric binder is (or includes) a sol gel-based polymer. The sol gel-based polymer is a film forming sol-gel based polymer such that the corrosion inhibition composition 100 includes the Schiff base in admixture with the carrier and, upon curing, forms a corrosion inhibition coating 120. In another example, the carrier is commercially available sol-gel based carrier Ultracorr ACX-W from M/s Harind Chemicals & Pharmaceuticals Pvt. Ltd., India.

Referring to Figure 1, disclosed is a method 200 for inhibiting corrosion on a metallic substrate 300. The method 200 includes providing 205 a metallic substrate 300. The method 200 further includes applying 210 to the metallic substrate 300 a corrosion inhibition composition 100 that includes a Schiff base. The applying 210 is performed by immersing the metallic substrate 300 in the corrosion inhibition composition 100, spraying the corrosion inhibition composition 100 onto the metallic substrate 300, brushing the corrosion inhibition composition 100 onto the metallic substrate 300, dipping the corrosion inhibition composition 100, or any other suitable means.

The step of applying 210 to the metallic substrate 300 a corrosion inhibition composition 100 that includes a Schiff base may further include applying 210 to the metallic substrate 300 a corrosion inhibition composition 100 that includes a Schiff base and a carrier. The carrier may be, for example, water, a hydrocarbon solvent, and/or a binder. In one example, the binder includes a polymeric binder. In another example, the polymeric binder includes a sol gel-based polymer. The sol gel-based polymer is a film forming sol-gel based polymer such that the corrosion inhibition composition 100 includes the Schiff base in admixture with the carrier and, upon curing, forms a corrosion inhibition coating 120.

Various metallic substrates 300 may be used. In an example, the metallic substrate 300 of the method 200 may be steel, such as carbon steel. In another example, the metallic substrate 300 of the method 200 may be selected from the

group consisting of aluminum alloy, a zinc alloy, and a nickel alloy. In one specific, non-limiting example, the metallic substrate 300 is aluminum or an aluminum alloy. In another specific, non-limiting example, the metallic substrate 300 is 2024 aluminum alloy. In yet another specific, non-limiting example, the metallic substrate 300 is a 7XXX series aluminum alloy.

Referring to Figure 1, the method 200 may further include curing 220 the corrosion inhibition composition 100 to yield a corrosion inhibition coating 120. The curing 220 is performed by air drying, subjecting the corrosion inhibition composition 100 to thermal treatment, or any other suitable means of curing the corrosion inhibition composition 100 to yield a corrosion inhibition coating 120.

Examples of the subject matter disclosed herein may be described in the context of aircraft manufacturing and service method 1100 as shown in Figure 2 and aircraft 1102 as shown in Figure 3. During pre-production, illustrative method 1100 may include specification and design (block 1104) of aircraft 1102 and material procurement (block 1106). During production, component and subassembly manufacturing (block 1108) and system integration (block 1110) of aircraft 1102 may take place. Thereafter, aircraft 1102 may go through certification and delivery (block 1112) to be placed in service (block 1114). While in service, aircraft 1102 may be scheduled for routine maintenance and service (block 1116). Routine maintenance and service may include modification, reconfiguration, refurbishment, etc. of one or more systems of aircraft 1102.

Each of the processes of illustrative method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Figure 3, aircraft 1102 produced by illustrative method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

Apparatus(es) and method(s) shown or described herein may be employed during any one or more of the stages of the manufacturing and service method 1100. For example, components or subassemblies corresponding to component and subassembly manufacturing (block 1108) may be fabricated or manufactured in a manner similar to components or subassemblies produced while aircraft 1102 is in service (block 1114). Also, one or more examples of the apparatus(es), method(s), or combination thereof may be utilized during production stages (block 1108 and block 1110), for example, by substantially expediting assembly of or reducing the cost of aircraft 1102. Similarly, one or more examples of the apparatus or method realizations, or a combination thereof, may be utilized, for example and without limitation, while aircraft 1102 is in service (block 1114) and/or during maintenance and service (block 1116).

Different examples of the apparatus(es) and method (s) disclosed herein include a variety of components, features, and functionalities. It should be understood that the various examples of the apparatus(es) and method (s), disclosed herein, may include any of the components, features, and functionalities of any of the other examples of the apparatus(es) and method (s) disclosed herein in any combination.

Many modifications of examples, set forth herein, will come to mind of one skilled in the art, having the benefit of the teachings, presented in the foregoing descriptions and the associated drawings. Therefore, it is to be understood that the subject matter disclosed herein is not to be limited to the specific examples illustrated and that modifications and other examples are intended to be included within the scope of the appended claims. Moreover, although the foregoing description and the associated drawings describe examples of the subject matter, disclosed herein, in the context of certain illustrative combinations of elements and/or functions, it should be appreciated that different combinations of elements and/or functions may be provided by alternative implementations without departing from the scope of the appended claims.

## FIRST EXPERIMENTAL RESULTS

Examples of the disclosed corrosion inhibition composition 100 and method 200 of inhibiting corrosion on metallic substrates are provided herein. The metallic substrate 300 used in the following examples is Al 2024. The carrier used in the following examples is a sol-gel based polymeric binder.

For synthesis of the Schiff base inhibitor, equimolar mixtures of aldehyde and primary amine were taken in a round bottomed flask, dissolved in ethanol, and a few drops of glacial Acetic acid were added to the mixture. The reaction mixture was refluxed for 2-3 hrs. The completion of reaction was monitored by TLC (mobile phase used is Ethyl acetate: Pet Ether at 5:1 ratio). After completion of reaction, the reaction mixture was cooled to room temperature and remaining solvent evaporated. Precipitate was obtained after solvent evaporation was filtered, washed with cold water, and dried.

The compound was recrystallized from absolute ethanol. Recrystallized compound was characterized using Fourier-transform infrared spectroscopy (FTIR), Nuclear magnetic resonance spectroscopy (NMR) for structure confirmation.

Electrochemical analysis was used to measure corrosion inhibition efficiency of synthesized the corrosion inhibition compositions 100 having a Schiff base on the Al 2024 alloys. The corrosion inhibition compositions 100 were utilized in a 5% NaCl solution to test inhibition properties when exposed to a corrosive environment. After the corrosion inhibition compositions 100 were cured, they were tested with electrochemical analysis.

Table 1 illustrates the Schiff base inhibitors used in the examples disclosed herein.

Table 1:

| Sr No. | Inhibitor | IUPAC Name | Structure | Molecular Formula | Molecular weight |
|---|---|---|---|---|---|
| 1 | 5MF-4ATri | (E)-1-(5-methylfuran-2-yl)-N-(4H-1,2,4-triazol-4-yl)methanimine | 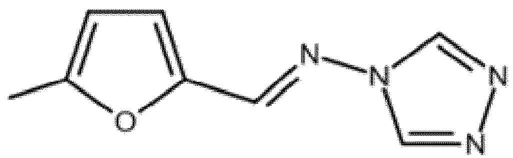 | C8H8N4O | 176.18 |
| 2 | 5MF-4HBH | (E)-4-hydroxy-N'-((5-methylfuran-2-yl)methylene)ben zohydrazide | 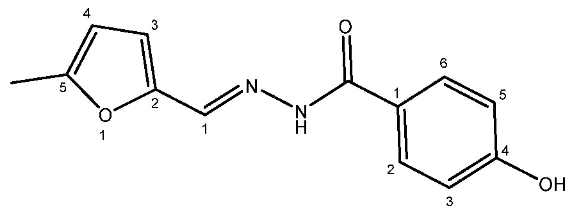 | C13H12N2O3 | 244.25 |
| 3 | 5MF-4M3TSC | (E)-N-methyl-2-((5-methylfuran-2-yl)methylene) hyd razine-1-carbothioamide | 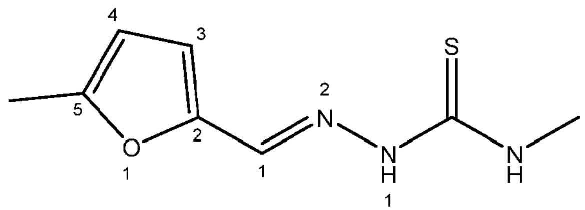 | C8H11N3OS | 197.26 |
| 4 | 5MF-BH | (E)-N'-((5-methylfuran-2-yl)methylene)ben zohydrazide | 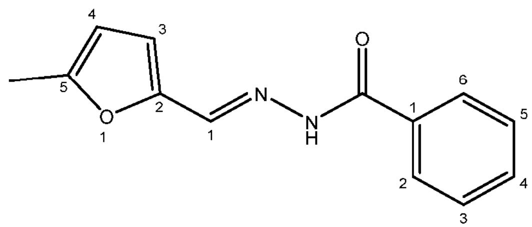 | C13H12N2O2 | 228.25 |
| 5 | 5MF-SC | (E)-2-((5-methylfuran-2-yl)methylene)hyd razine-1-carboxamide | 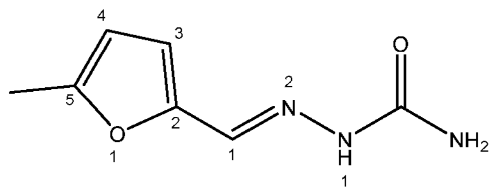 | C7H9N3O2 | 167.17 |

(continued)

| Sr No. | Inhibitor | IUPAC Name | Structure | Molecular Formula | Molecular weight |
|---|---|---|---|---|---|
| 6 | 5MF-TSC | (E)-2-((5-methylfuran-2-yl)methylene)hyd razine-1-carbothioamide | 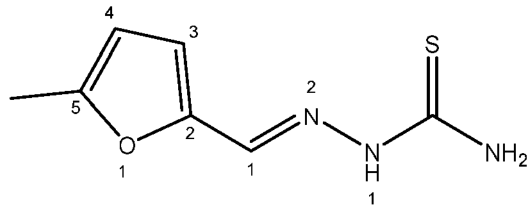 | C7H9N3OS | 183.23 |
| 7 | B-4ATri | (E)-1-phenyl-N-(4H-1,2,4-triazol-4-yl)methanimine | 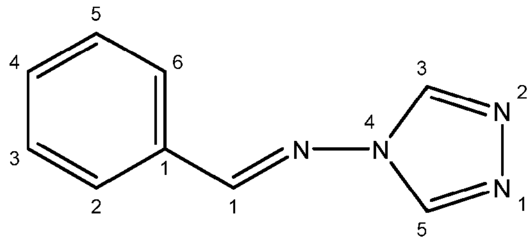 | C9H8N4 | 172.19 |
| 8 | B-4HBH | 4-Hydroxy-N'-[(E)-phenylmethyliden e]benzohydrazide | 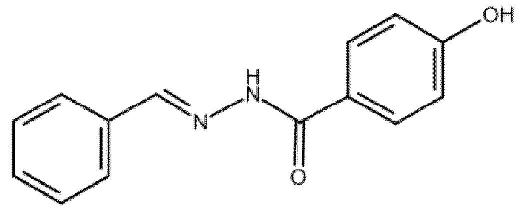 | C14H12N2O2 | 240.26 |
| 9 | B-BH | (E)-N'-benzylidenebenzo hydrazide | 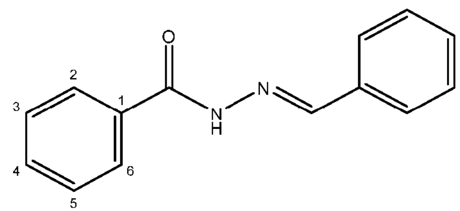 | C14H12N2O | 22426 |

(continued)

| Sr No. | Inhibitor | IUPAC Name | Structure | Molecular Formula | Molecular weight |
|---|---|---|---|---|---|
| 10 | C-4HBH | 4-hydroxy-N'-((1E)-3-phenylallylidene) benzo-hydrazide | 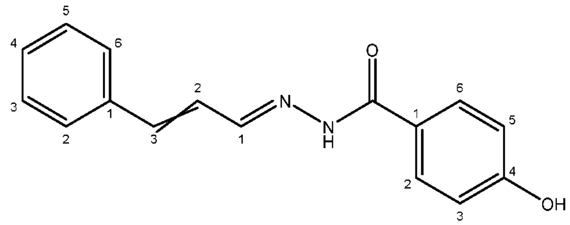 | C16H14N2O2 | 266.30 |
| 11 | C-4M3TSC | (2E)-N-methyl-2-(3-phenylallylidene) hydra-zine-1-carbothioamide | 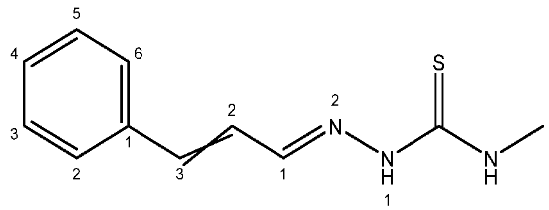 | C11H13N3S | 219.31 |
| 12 | C-BH | N'-((1E)-3-phenylallylidene) benzohydrazide | 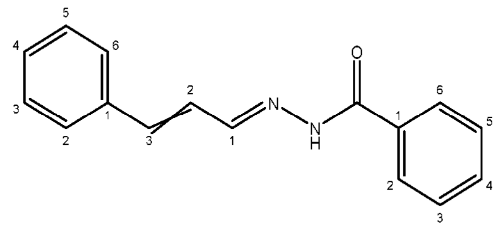 | C16H14N2O | 250.30 |
| 13 | C-TSC | (2E)-2-(3-phenylallylidene) hydrazine-1-car-bothioamide | 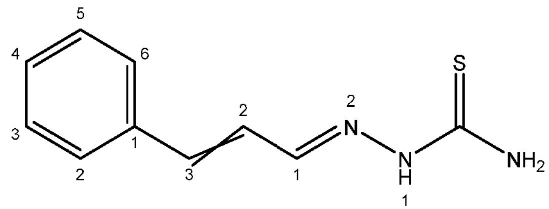 | C10H11N3S | 205.28 |

(continued)

| Sr No. | Inhibitor | IUPAC Name | Structure | Molecular Formula | Molecular weight |
|---|---|---|---|---|---|
| 14 | EB-4ATri | (E)-1-(4-Ethylphenyl)-N-(4H-1,2,4-triazol-4-yl) methanimine | 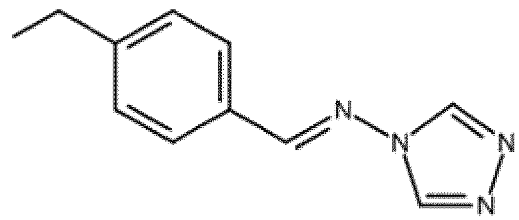 | C11H12N4 | 200.25 |
| 15 | EB-4HBH | (E)-N'-(4-ethylbenzylidene) -4-hydroxybenzo-hyd razide | 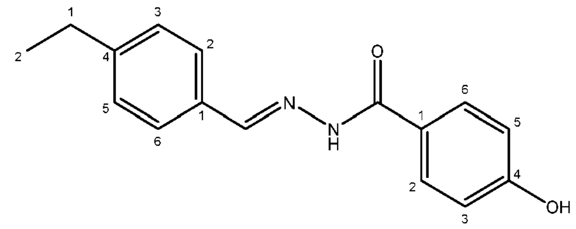 | C16H16N2O2 | 268.32 |
| 16 | EB-BH | E (E)-N'-(4-ethylbenzylidene) benzohydrazide | 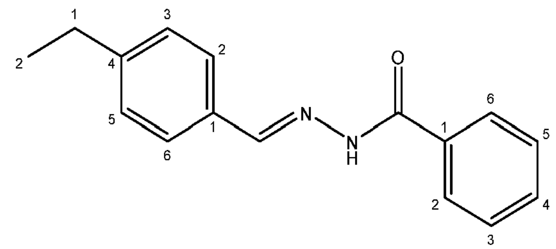 | C16H16N2O | 252.32 |
| 17 | IPB-4ATri | (E)-1-[4-(propan-2-yl)phenyl]-N-(4H-1,2,4-tria-zol-4-yl)methanimine | 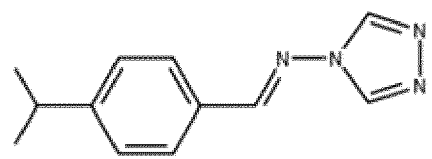 | C12H14N4 | 214.27 |

(continued)

| Sr No. | Inhibitor | IUPAC Name | Structure | Molecular Formula | Molecular weight |
|---|---|---|---|---|---|
| 18 | IPB-4HBH | 4-Hydroxy-N'-[(E)-[4-(propan-2-yl)phenyl] methyli dene]benzohydraz ide | 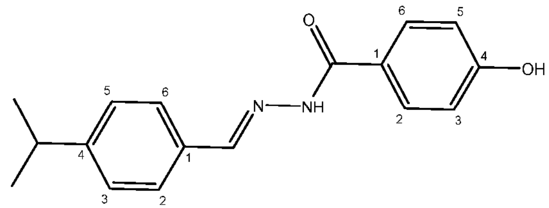 | C17H18N2O2 | 282.34 |
| 19 | IPB-4M3TSC | (E)-2-(4-isopropylbenzylid ene)-N-methylhydra-zine-1-carbothioamide | 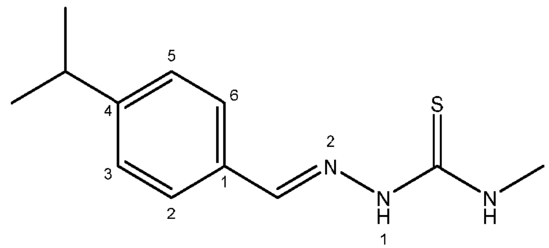 | C12H17N3S | 235.35 |
| 20 | IPB-BH | N'-[(E)-[4-(propan-2-yl)phenyl]methyli dene] benzohydraz ide | 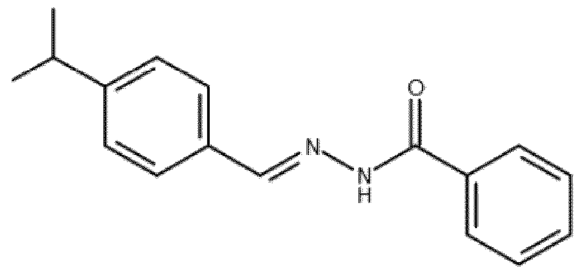 | C17H18N2O | 266.34 |
| 21 | IPB-SC | (E)-2-(4-isopropylbenzylid ene)hydrazine-1-car-boxamide | 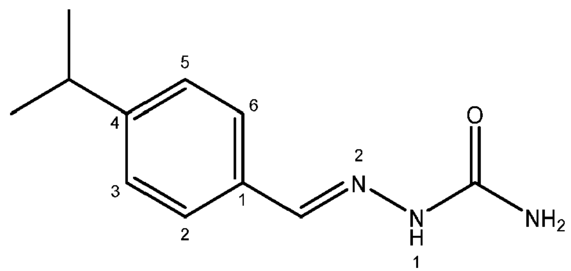 | C11H15N3O | 205.26 |

(continued)

| Sr No. | Inhibitor | IUPAC Name | Structure | Molecular Formula | Molecular weight |
|---|---|---|---|---|---|
| 22 | IPB-TSC | (E)-2-(4-isopropylbenzylid ene)hydrazine-1-car-bothioamide | 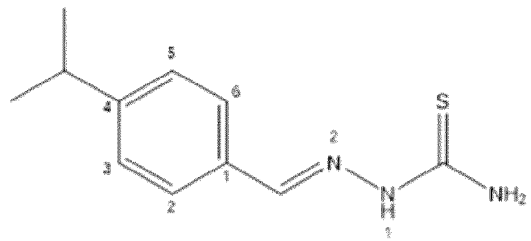 | C11H15N3S | 221.32 |
| 23 | IPBU | (E)-1-(4-isopropylbenzylid ene)urea | 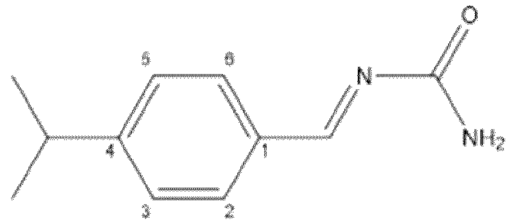 | C11H14N2O | 190.25 |

Table 2 illustrates the aldehydes and primary amines used for synthesis of Schiff base inhibitors in the examples disclosed herein.

Table 2:

| Aldehyde | Primary Amine |
|---|---|
| Benzaldehyde (B)<br>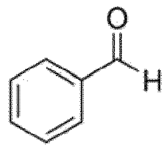 | 4-Amino triazole (4ATri)<br>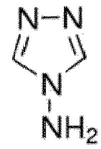 |
| 4-Isopropylbenzaldehyde (IPB)<br>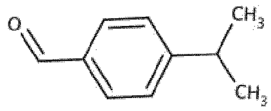 | Benzohydrazide (BH)<br>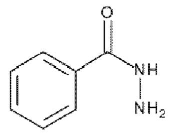 |
| 5-Methyl Furfural (5MF)<br>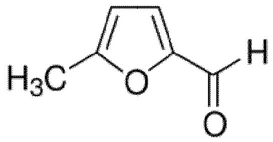 | 4-Hydroxyl benzohydrazide (4HBH)<br>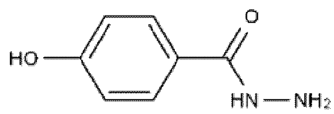 |
| Cinnamaldehyde (C)<br>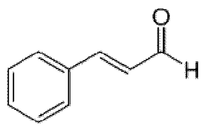 | Urea (U)<br>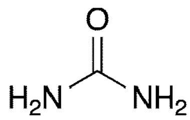 |
| 4-Ethylbenzaldehyde (EB)<br>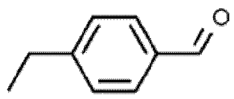 | Thiosemicarbazide (TSC)<br>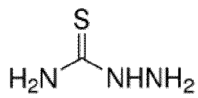 |
| | 4-Methyl-3 Thiosemicarbazide (4M3TSC)<br>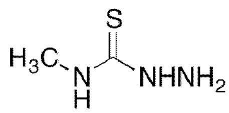 |
| | Semicarbazide (SC)<br>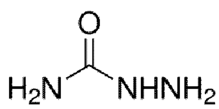 |

Corrosion inhibition efficiency of synthesized Schiff base inhibitors was measured using electrochemical method of analysis. Linear polarization resistance (LPR) of Al 2024 measured in 5% NaCl and inhibitor solution mixture as electrolyte.

The technique involved monitoring the current response when a small potential typically of the order of $\pm$10mV, relative to its Open Circuit Potential (OCP) is applied to the working electrode (Al 2024 in this case). As the potential of the material (working electrode) is changed, a current will be induced to flow between the working and counter electrodes, and the material's resistance to polarization can be found by taking the slope of the potential versus current curve. This polarization resistance is proportional to the corrosion rate. As inhibitors bind to the surface of Al 2024 and passivates the surface, the calculated polarization resistance of the Al 2024 panel is expected to increase. Inhibition efficiency for inhibitor is calculated using following equation:

$$\% \, Inhibition \, Efficiency = \frac{Rp_{inh} - Rp_0}{Rp_{inh}} \times 100$$

In the above-referenced calculation, $R_{pinh}$ and $R_{p0}$ represent LPR with and without inhibitor, respectively.

LPR measurements were carried out using CH Instrument's electrochemical workstation model CHI 600E. The electrochemical cell consists of three electrode flat cell with platinum as counter electrode, saturated calomel electrode (SCE) as reference electrode and Al 2024 as working electrode. Pre-cleaned Al 2024 panels were exposed to electrolyte solution for different increments of time. Experimental parameters began with panel preparation, as detailed below.

Panel preparation included: 1) an acetone wipe to degrease panels; 2) dip in 10% NaOH solution for 4 min; 3) rinse in DI water (2 time); 4) dip in 50% HNO3 for 1 min; 5) rinse in DI water (2 time); and 6) air dry the panels.

Electrolyte preparation included: 1) preparation of phosphate buffer saline (PBS) solution (pH 7.4); 2) preparation of 5% NaCl Solution in PBS solution; 3) adding 300 ml of 5% NaCl solution prepared in PBS solution to a beaker and add 0.5 gm of inhibitor; 4) subject to a bath-sonicator for 15 min; 5) filtration through Whatmann filter paper no. 1; and 6) using the filtrate as electrolyte.

A potentiostat was used for electroanalytical data collection. Experimental parameters include: 1) measuring open circuit potential (OCP) for 15 min; 2) running potential sweep at ± 10mV of OCP with scan rate of 0.1667 mV/S; 3) calculating linear polarization resistance LPR within a range of ± 10mV of OCP; 4) measuring LPR after 1hr, 3hr and 5hrs of exposure by following step 1-3; 5) plotting Rp vs time for each inhibitor; and 6) calculating corrosion efficiency for inhibitor with LPR measured post 5 hours of exposure.

Table 3 illustrates the percent of corrosion inhibition efficiency for each corrosion inhibitor tested on an Al 2024 metallic substrate 300.

Table 3:

| Sr no. | Inhibitor | LPR after 5 hrs exposure (K Ohm) | % Corrosion Inhibition Efficiency |
|---|---|---|---|
| 1 | Blank | 7.31 | |
| 2 | Dichromate | 217.2 | 96.6 |
| 3 | 5MF-4ATri | 19.58 | 62.7 |
| 4 | 5MF-4HBH | 19.12 | 61.8 |
| 5 | 5MF-4M3TSC | 107.9 | 93.2 |
| 6 | 5MF-BH | 10.45 | 30.0 |
| 7 | 5MF-SC | 14.23 | 48.6 |
| 8 | 5MF-TSC | 340.7 | 97.9 |
| 9 | B-4ATri | 27.01 | 72.9 |
| 10 | B-4HBH | 34.01 | 78.5 |
| 12 | C-4HBH | 15.94 | 54.1 |
| 13 | C-4M3TSC | 237.5 | 96.9 |
| 14 | C-BH | 16.97 | 56.9 |
| 15 | C-TSC | 71.34 | 89.8 |
| 16 | EB-4ATri | 17.38 | 57.9 |
| 17 | EB-4HBH | 19.64 | 62.8 |
| 18 | EB-BH | 9.72 | 24.8 |
| 19 | IPB-4ATri | 18.01 | 59.4 |
| 20 | IPB-4HBH | 25.36 | 71.2 |
| 21 | IPB-4M3TSC | 247.5 | 97.0 |
| 22 | IPB-BH | 18.1 | 59.6 |
| 24 | IPB-TSC | 78.29 | 90.7 |
| 25 | IPBU | 7.39 | 1.1 |

As shown in Table 3 above, the Schiff base inhibitors synthesized using Thiosemicarbazide (Thiosemicarbazone) exhibited the highest percentage of corrosion inhibition efficiency.

Another variable tested during experimentation includes the concentration of Schiff base inhibitor dispersed into the carrier. The carrier used in the examples is commercially available sol-gel based carrier Ultracorr ACX-W from M/s Harind Chemicals & Pharmaceuticals Pvt. Ltd., India. The Thiosemicarbazones were dispersed into the sol-gel based polymer at three different concentrations as per the details mentioned in Table 4 below.

Table 4 illustrates inhibitor quantity used for preparation of different concentrations.

Table 4:

| Sr. No | Inhibitor | Molecular Weight | 1 mM in 300ml | 5mM in 300ml | 10 mM in 300ml |
|---|---|---|---|---|---|
| **1** | 5MF-4M3TSC | 197.26 | 0.059 | 0.296 | 0.592 |
| **2** | 5MF-TSC | 183.23 | 0.055 | 0.275 | 0.550 |
| **3** | C-4M3TSC | 219.31 | 0.066 | 0.329 | 0.658 |
| **4** | C-TSC | 205.28 | 0.062 | 0.308 | 0.616 |
| **5** | IPB-4M3TSC | 235.35 | 0.071 | 0.353 | 0.706 |
| **6** | IPB-TSC | 221.32 | 0.066 | 0.332 | 0.664 |

Synthesis and application of coating done as per following steps: 1) inhibitor as per required concentration was dissolved in minimum amount of Ethanol; 2) Inhibitor solution prepared in step 1 was added to 300 ml of sol-gel based polymer under stirring. Mixture was stirred for 2 hours on magnetic stirrer at 600 RPM; 3) Above coating composition applied on pre-cleaned Al 2024 (as per process described previously) substrate using dip application. Coating cured for 7 days at RT.; and 4) Corrosion inhibition efficiency of coating was measured using electrochemical analysis (Potentiodynamic polarization). Analysis was performed in 5% salt solution prepared in PBS buffer solution. Inhibition efficiency for coating calculated using following equation:

$$\%\ Inhibition\ Efficiency = \frac{i_{corr\ (uninhibited)} - i_{corr\ (inhibitor)}}{i_{Corr\ (uninhibited)}} X\ 100$$

The coating compositions were evaluated by potentiodynamic polarization. Results shown in Table 5 below indicate a decrease in corrosion current density ($I_{corr}$) and corrosion rate of Al 2024 with addition of inhibitor. This in turn reveals the corrosion inhibiting nature of the coating.

Table 5:

| Inhibitor | Inhibitor Concentration (mM) | $E_{corr}$(V) | $I_{corr}$(A) | Corrosion Rate (mil/year) | %Corrosion Inhibition Efficiency |
|---|---|---|---|---|---|
| **5MF-4M3TSC** | 0 | -0.686 | $10.61 \times 10^{-9}$ | $4.421 \times 10^{-3}$ | |
| | 1 | -0.667 | $10.38 \times 10^{-9}$ | $4.323 \times 10^{-3}$ | 2.17 |
| | 5 | -0.685 | $9.780 \times 10^{-9}$ | $4.074 \times 10^{-3}$ | 7.82 |
| | 10 | -0.61 | $8.451 \times 10^{-9}$ | $3.521 \times 10^{-3}$ | 20.35 |
| **5MF-TSC** | 0 | -0.702 | $17.72 \times 10^{-9}$ | $7.384 \times 10^{-3}$ | |
| | 1 | -0.654 | $8.778 \times 10^{-9}$ | $3.657 \times 10^{-3}$ | 50.5 |
| | 5 | -0.575 | $10.04 \times 10^{-9}$ | $4.184 \times 10^{-3}$ | 43.3 |
| | 10 | -0.608 | $7.407 \times 10^{-9}$ | $3.086 \times 10^{-3}$ | 58.2 |
| **IPB-4M3TSC** | 0 | -0.68 | $34.74 \times 10^{-9}$ | $14.47 \times 10^{-3}$ | |
| | 1 | -0.612 | $16.31 \times 10^{-9}$ | $6.797 \times 10^{-3}$ | 53.1 |
| | 5 | -0.548 | $7.078 \times 10^{-9}$ | $2.949 \times 10^{-3}$ | 79.6 |
| | 10 | -0.615 | $5.601 \times 10^{-9}$ | $2.333 \times 10^{-3}$ | 83.9 |

(continued)

| Inhibitor | Inhibitor Concentration (mM) | $E_{corr}$(V) | $I_{corr}$(A) | Corrosion Rate (mil/year) | %Corrosion Inhibition Efficiency |
|---|---|---|---|---|---|
| IPB-TSC | 0 | -0.652 | $42.82 \times 10^{-9}$ | $17.84 \times 10^{-3}$ | |
| | 1 | -0.379 | $11.19 \times 10^{-9}$ | $4.662 \times 10^{-3}$ | 67.8 |
| | 5 | -0.414 | $10.26 \times 10^{-9}$ | $4.274 \times 10^{-3}$ | 70.5 |
| | 10 | -0.466 | $8.769 \times 10^{-9}$ | $3.653 \times 10^{-3}$ | 74.8 |
| C-4M3TSC | 0 | -0.593 | $22.27 \times 10^{-9}$ | $9.279 \times 10^{-3}$ | |
| | 1 | -0.621 | $17.48 \times 10^{-9}$ | $7.283 \times 10^{-3}$ | 7.3 |
| | 5 | -0.653 | $17.07 \times 10^{-9}$ | $7.112 \times 10^{-3}$ | 9.4 |
| | 10 | -0.549 | $14.14 \times 10^{-9}$ | $5.892 \times 10^{-3}$ | 25.0 |
| C-TSC | 0 | -0.643 | $78.80 \times 10^{-9}$ | $32.83 \times 10^{-3}$ | |
| | 1 | -0.623 | $12.97 \times 10^{-9}$ | $5.402 \times 10^{-3}$ | 83.5 |
| | 5 | -0.631 | $18.89 \times 10^{-9}$ | $7.870 \times 10^{-3}$ | 76.0 |
| | 10 | -0.601 | $11.56 \times 10^{-9}$ | $4.814 \times 10^{-3}$ | 85.3 |

**SECOND EXPERIMENTAL RESULTS**

To further illustrate the synthesis and analysis of various Schiff bases, additional examples are provided. These include thiosemicarbazone, ethyl thiosemicarbazone, methyl thiosemicarbazone, phenyl thiosemicarbazone, and thiocarbohydrazone. Each synthesis example is followed by spectroscopic analyses to confirm the formation of the synthesized compounds. The examples also present data on the corrosion inhibition performance of the synthesized Schiff bases, evaluated through electrochemical measurements. The following sections detail exemplary synthesis protocols and analytical results for these Schiff bases, providing an understanding of their chemical behaviors and applications in corrosion inhibition.

Synthesis of Thiosemicarbazone of Isophthalaldehyde

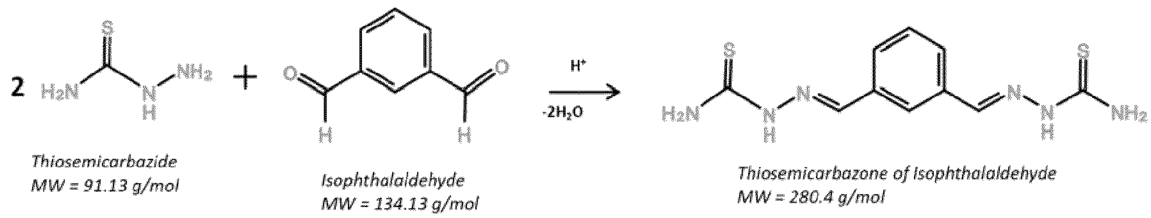


Table 6:

| Chemical | CAS # | Supplier (Lot#) | Molecular weight (g/mol) | Number of moles | Actual mass or volume |
|---|---|---|---|---|---|
| Isophthalaldehyde | 626-19-7 | Thermofisher Scientific (5003J16S) | 134.13 | 0.1 | 13.440 g |
| Thiosemicarbazide | 79-19-6 | Alfa Aesar (S09D016) | 91.13 | 0.2 | 18.291 g |
| 35% HCl | 7647-01-0 | Thermofisher Scientific (A4119120) | 36.45 | 0.02 | 2.154 mL |

A solution of thiosemicarbazide in 270 mL of di- water was refluxed with stirring at 149 °F until the thiosemicarbazide was completed dissolved. A solution of 2.15 mL of HCl in 30 mL of water was then added drop wise. Next a

solution of isophthalaldehyde in 220 mL of ethanol was slowly added to the flask over a period of 30 minutes and the solution temperature was raised to 172.4 °F. The addition of isophthalaldehyde caused precipitation of the white thiosemicarbazone. The solution was refluxed with stirring at 172.4 °F for 3 hr and left stirring overnight without heating. The white thiosemicarbazone precipitate was then washed with 2000 mL of di-water and dried overnight in an oven at 60 °C. Yield = 93.89%

From Figure 4, the broad bands observed in the ranges of 3100-3450 $cm^{-1}$ were assigned to the *v*($NH_2$) and v(NH) vibrations and absorption from hydroxyls (water). The strong and medium absorption bands at 1580-1610 $cm^{-1}$ were attributed to the v(C=N) stretching vibrations of the imine group. It indicates that free -$NH_2$ group of Thiosemicarbazide was converted to azomethine group. The medium bands which are in 1080-1100 $cm^{-1}$ range were ascribed to v(C=S) stretching vibrations, indicating that the studied compounds are present in the thione form. The presence of aromatic rings has been identified by their characteristic ring vibrations at 1500-1400, 1100-1050 and 900-700 $cm^{-1}$ region. The absence of bands characteristic of aldehyde v(C=O), v(C-H) and presence of band v(C=N) characteristic of imine confirms the formation of the proposed Schiff base framework. The 1H NMR is shown on Figure 5 and the 13C NMR on Figure 6. Both NMR spectra has expected absorption bands as confirmed by modeling software. Spectra suggested a reasonably pure product. Both 1H and 13C NMR showed excess water, with peaks at ~ 3 ppm.

Synthesis of Thiosemicarbazone of Salicylaldehyde

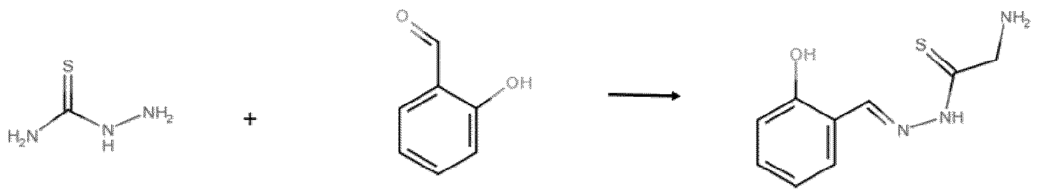

*Thiosemicarbazide*
*MW = 91.13 g/mol*

*Salicylaldehyde*
*MW = 122.123 g/mol*

*Thiosemicarbazone of salicylaldehyde*
*MW = 195.2386 g/mol*

Table 7:

| Chemical | CAS # | Supplier (Lot#) | Molecular weight (g/mol) | Number of moles | Actual mass or volume |
|---|---|---|---|---|---|
| Salicylaldehyde | 90.02-8 | Acros Organics (A042293949) | 122.12 | 0.2 | 24.424 g |
| Thiosemicarbazide | 79-19-6 | Alfa Aesar (S09D016) | 91.13 | 0.2 | 18.226 g |
| 35% HCl | 7647-01-0 | Thermofisher Scientific (A4119120) | 36.45 | .02 | 2.154 mL |

A solution of thiosemicarbazide in 270 mL of DI- water was refluxed with stirring at 149 °F until the thiosemicarbazide was completed dissolved. A solution of 2.15 mL of HCl in 30 mL of water was then added drop wise. Next a solution of salicylaldehyde in 220 mL of ethanol was slowly added to the flask over a period of 30 minutes and the solution temperature was raised to 172.4 °F. The addition of isophthalaldehyde caused precipitation of the cream colored thiosemicarbazone. The solution was refluxed at 172.4 °F for 3 hr and left stirring overnight without heating. The cream colored thiosemicarbazone precipitate was then washed with 2000 mL of di-water and dried overnight in an oven at 60 °C. Yield = 84.5%.

From Figure 7, once again the absence of the aldehyde v(C=O) at 1658 $cm^{-1}$ and the appearance of the absorption bands at 1580-1610 $cm^{-1}$ were attributed to the v(C=N) stretching vibrations from the imine group confirmed the formation of the proposed Schiff base. The absorption in the ranges of 3000-3450 $cm^{-1}$ were assigned to the v(NH2) and v(NH) vibrations. The 1H NMR is shown on Figure 8 and the13C NMR on Figure 9. Both NMR spectra has expected absorption bands as confirmed by modeling software. Spectra suggested a pure product.

Synthesis of Thiosemicarbazone of 2-Pyridine Carboxyaldehyde

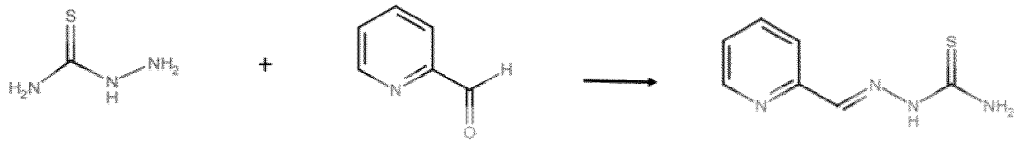

Thiosemicarbazide
MW = 91.13 g/mol

2-pyridine carboxyaldehyde
MW = 107.11 g/mol

Thiosemicarbazone of 2-pyridine carboxyaldehyde
MW =180.23 g/mol

Table 8:

| Chemical | CAS # | Supplier (Lot#) | Molecular weight (g/mol) | Number of moles | Actual mass or volume |
|---|---|---|---|---|---|
| 2-pyridine carboxyaldehyde | 1121-60-4 | Thermofisher Scientific (A0436189) | 107.11 | 0.2 | 21.422g |
| Thiosemicarbazide | 79-19-6 | Alfa Aesar (S09D016) | 91.13 | 0.2 | 18.226 g |
| 35% HCl | 7647-01-0 | Thermofisher Scientific (A4119120) | 36.45 | .02 | 2.154 mL |

A solution of thiosemicarbazide in 270 mL of DI- water was refluxed with stirring at 149 °F until the thiosemicarbazide was completed dissolved. A solution of 2.15 mL of HCl in 30 mL of water was then added drop wise. Next a solution of 2-pyridine carboxyaldehyde in 265 mL of ethanol was slowly added to the flask over a period of 30 minutes and the solution temperature was raised to 172.4 °F. The addition of 2-pyridine carboxyaldehyde caused precipitation of the yellow colored thiosemicarbazone. The solution was refluxed at 172.4 °F for 3 hr and left stirring overnight without heating. The yellow thiosemicarbazone precipitate was then washed with 2000 mL of di-water and dried overnight in an oven at 60 °C. Yield = 98.4%.

From Figure 10, the absence of the aldehyde v(C=O) at 1710 $cm^{-1}$ and the appearance of the absorption bands at 1580-1610 $cm^{-1}$ were attributed to the v(C=N) stretching vibrations from the imine group confirmed the formation of the proposed Schiff base. The absorption in the ranges of 3000-3450 $cm^{-1}$ were assigned to the v(NH2) and v(NH) vibrations. The 1H NMR is shown on Figure 11 and the 13C NMR on Figure 12. Both NMR spectra has expected absorption bands as confirmed by modeling software. Spectra suggested a pure product.

Synthesis of Thiosemicarbazone of 8-hydroxyquinoline-2-carboxyaldehyde

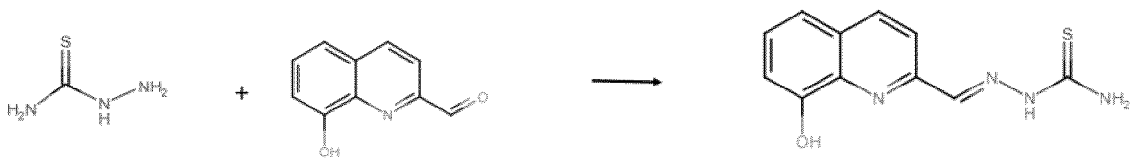

Thiosemicarbazide
MW = 91.13 g/mol

8-hydroquinoline-2-caroxyaldehyde
MW =173.17 g/mol

Thiosemicarbazone of 8-hydroquinoline-2-caroxyaldehyde
MW =246.06 g/mol

Table 9:

| Chemical | CAS # | Supplier (Lot#) | Molecular weight (g/mol) | Number of moles | Actual mass or volume |
|---|---|---|---|---|---|
| 8-hydroxyquinoline-2-carboxyaldehyde | 14510-06-6 | Acros Organics (A0428171) | 173.17 | 0.058 | 10.0 g |
| Thiosemicarbazide | 79-19-6 | Alfa Aesar (S09D016) | 91.13 | 0.058 | 5.285 g |

(continued)

| Chemical | CAS # | Supplier (Lot#) | Molecular weight (g/mol) | Number of moles | Actual mass or volume |
|---|---|---|---|---|---|
| 35% HCl | 7647-01-0 | Thermofisher Scientific (A4119120) | 36.45 | 0.0058 | 0.504 mL |

A solution of thiosemicarbazide in 200 mL of DI- water was refluxed with stirring at 149 °F until the thiosemicarbazide was completed dissolved. A solution of 0.504 mL of HCl in 9 mL of water was then added drop wise. Next a solution of salicylaldehyde in 155 mL of ethanol was slowly added to the flask over a period of 30 minutes and the solution temperature was raised to 172.4 °F. The addition of 8hydroxyquinoline-2-carboxyaldehyde caused precipitation of the white thiosemicarbazone. The solution was refluxed at 172.4 °F for 3 hr and left stirring overnight without heating. The white thiosemicarbazone precipitate was then washed with 2000 mL of di-water and dried overnight in an oven at 60 °C. Yield = 96.4%.

From Figure 13, the absence of the aldehyde v(C=O) at 1702 $cm^{-1}$ and the appearance of the absorption bands at 1628 $cm^{-1}$ were attributed to the v(C=N) stretching vibrations from the imine group confirmed the formation of the proposed Schiff base. The absorption in the ranges of 3000-3450 $cm^{-1}$ were assigned to the v(NH2) and v(NH) vibrations. The 1H NMR is shown on Figure 14 and the 13C NMR on Figure 15. Both NMR spectra has expected absorption bands as confirmed by modeling software. Spectra suggested a pure product.

Synthesis of 4-phenyl 3-Thiosemicarbazone of Isophthalaldehyde

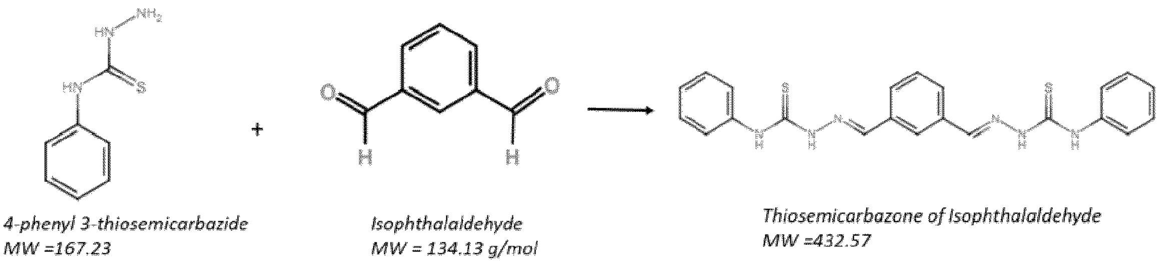

4-phenyl 3-thiosemicarbazide
MW =167.23

Isophthalaldehyde
MW = 134.13 g/mol

Thiosemicarbazone of Isophthalaldehyde
MW =432.57

Table 10:

| Chemical | CAS # | Supplier (Lot#) | Molecular weight (g/mol) | Number of moles | Actual mass or volume |
|---|---|---|---|---|---|
| Isophthalaldehyde | 626-19-7 | Thermofisher Scientific (5003J16S) | 134.13 | 0.1 | 13.413 g |
| 4-phenyl-3-Thiosemicarbazide | 5351-69-9 | TCI America (FCX01-PTDT) | 167.23 | 0.2 | 33.505 g |
| 35% HCl | 7647-01-0 | Thermofisher Scientific (A4119120) | 36.45 | 0.02 | 2.154 mL |

A solution of 4-phenyl-3-thiosemicarbazide in 500 mL of ethanol was refluxed with stirring at 172 °F until the 4-phenyl-3-thiosemicarbazide was completed dissolved. A solution of 2.15 mL of HCl in 30 mL of water was then added drop wise. Next a solution of isophthalaldehyde in 270 mL of ethanol was slowly added to the flask over a period of 30 min. The addition of isophthalaldehyde caused precipitation of the light green colored thiosemicarbazone. The solution was refluxed at 172.4 °F for 3 hr and left stirring overnight without heating. The light green colored thiosemicarbazone precipitate was then washed with 2000 mL of ethanol and dried overnight in an oven at 60 °C. Yield = 98.3%.

From Figure 16, the absence of the aldehyde v(C=O) at 1678 $cm^{-1}$ and the appearance of the absorption bands from 1500- 1600 $cm^{-1}$ were attributed to the v(C=N) stretching vibrations from the imine group confirmed the formation of the proposed Schiff base. The absorption in the ranges of 3000-3450 $cm^{-1}$ were assigned to the v(NH2) and v(NH) vibrations. The 1H NMR is shown on Figure 17 and the13C NMR on Figure 18. Both NMR spectra has expected absorption

bands as confirmed by modeling software. Spectra suggested a pure product.

Synthesis of 4-Phenyl-3-Thiosemicarbazone of Pentan-2,4-dione

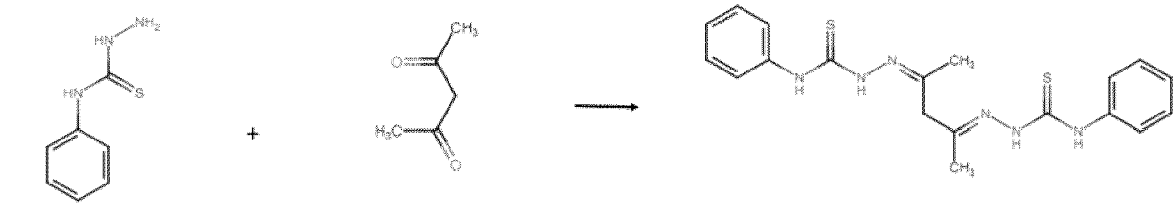

4-phenyl 3-thiosemicarbazide MW =167.23 2,4-Pentandione MW = 100.16 Thiosemicarbazone of 2,4-Pentandione MW =398.55

Table 11:

| Chemical | CAS # | Supplier (Lot#) | Molecular weight (g/mol) | Number of moles | Actual mass or volume |
|---|---|---|---|---|---|
| Pentane-2,4-dione | 123-54-6 | Alfa Aesar (U07G032) | 100.17 | 0.1 | 10.016 g |
| 4-phenyl-3-Thiosemicarbazide | 5351-69-9 | TCI America (FCX01PTDT) | 167.23 | 0.2 | 33.970 g |
| 35% HCl | 7647-01-0 | Thermofisher Scientific (A4119120) | 36.45 | .02 | 2.154 mL |

A solution of 4-phenyl-3-thiosemicarbazide in 400 mL of ethanol was refluxed with stirring at 172 °F until the 4-phenyl-3-thiosemicarbazide was completed dissolved. A solution of 2.15 mL of HCl in 30 mL of water was then added drop wise. Next a solution of pentane-2,4-dione in 200 mL of ethanol was slowly added to the flask over a period of 30 min. The addition of pentane-2,4-dione caused precipitation of the white thiosemicarbazone. The solution was refluxed at 172.4 °F for 3 hr and left stirring overnight without heating. The white thiosemicarbazone precipitate was then washed with 2000 mL of ethanol and dried overnight in an oven at 60 °C. Yield = 68.1%.

From Figure 19, the absence of the aldehyde v(C=O) at 1604 $cm^{-1}$ and the appearance of the absorption bands from 1597 $cm^{-1}$ were attributed to the v(C=N) stretching vibrations from the imine group suggested the formation of the proposed Schiff base. The absorption in the ranges of 3000-3450 $cm^{-1}$ were assigned to the v(NH2) and v(NH) vibrations. FTIR also suggest incomplete reaction with reaction product consisted of a combination of SB and unreacted reactants. The 1H NMR is shown on Figure 20 and the13C NMR on Figure 21. NMR analysis suggested that the expected reaction product did not form and the product included unreacted 4phenyl thiosemicarbazide.

Synthesis of thiosemicarbazone of mesityl oxide

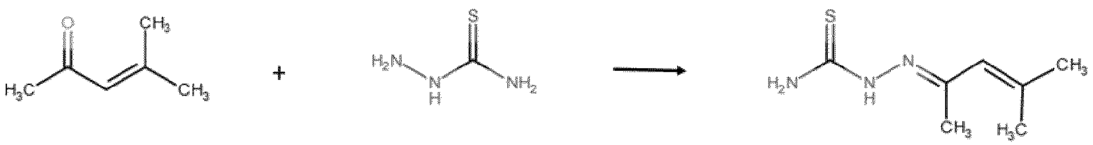

Mesityl oxide MW = 98.145 Thiosemicarbazide MW = 91.13 Thiosemicarbazone of mesityl oxide MW =171.27

Table 12:

| Chemical | CAS # | Supplier (Lot#) | Molecular weight (g/mol) | Number of moles | Actual mass or volume |
|---|---|---|---|---|---|
| Mesityl oxide | 141-79-7 | Acros Organics (A0427844) | 98.145 | 0.2 | 21.185 |
| Thiosemicarbazide | 79-19-6 | Alfa Aesar (S09D016) | 91.13 | 0.2 | 19.664 |
| 35% HCl | 7647-01-0 | Thermofisher Scientific (A4119120) | 36.45 | 0.02 | 2.17 mL |

A solution of thiosemicarbazide in 250 mL of MilliQ water was refluxed with stirring at 172 °F until the thiosemicarbazide was completed dissolved. A solution of 2.17 mL of HCl in 30 mL of water was then added drop wise. Next a solution of mesityl oxide in 160 mL of water was slowly added to the flask over a period of 30 min. The addition of mesityl oxide caused resulted in a clear light yellow colored solution. The solution was refluxed at 172.4 °F for 3 hr and left stirring overnight without heating. The next day, there was still no precipitate in the reaction flask, as a result, the solution mixture was rotovaped to isolate a sticky honey like thick mixture. This mixture was dried overnight in an oven at 90 °C. Yield = 94.2%.

From Figure 22 the absence of the aldehyde v(C=O) at 1686 $cm^{-1}$ and the appearance of the strong absorption bands at 1569 $cm^{-1}$ were attributed to the v(C=N) stretching vibrations from the imine group confirmed the formation of the proposed Schiff base. The absorption in the ranges of 3000-3450 $cm^{-1}$ were assigned to the v(NH2) and v(NH) vibrations. The 1H NMR is shown on Figure 23 and the 13C NMR on Figure 24. NMR analysis showed that the expected reaction product did not form, instead the reaction product consisted of a combination of unreacted reactants, leftover solvent and other impurities. The peaks of the desired products were inserted and labelled as missing.

Synthesis of Thiosemicarbazone of Terephthalaldehyde

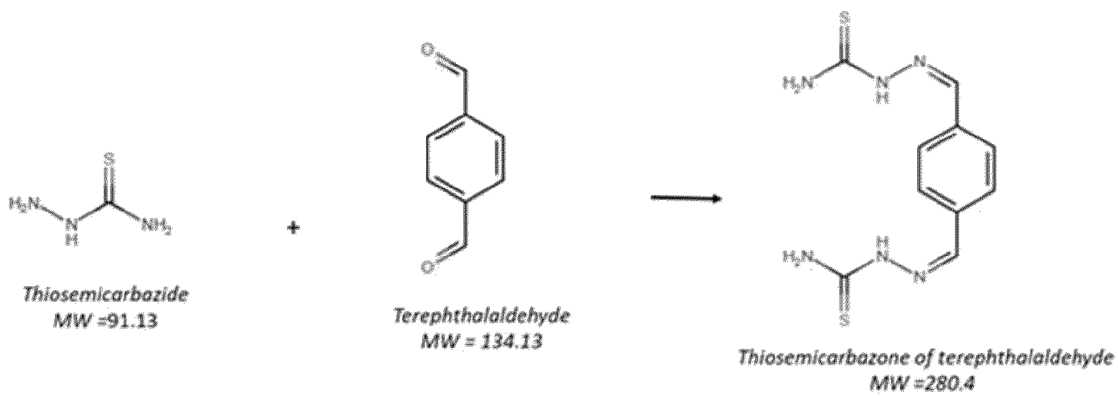

Thiosemicarbazide
MW =91.13

Terephthalaldehyde
MW = 134.13

Thiosemicarbazone of terephthalaldehyde
MW =280.4

Table 13:

| Chemical | CAS # | Supplier (Lot#) | Molecular weight (g/mol) | Number of moles | Actual mass or volume |
|---|---|---|---|---|---|
| Terephthalaldehyde | 623-27-8 | Alfa Aesar (10222547) | 134.13 | 0.1 | 13.489 g |
| Thiosemicarbazide | 79-19-6 | Alfa Aesar (S09D016) | 91.13 | 0.2 | 18.227 g |
| 35% HCl | 7647-01-0 | Thermofisher Scientific (A4119120) | 36.45 | .02 | 2.154 mL |

A solution of thiosemicarbazide in 270 mL of water was refluxed with stirring at 172 °F until it was completed dissolved. A solution of 2.15 mL of HCl in 30 mL of water was then added drop wise. Next a solution of terephthalaldehyde in 200 mL of ethanol was slowly added to the flask over a period of 30 min. The addition of terephthalaldehyde caused precipitation of the pale yellow colored thiosemicarbazone. The solution was refluxed at 172.4 °F for 3 hr and left stirring

overnight without heating. The cream colored thiosemicarbazone precipitate was then washed with 2000 mL of ethanol and dried overnight in an oven at 90 °C. Yield = 93.2%.

From Figure 25, the absence of the aldehyde v(C=O) at 1678 $cm^{-1}$ and the appearance of the absorption bands from 1597 $cm^{-1}$ were attributed to the v(C=N) stretching vibrations from the imine group confirmed the formation of the proposed Schiff base. The absorption in the ranges of 3000-3450 $cm^{-1}$ were assigned to the v(NH2) and v(NH) vibrations. The 1H NMR is shown on Figure 26 and the13C NMR on Figure 27. Both NMR spectra has expected absorption bands as confirmed by modeling software. Spectra suggested a pure product.

Synthesis of 4-ethyl-3-thiosemicarbazone of isophthalaldehyde

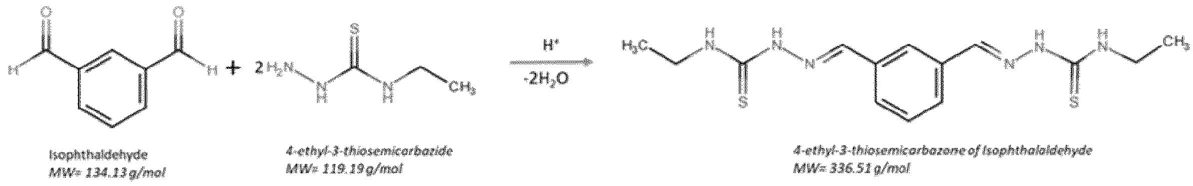


Table 14:

| Chemical | CAS # | Supplier (Lot#) | Molecular weight (g/mol) | Number of moles | Actual mass or volume |
|---|---|---|---|---|---|
| Isophthalaldehyde | 626-19-7 | Thermofisher Scientific (5003J16S) | 134.13 | 0.1 | 11.955 g |
| 4-ethyl-3-Thiosemicarbazide | 13431-34-0 | Alfa Aesar (S09D016) | 91.13 | 0.178 | 21.243 g |
| 35% HCl | 7647-01-0 | Thermofisher Scientific (A4119120) | 36.45 | .02 | 2.154 mL |

A solution of 4-ethyl-3-thiosemicarbazide in 310 mL of ethanol was refluxed with stirring at 172 °F until it was completed dissolved. A solution of 2.15 mL of HCl in 30 mL of water was then added drop wise. Next a solution of isophthalaldehyde in 200 mL of ethanol was slowly added to the flask over a period of 30. The addition of isophthalaldehyde caused precipitation of the white thiosemicarbazone. The solution was refluxed at 172.4 °F for 3 hr and left stirring overnight without heating. The white thiosemicarbazone precipitate was then washed with 2000 mL of ethanol and dried overnight in an oven at 90 °C. Yield = 92.4%.

From Figure 28, the absence of the aldehyde v(C=O) at 1678 $cm^{-1}$ and the appearance of the absorption bands from 1516 $cm^{-1}$ were attributed to the v(C=N) stretching vibrations from the imine group confirmed the formation of the proposed Schiff base. The absorption in the ranges of 3000-3450 $cm^{-1}$ were assigned to the v(NH2) and v(NH) vibrations. v(C-H) stretching observed between 29003000 $cm^{-1}$. The 1H NMR is shown on Figure 29 and the 13C NMR on Figure 30. Both NMR spectra has expected absorption bands as confirmed by modeling software. Spectra suggested a pure product.

Synthesis of thiosemicarbazone of Pentan-2,4-dione

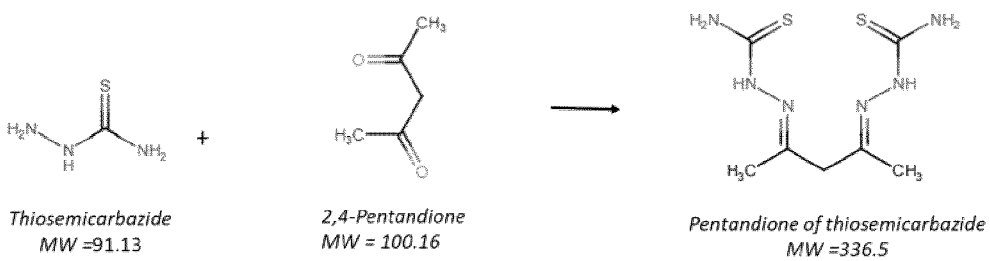

Table 15:

| Chemical | CAS # | Supplier (Lot#) | Molecular weight (g/mol) | Number of moles | Actual mass or volume |
|---|---|---|---|---|---|
| Pentane-2,4-dione | 123-54-6 | Alfa Aesar Lot #U07G032 | 100.17 | 0.1 | 10.016 g |
| Thiosemicarbazide | 79-19-6 | Alfa Aesar (S09D016) | 91.13 | 0.2 | 18.227 g |
| 35% HCl | 7647-01-0 | Thermofisher Scientific (A4119120) | 36.45 | .02 | 2.154 mL |

A solution of thiosemicarbazide in 350 mL of water and 100 mL of isopropyl alcohol was refluxed with stirring at 172 °F until the it was completed dissolved. A solution of 2.15 mL of HCl in 30 mL of water was then added drop wise. Next a solution of pentane-2,4-dione in 100 mL of isopropyl alcohol was slowly added to the flask over a period of 30 min. The addition of pentane-2,4-dione caused solution to turn to a yellow color clear mixture. The solution was refluxed at 172.4 °F for 3 hr and left stirring overnight without heating. The mixture was then rotovaped to isolate the yellow thiosemicarbazone precipitate which was then dried overnight in an oven at 90 °C. Yield = 54.2%.

From Figure 31, the absence of the aldehyde v(C=O) at 1709 $cm^{-1}$ and the appearance of the absorption bands from 1601 $cm^{-1}$ were attributed to the v(C=N) stretching vibrations from the imine group confirmed the formation of the proposed Schiff base. The absorption in the ranges of 3000-3450 $cm^{-1}$ were assigned to the v(NH2) and v(NH) vibrations. FTIR also suggest reaction product consisted of a combination of SB and unreacted reactants. The 1H NMR is shown on Figure 32 and the 13C NMR on Figure 33. 1H NMR analysis showed presence of extra bands, B, B', D, D' and 13 NMR showed extra bands, A, A', B, B' and D, D'. This suggested the product consisted of unreacted reactants and residual solvents.

Synthesis of 4-methyl-Thiosemicarbazone of salicylaldehyde

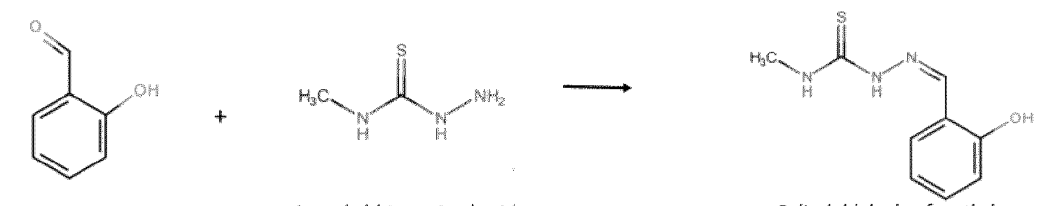

Salicylaldehyde
MW = 122.123 g/mol

4-methylthiosemicarbazide
MW =105.16

Salicylaldehyde of methyl thiosemicarbazide
MW =209.27

Table 16:

| Chemical | CAS # | Supplier (Lot#) | Molecular weight (g/mol) | Number of moles | Actual mass or volume |
|---|---|---|---|---|---|
| Salicylaldehyde | 90.02-8 | Acros Organics (A042293949) | 122.12 | 0.1 | 12.277 g |
| 4-methyl thiosemicarbazide | 6938-68-7 | TCI (MSF5F-HN) | 105.16 | 0.1 | 10.551 |
| 35% HCl | 7647-01-0 | Thermofisher Scientific (A4119120) | 36.45 | .01 | 0.86 mL |

A solution of 4-methylthiosemicarbazide in 250 mL of ethanol and 50 mL of water was refluxed with stirring at 172 °F until the it was completed dissolved. A solution of 0.86 mL of HCl in 30 mL of ethanol was then added drop wise. Next a solution of salicylaldehyde in 250 mL of ethanol was slowly added to the flask over a period of 30 min. The addition of salicylaldehyde caused the solution to turn to a light green color, no precipitate was observed upon addition of the salicylaldehyde. The solution was refluxed at 172.4 °F for 3 hr and left stirring overnight without heating. The cream colored thiosemicarbazone precipitate isolated the next day which was then dried overnight in an oven at 90 °C. Yield = 68.8%.

From Figure 34, the absence of the aldehyde v(C=O) at 1662 $cm^{-1}$ and the appearance of the absorption bands from 1523 $cm^{-1}$ were attributed to the v(C=N) stretching vibrations from the imine group confirmed the formation of the proposed Schiff base. The absorption in the ranges of 3000-3450 $cm^{-1}$ were assigned to the v(NH2) and v(NH) vibrations. The 1H NMR is shown on Figure 35 and the 13C NMR on Figure 36. Both NMR spectra has expected absorption bands as confirmed by modeling software. Spectra suggested a pure product.

<u>Synthesis of 8-hydroxyquinoline-2-carboxyaldehyde of phenyl thiosemicarbazone</u>

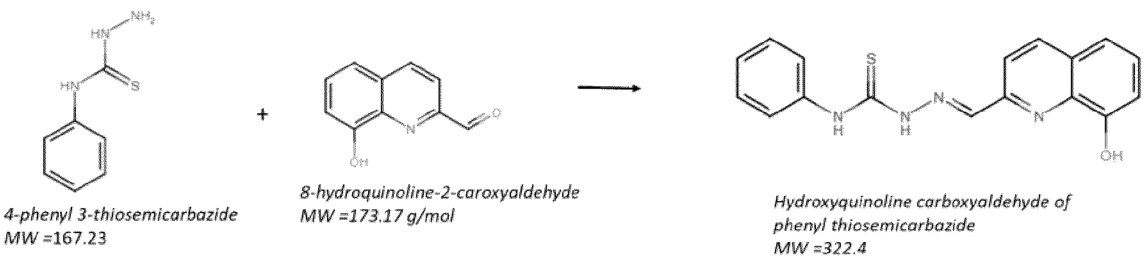

4-phenyl 3-thiosemicarbazide
MW =167.23

8-hydroquinoline-2-caroxyaldehyde
MW =173.17 g/mol

Hydroxyquinoline carboxyaldehyde of phenyl thiosemicarbazide
MW =322.4

Table 17:

| Chemical | CAS # | Supplier (Lot#) | Molecular weight (g/mol) | Number of moles | Actual mass or volume |
|---|---|---|---|---|---|
| 8hydroxyquinoline2-carboxyaldehyde | 14510-06-6 | Acros Organics (A0428171) | 173.17 | 0.027 | 4.792 g |
| 4-phenyl-3-Thiosemicarbazide | 5351-69-9 | TCI America (FCX01PTDT) | 167.23 | 0.027 | 4.668 g |
| 35% HCl | 7647-01-0 | Thermofisher Scientific <u>(A4119120)</u> | 36.45 | 0.0027 | 0.24 mL |

A solution of 4-phenyl-3-thiosemicarbazide in 250 mL of ethanol and 100 mL of water was refluxed with stirring at 172 °F until it was completed dissolved. A solution of HCl in 30 mL of ethanol was then added drop wise. Next a solution of hydroxyquinoline carboxyaldehyde in 100 mL of ethanol was slowly added to the flask over a period of 30 min. The addition of hydroxyquinoline carboxyaldehyde caused the solution to turn to a bright orange clear mixture. The solution was refluxed at 172.4 °F for 3 hr and left stirring overnight without heating. The light yellow colored thiosemicarbazone precipitate was isolated the next day and dried overnight in an oven at 60 °C. Yield = 69.3%.

From Figure 37, the absence of bands characteristic of the aldehyde v(C=O) at 1703 cm-1 v(C-H) at 2842 $cm^{-1}$ and the appearance of the absorption bands from 1504 $cm^{-1}$ were attributed to the v(C=N) stretching vibrations from the imine group confirmed the formation of the proposed Schiff base. The absorption in the ranges of 3000-3450 $cm^{-1}$ were assigned to the v(NH2) and v(NH) vibrations. The 1H NMR is shown on Figure 38 and the 13C NMR on Figure 39. Both NMR spectra has expected absorption bands as confirmed by modeling software. The spectra appeared to be complex in the aromatic region, however as noted all the expected absorption bands were present. Spectra suggested a pure product.

<u>Synthesis of thiocarbohydrazone of salicylaldehyde (1:1 mol ratio)</u>

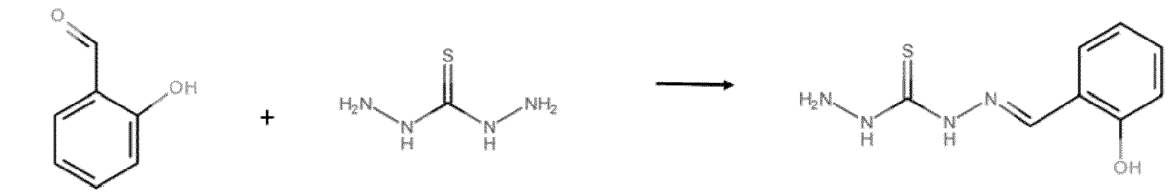

Salicylaldehyde
MW = 122.123 g/mol

Thiocarbohydrazide
MW = 106.15

Salicylaldehyde of thiocarbohydrazide
MW =210.26

Table 18:

| Chemical | CAS # | Supplier (Lot#) | Molecular weight (g/mol) | Number of moles | Actual mass or volume |
|---|---|---|---|---|---|
| Salicylaldehyde | 90.02-8 | Acros Organics (A042293949) | 122.12 | 0.1 | 12.277 g |
| Thiocarbohydrazone | 2231-57-4 | Acros Organics (A0405116) | 106.15 | 0.1 | 10.615 g |
| 35% HCl | 7647-01-0 | Thermofisher Scientific (A4119120) | 36.45 | 0.01 | 0.86 mL |

A solution of thiocarbahydrazide in 250 mL of ethanol and 100 mL of water was refluxed with stirring at 172 °F until it was completed dissolved. A solution of HCl in 30 mL of ethanol was then added drop wise. Next a solution of salicylaldehyde in 60 mL of ethanol was slowly added to the flask over a period of 30. The addition of salicylaldehyde caused the solution to turn to a bright yellow colored clear mixture. The solution was refluxed at 172.4 °F for 3 hr and left stirring overnight without heating. The yellow thiosemicarbazone precipitate was isolated then dried overnight in an oven at 60 °C. Yield = 91.38%.

From Figure 40, the absence of bands characteristic of aldehyde v(C=O) at 1661 $cm^{-1}$, v(C-H) stretch between 2830-2695 $cm^{-1}$ and presence of band v(C=N) at 1543 $cm^{-1}$ characteristic of imine suggest the formation of the proposed Schiff base framework. The absorption in the ranges of 3000- 3450 $cm^{-1}$ were assigned to the v(NH2) and v(NH) vibrations. FTIR also suggest reaction product consisted of a combination of SB and unreacted reactants. The 1H NMR is shown on Figure 41 and the13C NMR on Figure 42. 1H NMR spectra analysis showed extra bands, A, A', B, B', I, I' and $^{13}$C NMR spectral analysis showed extra bands A, A', A", B, B', and G, G'. This suggested unreacted reactants present as impurity in the product.

<u>Synthesis of thiocarbohydrazone of salicylaldehyde (1:2 mol ratio)</u>

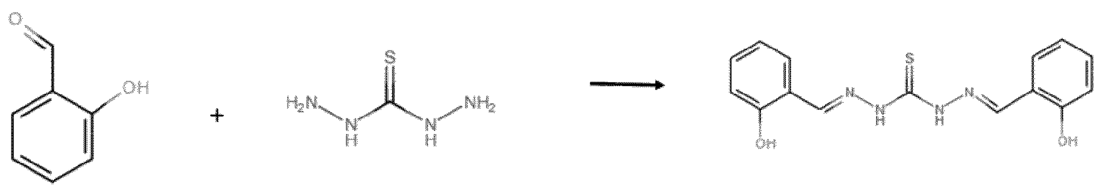

Salicylaldehyde
MW = 122.123 g/mol

Thiocarbohydrazide
MW = 106.15

Salicylaldehyde of thiocarbohydrazide
MW =314.4

Table 19:

| Chemical | CAS # | Supplier (Lot#) | Molecular weight (g/mol) | Number of moles | Actual mass or volume |
|---|---|---|---|---|---|
| Salicylaldehyde | 90.02-8 | Acros Organics (A042293949) | 122.12 | 0.2 | 24.495 g |
| Thiocarbohydrazone | 2231-57-4 | Acros Organics (A0405116) | 106.15 | 0.1 | 10.615 g |

(continued)

| Chemical | CAS # | Supplier (Lot#) | Molecular weight (g/mol) | Number of moles | Actual mass or volume |
|---|---|---|---|---|---|
| 35% HCl | 7647-01-0 | Thermofisher Scientific (A4119120) | 36.45 | 0.01 | 0.86 mL |

A solution of thiocarbahydrazide in 250 mL of ethanol and 100 mL of water was refluxed with stirring at 172 °F until it was completed dissolved. A solution of HCl in 30 mL of ethanol was then added drop wise. Next a solution of salicylaldehyde in 60 mL of ethanol was slowly added to the flask over a period of 30 minutes. The addition of salicylaldehyde caused the solution to turn to a bright yellow colored clear mixture. The solution was refluxed at 172.4 °F for 3 hr and left stirring overnight without heating. The yellow thiosemicarbazone precipitate was isolated then dried overnight in an oven at 60 °C. Yield = 86.4%.

From Figure 43, the absence of bands characteristic of aldehyde v(C=O) at 1661 $cm^{-1}$, v(C-H) stretch between 2830-2695 $cm^{-1}$ and presence of band v(C=N) at 1547 $cm^{-1}$ characteristic of imine suggest the formation of the proposed Schiff base framework. The absorption in the ranges of 3000-3450 $cm^{-1}$ were assigned to the v(NH2) and v(NH) vibrations. FTIR also suggest reaction product consisted of a combination of SB and unreacted reactants. The 1H NMR is shown on Figure 44 and the 13C NMR on Figure 45. 1H NMR spectra analysis showed extra bands, F, F', B, B', and $^{13}$C NMR spectral analysis showed extra bands H, H', D, D', and E, E'. This suggested unreacted reactants present as impurity in the product.

Synthesis ofbis-thiosemicarbazoneand 2,6-Diacetylpyridine

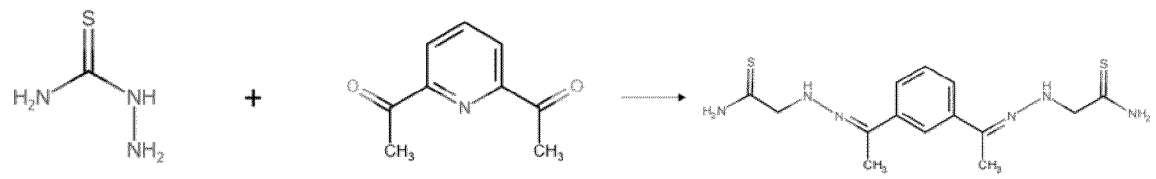

*Thiosemicarbazide*
*MW = 91.19 g/mol*

*2,6-Dicetylpyridine*
*MW = 163.17 g/mol*

*Thiosemicarbazone of 2,6-Dicetylpyridine*
*MW = 309.55 g/mol*

Table 20:

| Chemical | CAS # | Supplier (Lot #) | Molecular weight (g/mol) | Number of moles | Actual mass or volume |
|---|---|---|---|---|---|
| Thiosemicarbazide | 79-16-6 | Sigma Aldrich (STBJ5791) | 91.13 | 0.2 | 18.236 g |
| 2,6-Dicetylpyridine | 1129-30-2 | Thermo Fisher Scientific (A0414452) | 163.17 | 0.1 | 16.317 g |
| 35% HCl | 7647-01-0 | Thermofisher Scientific (A4119120) | 36.45 | 0.02 | 2.154 mL |

In a 1000mL flask, thiosemicarbazide was added to 250 mL of ethanol to dissolve under reflux with heating. 75mL of di-water was added initially to aid in dissolving the thiosemicarbazide.. Solution became a clear, yellow color after 30 minutes. Then, a solution of 2.15 mL of HCl in 30 mL of water is then added drop wise. Next, 2,6-diacetylpyridine is dissolved in 100 mL of ethanol with stirring and light heating to completely dissolve the crystalline solid. Due to the crystalline nature of the 2,6-diacetylpyridine, the solid began to crystallize upon entry to the addition funnel, which clogged the funnel. The solution was then added manually with a pipet dropwise over 30 minutes to prevent clumping. Addition of the 2,6-dicetylpyridine/ethanol caused the solution to become opaque and yellow colored, as the precipitate formed. The product (% yield = 86.22%) was vacuum filtered, rinsed with 1 pint of ethanol and placed in an oven to dry.

From Figure 46, the broad bands observed in the ranges of 3450-3100 $cm^{-1}$ were assigned to the $v(NH_2)$ and v(NH) vibrations. The strong and medium absorption bands at 1580-1610 $cm^{-1}$ were attributed to the v(C=N) stretching vibrations of the imine group. It indicates that free $-NH_2$ group of Thiosemicarbazide was converted to azomethine group. The presence of aromatic rings has been identified by their characteristic ring vibrations at 1500-1400, 1100-1050 and

900-700 cm$^{-1}$ region. The absence of v(C=O) and presence of band v(C=N) characteristic of imine suggests the formation of the proposed Schiff base framework. The 1H NMR is shown on Figure 47 and the 13C NMR on Figure 48. Both NMR spectra have the expected absorption bands as confirmed by modeling software. Spectra suggested a pure product.

Synthesis of 2-pyridinecarboxyaldehyde & thiocarbohydrazide

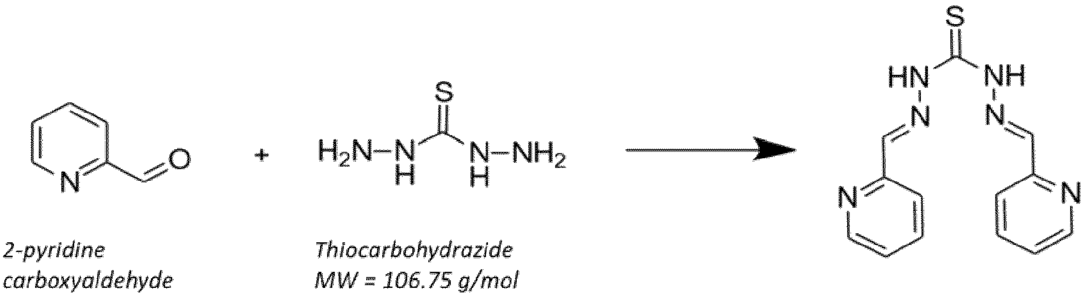

*2-pyridine carboxyaldehyde MW = 107.11 g/mol*

*Thiocarbohydrazide MW = 106.75 g/mol*

*Thiocarbohydrazone of 2-pyridine carboxyaldehyde MW = 284.37 g/mol*

Table 21:

| Chemical | CAS # | Supplier (Lot #) | Molecular weight (g/mol) | Number of moles | Actual mass or volume |
|---|---|---|---|---|---|
| Thiocarbohydrazide | 2231-57-4 | Sigma Aldrich (A0405116) | 106.15 | 0.033 | 3.521g |
| 2-pyridinecarboxyaldehyde | 1121-60-4 | Acros Organics (A0436189) | 107.11 | 0.066 | 7.00mL |
| 35% HCl | 7647-01-0 | Thermofisher Scientific (A4119120) | 36.46 | 0.0066 | 0.241mL |

In a 1000mL flask, thiocarbohydrazide was added to 250 mL of ethanol. Reaction was run under nitrogen. HCl was added to 30 mL of ethanol, and this mixture was added dropwise to the reaction mixture. Aliquots of water was then added in 10mL increments totaling 50mL to aid in dissolving the thiocarbohydrazide. After it was completely dissolved, 2-pyridinecarboxyaldehyde was added to 100 mL of ethanol and then added dropwise to the reaction mixture. No precipitation formed even after completing the addition of the 2-pyridinecarboxyaldehyde. The system was refluxed and heated overnight. A fine grey powder (% yield = 44.57 %) was isolated from the reaction mixture, this was heated in the oven for 3-4 days.

From Figure 49, the absence of bands characteristic of aldehyde v(C=O) at 1710 cm$^{-1}$, v(C-H) stretch at 2844 cm$^{-1}$, v(C-H) bending at between 1390-1380 cm$^{-1}$ and presence of band v(C=N) at 1531 cm$^{-1}$ characteristic of imine suggests the formation of the proposed Schiff base framework. The broad bands observed in the ranges of 3450-3100 cm$^{-1}$ were assigned to the $\nu(NH_2)$ and v(NH) vibrations. The 1H NMR is shown on Figure 50 and the13C NMR on Figure 51. Both 1H NMR and 13C NMR spectral analysis suggested unreacted reactants and a variety of reaction intermediates in the product. It was suspected that the thiocarbohydrazide starting material might be impure which may have caused the reaction to not complete as efficiently.

Synthesis of Terephthalaldehyde and 4-phenyl, 3-thiosemicarbazide

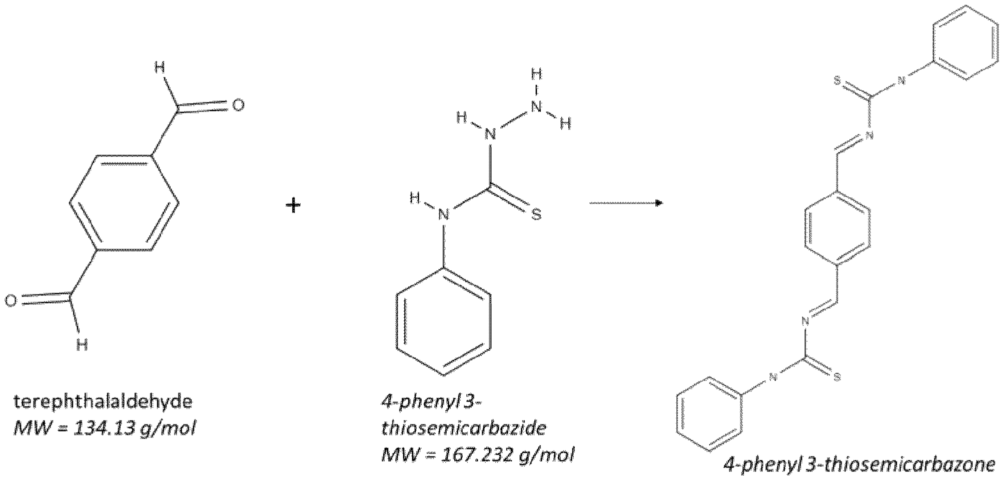

terephthalaldehyde
*MW = 134.13 g/mol*

*4-phenyl 3-thiosemicarbazide*
*MW = 167.232 g/mol*

*4-phenyl 3-thiosemicarbazone of* terephthalaldehyde
*MW = 432.59 g/mol*

Table 22:

| Chemical | CAS # | Supplier (Lot #) | Molecular weight (g/mol) | Number of moles | Actual mass or volume |
|---|---|---|---|---|---|
| Terephthalaldehyde | 623-27-8 | Alfa Aesar (10222547) | 134.13 | 0.05 | 6.798g |
| 4-phenyl 3thiosemicarbazide | 5351-69-9 | TCI (FCX-01-NE) | 167.232 | 0.1 | 16.72g |
| 35% HCl | 7647-01-0 | Thermofisher Scientific (A4119120) | 36.46 | 0.01 | 0.860mL |

In a 1000mL reaction flask, 4-phenyl 3-thiosemicarbazide was added with 250mL of ethanol and the temperature was set to 170 F. Then, a solution of HCl in 30 mL of ethanol was added dropwise to the reaction flask. The solution became lighter yellow/clear after addition of HCl. Terephthalaldehyde was dissolved in 200 mL of ethanol and added dropwise to the reaction mixture. The mixture turned bright yellow/green and precipitate almost immediately formed upon addition. By the end of the addition, the color was opaque yellow. The mixture was left overnight to mix under reflux and heat. The next day, the mixture was vacuum filtered and a yellow solid (% yield = 92.67%) was collected and placed in the oven at 93 C.

From Figure 52, the absence of bands characteristic of aromatic bis aldehydes at around 2870 $cm^{-1}$ (C-H stretching), 1688 $cm^{-1}$ (C=O stretching), 1387 $cm^{-1}$ (C-H bending) and presence of band ν(C=N) at 1542 $cm^{-1}$ characteristic of imine suggests the formation of the proposed Schiff base framework. The broad bands observed in the ranges of 3450-3100 $cm^{-1}$ were assigned to the ν($NH_2$) and ν(NH) vibrations. ν(C-H) stretching observed between 2900-3000 $cm^{-1}$. The medium bands which are in 1050-1080 $cm^{-1}$ range were ascribed to ν(C=S) stretching vibrations, indicating that the studied compounds are present in the thione form. The presence of aromatic rings has been identified by their characteristic ring vibrations at 1500-1400, 1100-1050 and 900-700 $cm^{-1}$ region. The 1H NMR is shown on Figure 53 and the 13C NMR on Figure 54. Both NMR spectra have the expected absorption bands as confirmed by modeling software. Spectra suggested a pure product.

<u>Synthesis of terephthalaldehyde & 4-methylthiosemicarbazide</u>

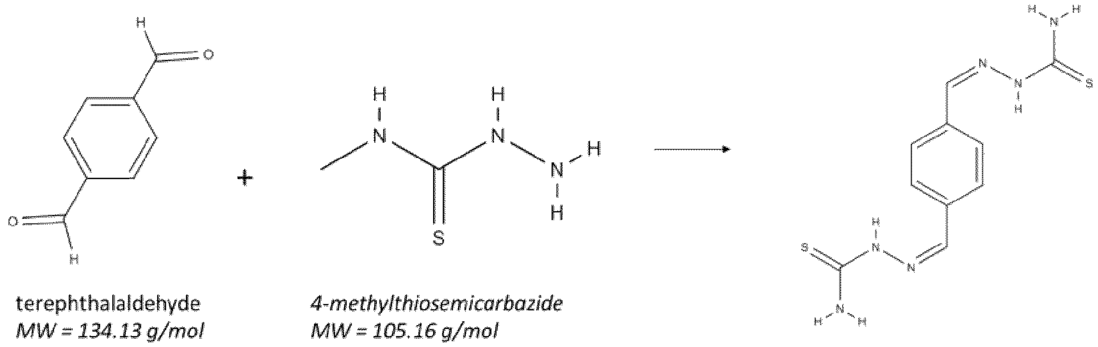

terephthalaldehyde
*MW = 134.13 g/mol*

*4-methylthiosemicarbazide*
*MW = 105.16 g/mol*

terephthalaldehyde *of 4-methylthiosemicarbazone*
*MW = 308.45 g/mol*

Table 23:

| Chemical | CAS # | Supplier (Lot #) | Molecular weight (g/mol) | Number of moles | Actual mass or volume |
|---|---|---|---|---|---|
| Terephthalaldehyde | 623-27-8 | Alfa Aesar (10222547) | 134.13 | 0.05 | 6.708g |
| 4-methylthiosemicarbazide | 6610-29-3 | TCI (MSFSFHN) | 105.16 | 0.1 | 10.560g |
| 35% HCl | 7647-01-0 | Thermofisher Scientific (A4119120) | 36.46 | 0.01 | 0.860mL |

In a 1000mL flask, 4-methylthiosemicarbazone was added to 250mL of ethanol. The temperature was set to 170F. Then, a solution of HCl in 30 mL of ethanol was then added dropwise to the reaction mixture. The solution remained clear throughout the addition of HCl.

Terephthalaldehyde was added to 200 mL of ethanol and stirred until completely dissolved and clear. This solution was then added to the reaction flask dropwise causing the solution to turn slightly opaque and yellow. By the end of the addition, the solution was a medium yellow/green color and opaque. The reaction was left at temperature to reflux for 3 hours. The next day, the mixture was vacuum filtered and a yellow solid (% yield = 90.7%) was collected and placed in the oven at 93 C.

From Figure 55, the absence of bands characteristic of aromatic dialdehydes at around 2868 $cm^{-1}$ (C-H stretching),1682 $cm^{-1}$ (C=O stretching), 1386 $cm^{-1}$ (C-H bending) and presence of band v(C=N) between 1580-1610 characteristic of imine suggests the formation of the proposed Schiff base framework. The presence of aromatic rings has been identified by their characteristic ring vibrations at 1500-1400, 1100-1050 and 900-700 cm-1 region. The 1H NMR is shown on Figure 56 and the 13C NMR on Figure 57. Both NMR spectra have the expected absorption bands as confirmed by modeling software. Spectra suggested a pure product.

Synthesis of 2,6-Diacetylpyridine & 4-phenyl 3-thiosemicarbazide

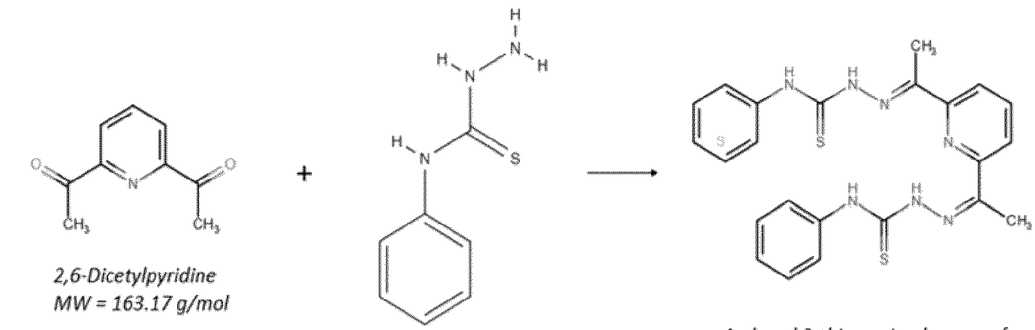

2,6-Dicetylpyridine
MW = 163.17 g/mol

4-phenyl 3-thiosemicarbazide
MW = 167.232 g/mol

4-phenyl 3-thiosemicarbazone of 2,6-diacetylpyridine
MW = 462.63 g/mol

Table 24:

| Chemical | CAS # | Supplier (Lot #) | Molecular weight (g/mol) | Number of moles | Actual mass or volume |
|---|---|---|---|---|---|
| 2,6-Diacetylpyridine | 1129-30-2 | Thermo Fisher Scientific (A0414452) | 163.17 | 0.05 | 8.180g |
| 4-phenyl 3thiosemicarbazide | 5351-69-9 | TCI (FCX01PTDT) | 167.23 | 0.1 | 16.720g |
| 35% HCl | 7647-01-0 | Thermofisher Scientific (A4119120) | 36.46 | 0.01 | 0.860mL |

In a 1000mL flask, the 4-phenyl 3-thiosemicarbazide was added to 250mL of ethanol. The solution was clear and the solid was dissolved after 5 minutes of mixing. Then, a mixture of 35% HCl and 35 mL of ethanol was added dropwise to the solution. After this, 2,6-diacetylpyridine was dissolved in 35 ml of warm ethanol and added manually dropwise. The color began as a bright yellow/green, but quickly a white, fluffy precipitate began to form. The precipitate created a significant increase in volume and the reaction flask was transferred to a 2L volume and a total of 3 pints of ethanol was necessary to create a mixture capable of mixing. The final solution was mixed under heat and refluxed for 3 hours. The precipitate (% yield = 86.21 %) was vacuum filtered dried in an oven at 93 C overnight.

From Figure 58, the absence of bands characteristic of aromatic aldehydes at 1700 $cm^{-1}$ (C=O stretching) and presence of band v(C=N) between 1580-1610 characteristic of imine suggests the formation of the proposed Schiff base framework. The broad bands observed in the ranges of 3450-3100 $cm^{-1}$ were assigned to the $\nu(NH_2)$ and v(NH) vibrations. The strong absorption band around 1547 $cm^{-1}$ was assigned to the v(C=N) stretching vibrations of the imine group. It indicates that free $-NH_2$ group of 4-phenyl-3-thiosemicarbazide was converted to azomethine group. The presence of aromatic rings has been identified by their characteristic ring vibrations at 1500-1400, 1100-1050 and 900-700 $cm^{-1}$ region. The 1H NMR is shown on Figure 59 and the 13C NMR on Figure 60. Both NMR spectra have the expected absorption bands as confirmed by modeling software. Spectra suggested a pure product.

Synthesis of 4-methylthiosemicarbazide & 2, 6-diacetylpyridine

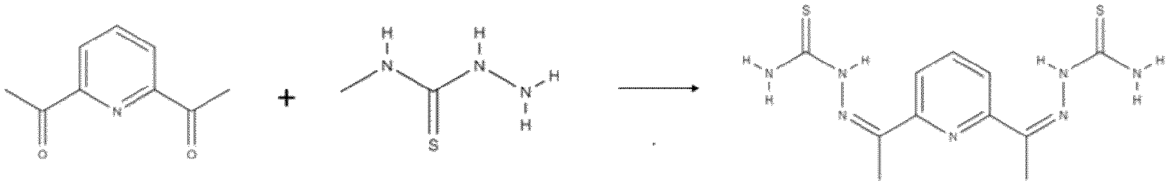

2,6-diacetylpyridine
MW = 163.17 g/mol

4-methylthiosemicarbazide
MW = 105.16 g/mol

4-methylthiosemicarbazone of 2,6-diacetylpyridine

Table 25:

| **Chemical** | **CAS #** | **Supplier (Lot #)** | **Molecular weight (g/mol)** | **Number of moles** | **Actual mass or volume** |
|---|---|---|---|---|---|
| 4-methylthiosemicarbazide | 6610-29-3 | TCI(MSFSFHN) | 105.16 g/mol | 0.1 | 10.585g |
| 2,6-diacetylpyridine | 1129-30-2 | Thermo fisher (A0414452) | 163.17 g/mol | 0.05 | 8.222g |
| 35% HCl | 7647-01-0 | Thermofisher Scientific (A4119120) | 36.46 | 0.01 | 0.860mL |

In a 2000mL flask, add 4-methylthiosemicarbazide to 250mL of ethanol. Solution was clear after 30 minutes of mixing and heating. HCl in 35mL of ethanol was then added dropwise. Next, 2,6diacetylpyridine was dissolved in 200mL of warm ethanol and added dropwise. Solution turned yellow with the addition of 2,6-diacetylpyridine. A white precipitate formed halfway through the addition. Reaction was refluxed for 3 hours and the precipitate was then vacuum filtered and rinsed with a pint of ethanol. The product (% yield = 88.9%) was opaque, fluffy, white/yellow solid, and dried overnight in the oven at 93C.

From Figure 61, the absence of bands characteristic of aromatic aldehydes at 1700 $cm^{-1}$ (C=O stretching) and presence of band v(C=N) at 1551 $cm^{-1}$ characteristic of imine suggests the formation of the proposed Schiff base framework. The band observed in the ranges of 3450-3100 $cm^{-1}$ were assigned to the v(NH) vibrations. The presence of aromatic rings has been identified by their characteristic ring vibrations at 1500-1400, 1100-1050 and 900-700 $cm^{-1}$ region. The 1H NMR is shown on Figure 62 and the 13C NMR on Figure 63. Both NMR spectra have the expected absorption bands as confirmed by modeling software. Spectra suggested a pure product.

Electrochemical Analysis of the Schiff Bases

The following description relates to a study of the electrochemical analysis of the synthesized Schiff bases. Materials used in this study include aluminum alloy 2024 and carbon steel C1008. In order to study the performance of corrosion inhibitors, the carbon steel specimens were tested in a bare condition and with a low hydrogen embrittlement (LHE) ZnNi coating. The compositions of Al 2024 and carbon steel C1008 are as follows:

| **Component** | **Al 2024 Wt.%** |
|---|---|
| Si | ≤0.50 |
| Fe | ≤0.50 |
| Cu | 3.80-4.90 |
| Mn | 0.30-0.90 |
| Mg | 1.20-1.80 |
| Cr | ≤0.10 |
| Zn | ≤0.25 |
| Ti | ≤0.15 |
| Others, each | ≤0.05 |
| Others, total | ≤0.15 |
| Al | Balance |

| **Component** | **Carbon steel C1008 Wt.%** |
|---|---|
| Mn | 0.30-0.50 |
| C | ≤0.10 |
| S | ≤0.050 |
| P | ≤0.040 |

(continued)

| Component | Carbon steel C1008 Wt.% |
|---|---|
| Fe | Balance |

For the selected corrosion inhibitors, Schiff bases of several aldehydes and primary amines were synthesized to make corrosion inhibitors for bare 2024 aluminum alloy, bare C1008, and LHE ZnNI coated C1008 steel. These Schiff bases include thiosemicarbazide derivatives. The Schiff bases derived corrosion inhibitors and their corresponding sample identities used in this study are listed in the following table.

**Table 26.** Sample identities and compound names of Schiff bases derived corrosion inhibitors used in this study.

| No. | Compound Name | Inhibitor ID |
|---|---|---|
| 1 | Bis-thiosemicarbazone of isophthalaldehyde | CI1 |
| 2 | Thiosemicarbazone of Salicylaldehyde | CI2 |
| 3 | Thiosemicarbazone of 8-hydroxyquinoline-2-carboxyaldehyde | CI3 |
| 4 | Thiosemicarbazone of 2-pyridine carboxyaldehyde | CI4 |
| 5 | 4-phenyl-3-Thiosemicarbazone of Isophthalaldehyde | CI5 |
| 6 | 4-methyl-3-thiosemicarbazone of isophthalaldehyde | CI6 |
| 7 | 4-methyl-Thiosemicarbazone of salicylaldehyde | CI7 |
| 8 | 8-hydroxyquinoline-2-carboxyaldehyde of phenyl thiosemicarbazone | CI8 |
| 9 | terephthalaldehyde & 4-methylthiosemicarbazide | CI9 |
| 10 | 2,6-Diacetylpyridine & 4-phenyl-3-thiosemicarbazide | CI10 |
| 11 | 4-methylthiosemicarbazide & 2,6-diacetylpyridine | CI11 |

The performances of these corrosion inhibitors were electrochemically investigated. In this initial effort, their performances were evaluated based on the open circuit potential (OCP) and corrosion rate. All electrochemical tests consisting of OCP and linear polarization (LP) measurements were performed in a flat cell containing NaCl solution with saturated calomel electrode (SCE) as a reference electrode and platinum mesh as a counter electrode. A stock electrolyte was prepared by adding 52.6 g NaCl into a total of 1L of deionized water to make 0.9 M NaCl solution. This solution was stirred for 30 minutes until the salt completely dissolved. For each inhibitor tested, the requisite amount of inhibitor was added to 300 mL of stock electrolyte and stirred for 30 minutes. This solution was then filtered through Whatman #1 paper. For studying the performance of various inhibitor types and concentrations, Al 2024 samples were tested in 0.9 M NaCl solution with different inhibitor types and concentrations. Corrosion behaviors of bare C1008 steel in the absence and presence of inhibitors was carried out in 0.9 M NaCl solution saturated with each inhibitor. Impact of coatings on corrosion resistance of bare C1008 steel and LHE ZnNi-coated C1008 steel was evaluated in the 0.9 M NaCl solution.

The OCP measurements of aluminum alloy 2024 with various corrosion inhibitor types and concentrations, LHE ZnNi coated steel with various inhibitor types, and bare and LHE ZnNi coated steel with various corrosion inhibitor-containing epoxy coatings were performed for 3, 4, and 6 hours, respectively.

The corrosion rates of materials were calculated from the LP curves obtained from LP testing. This LP test was carried out by sweeping the potential from -15 mV to +15 mv versus OCP with a scan rate of 0.16667 mV/s.

Measurement of Open Circuit Potential

Figure 64-71 show the OCP values for Al 2024 in 0.9 M NaCl solution mixed with inhibitors CI1-CI8, respectively at various inhibitor concentrations. In general, increasing the inhibitor concentration makes the Al 2024 surface more cathodic as evident by an increase in OCPs in more negative potentials as the inhibitor concentration increases. This also suggests that all corrosion inhibitors used in this study are the cathodic corrosion inhibitors. It was found that the OCP values of Al 2024 with inhibitor concentrations of 0 (blank) and 36 $\mu$mole $L^{-1}$ quickly reached steady state since the beginning of OCP measurements. It was also observed that increasing the inhibitor concentrations higher than 146 $\mu$mole $L^{-1}$ generally caused the OCP stabilization took longer. The highest concentrations used for CI1-CI6 are their saturated concentrations. For CI7 and CI8 that have low solubility, the only concentration tested was their saturated concentration.

Figure 72 and Table 27 shows the final OCP values for inhibitors 1-8 from Figures 64-71. From the final OCP

values shown in Figure 72, it can be clearly seen that the most negative OCP values of Al 2024 are found in the specimens tested at the highest inhibitor concentration for each inhibitor type whereas the most positive ones are at the lowest inhibitor concentration. The most positive (-0.575 V vs SCE) and negative (-0.658 V vs SCE) OCP values belong to Al 2024 tested with CI1 at concentrations of 36 and 2,283 μmole $L^{-1}$, respectively.

Table 27: Final OCP of Al 2024 in 0.9 M NaCl solution with corrosion inhibitors 1-8 at various concentrations.

| Inhibitor code | OCP ($V_{SCE}$) | | | | | | | | | |
|---|---|---|---|---|---|---|---|---|---|---|
| | 0 mole $L^{-1}$ | 31 mole $L^{-1}$ | 36 mole $L^{-1}$ | 47.8 mole $L^{-1}$ | 146 mole $L^{-1}$ | 231 mole $L^{-1}$ | 240 mole $L^{-1}$ | 425 mole $L^{-1}$ | 1459 mole $L^{-1}$ | 2283 mole $L^{-1}$ |
| CI1 | -0.574 | N/A | -0.575 | N/A | -0.612 | N/A | -0.612 | -0.653 | -0.651 | -0.658* |
| CI2 | | N/A | -0.585 | N/A | -0.591 | N/A | -0.598* | N/A | N/A | N/A |
| CI3 | | N/A | -0.590 | N/A | -0.589 | -0.602* | N/A | N/A | N/A | N/A |
| CI4 | | N/A | -0.591 | N/A | -0.598 | N/A | -0.639 | -0.613 | -0.652* | N/A |
| CI5 | | N/A | -0.600 | N/A | -0.635* | N/A | N/A | N/A | N/A | N/A |
| CI6 | | N/A | -0.587 | N/A | -0.610 | N/A | -0.610 | -0.609* | N/A | N/A |
| CI7 | | N/A | N/A | -0.614* | N/A | N/A | N/A | N/A | N/A | N/A |
| CI8 | | -0.602* | N/A | N/A | N/A | N/A | N/A | N/A | N/A | N/A |
| *Saturation<br>CI7 and CI8 have very low solubility | | | | | | | | | | |

In order to evaluate the performance of corrosion inhibitors in inhibiting corrosion on LHE ZnNi coated steel, some inhibitor types tested for Al 2024 as shown in Figure 72 and Table 27 were selected again and tested for LHE ZnNi-coated steel samples. The selected inhibitors include CI1 (bishiosemicarbazone of isophthalaldehyde), CI2 (thiosemicarbazone of Salicylaldehyde), CI4 (thiosemicarbazone of 2-pyridine carboxyaldehyde), and CI6 (4-ethyl-3-thiosemicarbazone of isophthalaldehyde). Besides, other corrosion inhibitors, i.e. CI9 (terephthalaldehyde & 4methylthiosemicarbazide), CI10 (2,6-diacetylpyridine & 4-phenyl 3-thiosemicarbazide), and CI11 (4-methylthiosemicarbazide & 2, 6-diacetylpyridine) were also tested. Noting that these three inhibitors (CI9, CI10, and CI11) were not tested for Al 2024.

The OCP values of LHE ZnNi coated steel samples in 0.9 M NaCl solution saturated with different inhibitors are presented in Figure 73, and the final OCP values are presented in Figure 74. The saturation concentration for each corrosion inhibitor is the concentration with a single asterisk in Table 27. Unlike Al 2024 at various inhibitor types and concentrations (Figure 72), none of the LHE ZnNi coated steel specimens at different inhibitor types reached steady state after 4 hours of OCP measurements. The OCP keeps increasing with increasing the test duration. The continuous OCP increase of LHE ZnNi-coated steel in the blank solution may indicate that the formation of protective film on the surface. With the OCP of -0.924 V vs SCE (Figure 74 and Table 28), the LHE ZnNi coating is clearly more active than its C1008 substrate with the OCP of -0.738 V vs SCE. This may suggest that ZnNi coating acts as a sacrificial coating where Zn sacrificially corrodes to provide a cathodic protection to the underlying C1008 steel substrate. The shift in OCPs to more negative OCP values with addition of corrosion inhibitors clearly demonstrates that the LHE ZnNi coating surface becomes electrochemically more active in the presence of inhibitor.

Table 28: Final OCPs of Al LHE ZnNi coated C1008 steel in 0.9 M NaCl solution with various corrosion inhibitors from Figure 74.

| Inhibitor code | OCP ($V_{SCE}$) |
|---|---|
| Blank LHE ZnNi coat | -0.856 |
| CI1//LHE ZnNi coat | -0.924 |
| CI2//LHE ZnNi coat | -0.860 |
| CI4//LHE ZnNi coat | -0.862 |
| CI6//LHE ZnNi coat | -0.905 |
| CI9//LHE ZnNi coat | -0.823 |

(continued)

| Inhibitor code | OCP ($V_{SCE}$) |
|---|---|
| CI10//LHE ZnNi coat | -0.904 |
| CI11//LHE ZnNi coat | -0.882 |

Figure 75 shows an Evans diagram of a metal with and without cathodic inhibitor. An Evans diagram is a pictorial that depict the graphical representation between an electrode's kinetic data (or current densities) and thermodynamics (or potential) in a corrosive process. This diagram shows that an addition of cathodic corrosion inhibitor shifts the corrosion potential to a more negative potential and lowers corrosion current density. This decrease in corrosion potential with an addition of cathodic corrosion inhibitor reasonable agrees with the decreases in OCP with an addition of corrosion inhibitors presented in Figures 72-74.

Measurement of Corrosion Rate and Inhibitor Efficiencies

The corrosion rates and corresponding inhibitor efficiencies of Al 2024 in 0.9 M NaCl solution with different corrosion inhibitor types and concentrations are presented in Figures 76 and 77, respectively. In general, increasing the inhibitor concentration that makes the surface more active (Figure 72) tends to slow down the corrosion rate for all types corrosion inhibitors (Figure 76) and increases the inhibitor efficiency (Figure 77). This trend is in agreement with the Evans diagram for cathodic inhibitor shown in Figure 75. Inhibition efficiency higher than 90% was found in corrosion inhibitors CI1 (bis-thiosemicarbazone of isophthalaldehyde) and 4 (Thiosemicarbazone of 2-pyridine carboxyaldehyde) at concentrations higher than 146 μmole $L^{-1}$, suggesting that these two corrosion inhibitors are good candidates for inhibiting corrosion of Al 2024. The highest inhibitor efficiency of these two corrosion inhibitors are around 95% at concentration of 1459 μmole $L^{-1}$.

The corrosion rates of Al 2024 and all specimens in this study were calculated from the LPR curves of the corresponding specimens. The polarization resistance (Rp) and corrosion rate values of Al 2024 with various corrosion inhibitor types and concentrations are listed in Tables 29 and 30, respectively. As can be seen in Table 29, the Rp values generally tend to increase with increasing the inhibitor concentration which in turn decreasing the corrosion rates (Table 20) and increasing the inhibitor efficiencies (Table 31).

Table 29: Polarization resistance of Al 2024 with corrosion inhibitors 1-8 at various concentrations:

| **Inhibitor code** | **Rp (Ω $cm^2$)** | | | | | | | | | |
|---|---|---|---|---|---|---|---|---|---|---|
| | **0 μmole $L_{-1}$** | **31 μmole $L_{-1}$** | **36 μmole $L_{-1}$** | **47.8 μmole $L_{-1}$** | **146 μmole $L_{-1}$** | **231 μmole $L_{-1}$** | **240 μmole $L_{-1}$** | **425 μmole $L_{-1}$** | **1459 μmole $L_{-1}$** | **2283 μmole $L_{-1}$** |
| CI1 | 3,315 | N/A | 2,048 | N/A | 30,736 | N/A | 89,295 | 48,263 | 66,651 | 63,325 |
| CI2 | | N/A | 4,424 | N/A | 67,761 | N/A | 9,750 | N/A | N/A | N/A |
| CI3 | | N/A | 7,508 | N/A | 8,284 | 7,574 | N/A | N/A | N/A | N/A |
| CI4 | | N/A | 8,103 | N/A | 6,919 | N/A | 125,041 | 60,693 | 298,351 | N/A |
| CI5 | | N/A | 8,036 | N/A | 4,216 | N/A | N/A | N/A | N/A | N/A |
| CI6 | | N/A | 3,281 | N/A | 15,767 | N/A | 21,986 | 9,853 | N/A | N/A |
| CI7 | | N/A | N/A | 2,958 | N/A | N/A | N/A | N/A | N/A | N/A |
| CI8 | | 12,566 | N/A | N/A | N/A | N/A | N/A | N/A | N/A | N/A |

Table 30: Corrosion rates of Al 2024 with corrosion inhibitors 1-8 at various concentrations:

| Inhibitor code | Corrosion rate (mpy) | | | | | | | | | |
|---|---|---|---|---|---|---|---|---|---|---|
| | 0 μmole $L_{-1}$ | 31 μmole $L_{-1}$ | 36 μmole $L^{-1}$ | 47.8 μmole $L_{-1}$ | 146 μmole $L_{-1}$ | 231 μmole $L_{-1}$ | 240 μmole $L_{-1}$ | 425 μmole $L_{-1}$ | 1459 μmole $L_{-1}$ | 2283 μmole $L_{-1}$ |
| CI1 | 3.45 | N/A | 5.58 | N/A | 0.37 | N/A | 0.12 | 0.23 | 0.17 | 0.18 |
| CI2 | | N/A | 2.58 | N/A | 0.16 | N/A | 1.38 | N/A | N/A | N/A |
| CI3 | | N/A | 1.52 | N/A | 1.38 | 1.51 | N/A | N/A | N/A | N/A |
| CI4 | | N/A | 1.41 | N/A | 1.65 | N/A | 0.09 | 0.18 | 0.04 | N/A |
| CI5 | | N/A | 1.42 | N/A | 2.71 | N/A | N/A | N/A | N/A | N/A |
| CI6 | | N/A | 3.48 | N/A | 0.72 | N/A | 0.52 | 1.16 | N/A | N/A |
| CI7 | | N/A | N/A | 3.86 | N/A | N/A | N/A | N/A | N/A | N/A |
| CI8 | | 0.91 | N/A | N/A | N/A | N/A | N/A | N/A | N/A | N/A |

Table 31: Inhibitor efficiency of Al 2024 with corrosion inhibitors 1-8 at various concentrations:

| Inhibitor code | Inhibition Efficiency (%) | | | | | | | | |
|---|---|---|---|---|---|---|---|---|---|
| | 31 μmole $L_{-1}$ | 39 μmole $L_{-1}$ | 47.8 μmole $L_{-1}$ | 146 μmole $L_{-1}$ | 231 μmole $L_{-1}$ | 240 μmole $L_{-1}$ | 425 μmole $L_{-1}$ | 1459 μmole $L_{-1}$ | 2283 μmole $L_{-1}$ |
| CI1 | N/A | -61.89 | N/A | 89.21 | N/A | 96.29 | 93.13 | 95.03 | 94.76 |
| CI2 | N/A | 25.06 | N/A | 95.11 | N/A | 65.99 | N/A | N/A | N/A |
| CI3 | N/A | 55.84 | N/A | 59.97 | 56.22 | N/A | N/A | N/A | N/A |
| CI4 | N/A | 59.08 | N/A | 52.08 | N/A | 97.35 | 94.53 | 98.89 | N/A |
| CI5 | N/A | 58.74 | N/A | 21.35 | N/A | N/A | N/A | N/A | N/A |
| CI6 | N/A | -1.05 | N/A | 78.97 | N/A | 84.92 | 66.35 | N/A | N/A |
| CI7 | N/A | N/A | -12.08 | N/A | N/A | N/A | N/A | N/A | N/A |
| CI8 | 73.61 | N/A | N/A | N/A | N/A | N/A | N/A | N/A | N/A |

Due to CI1 and CI4 lowest corrosion rate and highest inhibitor efficiency at their highest concentrations (their saturated concentrations), these two saturated inhibitors along with saturated CI2 (Thiosemicarbazone of Salicylaldehyde), CI6 (4-ethyl-3-thiosemicarbazone of isophthalaldehyde), CI9 (terephthalaldehyde & 4-methylthiosemicarbazide), CI10 (2,6Diacetylpyridine & 4-phenyl 3-thiosemicarbazide), and CI11 (4-methylthiosemicarbazide & 2, 6diacetylpyridine) were tested for LHE ZnNi coated steel samples. As can be seen in Figure 78, the lowest corrosion rate is found in the LHE ZnNI coated steel in a solution containing saturated CI1 which is 1.85 mpy whereas the highest one is in saturated CI4 which is 17.3 mpy. From the inhibitor efficiency calculation (Figures 78 and 79), only CI1 gives positive inhibitor efficiency. The other corrosion inhibitors produce negative efficiency, meaning an addition of those saturated corrosion inhibitors makes the corrosion rate of LHE ZnNI coated steel high compared to the one in blank solution. Based on the findings in Figures 76-79, only corrosion inhibitor CI1 (bis-hiosemicarbazone of isophthalaldehyde) would be mixed with various epoxies to produce the corrosion inhibitor-containing coatings. The results of such coatings are presented in the next sub-section below.

Table 32: Polarization resistance and corrosion rates of Al 2024 with corrosion inhibitors CI1-CI8:

| Inhibitor code | Rp (Ω $cm^2$) | Corrosion rate (mpy) | Inhibition Efficiency (%) |
|---|---|---|---|
| Blank LHE ZnNi coat | 5525.52 | 2.15 | N/A |
| CI1//LHE ZnNi coat | 6436.44 | 1.85 | 14.15 |
| CI2//LHE ZnNi coat | 1613.35 | 7.38 | -242.49 |

(continued)

| Inhibitor code | Rp (Ω cm$^2$) | Corrosion rate (mpy) | Inhibition Efficiency (%) |
|---|---|---|---|
| CI4//LHE ZnNi coat | 687.93 | 17.30 | -703.20 |
| CI6//LHE ZnNi coat | 1795.18 | 6.63 | -207.80 |
| CI9//LHE ZnNi coat | 1979.33 | 6.01 | -179.16 |
| CI10//LHE ZnNi coat | 2710.10 | 4.39 | -103.89 |
| CI11//LHE ZnNi coat | 2380.75 | 5.00 | -132.09 |

In summary, the role of inhibitor concentrations, epoxy coatings, and epoxy plus bis-hiosemicarbazone of isophthalaldehyde corrosion inhibitor on the corrosion protection of bare Al 2024, bare C1008 steel, and LHE ZnNi-coated C1008 steel was investigated in this study. Based on our findings, it was found that:

A. Increasing the corrosion inhibitor concentrations generally shifted the OCPs of Al 2024 to more negative potentials, decreased the corrosion rates, and increased the inhibitor efficiencies.

B. In general, the higher the corrosion inhibitor concentration, the lower (more negative) the OCP and corrosion rate.

C. An addition of CI1 (bis-hiosemicarbazone of isophthalaldehyde), CI2 (thiosemicarbazone of Salicylaldehyde), CI4 (thiosemicarbazone of 2-pyridine carboxyaldehyde), and CI6 (4ethyl-3-thiosemicarbazone of isophthalaldehyde). CI9 (terephthalaldehyde & 4methylthiosemicarbazide), CI10 (2,6-diacetylpyridine & 4-phenyl 3-thiosemicarbazide), and CI11 (4-methylthiosemicarbazide & 2, 6-diacetylpyridine) to 0.9 M NaCl solution made the surface of LHE ZnNI-coated steel electrochemically more active. This may suggest that these inhibitors are cathodic inhibitors.

Statistical Analysis electrochemistry of inhibitors

The responses of interest analyzed from the experiments were (1) the polarization resistance (Rp), (2) Initial resistance to polarization as determine from electrochemical impedance (Initial EIS Rp), (3) Final resistance to polarization as determine from electrochemical impedance (Final EIS Rp), (4) Corrosion Rate and (5) Corrosion Rate MPY (mils per year). The goal was to maximize responses (1)-(3) and minimize responses (4)-(5). Currently 66 experiments have been completed, 33 conducted in the United States and 33 conducted in India. Of these experiments, there is currently information on the inhibitor concentrations at which the experiments were conducted for 47 experiments. Additionally, 48 of the 66 experiments were run at saturation. Note that 37 of the experiments run at saturation have only the Rp response measured. The experiments consist of 8 aldehyde levels in combination with 5 different thiosemicarbazide level. The 8 aldehyde levels include (1) Isophthalaldehyde (base), (2) Diacetyl pyridine (dp), (3) Hexanedione (hex), (4) Hydroxyquinoline carboxyaldehyde (hc), (5) Pentandione (p), (6) Pyridine carboxyaldehyde (pc), (7) Salicylaldehyde (s), and (8) Terephthalaldehyde (t). The 5 thiosemicarbazide levels include: (1) Thiosemicarbazide (base), (2) Phenyl Thiosemicarbazide (phenyl), (3) Ethyl Thiosemicarbazide (ethyl), (4) Methyl Thiosemicarbazide (methyl), and (5) Thiocarbohydrazide(thioc).

In the following analyses, the baseline combination consists of the isophthalaldehyde with the thiosemicarbazide combination. Table 33 consists of the total number of experiments currently available for each combination.

Table 33: Total number of experiments conducted for each combination of the aldehydes with the thiosemicarbazide, from experiments conducted in the US and in India.

| | Thiosemicarbazide (base) | Ethyl Thiosemicarbazide (ethyl) | Methyl Thiosemicarbazide (methyl) | Phenyl Thiosemicarbazide (phenyl) | Thiocarbohydrazide (thioc) |
|---|---|---|---|---|---|
| **Isophthalaldehyde (base)** | 9 | 6 | 0 | 4 | 0 |
| **Diacetyl Pyridine (dp)** | 5 | 0 | 0 | 2 | 0 |
| **Hexanedione (hex)** | 2 | 0 | 0 | 2 | 0 |

(continued)

| | Thiosemicarbazide (base) | Ethyl Thiosemicarbazide (ethyl) | Methyl Thiosemicarbazide (methyl) | Phenyl Thiosemicarbazide (phenyl) | Thiocarbohydrazide (thioc) |
|---|---|---|---|---|---|
| Hydroxyquinoline Carboxyaldehyde (hc) | 4 | 0 | 0 | 1 | 0 |
| Pentandione (p) | 4 | 0 | 0 | 1 | 0 |
| Pyridine Carboxyaldehyde (pc) | 6 | 0 | 0 | 0 | 0 |
| Salicylaldehyde (s) | 6 | 2 | 1 | 2 | 2 |
| Terephthalaldehyde (t) | 2 | 2 | 0 | 3 | 0 |

Since some of the experiments were run at saturation and some of the experiments do not contain inhibitor concentration information, the data is subset as (1) experiments for which the inhibitor concentration are known and (2) experiments that were run at saturation. In the following subsections, Table 33 will be subset and analyzed with three different analyses, two of which are focused on experiments that have inhibitor concentration information available and the last analysis focused on experiments run with combinations at saturation.

<u>Analyses with Inhibitor Concentration Information</u>

Table 34 provides the number of experiments for each experiment that contain inhibitor concentration information.

Table 34: Total number of experiments conducted with inhibitor concentration information available for each combination of the aldehydes with the thiosemicarbazide, from experiments conducted in the US and in India.

| | Thiosemicarbazide (base) | Ethyl Thiosemicarbazide (ethyl) | Methyl Thiosemicarbazide (methyl) | Phenyl Thiosemicarbazide (phenyl) |
|---|---|---|---|---|
| Isophthalaldehyde (base) | 9 | 6 | 0 | 4 |
| Diacetyl Pyridine (dp) | 5 | 0 | 0 | 0 |
| Hydroxyquinoline Carboxyaldehyde (hc) | 4 | 0 | 0 | 1 |
| Pyridine Carboxyaldehyde (pc) | 6 | 0 | 0 | 0 |
| Salicylaldehyde (s) | 6 | 0 | 1 | 0 |
| Terephthalaldehyde (t) | 2 | 0 | 0 | 3 |

Since there are some combinations for which experiments have not yet been run, a subset of Table 34 will be used for analysis. For Analysis 1, only the first column of the table will be used in which the different aldehyde levels in combination with the thiosemicarbazide base level will be compared to the baseline (isophthalaldehyde with thiosemicarbazide). For Analysis 2, the first and last columns of the table will be used with the first, third, and last row to compare the combinations of isophthalaldehyde with phenyl thiosemicarbazide, hydroxyquinoline carboxyaldehyde with thiosemicarbazide and with phenyl thiosemicarbazide, and terephthalaldehyde with thiosemicarbazide and with phenyl thiosemicarbazide to the baseline combination.

Lastly, the experiments conducted in India only had the Rp response measured. For Analysis 1 and Analysis 2

since all the responses will be modeled, the data is subset to experiments conducted in the US only for consistency. The experiments conducted in India are included in the model in Analysis 3, in which focus is on the experiments at saturation with the Rp response modeled.

Analysis 1 - Effect of Aldehyde/ketone

Table 35 provides more details on the experiments in column 1 in Table 34, including the inhibitor concentrations at which the experiments were completed. Note that there were multiple experiments conducted for some of the inhibitor concentrations, indicated in parenthesis. Also indicated in the parenthesis are the number of experiments for which only the Rp response is available (meaning the experiment was conducted at saturation).

Table 35: Experiments used in Analysis 1 in which thiosemicarbazide with different levels of the aldehydes are modeled and include inhibitor concentration information for US experiments only.

| | Thiosemicarbazide (base) | Inhibitor Concentrations |
|---|---|---|
| **Isophthalaldehyde (base)** | 8 | 36, 146 (2), 241,425,1459,2283 |
| **Diacetyl Pyridine (dp)** | 1 | 32 |
| **Hydroxyquinoline carboxyaldehyde (hc)** | 4 | 36, 146, 231 (2, 1 has Rp only) |
| **Pyridine carboxyaldehyde (pc)** | 6 | 36,146,241,425,1459 (2, 1 has Rp only) |
| **Salicylaldehyde (s)** | 4 | 36,146,241 (2, 1 has Rp only) |
| **Terephthalaldehyde (t)** | 1 | 36 |

To analyze the data, a model of the following form was fit using multiple linear regression model fitting techniques:

$$\begin{aligned}\log_{10} Y_i = \beta_0 + \beta_{dp} Aldehyde + \beta_{hc} Aldehyde + \beta_{pc} Aldehyde + \beta_s Aldehyde + \beta_t Aldehyde \\ + \beta IC \log 10\ IC + \beta IC\ X\ dc \log 10\ IC\ X\ Aldehyde + \beta IC\ X\ hc \log 10\ IC\ X\ Aldehyde \\ + \beta_{IC\ X\ pc} \log_{10} IC\ X\ Aldehyde + \beta_{IC\ X\ s} \log_{10} IC\ X\ Aldehyde \\ + \beta_{IC\ X\ t} \log_{10} IC\ X\ Aldehyde\end{aligned}$$

In this model, the logarithm base 10 of the responses, $Y_i$, and the inhibitor concentrations, *IC*, were used. The model estimates coefficients for the effect of inhibitor concentration, for the main effect of each aldehyde as well as the interaction effect between each aldehyde and the inhibitor concentration. This provides information on both the effect of each aldehyde on the response compared to the baseline combination, as well as the effect of each aldehyde on the response as inhibitor concentration increases. In what follows, the graph and explanation of the results are provided for each response as well as the multiple $R^2$ for each model. The multiple $R^2$, which takes values between 0% and 100%, is a measure of how well the regression model fits the data, with a multiple $R^2$ of 100% indicating a perfect fit of the model.

In the graphs, the different aldehydes are the baseline, pyridine carboxyaldehyde (pc), hydroxyquinoline carboxyaldehyde (hc), salicylaldehyde (s), terephthalaldehyde (t), and diacetyl pyridine (dp). The points represent the predicted mean value using the regression fit for the aldehyde at a given inhibitor concentration, with the solid lines providing the regression model fit. The dashed lines above and below are 95% confidence bounds around the regression curve. In the case where there are observations at only one inhibitor concentration, an "x" is plotted above and below the mean value to represent upper and lower confidence bounds. Note that the confidence bounds indicate that the mean value of the response at a given inhibitor concentration would take value between the lower and upper bounds with 95% confidence. Overlaps in the confidence bounds for an aldehyde with the baseline confidence bounds indicate that there is no significant difference between in the mean value of the response for the aldehyde compared to the baseline at a given inhibitor concentration level. Lastly, any conclusions about significant differences are based on the range of inhibitor concentration tested for a particular aldehyde; conclusions are not being extrapolated to untested inhibitor concentration levels.

Rp Results

Referring to Figure 80, the multiple $R^2$ of the Rp model is 67%, which indicates a reasonable fit of the model to the data. Based on the results in Figure 80, the conclusions are as follow:

1. As inhibitor concentration increases, the Rp increases for all aldehydes, except terephthalaldehyde (t) and diacetyl pyridine (dp) for which there is not enough information to draw conclusions on the slope.

2. For a given inhibitor concentration, the Rp response is (A) Significantly higher for diacetyl pyridine (dp) compared to the baseline at inhibitor concentration 32 *(based on one observation),* (B) Not significantly different for the remaining aldehydes compared to the baseline.

Initial EIS Rp Results

Referring to Figure 81, the multiple $R^2$ for the Initial EIS Rp model is 83%, indicating a good fit of the model to the data. Based on the results in Figure 81, the conclusions are as follows:

1. As inhibitor concentration increases, the Initial EIS Rp increases for all aldehydes except (A) Hydroxyquinoline carboxyaldehyde (hc) for which the Initial EIS Rp decreases, (B) Diacetyl pyridine (dp) for which there is not enough information to draw conclusions on the slope.

2. For a given inhibitor concentration, the Initial EIS Rp is (A) Significantly lower for the hydroxyquinoline carboxyaldehyde (hc) compared to the baseline for inhibitor concentrations greater than 146. (B) Not significantly different for the remaining aldehydes compared to the baseline

3. No Initial EIS Rp values were recorded for terephthalaldehyde (t), so conclusions do not apply for this aldehyde.

Final EIS Rp Results

Referring to Figure 82, the multiple $R^2$ for the Final EIS Rp response is 88%, indicating a good fit of the model to the data. Based on the results in Figure 82, the conclusions are as follows:

1. As inhibitor concentration increases, the Final EIS Rp o Increases for the baseline, pyridine carboxyaldehyde (pc), and salicylaldehyde (s). (A) Not enough evidence to conclude that the slope for hydroxyquinoline carboxyaldehyde (hc) is different than the baseline. (B) Not enough information to draw conclusions on the slopes for terephthalaldehyde (t) and diacetyl pyridine (dp).

2. For a given inhibitor concentration, the Final EIS Rp is (A) Significantly lower for terephthalaldehyde (t) compared to the baseline *(based on one observation)* at inhibitor concentration 36, (B) Not significantly different for the remaining aldehydes compared to the baseline.

Corrosion Rate Results

Referring to Figure 83, The multiple $R^2$ for the Corrosion Rate model is 76% which indicates a reasonable fit of the model to the data. Based on the results in Figure 83, the conclusions are as follows:

1. As inhibitor concentration increases, the Corrosion Rate (A) Decreases for the baseline, pyridine carboxyaldehyde (pc), and salicylaldehyde, (B) Not enough evidence to conclude that the slope for hydroxyquinoline carboxyaldehyde (hc) is different than the baseline. (C) Not enough information to draw conclusions on the slopes for terephthalaldehyde (t) and diacetyl pyridine (dp).

2. For a given inhibitor concentration, the Corrosion Rate is (A) Significantly higher for terephthalaldehyde (t) as compared to the baseline (*based on one observation)* at inhibitor concentration 36. (B) Not significantly different for the remaining aldehydes compared to the baseline.

Corrosion Rate MPY Results

Referring to Figure 84, the multiple $R^2$ of the Corrosion Rate MPY model is 76% which indicates a reasonable fit of the model to the data. Based on the results in Figure 84, the conclusions are as follows:

1. As inhibitor concentration increases, the Corrosion Rate MPY (A) Decreases for all aldehydes except terephthalaldehyde (t) and diacetyl pyridine (dp), for which there is not enough information to draw conclusions on the slope.

2. For a given inhibitor concentration, the Corrosion Rate MPY is (A) Significantly higher for terephthalaldehyde (t) as compared to the baseline (*based on one observation*) at inhibitor concentration 36, (B) Not significantly different for the remaining aldehydes compared to the baseline.

Effect of Addition of Phenyl Ring to Thiosemicarbazide

Analysis 2 was completed using the data the following Table 36. The setup of this analysis is an extension of Analysis 1, with the addition of phenyl thiosemicarbazide and fewer aldehyde levels. Note that the baseline in this analysis is thiosemicarbazide with isophthalaldehyde combination.

Table 36: Experiments used in analysis 2 in which thiosemicarbazide and phenyl thiosemicarbazide with different levels of the aldehydes are modeled and include inhibitor concentration information for the US experiments only.

| | **Thiosemicarbazide (base)** | **Phenyl thiosemicarbazide (phenyl)** |
|---|---|---|
| **Isophthalaldehyde (base)** | 8 inhibitor concentrations: 36, 146 (2), 241, 425, 1459, 2283 (2, 1 has Rp only) | 2 inhibitor concentrations: 36,146 |
| **Hydroxyquinoline carboxyaldehyde (hc)** | 4 inhibitor concentrations: 36, 146, 231 (2, 1 has Rp only) | 1 Inhibitor concentration: 31 |
| **Terephthalaldehyde (t)** | 1 Inhibitor concentration: 36 | 1 inhibitor concentrations: 23 |

To analyze the data, a model of the following form was fit using multiple linear regression model fitting techniques:

$$\begin{aligned}\log 10\ Yi = \beta 0 &+ \beta hc\ X\ baseCombination 2 + \beta t\ X\ baseCombination 3 \\ &+ \beta\ base\ X\ phenylCombination 4 + \beta hc\ X\ phenylCombination 5 \\ &+ \beta t\ X\ phenylCombination 6 + \beta IC \log 10\ IC \\ &+ \beta IC\ X\ hc\ X\ base \log 10\ IC\ X\ Combination 2 \\ &+ \beta IC\ X\ t\ X\ base \log 10\ IC\ X\ Combination 3 \\ &+ \beta IC\ X\ base\ X\ phenyl \log 10\ IC\ X\ Combination 4 \\ &+ \beta IC\ X\ hc\ X\ phenyl \log 10\ IC\ X\ Combination 5 \\ &+ \beta IC\ X\ t\ X\ phenyl \log 10\ IC\ X\ Combination 6\end{aligned}$$

The interpretation of the model is similar to that in Analysis 1 but now different combinations of the aldehydes and the thiosemicarbazides are considered along with the interaction between these combinations and the inhibitor concentration. In this model, there are 6 different combinations analyzed (as listed in the table above). In what follows, the graphs and results will be presented for each response. Note that the interpretation using the graph is similar to that of Analysis 1.

However, the colors and combinations are now the following: Combination 1: Baseline (isophthalaldehyde with thiosemicarbazide); Combination 2: Isophthalaldehyde with phenyl thiosemicarbazide; Combination 3: Hydroxyquinoline carboxyaldehyde (hc) with thiosemicarbazide; Combination 4: Hydroxyquinoline carboxyaldehyde (hc) with phenyl thiosemicarbazide; Combination 5: Terephthalaldehyde (t) with thiosemicarbazide; Combination 6: Terephthalaldehyde (t) with phenyl thiosemicarbazide.

Rp Results

Referring to Figure 85, the multiple $R^2$ of the Rp model is 82% which indicates a good fit of the model to the data. Based on the results in Figure 85, the conclusions are as follow:

1. As inhibitor concentration level increases, the Rp response (A) Increases for the baseline, hydroxyquinoline carboxyaldehyde (hc) with thiosemicarbazide, and isophthalaldehyde with phenyl thiosemicarbazide, (B) Not enough info to draw conclusions on the slope for the remaining combinations.

2. At a specific inhibitor concentration, the Rp is (A) The terephthalaldehyde (t) with phenyl thiosemicarbazide

combination, which results in significantly higher Rp than the baseline combination at inhibitor concentration 23 (*based on one observation*), (B) Not significantly different for any of the combinations as compared to the baseline.

Initial EIS Rp Results

Referring to Figure 86, the multiple $R^2$ of the Initial EIS Rp model is 94%, indicating a good fit of the model to the data. Based on the results in Figure 86, the conclusions are as follow:

1. As inhibitor concentration level increases, the Initial EIS Rp response (A) Increases for the baseline, (B) Decreases for hydroxyquinoline carboxyaldehyde (hc) with thiosemicarbazide, (C) Not enough information to draw conclusions on the slopes for the remaining combinations.

2. At a specific inhibitor concentration, the Initial EIS Rp response is (A) Significantly lower for isophthalaldehyde with phenyl thiosemicarbazide than the baseline at inhibitor concentration 146 (*based on one observation).* (B) Significantly lower for hydroxyquinoline carboxyaldehyde (hc) with thiosemicarbazide than the baseline for inhibitor concentrations greater than 146. (C) Significantly higher for hydroxyquinoline carboxyaldehyde (hc) with phenyl thiosemicarbazide and terephthalaldehyde (t) with phenyl thiosemicarbazide than the baseline at inhibitor concentrations 31 and 23, respectively (each *based on one observation).*

Final EIS Rp Results

Referring to Figure 87, the multiple $R^2$ of the Final EIS Rp model is 94%, indicating a good fit of the model to the data. Based on the results in Figure 87, the conclusions are as follow:

1. As inhibitor concentration level increases, the Final EIS Rp response (A) Increases for the baseline. (B) Decreases for isophthalaldehyde with phenyl thiosemicarbazide. (C) There is not enough evidence to conclude that the slope of hydroxyquinoline carboxyaldehyde (hc) with thiosemicarbazide is significantly different than the baseline slope. (D) Not enough information to draw conclusions on the slope for the remaining combinations.

2. At a specific inhibitor concentration, the Final EIS Rp response is (A) Significantly lower for isophthalaldehyde with phenyl thiosemicarbazide for inhibitor concentrations greater than 146. (B) Significantly higher for hydroxyquinoline carboxyaldehyde (hc) with phenyl thiosemicarbazide and terephthalaldehyde (t) with phenyl thiosemicarbazide than the baseline at inhibitor concentrations 31 and 23, respectively (each *based on one observation), (C)* Significantly lower for terephthalaldehyde (t) with thiosemicarbazide than the baseline at inhibitor concentration 36 (*based on one observation).*

Corrosion Rate Results

Referring to Figure 88, the multiple $R^2$ of the Corrosion Rate model is 90%, indicating a good fit of the model to the data. Based on the results in Figure 88, the conclusions are as follow:

1. As inhibitor concentration level increases, the Corrosion Rate (A) Decreases for the baseline. (B) Note enough evidence to conclude that isophthalaldehyde with phenyl thiosemicarbazide and hydroxyquinoline carboxyaldehyde (hc) with phenyl thiosemicarbazide have different slopes than the baseline. (C) Not enough information to draw conclusions on the slope for the remaining combinations.

2. At a specific inhibitor concentration, the Corrosion Rate is (A) Significantly higher for terephthalaldehyde (t) with thiosemicarbazide than the baseline at inhibitor concentration 36 (*based on one observation).* (B) Significantly lower for the terephthalaldehyde (t) with phenyl thiosemicarbazide than the baseline at inhibitor concentration 23 (*based on one observation), (C)* Not significantly different for the other combinations compared with the baseline.

Corrosion Rate MPY Results

Referring to Figure 89, the multiple $R^2$ of the Corrosion Rate MPY model is 84%, indicating a reasonable fit of the model to the data. Based on the results in Figure 89, the conclusions are as follow:

1. As inhibitor concentration level increases, the Corrosion Rate MPY decreases for all combinations except hydroxyquinoline carboxyaldehyde (hc) with phenyl thiosemicarbazide, terephthalaldehyde (t) with thiosemicarbazide, terephthalaldehyde (t) with phenyl thiosemicarbazide for which there is not enough information to draw conclusions about the slope.

2. At a specific inhibitor concentration, the Corrosion Rate MPY is (A) Not significantly different for isophthalaldehyde with phenyl thiosemicarbazide or hydroxyquinoline carboxyaldehyde (hc) with thiosemicarbazide compared to the baseline, (B) Lower for hydroxyquinoline carboxyaldehyde (hc) with phenyl thiosemicarbazide than the baseline at inhibitor concentration 31 (*based on one observation),* (C) Higher for terephthalaldehyde (t) with thiosemicarbazide than the baseline at inhibitor concentration *36* (*based on one observation).*

Summary of Analysis 1 and Analysis 2

In general for both Analysis 1 and Analysis 2, as inhibitor concentration increases, the Rp, Initial EIS Rp, and Final EIS Rp increase while Corrosion Rates decrease. This indicates that in the majority of the combinations, the results improve with increasing inhibitor concentration. Since the maximum inhibitor concentration at which the experiment can be conducted is the saturation value, this indicates that the optimal responses occur at saturation for several of the combinations. However, the hydroxyquinoline carboxyaldehyde with thiosemicarbazide resulted in decreasing Initial EIS Rp with increasing inhibitor concentrations. Similarly, the isophthalaldehyde with phenyl thiosemicarbazide resulted in decreasing Final EIS Rp with increasing inhibitor concentrations. Therefore, these two combinations may not result in optimal Initial EIS Rp and Final EIS Rp at certain combinations and perhaps should not be considered.

There is some evidence that some of the remaining combinations result in significantly different responses at specific inhibitor concentrations than the baseline. However, these conclusions are based on the results of one experiment. For example, there is evidence that diacetyl pyridine with thiosemicarbazide and the terephthalaldehyde with phenyl thiosemicarbazide result in significantly higher Rp response than the baseline. Additionally, there is some evidence that the terephthalaldehyde with thiosemicarbazide results in significantly lower Final EIS Rp and significantly higher Corrosion Rates than the baseline combination. There is also evidence that the terephthalaldehyde with phenyl thiosemicarbazide results in significantly higher Initial EIS Rp and Final EIS Rp and significantly lower corrosion rate compared to the baseline. There is also some evidence that the hydroxyquinoline carboxyaldehyde with phenyl thiosemicarbazide results in significantly higher Initial EIS Rp and Final EIS Rp than the baseline. Lastly, there is some evidence that isophthalaldehyde with phenyl thiosemicarbazide results in significantly lower Initial EIS Rp compared to the baseline. For more conclusive statements on the significance of the differences between these combinations and the baseline, more experimental results would be needed. If possible, additional experiments can be conducted at higher inhibitor concentrations to obtain more information on the slopes. However, if the experiments are conducted at the maximum inhibitor concentration values in which case inhibitor concentration cannot be increased, it may be of interest to conduct experiments at lower inhibitor concentrations to draw conclusions on the slope.

Analysis of Experiments Conducted at Saturation

Table 37 provides the number of experiments for each combination that were run at saturation. To analyze the data, columns 1 and 4 will be considered, the thiosemicarbazide and the phenyl thiosemicarbazide in combination with the different aldehyde levels since these two columns have the greatest number of experiment observations.

Table 37: Total number of experiments with combinations at saturation for the aldehydes with the thiosemicarbazide, from experiments conducted in the US and in India:

| | **Thiosemicarbazide (base)** | **Ethyl Thiosemicarbazide (ethyl)** | **Methyl Thiosemicarbazide (methyl)** | **Phenyl Thiosemicarbazide (phenyl)** | **Thiocarbohydrazide (thioc)** |
|---|---|---|---|---|---|
| **Isophthalaldehyde (base)** | 3 | 3 | 0 | 3 | 0 |
| **Diacetyl Pyridine (dp)** | 5 | 0 | 0 | 2 | 0 |
| **Hexanedione (hex)** | 2 | 0 | 0 | 2 | 0 |
| **Hydroxyquinoline Carboxyaldehyde (hc)** | 2 | 0 | 0 | 1 | 0 |
| **Pentandione (p)** | 4 | 0 | 0 | 1 | 0 |

(continued)

| | Thiosemic arbazide (base) | Ethyl Thiosemicar bazide (ethyl) | Methyl Thiosemicar bazide (methyl) | Phenyl Thiosemicarb azide (phenyl) | Thiocarbohy drazide (thioc) |
|---|---|---|---|---|---|
| **Pyridine Carboxyal-dehyde (pc)** | 2 | 0 | 0 | 0 | 0 |
| **Salicylaldehyde (s)** | 4 | 2 | 1 | 2 | 2 |
| **Terephthalaldehyde (t)** | 2 | 2 | 0 | 3 | 0 |

The following Table 38 provides the subset of the data in Table 37 to the analyzed observations.

Table 38: Experiments used in Analysis 3a in which the thiosemicarbazide and phenyl thiosemicarbazide with different levels of the aldehydes are modeled, for experiments run at saturation in the US and India

| | Thiosemicarbazide (base) | Phenyl Thiosemicarbazide (phenyl) |
|---|---|---|
| **Isophthalaldehyde (base)** | 3 (Combinationl) | 3 (Combination2) |
| **Diacetyl Pyridine (dp)** | 5 (Combination3) | 2 (Combination4) |
| **Hexanedione (hex)** | 2 (Combination5) | 2 (Combination6) |
| **Hydroxyquinoline Carboxyaldehyde (hc)** | 2 (Combination7) | 1 (Combination8) |
| **Pentandione (p)** | 4 (Combination9) | 1 (Combination 10) |
| **Pyridine Carboxyaldehyde (pc)** | 2 (Combination 11) | 0 |
| **Salicylaldehyde (s)** | 4 (Combination12) | 2 (Combination 13) |
| **Terephthalaldehyde (t)** | 2 (Combination 14) | 3 (Combination15) |

To analyze the data, a model of the following form was fit using multiple linear regression model fitting techniques:

$$\log 10\ Yi = \beta 0 + \beta Aldehydes\ base\ X\ phenylCombination2 + \beta dp\ X\ thiosCombination3 + \beta dp\ X\ phenylCombination4 + \beta hex\ X\ thiosCombination5 + \beta hex\ X\ phenylCombination6 + \beta hc\ X\ thiosCombination7 + \beta hc\ X\ phenylCombination8 + \beta p\ X\ thiosCombination9 + \beta p\ X\ phenylCombination10 + \beta pc\ X\ thiosCombination11 + \beta s\ X\ thiosCombination12 + \beta s\ X\ phenylCombination13 + \beta t\ X\ thiosCombination14 + \beta t\ X\ phenylCombination15 + \beta USLocation$$

This model provides conclusions on the relationship between each combination and the response compared to the baseline combination and accounts for an intercept difference due to location. The coefficient for the US location adjusts the coefficient for the baseline compared to the baseline India coefficient (represented as the intercept in the model, $\beta_0$). Since most experiments only measured the Rp response, the only model fit is for this response. The results of the model are provided in Figures 90 and 91, which display results for the Rp response for Analysis 3 using the thiosemicarbazide and phenyl thiosemicarbazide with the different aldehyde levels for combinations conducted at saturation. The plots are presented for each location, with the US results on the top and the India results on the bottom. The x-axis provides the different combinations and the y-axis provides the logarithm of the Rp response. The bars corresponding to each combination are the predicted mean values from the regression model with the 95% upper and lower confidence bounds provided with the "x" above and below the bars, respectively, representing a confidence interval. In this setup, overlaps of a confidence interval for a combination with that of the baseline confidence interval, the far-left combination, implies that the mean Rp response is not significantly different for the combination as compared to the baseline.

The multiple $R^2$ of the Rp model at saturation is 76%, indicating a good fit of the model to the data. From the

results, the isophthalaldehyde with phenyl thiosemicarbazide (Combination2) and terephthalaldehyde with thiosemicarbazide (Combination14) result in significantly lower Rp response than the baseline combination. There is weak significant (pvalue=0.096) that terephthalaldehyde with phenyl thiosemicarbazide (Combination 15) results in significantly lower Rp response than the baseline combination.

Conclusions from Analysis 3

The Rp response is significantly lower for a few combinations as compared to the baseline. Specifically, isophthalaldehyde with phenyl thiosemicarbazide (Combination2) and terephthalaldehyde with thiosemicarbazide (Combination14) result in significantly lower Rp response than the baseline combination. There is weak significant (p-value=0.096) that terephthalaldehyde with phenyl thiosemicarbazide (Combination15) results in significantly lower Rp response than the baseline combination.

Further, the disclosure comprises the subject matter described in the following listed clauses.

Clause 1. A corrosion inhibition composition comprising:

a carrier; and
a Schiff base in admixture with the carrier, the carrier comprising at least one of water, a hydrocarbon solvent, and a binder.

Clause 2. The corrosion inhibition composition of Clause 1, wherein the Schiff base is selected from the group consisting of thiosemicarbazone of isophthalaldehyde, thiosemicarbazone of terephthalaldehyde, thiosemicarbazone of salicylaldehyde, thiosemicarbazone of pyridine carboxyaldehyde, thiosemicarbazone of 2,6-diacetylpyridine, thiosemicarbazone of 5-hydroxymethyl-2-furaldehyde, thiosemicarbazone of 8-hydroxyquinoline-2-carboxyaldehyde, thiosemicarbazone of pentanedione, thiosemicarbazone of acetonylacetone, thiosemicarbazone of pyruvic aldehyde dimethyl acetal, thiosemicarbazone of mesityl oxide, and mixtures thereof.

Clause 3. The corrosion inhibition composition of Clause 1 or Clause 2, wherein the Schiff base:

(i) comprises an ethyl thiosemicarbazone; or
(ii) consists essentially of an ethyl thiosemicarbazone; or
(iii) consists of an ethyl thiosemicarbazone.

Clause 4. The corrosion inhibition composition of any of Clauses 1-3, wherein the Schiff base is selected from the group consisting of ethyl thiosemicarbazone of isophthalaldehyde, ethyl thiosemicarbazone of terephthalaldehyde, ethyl thiosemicarbazone of salicylaldehyde, ethyl thiosemicarbazone of pyridine carboxyaldehyde, ethyl thiosemicarbazone of 2,6-diacetylpyridine, ethyl thiosemicarbazone of 5-hydroxymethyl-2-furaldehyde, ethyl thiosemicarbazone of 8-hydroxyquinoline-2-carboxyaldehyde, ethyl thiosemicarbazone of pentanedione, ethyl thiosemicarbazone of acetonylacetone, ethyl thiosemicarbazone of pyruvic aldehyde dimethyl acetal, ethyl thiosemicarbazone of mesityl oxide, and mixtures thereof.

Clause 5. The corrosion inhibition composition of Clause 1 or Clause 2, wherein the Schiff base:

(i) comprises a methyl thiosemicarbazone; or
(ii) consists essentially of a methyl thiosemicarbazone; or
(iii) consists of a methyl thiosemicarbazone.

Clause 6. The corrosion inhibition composition of any of Clause 1, Clause 2 or Clause 5, wherein the Schiff base is selected from the group consisting of methyl thiosemicarbazone of isophthalaldehyde, methyl thiosemicarbazone of terephthalaldehyde, methyl thiosemicarbazone of salicylaldehyde, methyl thiosemicarbazone of pyridine carboxyaldehyde, methyl thiosemicarbazone of 2,6-diacetylpyridine, methyl thiosemicarbazone of 5-hydroxymethyl-2-furaldehyde, methyl thiosemicarbazone of 8-hydroxyquinoline-2-carboxyaldehyde, methyl thiosemicarbazone of pentanedione, methyl thiosemicarbazone of acetonylacetone, methyl thiosemicarbazone of pyruvic aldehyde dimethyl acetal, methyl thiosemicarbazone of mesityl oxide, and mixtures thereof.

Clause 7. The corrosion inhibition composition of Clause 1 or Clause 2, wherein the Schiff base:

(i) comprises a phenyl thiosemicarbazone; or
(ii) consists essentially of a phenyl thiosemicarbazone; or
(iii) consists of a phenyl thiosemicarbazone.

Clause 8. The corrosion inhibition composition of any of Clause 1, Clause 2 or Clause 7, wherein the Schiff base is

selected from the group consisting of phenyl thiosemicarbazone of isophthalaldehyde, phenyl thiosemicarbazone of terephthalaldehyde, phenyl thiosemicarbazone of salicylaldehyde, phenyl thiosemicarbazone of pyridine carboxyaldehyde, phenyl thiosemicarbazone of 2,6-diacetylpyridine, phenyl thiosemicarbazone of 5-hydroxymethyl-2-furaldehyde, phenyl thiosemicarbazone of 8-hydroxyquinoline-2-carboxyaldehyde, phenyl thiosemicarbazone of pentanedione, phenyl thiosemicarbazone of acetonylacetone, phenyl thiosemicarbazone of pyruvic aldehyde dimethyl acetal, phenyl thiosemicarbazone of mesityl oxide, and mixtures thereof.

Clause 9. The corrosion inhibition composition of Clause 1, wherein the Schiff base:

(i) comprises a thiocarbohydrazone; or
(ii) consists essentially of a thiocarbohydrazone; or
(iii) consists of a thiocarbohydrazone.

Clause 10. The corrosion inhibition composition of Clause 1 or Clause 9, wherein the Schiff base is selected from the group consisting of thiocarbohydrazone of isophthalaldehyde, thiocarbohydrazone of terephthalaldehyde, thiocarbohydrazone of salicylaldehyde, thiocarbohydrazone of pyridine carboxyaldehyde, thiocarbohydrazone of 2,6-diacetylpyridine, thiocarbohydrazone of 5-hydroxymethyl-2-furaldehyde, thiocarbohydrazone of 8-hydroxyquinoline-2-carboxyaldehyde, thiocarbohydrazone of pentanedione, thiocarbohydrazone of acetonylacetone, thiocarbohydrazone of pyruvic aldehyde dimethyl acetal, thiocarbohydrazone of mesityl oxide, and mixtures thereof.

Clause 11. A method for inhibiting corrosion on a metallic substrate, the method comprising: applying to the metallic substrate a corrosion inhibition composition comprising a Schiff base.

Clause 12. The method of Clause 11, wherein the Schiff base is selected from the group consisting of thiosemicarbazone of isophthalaldehyde, thiosemicarbazone of terephthalaldehyde, thiosemicarbazone of salicylaldehyde, thiosemicarbazone of pyridine carboxyaldehyde, thiosemicarbazone of 2,6-diacetylpyridine, thiosemicarbazone of 5-hydroxymethyl-2-furaldehyde, thiosemicarbazone of 8-hydroxyquinoline-2-carboxyaldehyde, thiosemicarbazone of pentanedione, thiosemicarbazone of acetonylacetone, thiosemicarbazone of pyruvic aldehyde dimethyl acetal, thiosemicarbazone of mesityl oxide, and mixtures thereof.

Clause 13. The method of Clause 11 or Clause 12, wherein the Schiff base:

(i) comprises an ethyl thiosemicarbazone; or
(ii) consists essentially of an ethyl thiosemicarbazone; or
(iii) consists of an ethyl thiosemicarbazone.

Clause 14. The method of Clause 11 or Clause 12, wherein the Schiff base:

(i) comprises a methyl thiosemicarbazone; or
(ii) consists essentially of a methyl thiosemicarbazone; or
(iii) consists of a methyl thiosemicarbazone.

Clause 15. The method of Clause 11 or Clause 12, wherein the Schiff base:

(i) comprises a phenyl thiosemicarbazone; or
(ii) consists essentially of a phenyl thiosemicarbazone; or
(iii) consists of a phenyl thiosemicarbazone.

Clause 16. The method of Clause 11, wherein the Schiff base:

(i) comprises a thiocarbohydrazone; or
(ii) consists essentially of a thiocarbohydrazone; or
(iii) consists of a thiocarbohydrazone.

Clause 17. The method of Clause 11, wherein the composition is a corrosion inhibition composition as defined in any of Clauses 1 to 10.

Clause 18. A coated metallic substrate, comprising:

a metallic substrate; and
a coating comprising a Schiff base.

Clause 19. The coated metallic substrate of Clause 18, wherein the Schiff base is selected from the group

consisting of thiosemicarbazone of isophthalaldehyde, thiosemicarbazone of terephthalaldehyde, thiosemicarbazone of salicylaldehyde, thiosemicarbazone of pyridine carboxyaldehyde, thiosemicarbazone of 2,6-diacetylpyridine, thiosemicarbazone of 5-hydroxymethyl-2-furaldehyde, thiosemicarbazone of 8-hydroxyquinoline-2-carboxyaldehyde, thiosemicarbazone of pentanedione, thiosemicarbazone of acetonylacetone, thiosemicarbazone of pyruvic aldehyde dimethyl acetal, thiosemicarbazone of mesityl oxide, and mixtures thereof.

Clause 20. The coated metallic substrate of Clause 18 or Clause 19, wherein the Schiff base comprises at least one of an ethyl thiosemicarbazone, a methyl thiosemicarbazone, and a phenyl thiosemicarbazone.

Clause 21. The coated metallic substrate of Clause 18, wherein the Schiff base comprises a thiocarbohydrazone.

Clause 22. The coated metallic substrate of any of Clauses 18 to 21, wherein the Schiff base is as defined in any of Clauses 1 to 10.

Clause 23. The coated metallic substrate of any of Clauses 18 to 22, wherein the metallic substrate comprises aluminum.

## Claims

1. A corrosion inhibition composition (100) comprising:

    a carrier; and
    a Schiff base in admixture with the carrier, the carrier comprising at least one of water, a hydrocarbon solvent, and a binder.

2. The corrosion inhibition composition (100) of Claim 1, wherein the Schiff base is selected from the group consisting of thiosemicarbazone of isophthalaldehyde, thiosemicarbazone of terephthalaldehyde, thiosemicarbazone of salicylaldehyde, thiosemicarbazone of pyridine carboxyaldehyde, thiosemicarbazone of 2,6-diacetylpyridine, thiosemicarbazone of 5-hydroxymethyl-2-furaldehyde, thiosemicarbazone of 8-hydroxyquinoline-2-carboxyaldehyde, thiosemicarbazone of pentanedione, thiosemicarbazone of acetonylacetone, thiosemicarbazone of pyruvic aldehyde dimethyl acetal, thiosemicarbazone of mesityl oxide, and mixtures thereof.

3. The corrosion inhibition composition (100) of Claim 1 or Claim 2, wherein the Schiff base comprises an ethyl thiosemicarbazone.

4. The corrosion inhibition composition (100) of any of Claims 1 to 3, wherein the Schiff base is selected from the group consisting of ethyl thiosemicarbazone of isophthalaldehyde, ethyl thiosemicarbazone of terephthalaldehyde, ethyl thiosemicarbazone of salicylaldehyde, ethyl thiosemicarbazone of pyridine carboxyaldehyde, ethyl thiosemicarbazone of 2,6-diacetylpyridine, ethyl thiosemicarbazone of 5-hydroxymethyl-2-furaldehyde, ethyl thiosemicarbazone of 8-hydroxyquinoline-2-carboxyaldehyde, ethyl thiosemicarbazone of pentanedione, ethyl thiosemicarbazone of acetonylacetone, ethyl thiosemicarbazone of pyruvic aldehyde dimethyl acetal, ethyl thiosemicarbazone of mesityl oxide, and mixtures thereof.

5. The corrosion inhibition composition (100) of Claim 1 or Claim 2, wherein the Schiff base comprises a methyl thiosemicarbazone.

6. The corrosion inhibition composition (100) of Claim 1, Claim 2 or Claim 5, wherein the Schiff base is selected from the group consisting of methyl thiosemicarbazone of isophthalaldehyde, methyl thiosemicarbazone of terephthalaldehyde, methyl thiosemicarbazone of salicylaldehyde, methyl thiosemicarbazone of pyridine carboxyaldehyde, methyl thiosemicarbazone of 2,6-diacetylpyridine, methyl thiosemicarbazone of 5-hydroxymethyl-2-furaldehyde, methyl thiosemicarbazone of 8-hydroxyquinoline-2-carboxyaldehyde, methyl thiosemicarbazone of pentanedione, methyl thiosemicarbazone of acetonylacetone, methyl thiosemicarbazone of pyruvic aldehyde dimethyl acetal, methyl thiosemicarbazone of mesityl oxide, and mixtures thereof.

7. The corrosion inhibition composition (100) of Claim 1 or Claim 2, wherein the Schiff base comprises a phenyl thiosemicarbazone, optionally wherein the Schiff base is selected from the group consisting of phenyl thiosemicarbazone of isophthalaldehyde, phenyl thiosemicarbazone of terephthalaldehyde, phenyl thiosemicarbazone of salicylaldehyde, phenyl thiosemicarbazone of pyridine carboxyaldehyde, phenyl thiosemicarbazone of 2,6-diacetylpyridine, phenyl thiosemicarbazone of 5-hydroxymethyl-2-furaldehyde, phenyl thiosemicarbazone of 8-hydroxyquinoline-2-carboxyaldehyde, phenyl thiosemicarbazone of pentanedione, phenyl thiosemicarbazone of acetonylacetone, phenyl thiosemicarbazone of pyruvic aldehyde dimethyl acetal, phenyl thiosemicarbazone of mesityl oxide,

and mixtures thereof.

**8.** The corrosion inhibition composition (100) of Claim 1, wherein the Schiff base comprises a thiocarbohydrazone, optionally wherein the Schiff base is selected from the group consisting of thiocarbohydrazone of isophthalaldehyde, thiocarbohydrazone of terephthalaldehyde, thiocarbohydrazone of salicylaldehyde, thiocarbohydrazone of pyridine carboxyaldehyde, thiocarbohydrazone of 2,6-diacetylpyridine, thiocarbohydrazone of 5-hydroxymethyl-2-furaldehyde, thiocarbohydrazone of 8-hydroxyquinoline-2-carboxyaldehyde, thiocarbohydrazone of pentanedione, thiocarbohydrazone of acetonylacetone, thiocarbohydrazone of pyruvic aldehyde dimethyl acetal, thiocarbohydrazone of mesityl oxide, and mixtures thereof.

**9.** A method (200) for inhibiting corrosion on a metallic substrate (300), the method (200) comprising:
applying (210) to the metallic substrate (300) a corrosion inhibition composition (100) comprising a Schiff base.

**10.** The method (200) of Claim 9, wherein the Schiff base is selected from the group consisting of thiosemicarbazone of isophthalaldehyde, thiosemicarbazone of terephthalaldehyde, thiosemicarbazone of salicylaldehyde, thiosemicarbazone of pyridine carboxyaldehyde, thiosemicarbazone of 2,6-diacetylpyridine, thiosemicarbazone of 5-hydroxymethyl-2-furaldehyde, thiosemicarbazone of 8-hydroxyquinoline-2-carboxyaldehyde, thiosemicarbazone of pentanedione, thiosemicarbazone of acetonylacetone, thiosemicarbazone of pyruvic aldehyde dimethyl acetal, thiosemicarbazone of mesityl oxide, and mixtures thereof.

**11.** The method (200) of Claim 9, wherein the Schiff base comprises:

(i) an ethyl thiosemicarbazone; or
(ii) a methyl thiosemicarbazone; or
(iii) a phenyl thiosemicarbazone; or
(iv) a thiocarbohydrazone.

**12.** The method of claim 9, wherein the composition is a corrosion inhibition composition as defined in any of claims 1 to 8.

**13.** A coated metallic substrate, comprising:

a metallic substrate; and
a coating comprising a Schiff base, wherein the Schiff base is as defined in any of Claims 1 to 8.

**14.** The coated metallic substrate of Claim 13, wherein the Schiff base:

(i) is selected from the group consisting of thiosemicarbazone of isophthalaldehyde, thiosemicarbazone of terephthalaldehyde, thiosemicarbazone of salicylaldehyde, thiosemicarbazone of pyridine carboxyaldehyde, thiosemicarbazone of 2,6-diacetylpyridine, thiosemicarbazone of 5-hydroxymethyl-2-furaldehyde, thiosemicarbazone of 8-hydroxyquinoline-2-carboxyaldehyde, thiosemicarbazone of pentanedione, thiosemicarbazone of acetonylacetone, thiosemicarbazone of pyruvic aldehyde dimethyl acetal, thiosemicarbazone of mesityl oxide, and mixtures thereof; and/or
(ii) comprises:

(a) at least one of an ethyl thiosemicarbazone, a methyl thiosemicarbazone, and a phenyl thiosemicarbazone; or
(b) a thiocarbohydrazone.

**15.** The coated metallic substrate of Claim 13 or Claim 14, wherein the metallic substrate comprises aluminum.

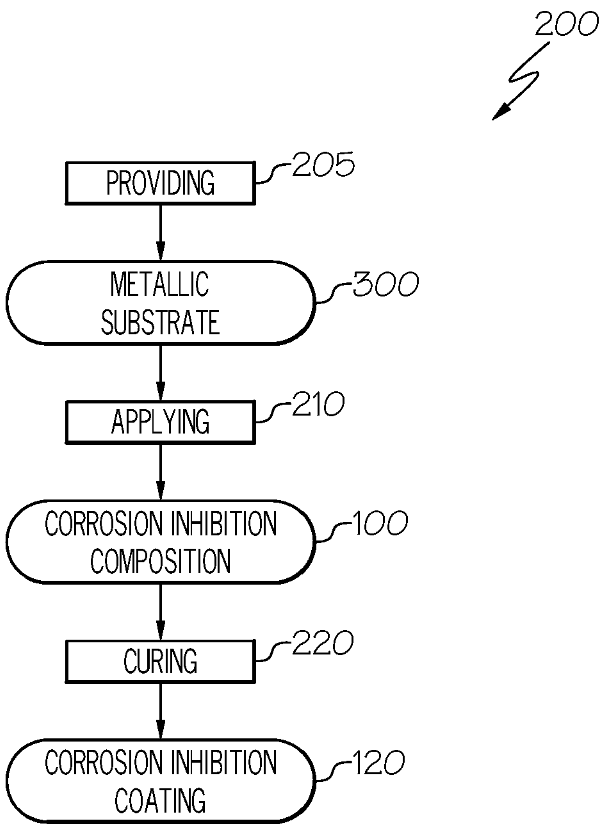
200
PROVIDING
205
METALLIC SUBSTRATE
300
APPLYING
210
CORROSION INHIBITION COMPOSITION
100
CURING
220
CORROSION INHIBITION COATING
120

FIG. 1

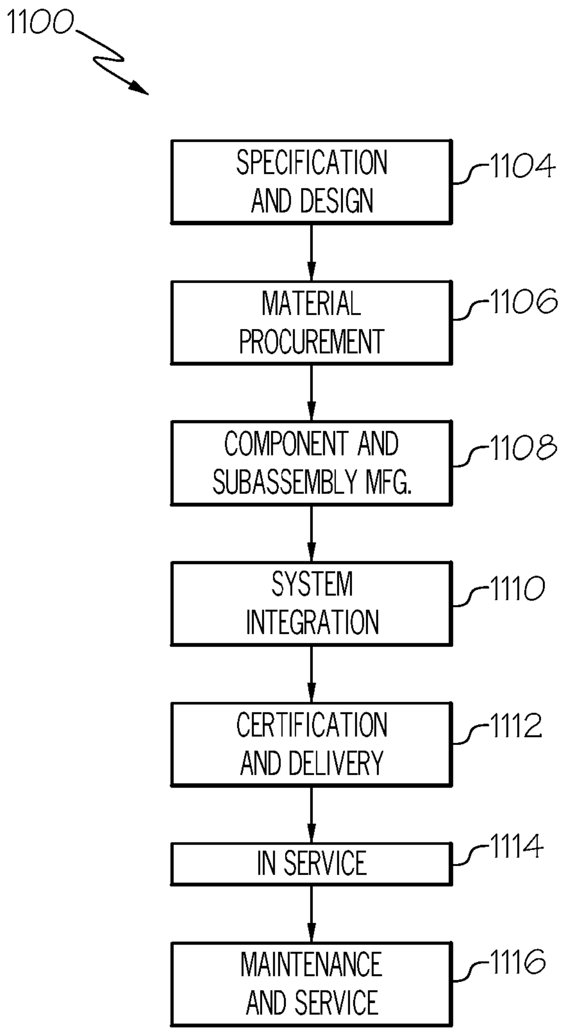
1100
SPECIFICATION AND DESIGN
1104
MATERIAL PROCUREMENT
1106
COMPONENT AND SUBASSEMBLY MFG.
1108
SYSTEM INTEGRATION
1110
CERTIFICATION AND DELIVERY
1112
IN SERVICE
1114
MAINTENANCE AND SERVICE
1116

FIG. 2

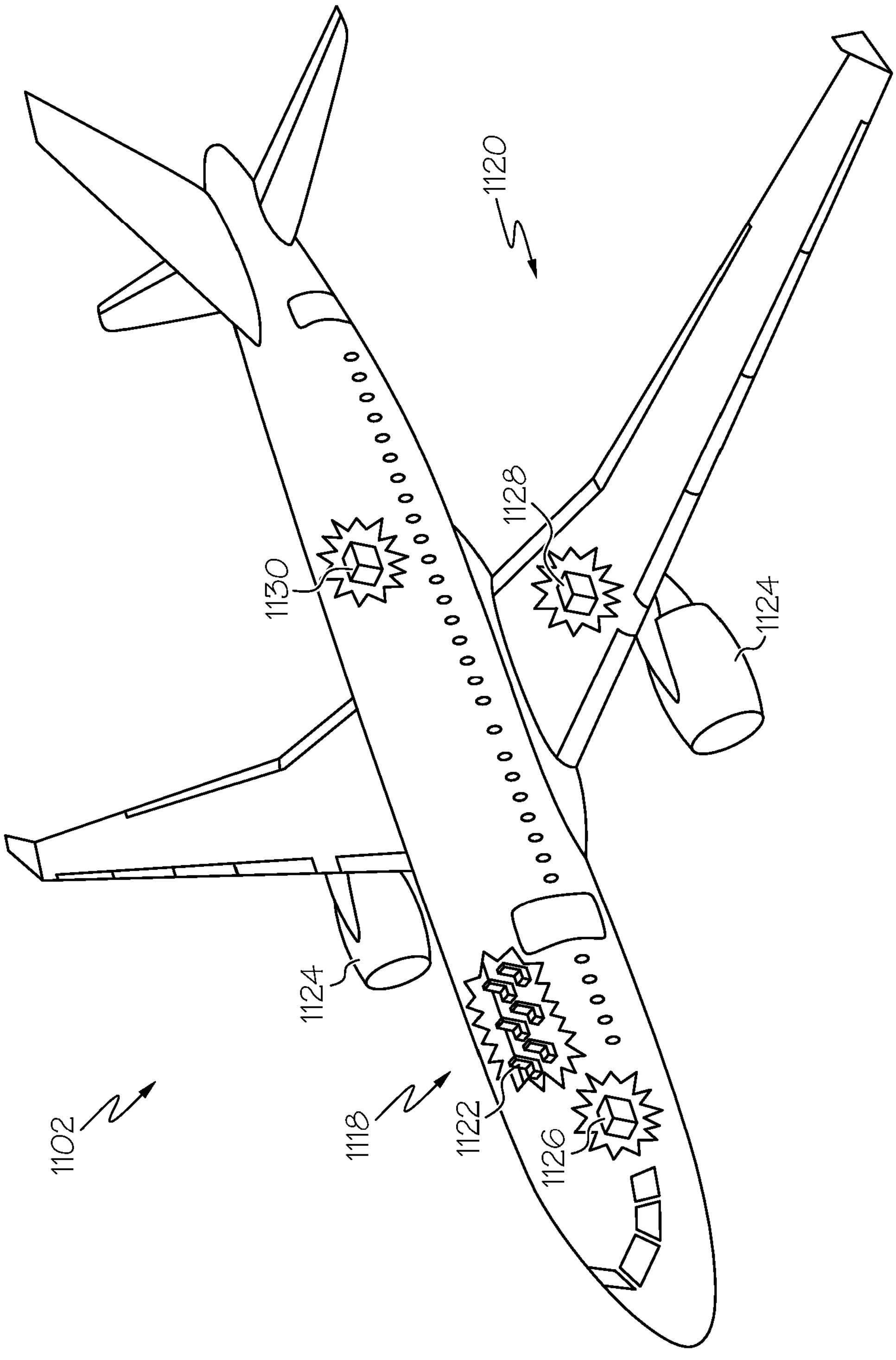


FIG. 3

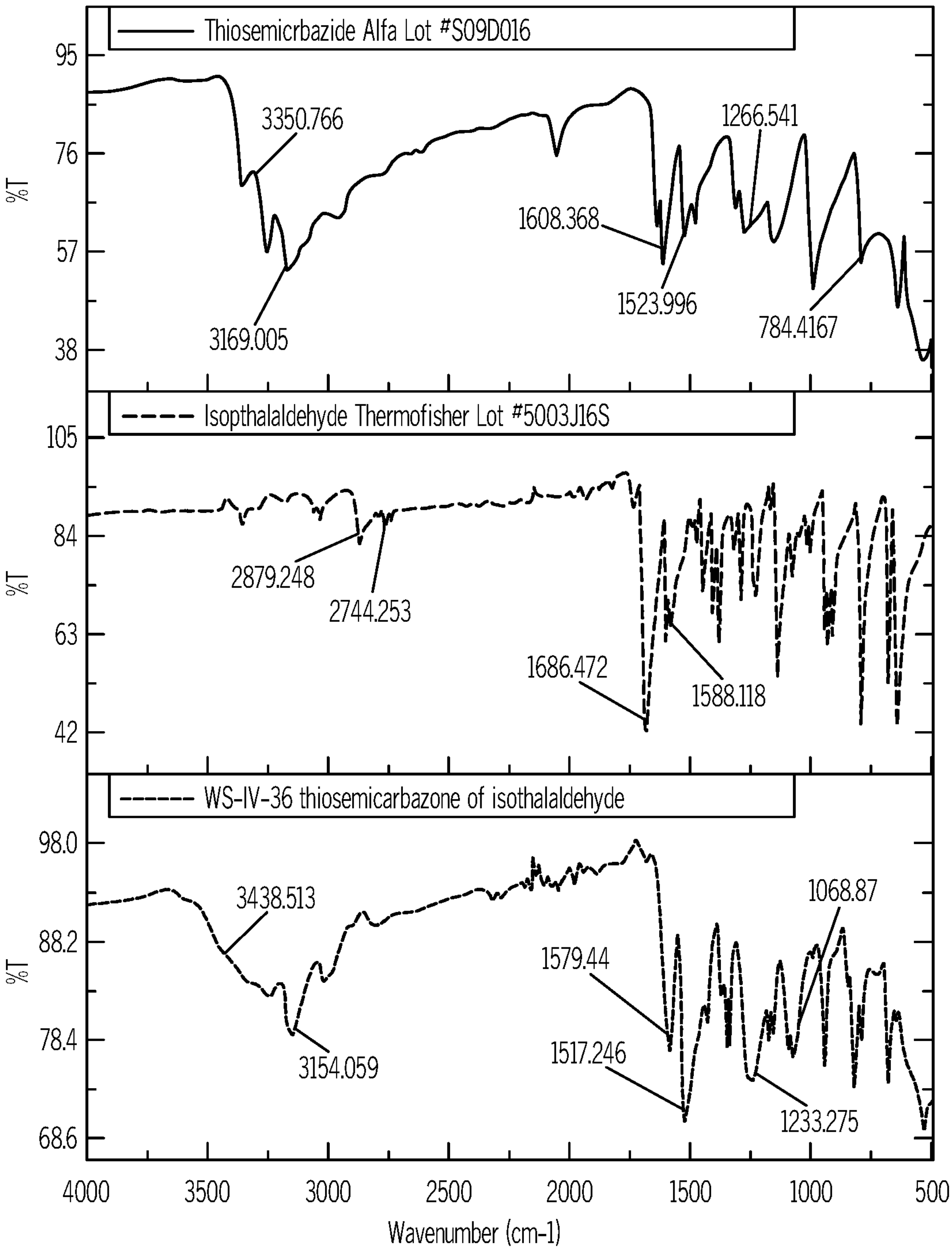
Thiosemicrbazide Alfa Lot #S09D016
95
76
57
38
%T
3350.766
3169.005
1608.368
1523.996
1266.541
784.4167
Isopthalaldehyde Thermofisher Lot #5003J16S
105
84
63
42
%T
2879.248
2744.253
1686.472
1588.118
WS-IV-36 thiosemicarbazone of isothalaldehyde
98.0
88.2
78.4
68.6
%T
3438.513
3154.059
1579.44
1517.246
1068.87
1233.275
4000
3500
3000
2500
2000
1500
1000
500
Wavenumber (cm-1)

FIG. 4

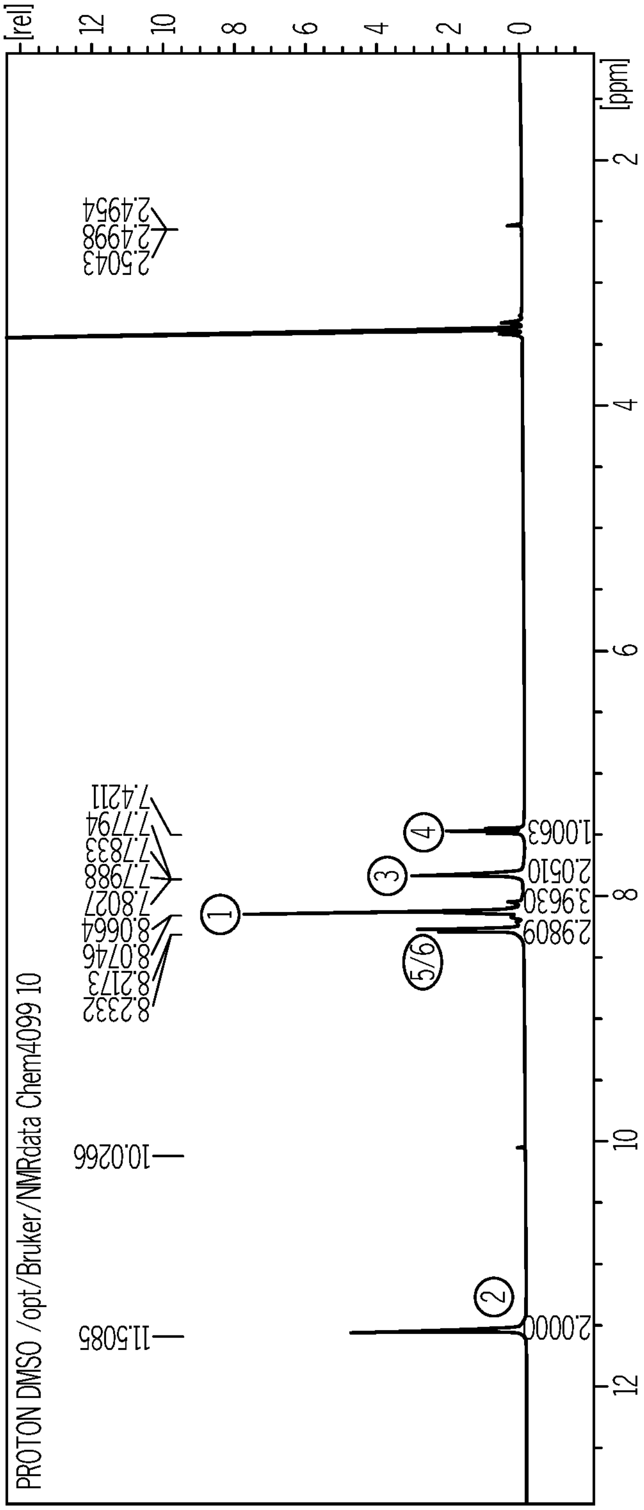
PROTON DMSO /opt/Bruker/NMRdata Chem4099 10
[rel]
12
10
8
6
4
2
0
[ppm]
2
4
6
8
10
12
2.4954
2.4998
2.5043
7.4211
7.7794
7.7833
7.7988
7.8027
8.0664
8.0746
8.2173
8.2332
10.0266
11.5085
1.0063
2.0510
3.9630
2.9809
2.0000
1
2
3
4
5/6

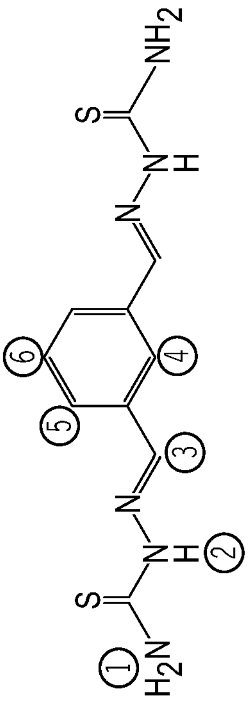

FIG. 5

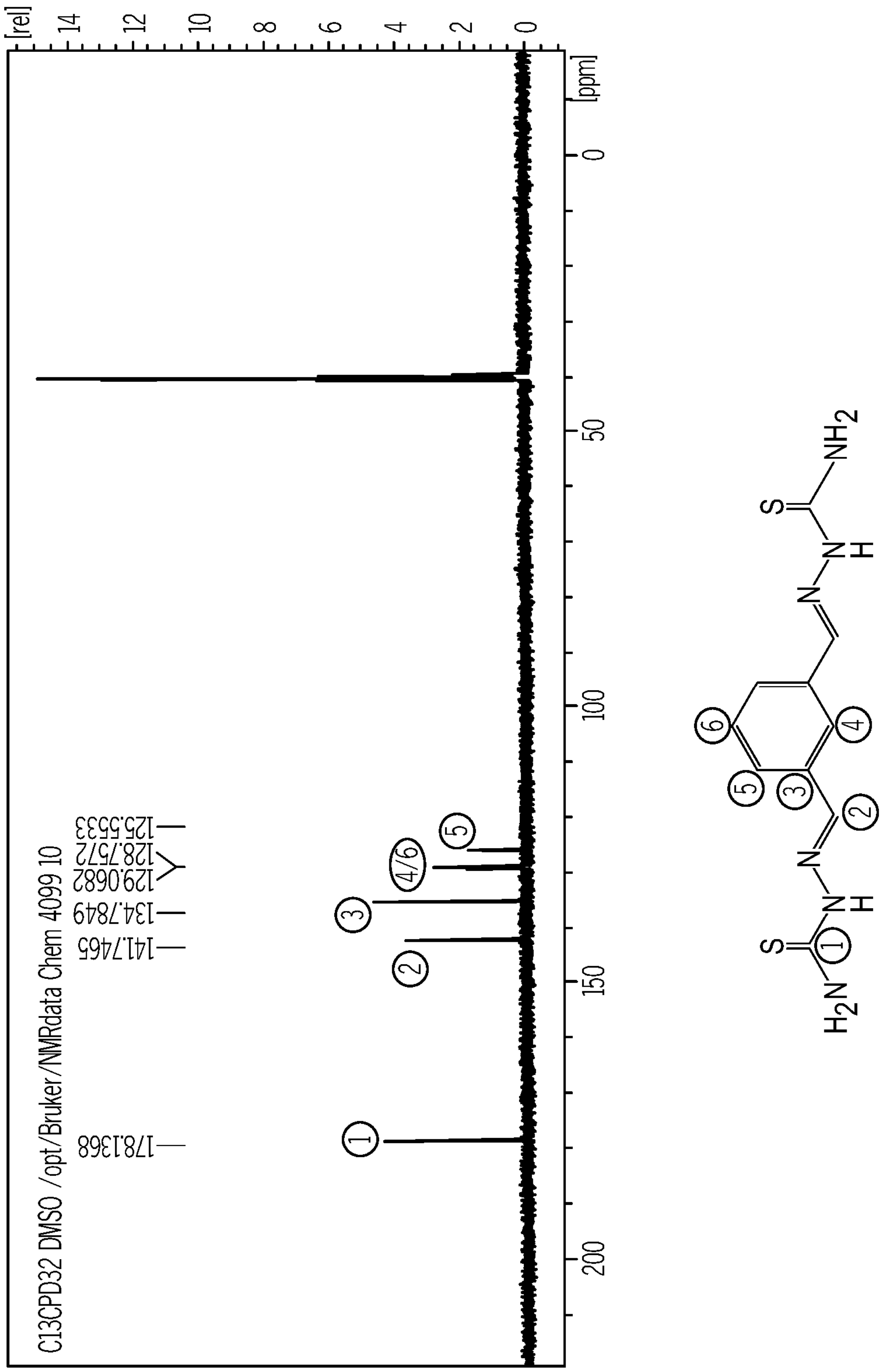
C13CPD32 DMSO /opt/Bruker/NMRdata Chem 4099 10
178.1368
141.7465
134.7849
129.0682
128.7572
125.5533
[rel]
[ppm]

FIG. 6

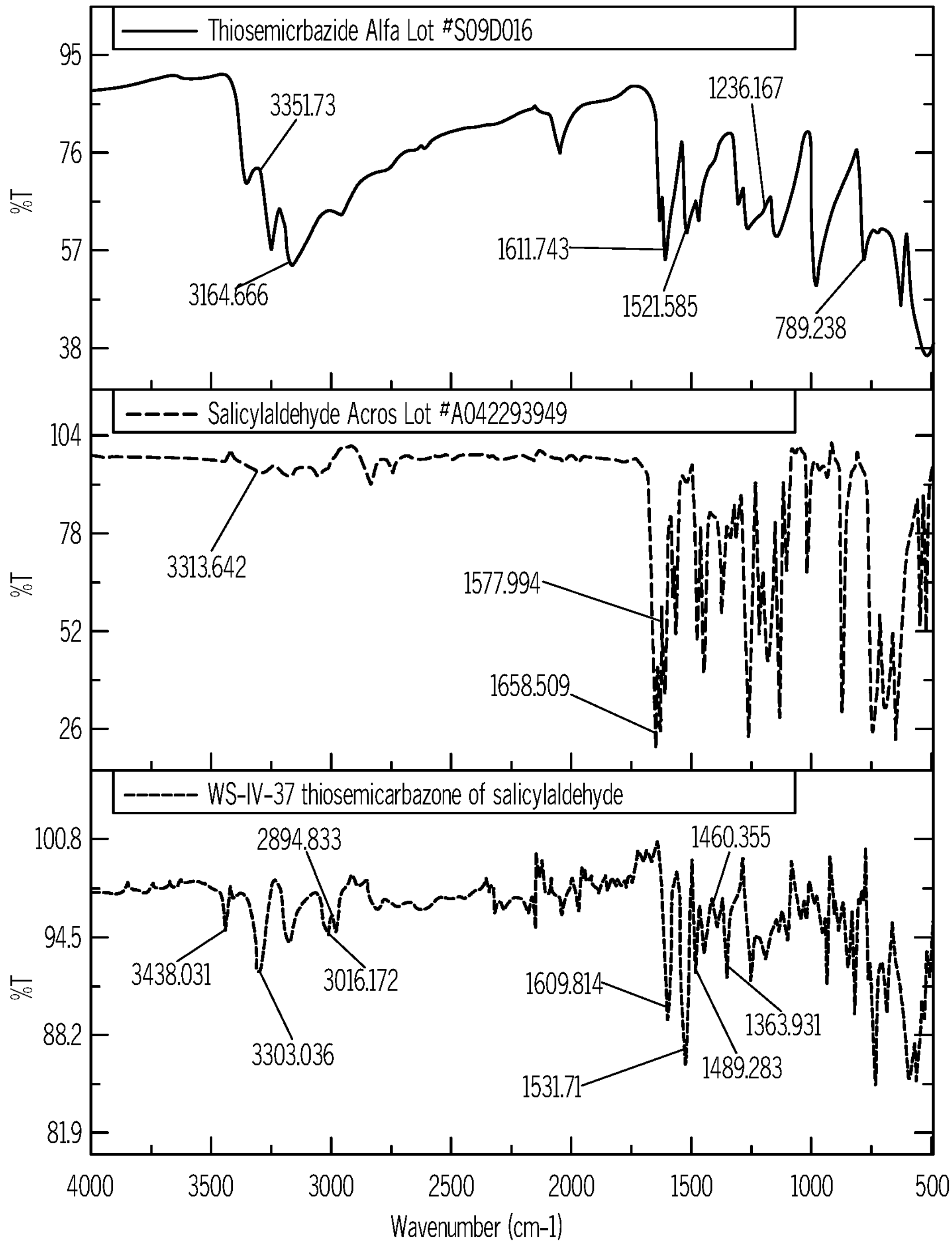
Thiosemicrbazide Alfa Lot #S09D016
95
76
57
38
%T
3351.73
3164.666
1611.743
1521.585
1236.167
789.238
Salicylaldehyde Acros Lot #A042293949
104
78
52
26
%T
3313.642
1577.994
1658.509
WS-IV-37 thiosemicarbazone of salicylaldehyde
100.8
94.5
88.2
81.9
%T
2894.833
1460.355
3438.031
3016.172
1609.814
3303.036
1363.931
1489.283
1531.71
4000
3500
3000
2500
2000
1500
1000
500
Wavenumber (cm-1)

FIG. 7

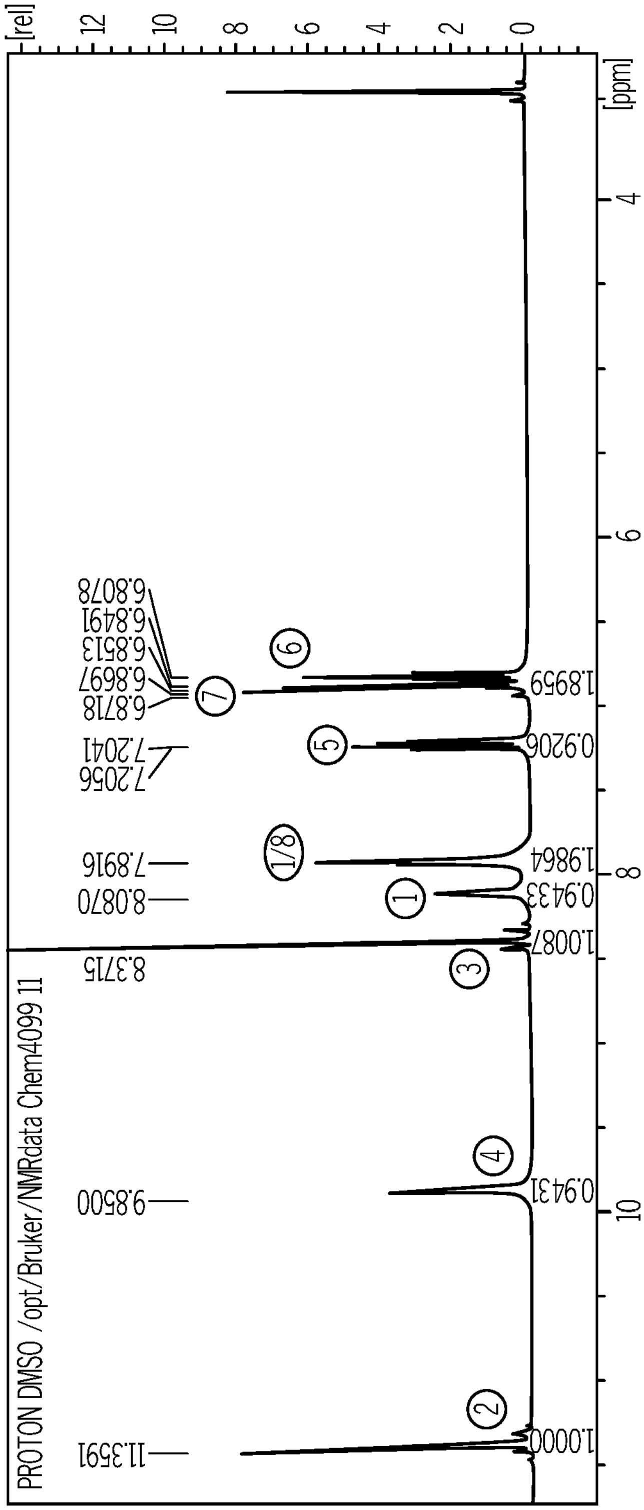
PROTON DMSO /opt/Bruker/NMRdata Chem4099 11
[rel]
12
10
8
6
4
2
0
[ppm]
4
6
8
10
11.3591
9.8500
8.3715
8.0870
7.8916
7.2056
7.2041
6.8718
6.8697
6.8513
6.8491
6.8078
1.0000
0.9431
1.0087
0.9433
1.9864
0.9206
1.8959
1/8

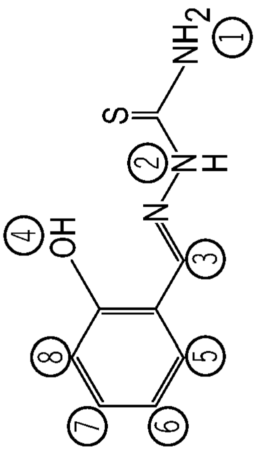

FIG. 8

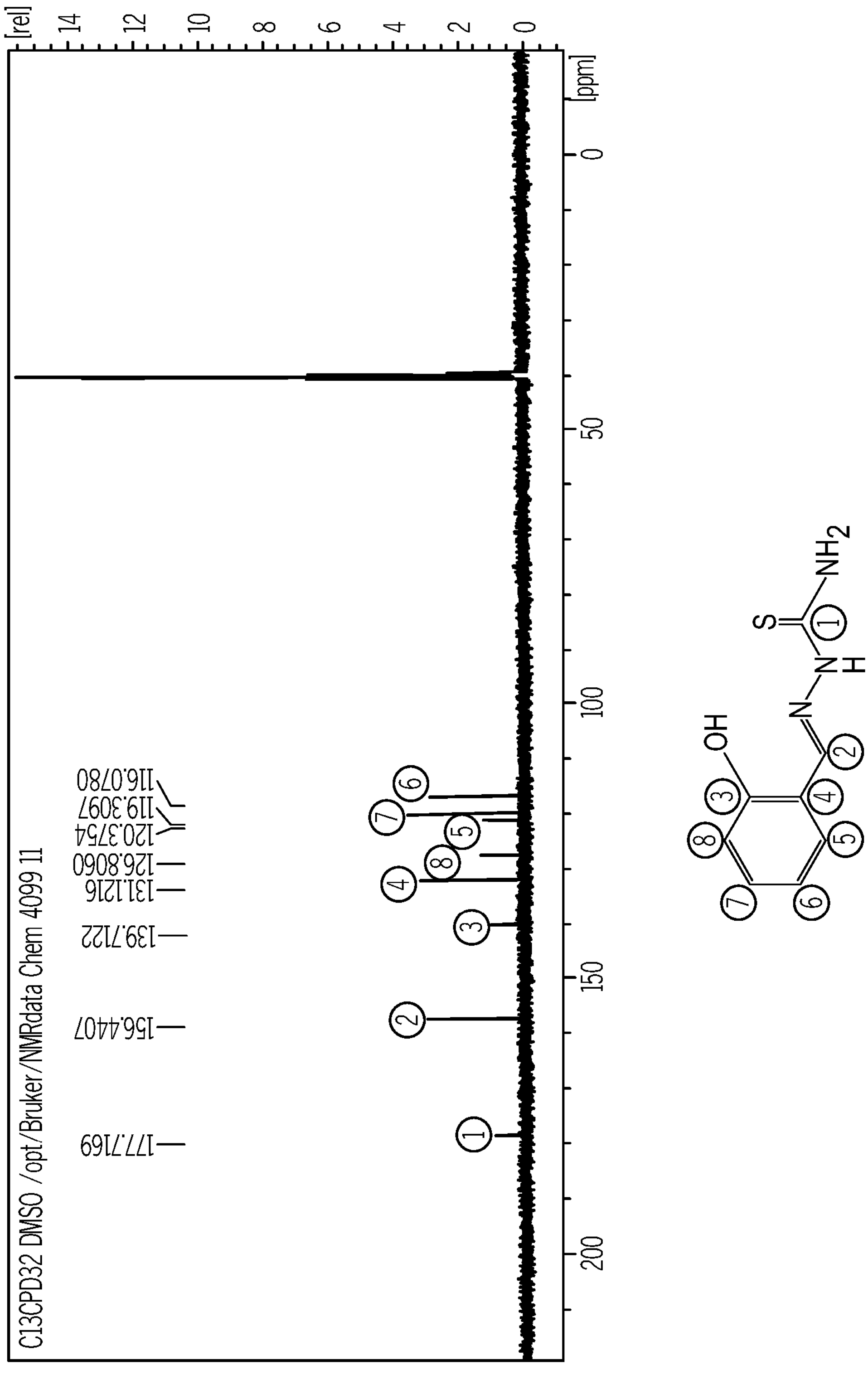
C13CPD32 DMSO /opt/Bruker/NMRdata Chem 4099 11
177.7169
156.4407
139.7122
131.1216
126.8060
120.3754
119.3097
116.0780
[rel]
[ppm]

FIG. 9

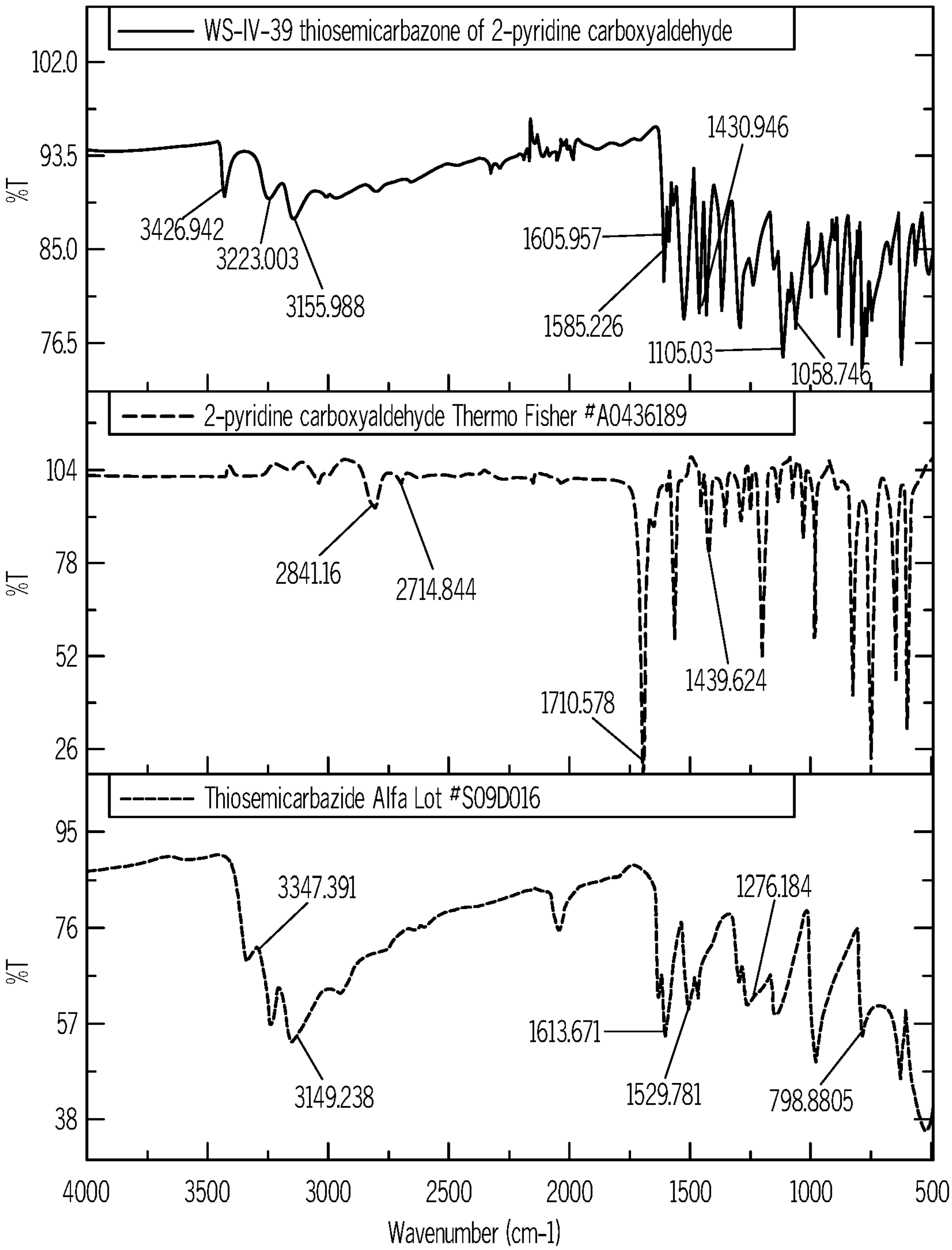
WS-IV-39 thiosemicarbazone of 2-pyridine carboxyaldehyde
102.0
93.5
85.0
76.5
%T
3426.942
3223.003
3155.988
1430.946
1605.957
1585.226
1105.03
1058.746
2-pyridine carboxyaldehyde Thermo Fisher #A0436189
104
78
52
26
%T
2841.16
2714.844
1710.578
1439.624
Thiosemicarbazide Alfa Lot #S09D016
95
76
57
38
%T
3347.391
3149.238
1276.184
1613.671
1529.781
798.8805
4000
3500
3000
2500
2000
1500
1000
500
Wavenumber (cm-1)

FIG. 10

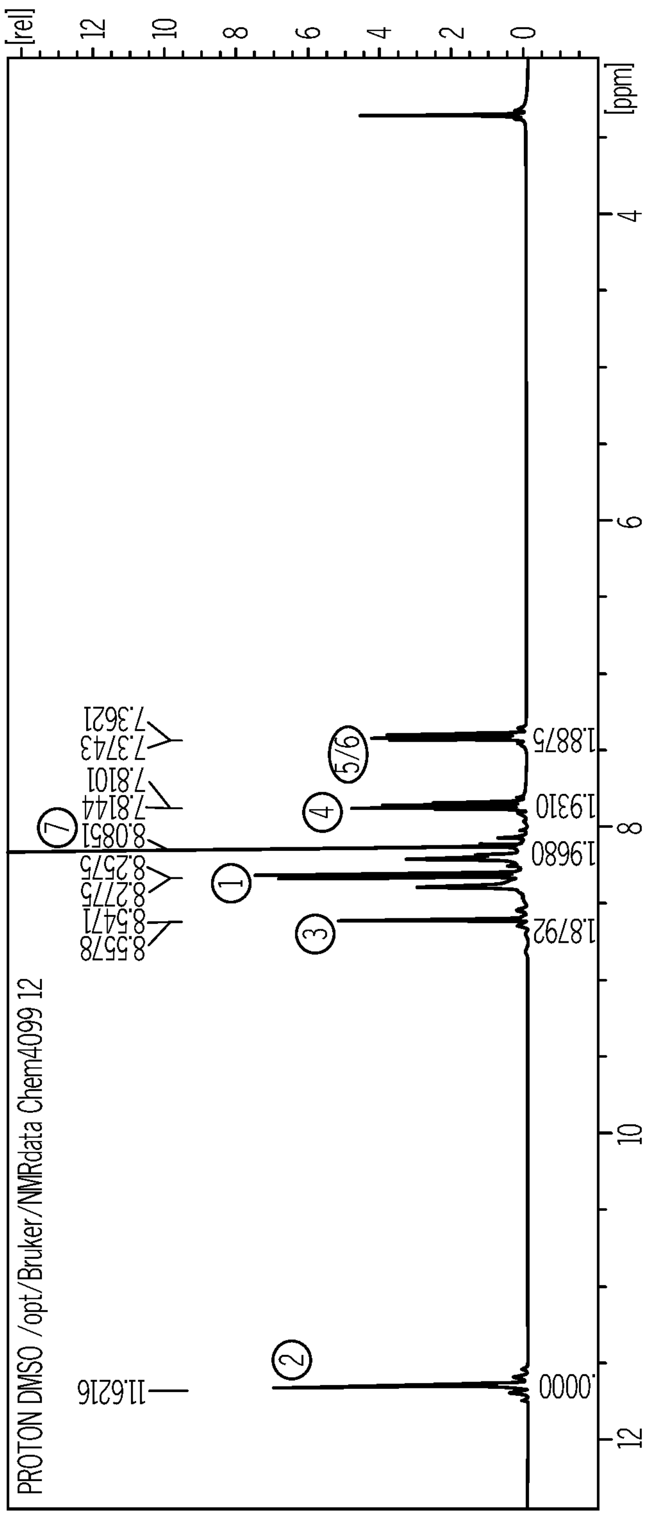
PROTON DMSO /opt/Bruker/NMRdata Chem4099 12
[rel]
[ppm]
11.6216
8.5578
8.5471
8.2775
8.2575
8.0851
7.8144
7.8101
7.3743
7.3621
1.0000
1.8792
1.9680
1.9310
1.8875
5/6

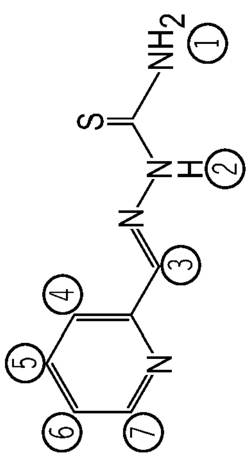

FIG. 11

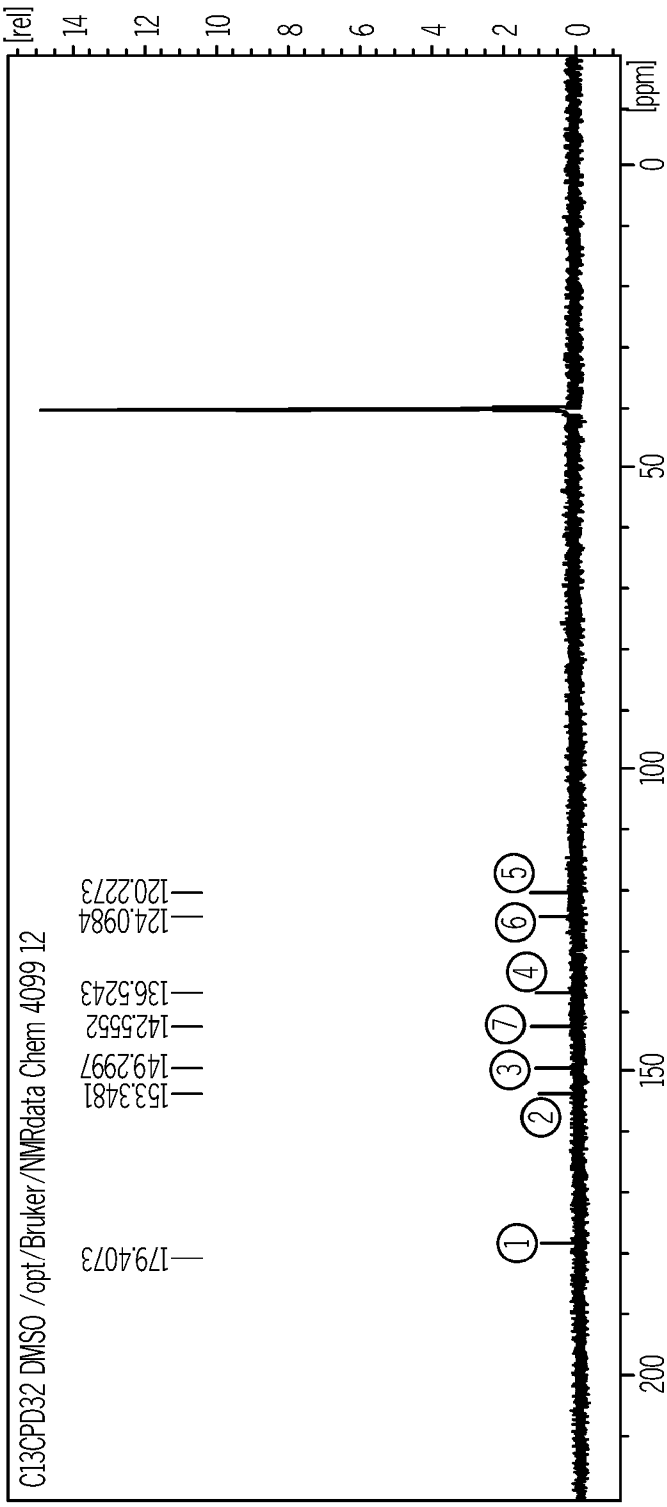
C13CPD32 DMSO /opt/Bruker/NMRdata Chem 4099 12
179.4073
153.3481
149.2997
142.5552
136.5243
124.0984
120.2273
[rel]
14
12
10
8
6
4
2
0
[ppm]
0
50
100
150
200
1
2
3
7
4
6
5

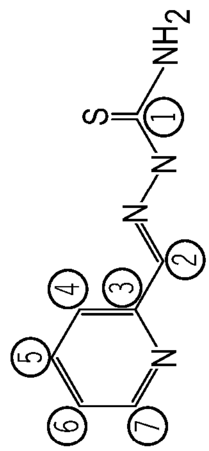

FIG. 12

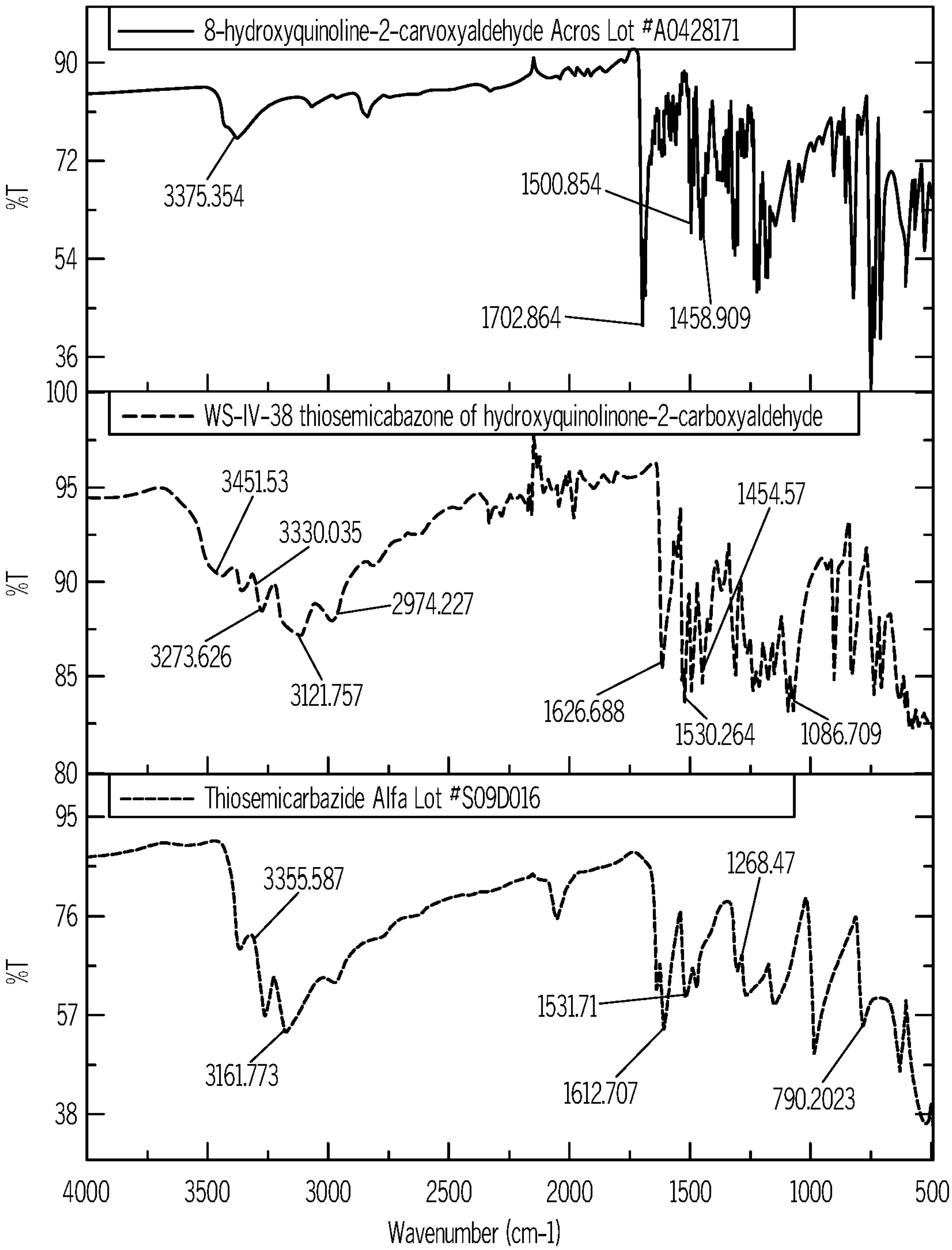
8-hydroxyquinoline-2-carvoxyaldehyde Acros Lot #A0428171
90
72
54
36
%T
3375.354
1500.854
1702.864
1458.909
100
WS-IV-38 thiosemicabazone of hydroxyquinolinone-2-carboxyaldehyde
95
90
85
80
%T
3451.53
3330.035
3273.626
3121.757
2974.227
1454.57
1626.688
1530.264
1086.709
Thiosemicarbazide Alfa Lot #S09D016
95
76
57
38
%T
3355.587
3161.773
1268.47
1531.71
1612.707
790.2023
4000
3500
3000
2500
2000
1500
1000
500
Wavenumber (cm-1)

FIG. 13

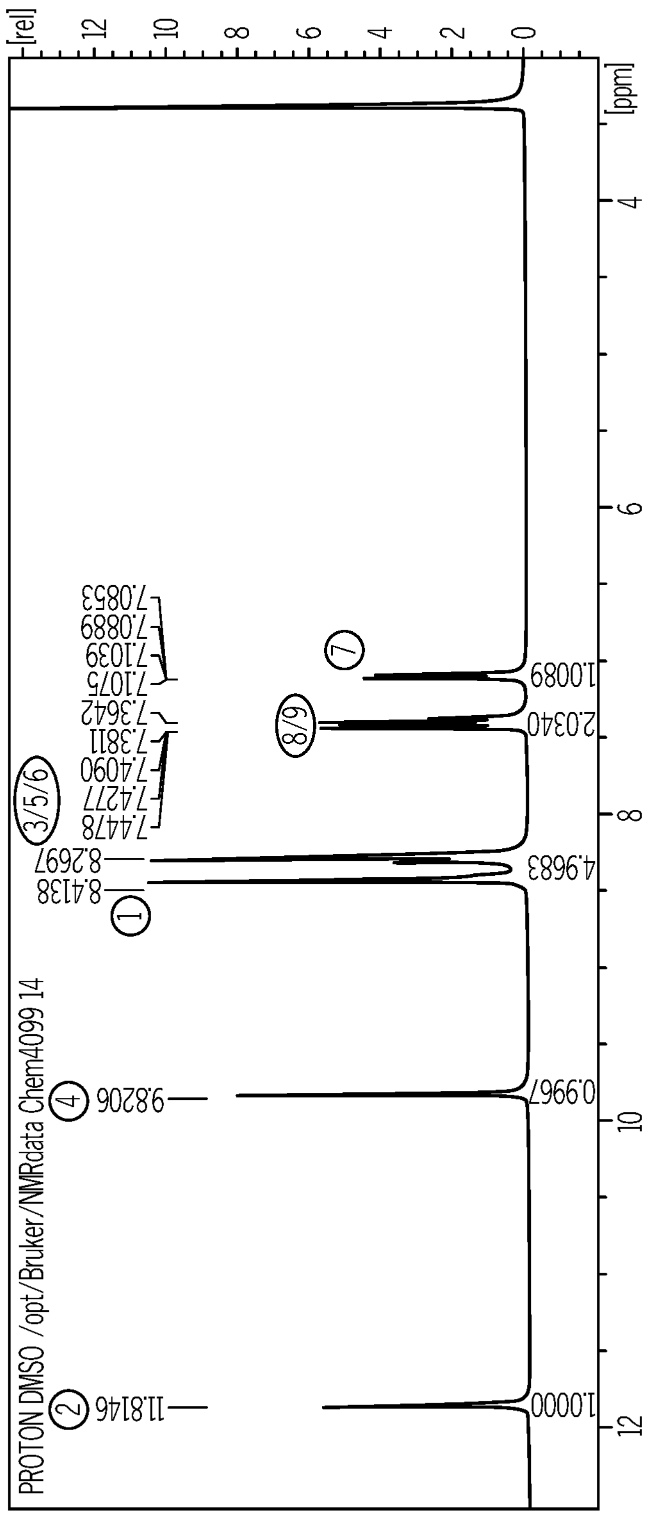
PROTON DMSO /opt/Bruker/NMRdata Chem4099 14
[rel]
12
10
8
6
4
2
0
[ppm]
4
6
8
10
12
2
11.8146
1.0000
4
9.8206
0.9967
1
8.4138
8.2697
4.9683
3/5/6
7.4478
7.4277
7.4090
7.3811
7.3642
7.1075
7.1039
7.0889
7.0853
8/9
2.0340
7
1.0089

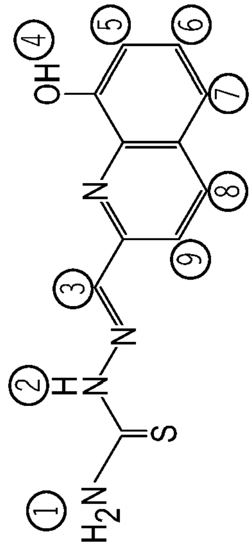

FIG. 14

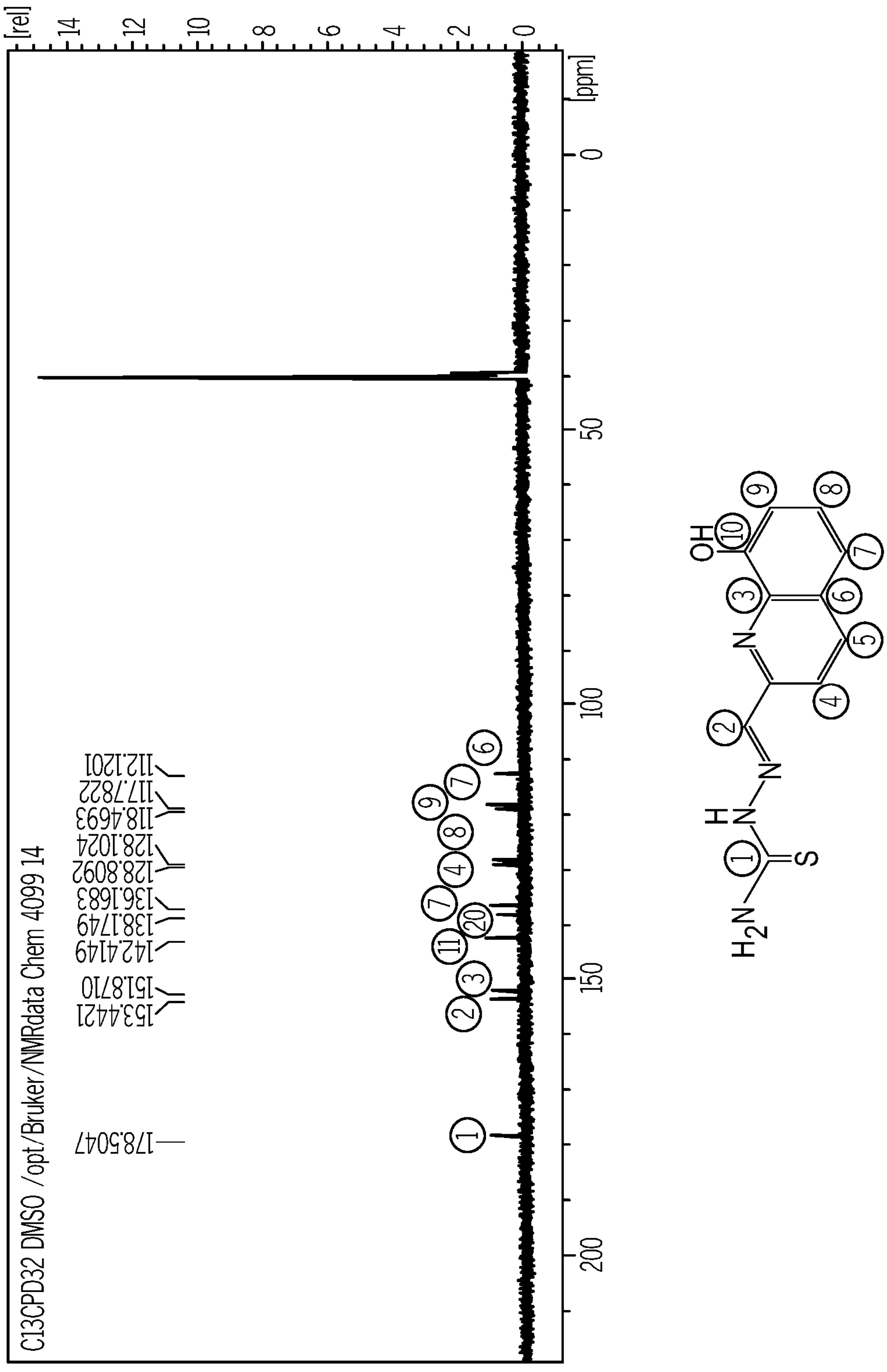
C13CPD32 DMSO /opt/Bruker/NMRdata Chem 4099 14
178.5047
153.4421
151.8710
142.4149
138.1749
136.1683
128.8092
128.1024
118.4693
117.7822
112.1201
[rel]
[ppm]
200
150
100
50
0
0
2
4
6
8
10
12
14

FIG. 15

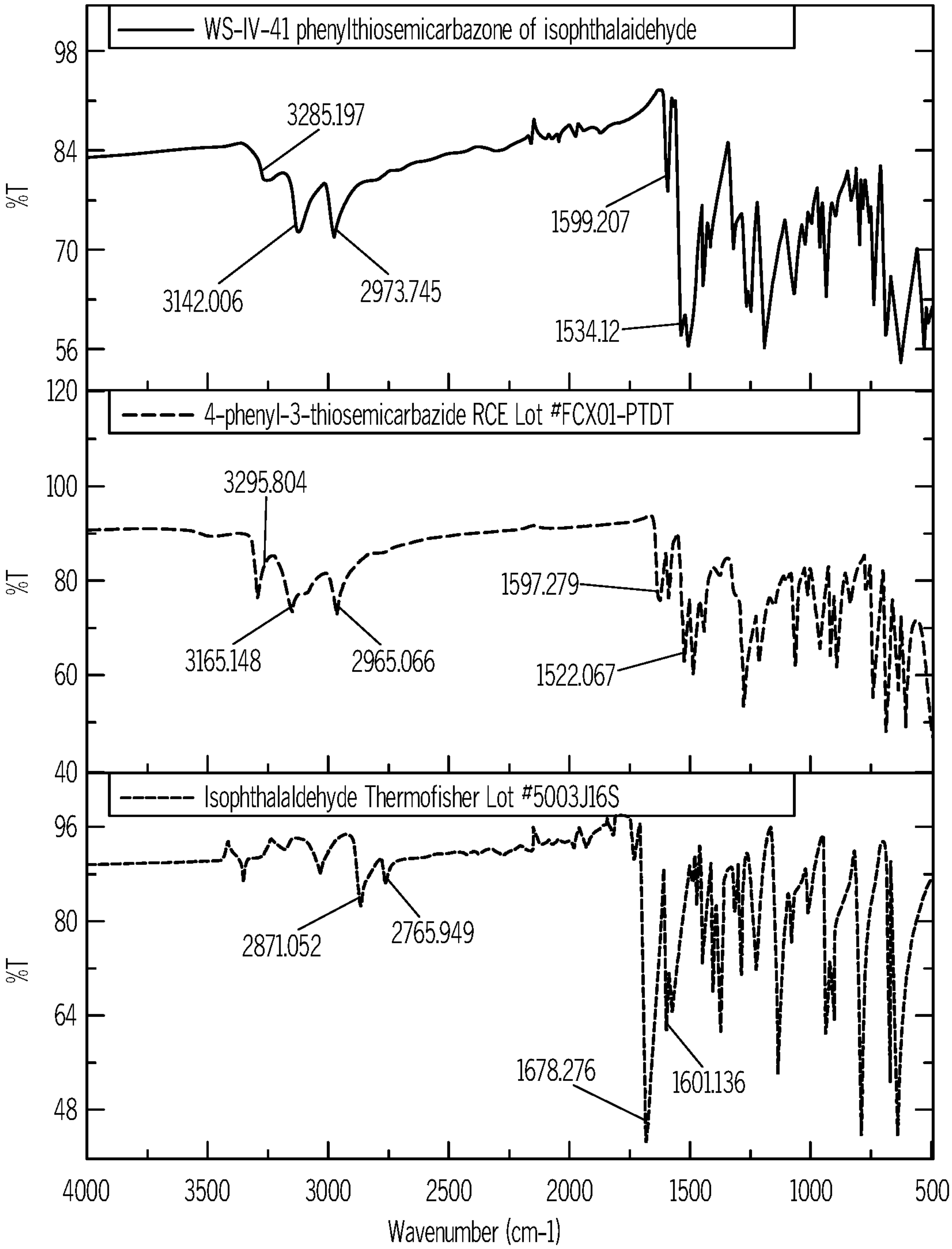
WS-IV-41 phenylthiosemicarbazone of isophthalaidehyde
98
84
70
56
%T
3285.197
3142.006
2973.745
1599.207
1534.12
120
100
80
60
40
%T
4-phenyl-3-thiosemicarbazide RCE Lot #FCX01-PTDT
3295.804
3165.148
2965.066
1597.279
1522.067
Isophthalaldehyde Thermofisher Lot #5003J16S
96
80
64
48
%T
2871.052
2765.949
1678.276
1601.136
4000
3500
3000
2500
2000
1500
1000
500
Wavenumber (cm-1)

FIG. 16

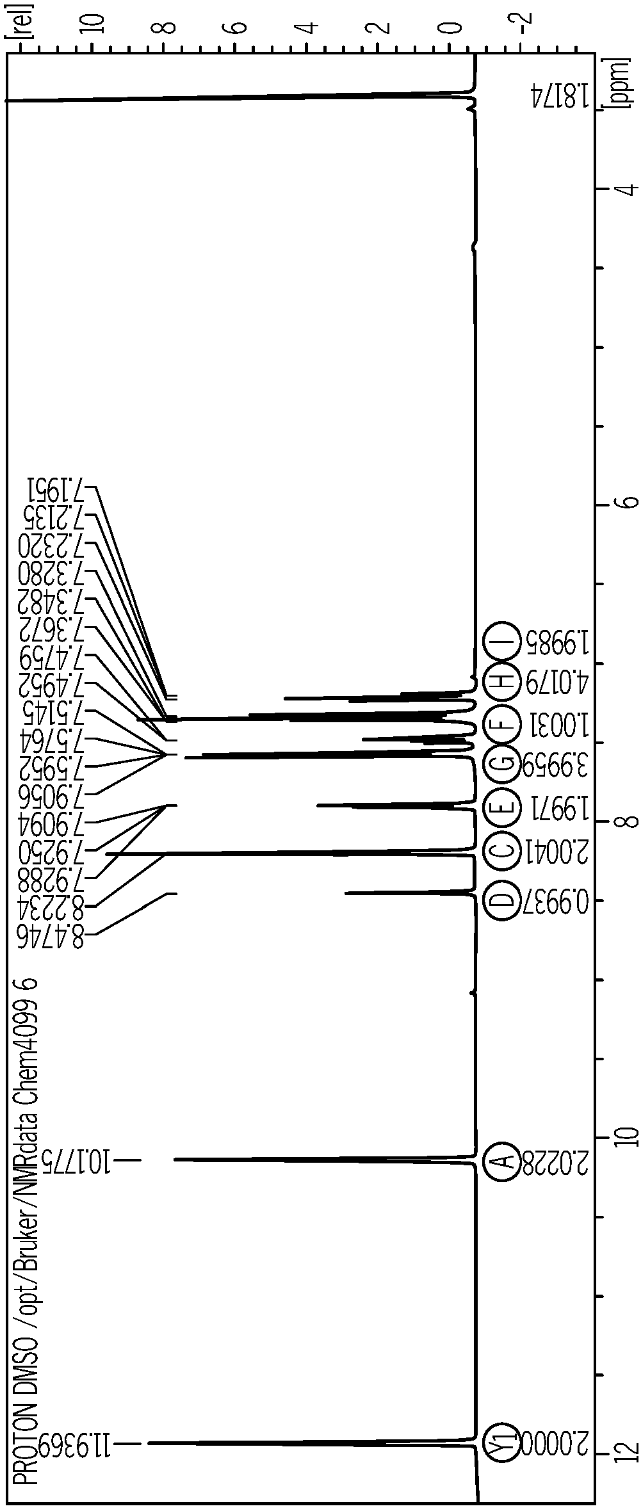

PROTON DMSO /opt/Bruker/NMRdata Chem4099 6
[rel]
10
8
6
4
2
0
-2
11.9369
10.1775
8.4746
8.2234
7.9288
7.9250
7.9094
7.9056
7.5952
7.5764
7.5145
7.4952
7.4759
7.3672
7.3482
7.3280
7.2320
7.2135
7.1951
1.8174
2.0000
2.0228
0.9937
2.0041
1.9971
3.9959
1.0031
4.0179
1.9985
Y1
A
D
C
E
G
F
H
I
12
10
8
6
4
[ppm]


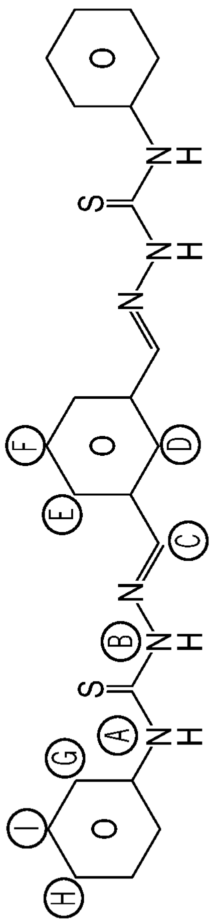

FIG. 17

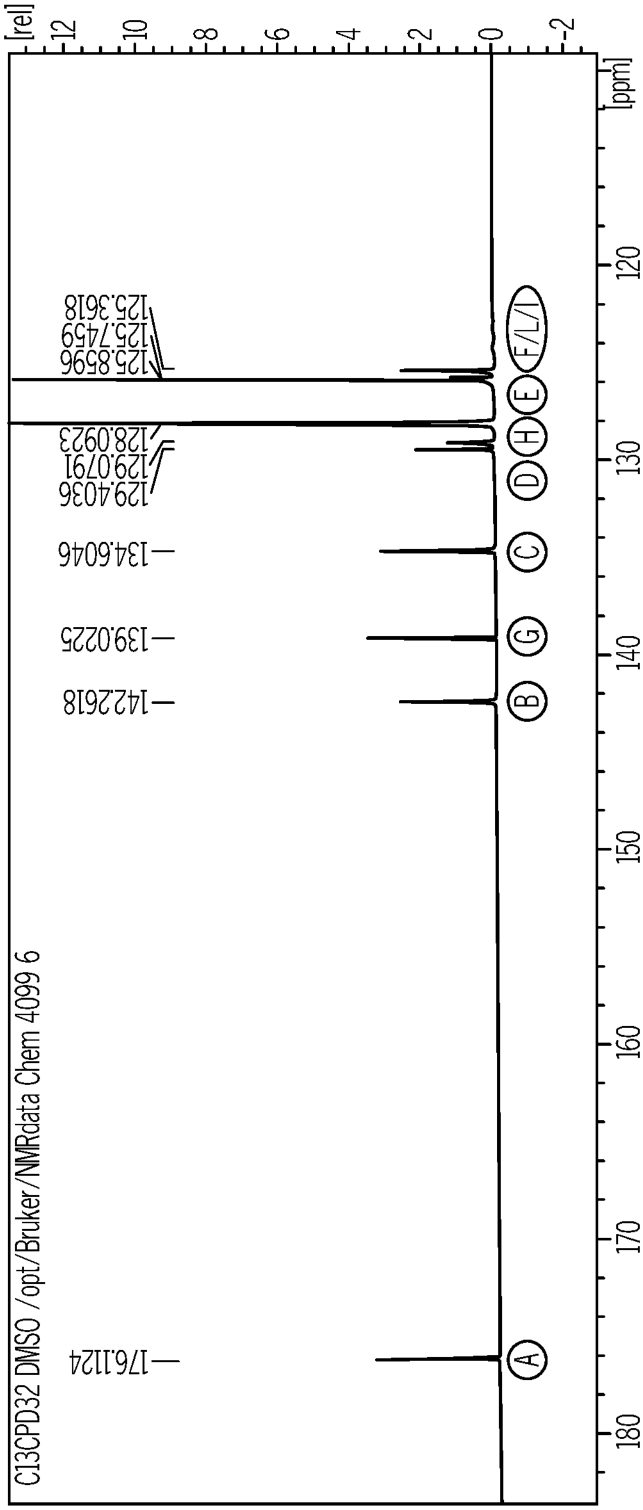

C13CPD32 DMSO /opt/Bruker/NMRdata Chem 4099 6
[rel]
12
10
8
6
4
2
0
-2
[ppm]
120
130
140
150
160
170
180
176.1124
142.2618
139.0225
134.6046
129.4036
129.0791
128.0923
125.8596
125.7459
125.3618
A
B
G
C
D
H
E
F/L/I


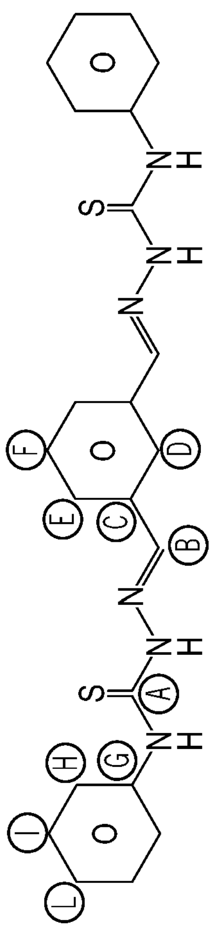

FIG. 18

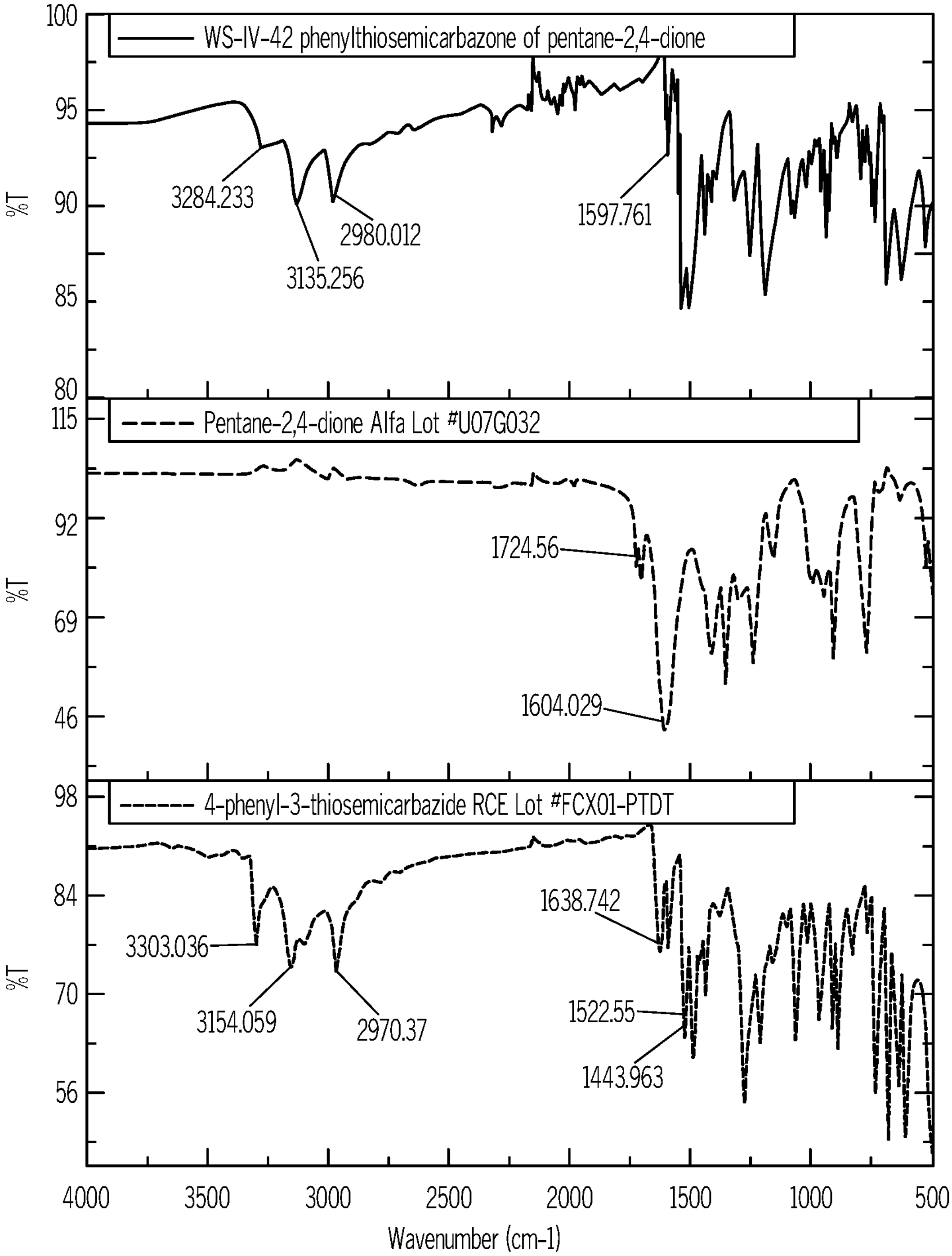
WS-IV-42 phenylthiosemicarbazone of pentane-2,4-dione
100
95
90
85
80
%T
3284.233
3135.256
2980.012
1597.761
Pentane-2,4-dione Alfa Lot #U07G032
115
92
69
46
%T
1724.56
1604.029
4-phenyl-3-thiosemicarbazide RCE Lot #FCX01-PTDT
98
84
70
56
%T
3303.036
3154.059
2970.37
1638.742
1522.55
1443.963
4000
3500
3000
2500
2000
1500
1000
500
Wavenumber (cm-1)

FIG. 19

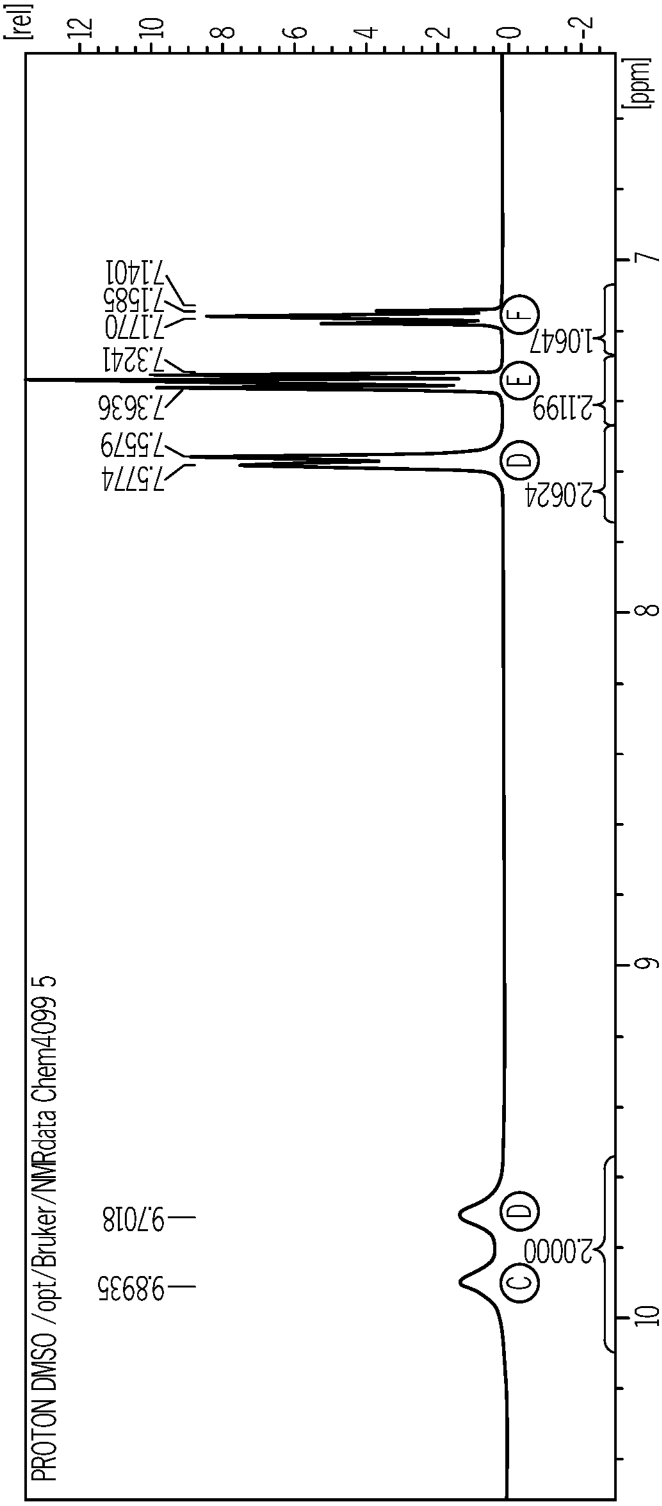
PROTON DMSO /opt/Bruker/NMRdata Chem4099 5
[rel]
12
10
8
6
4
2
0
-2
[ppm]
7
8
9
10
7.1401
7.1585
7.1770
7.3241
7.3636
7.5579
7.5774
9.7018
9.8935
1.0647
2.1199
2.0624
2.0000
F
E
D
D
C

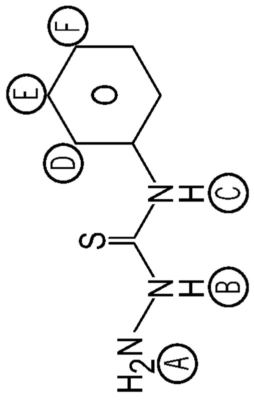

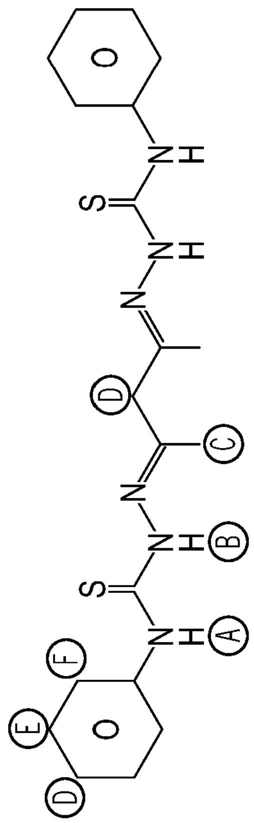

FIG. 20

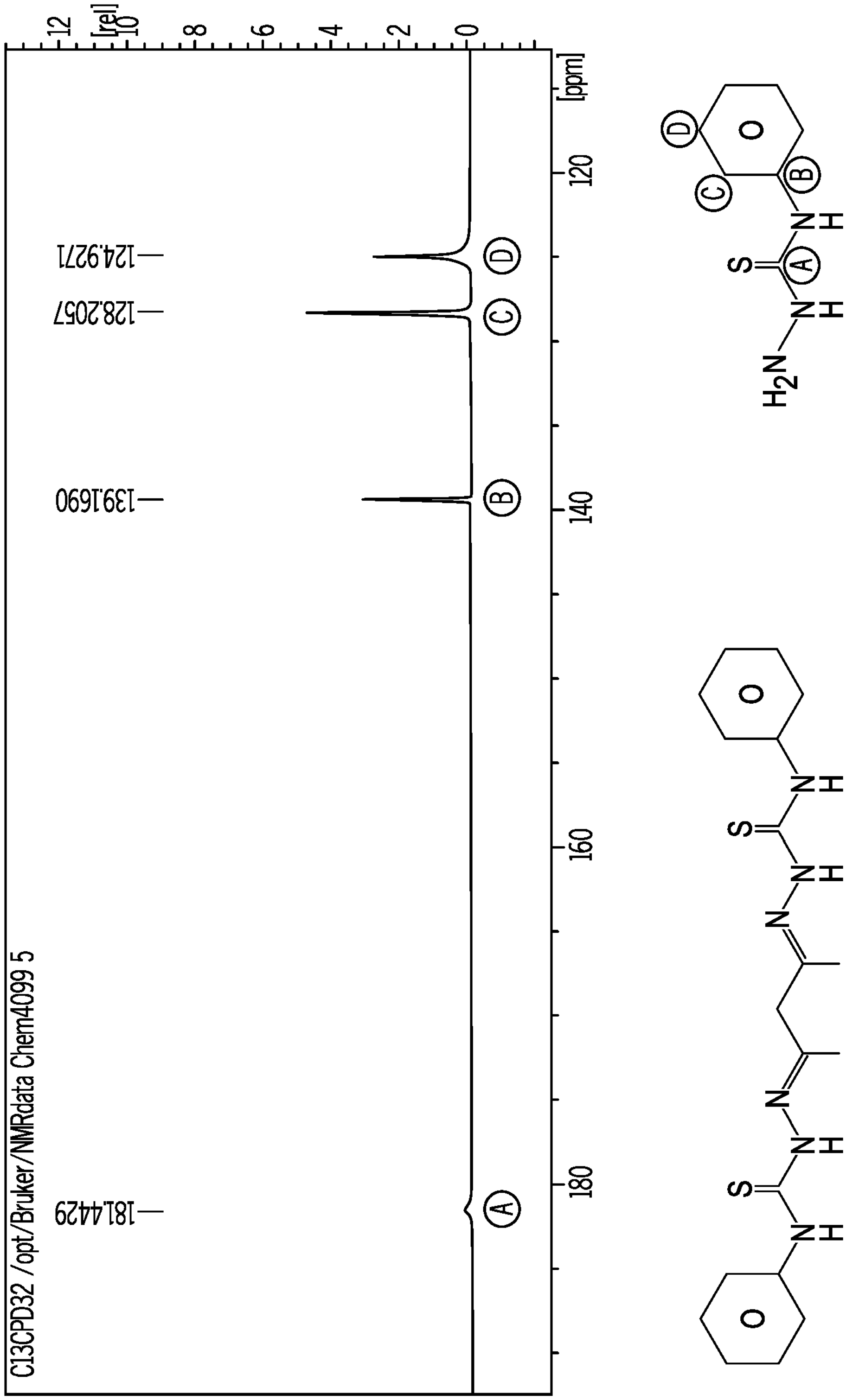
C13CPD32 /opt/Bruker/NMRdata Chem4099 5
181.4429
139.1690
128.2057
124.9271
[ppm]
120
140
160
180
[rel]
12
10
8
6
4
2
0

FIG. 21

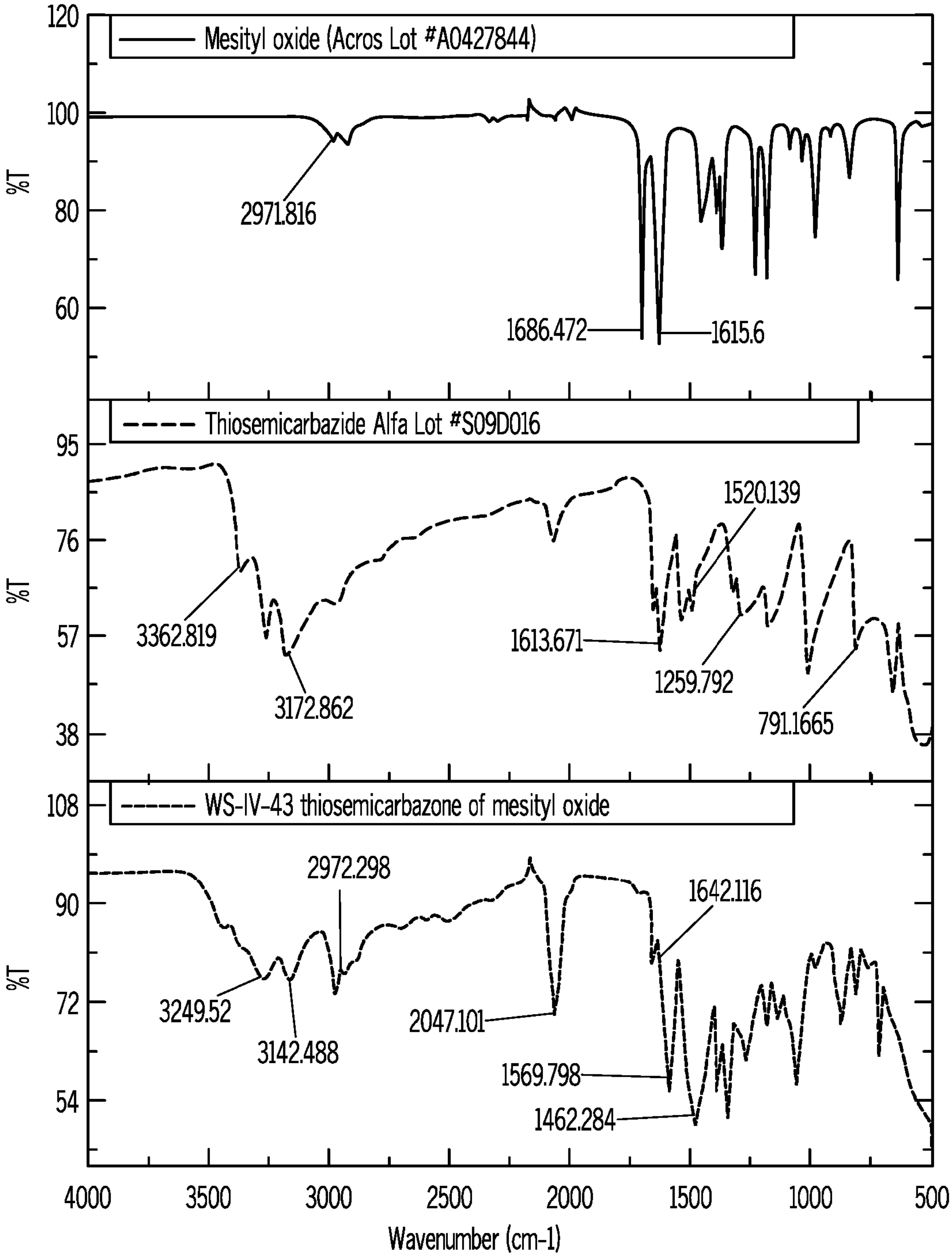
Mesityl oxide (Acros Lot #A0427844)
120
100
80
60
%T
2971.816
1686.472
1615.6
Thiosemicarbazide Alfa Lot #S09D016
95
76
57
38
%T
3362.819
3172.862
1613.671
1520.139
1259.792
791.1665
WS-IV-43 thiosemicarbazone of mesityl oxide
108
90
72
54
%T
2972.298
3249.52
3142.488
2047.101
1642.116
1569.798
1462.284
4000
3500
3000
2500
2000
1500
1000
500
Wavenumber (cm-1)

FIG. 22

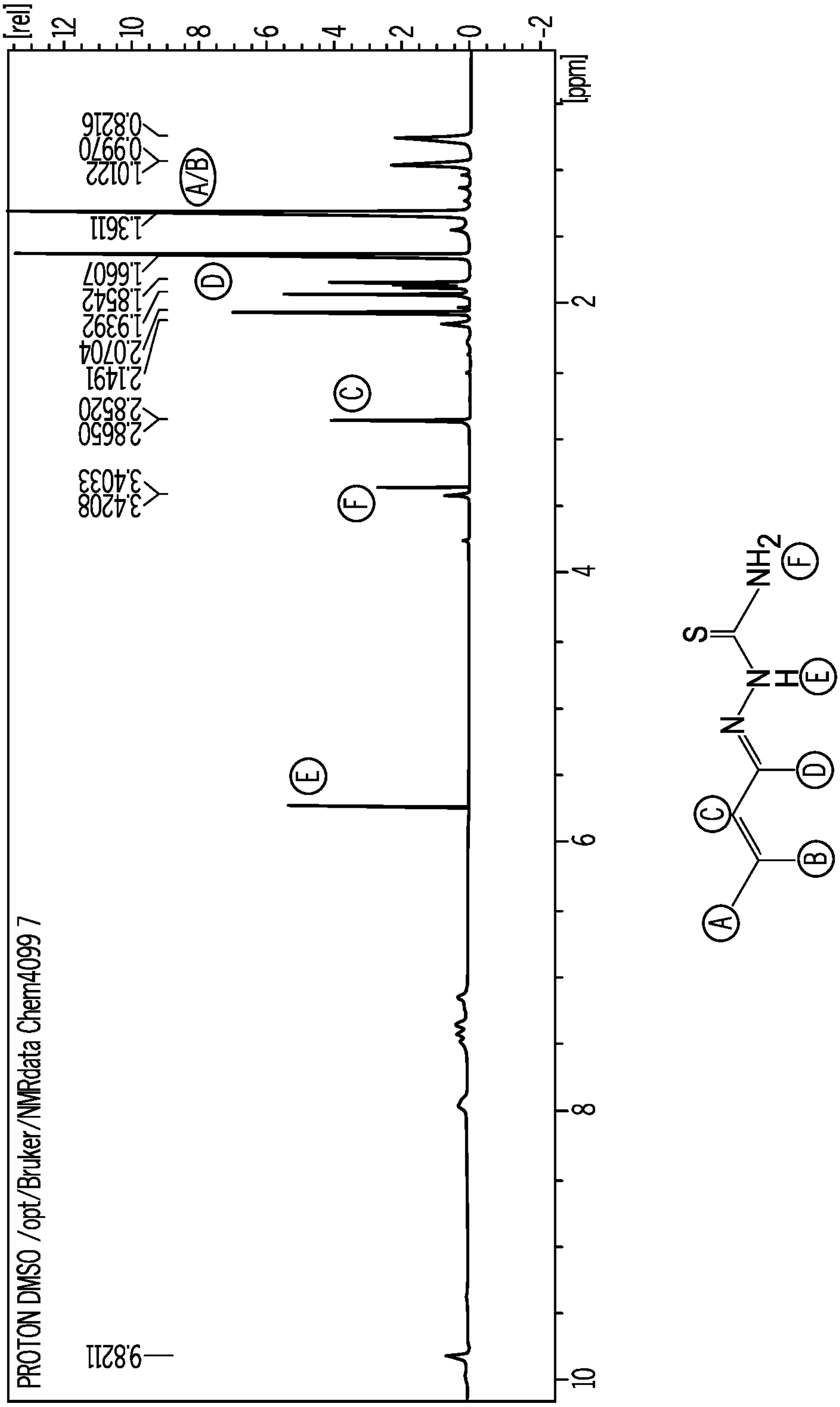
PROTON DMSO /opt/Bruker/NMRdata Chem4099 7
[rel]
12
10
8
6
4
2
0
-2
[ppm]
0.8216
0.9970
1.0122
A/B
1.3611
1.6607
1.8542
1.9392
2.0704
2.1491
D
2.8520
2.8650
C
3.4033
3.4208
F
E
9.8211
2
4
6
8
10

FIG. 23

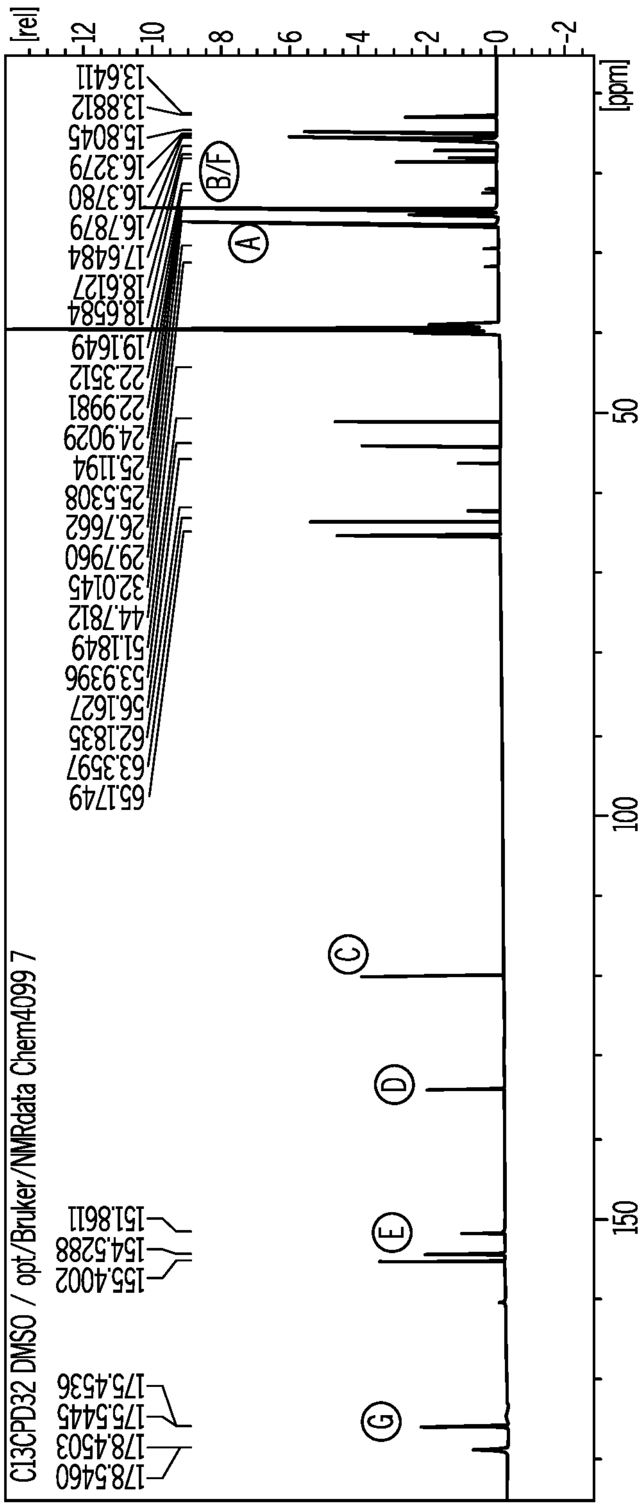
C13CPD32 DMSO / opt/Bruker/NMRdata Chem4099 7
[rel]
12
10
8
6
4
2
0
-2
[ppm]
50
100
150
13.6411
13.8812
15.8045
16.3279
16.3780
16.7879
17.6484
18.6127
18.6584
19.1649
22.3512
22.9981
24.9029
25.1194
25.5308
26.7662
29.7960
32.0145
44.7812
51.1849
53.9396
56.1627
62.1835
63.3597
65.1749
151.8611
154.5288
155.4002
175.4536
175.5445
178.4503
178.5460
B/F
A
C
D
E
G

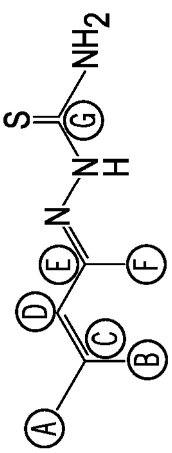

FIG. 24

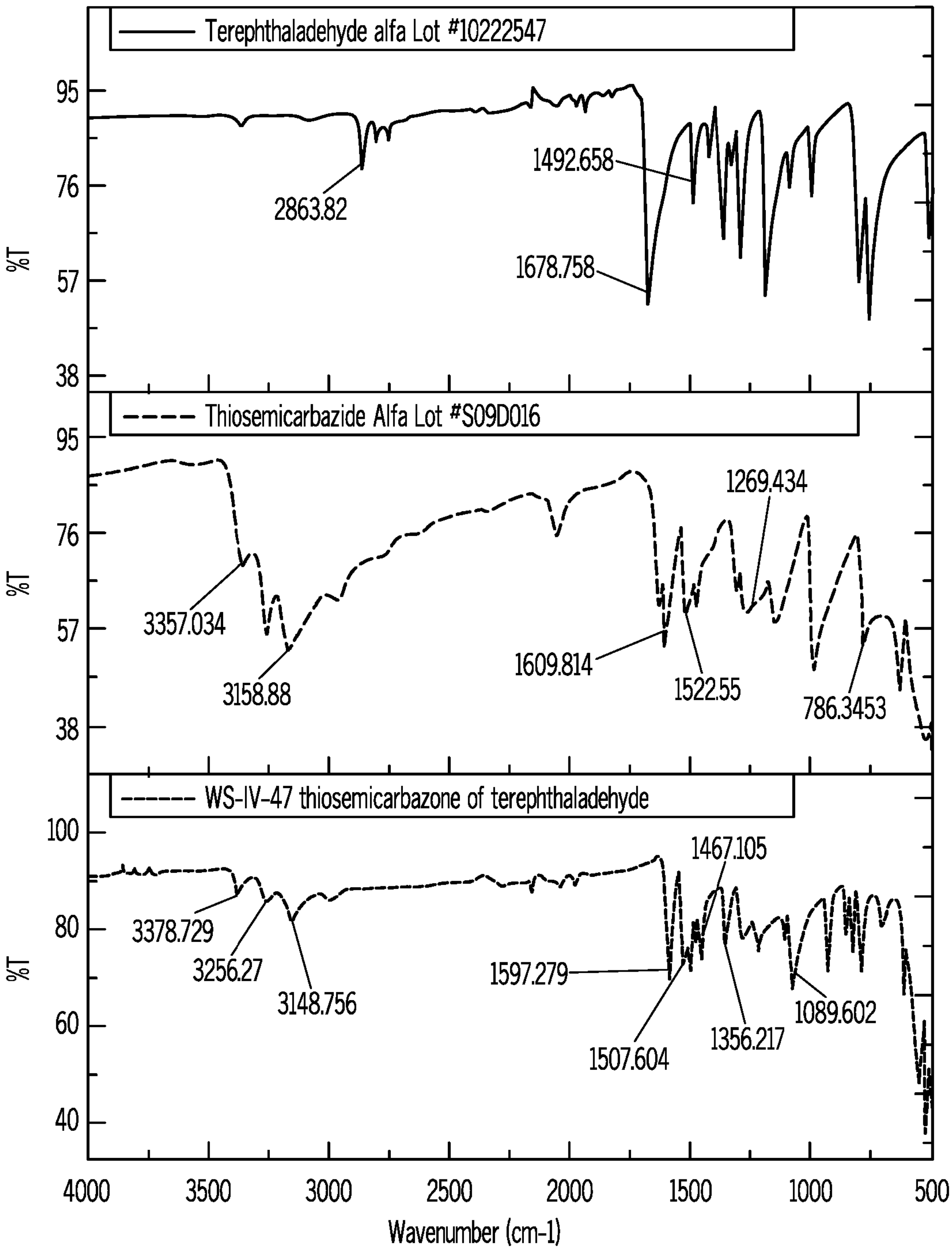

Terephthaladehyde alfa Lot #10222547
95
76
57
38
%T
2863.82
1492.658
1678.758
Thiosemicarbazide Alfa Lot #S09D016
95
76
57
38
%T
1269.434
3357.034
3158.88
1609.814
1522.55
786.3453
WS-IV-47 thiosemicarbazone of terephthaladehyde
100
80
60
40
%T
1467.105
3378.729
3256.27
3148.756
1597.279
1507.604
1356.217
1089.602
4000
3500
3000
2500
2000
1500
1000
500
Wavenumber (cm-1)


FIG. 25

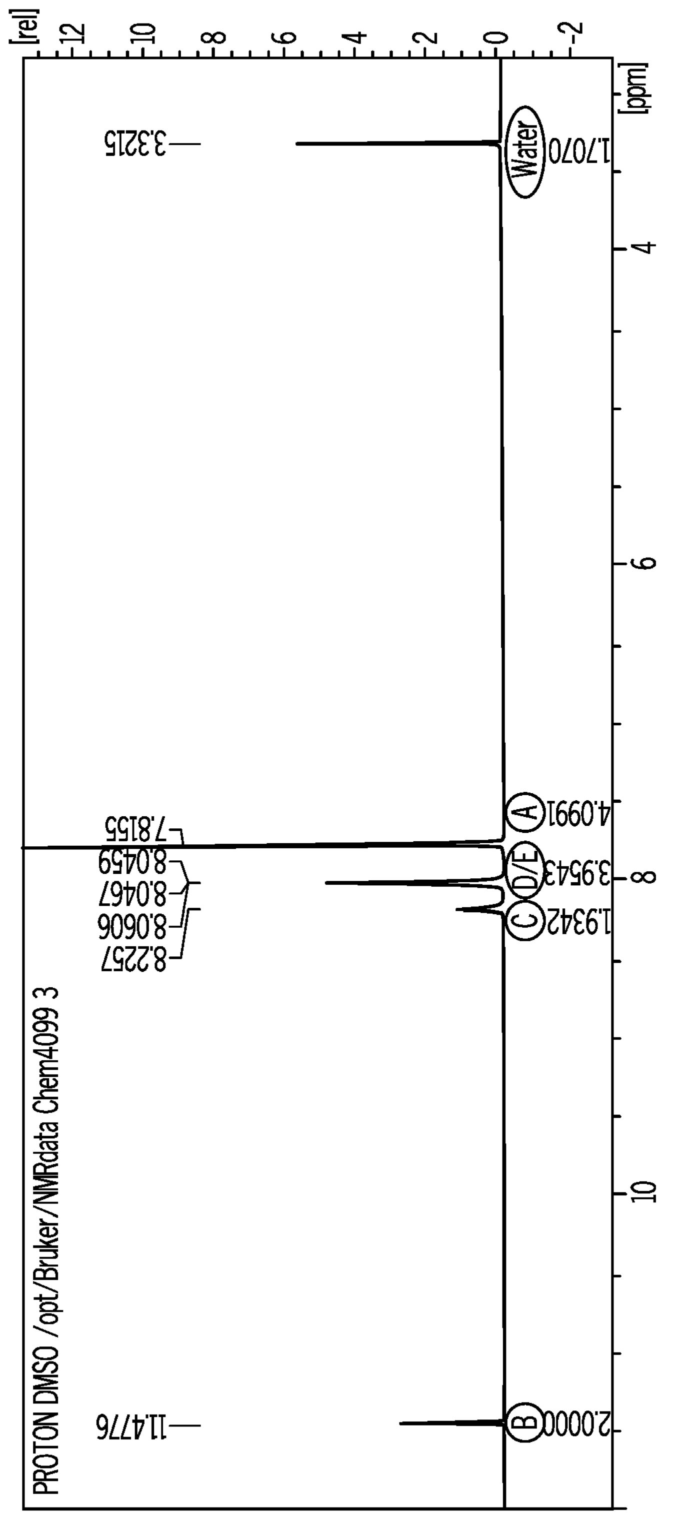
PROTON DMSO /opt/Bruker/NMRdata Chem4099 3
[rel]
12
10
8
6
4
2
0
-2
[ppm]
4
6
8
10
3.3215
Water
1.7070
7.8155
8.0459
8.0467
8.0606
8.2257
A
4.0991
D/E
3.9543
C
1.9342
11.4776
B
2.0000

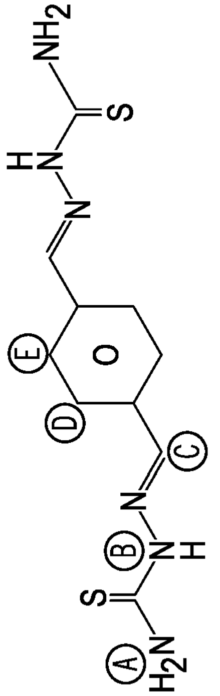

FIG. 26

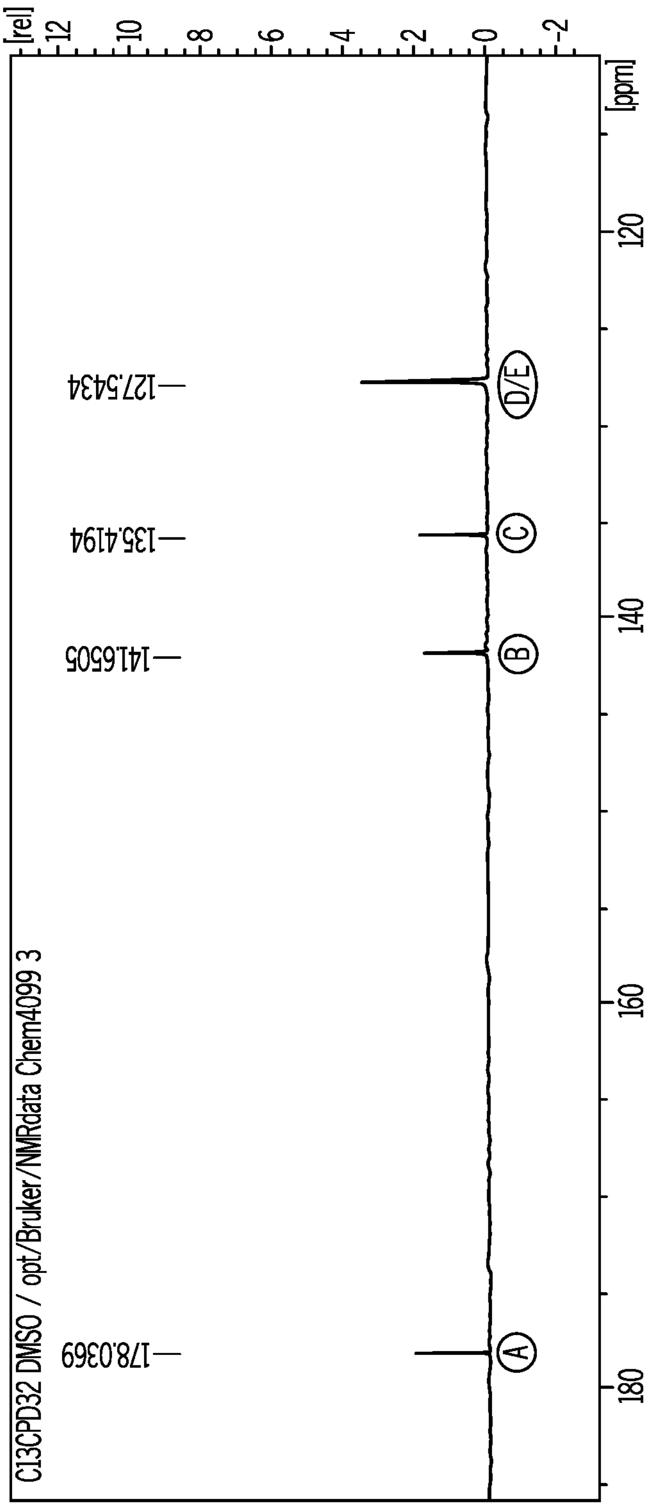
C13CPD32 DMSO / opt/Bruker/NMRdata Chem4099 3
178.0369
141.6505
135.4194
127.5434
A
B
C
D/E
[rel]
12
10
8
6
4
2
0
-2
[ppm]
120
140
160
180

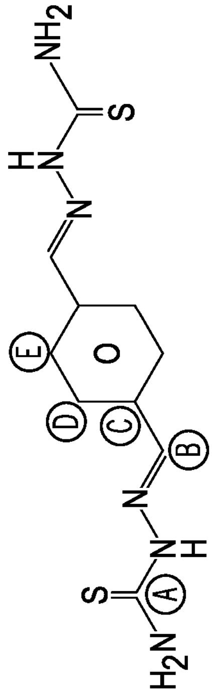

FIG. 27

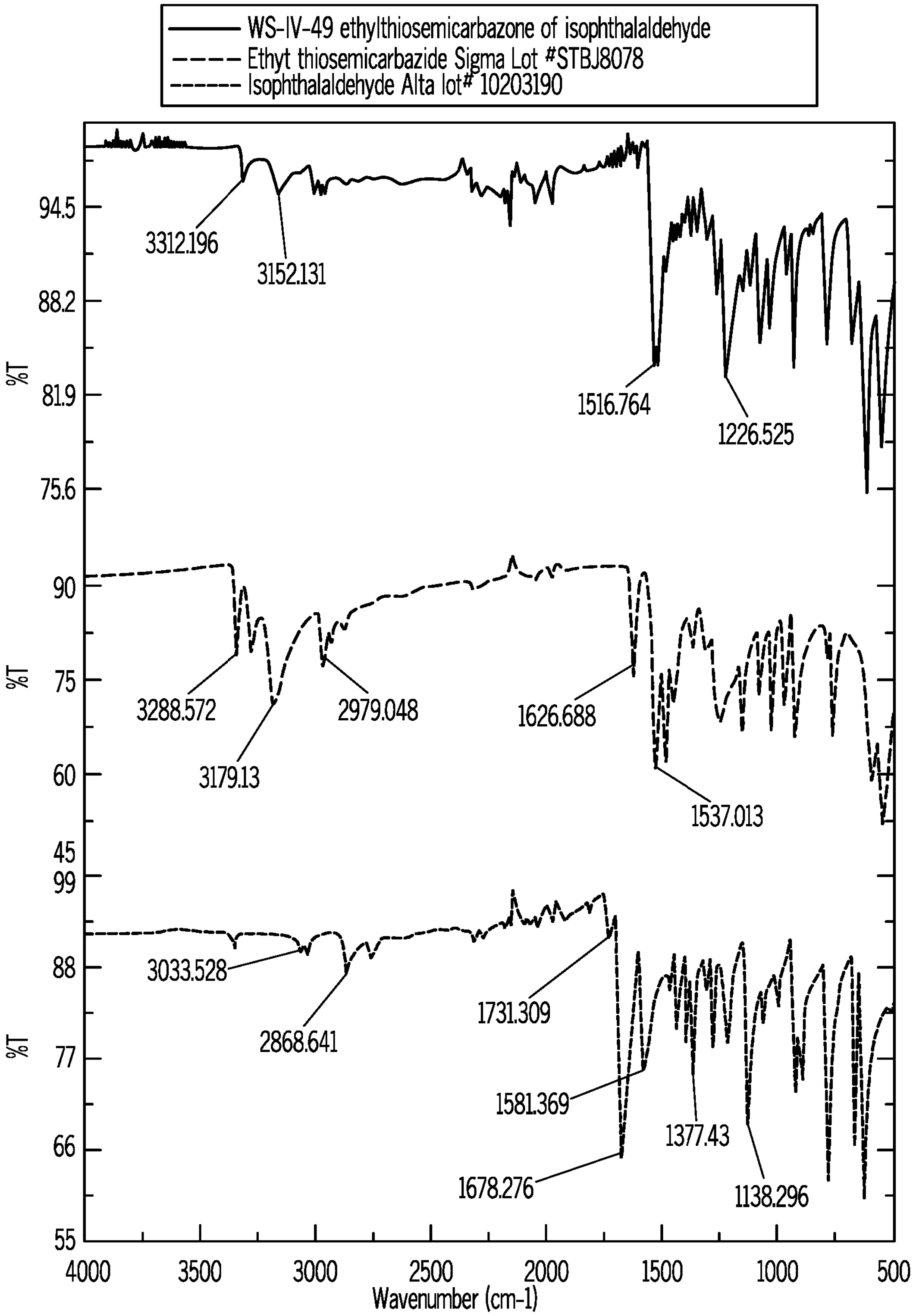
WS-IV-49 ethylthiosemicarbazone of isophthalaldehyde
Ethyt thiosemicarbazide Sigma Lot #STBJ8078
Isophthalaldehyde Alta lot# 10203190
%T
94.5
88.2
81.9
75.6
3312.196
3152.131
1516.764
1226.525
90
75
60
45
3288.572
3179.13
2979.048
1626.688
1537.013
99
88
77
66
55
3033.528
2868.641
1731.309
1581.369
1377.43
1678.276
1138.296
4000
3500
3000
2500
2000
1500
1000
500
Wavenumber (cm-1)

FIG. 28

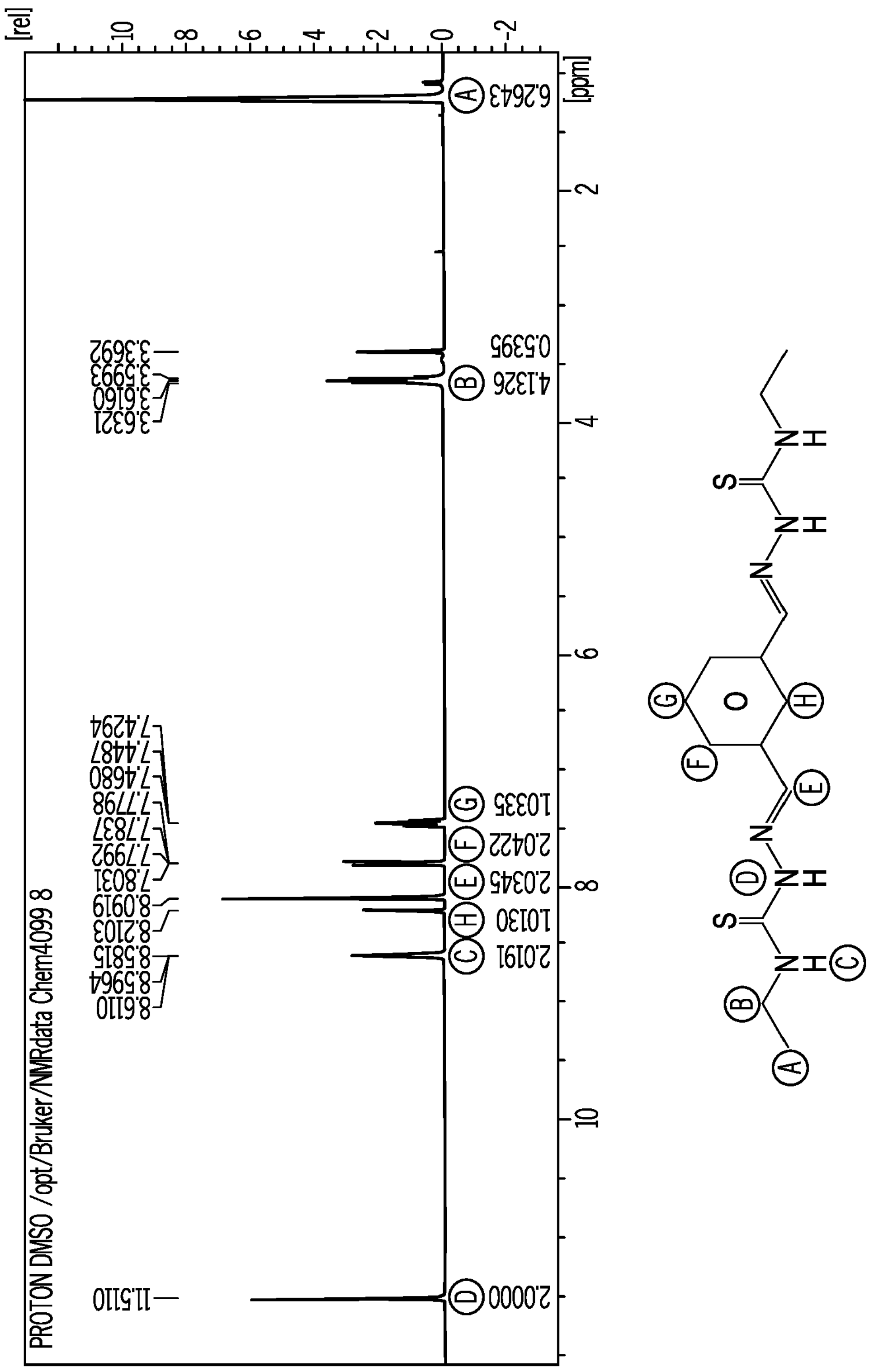
PROTON DMSO /opt/Bruker/NMRdata Chem4099 8
[rel]
[ppm]
11.5110
8.6110
8.5964
8.5815
8.2103
8.0919
7.8031
7.7992
7.7837
7.7798
7.4680
7.4487
7.4294
3.6321
3.6160
3.5993
3.3692
2.0000
2.0191
1.0130
2.0345
2.0422
1.0335
4.1326
0.5395
6.2643

FIG. 29

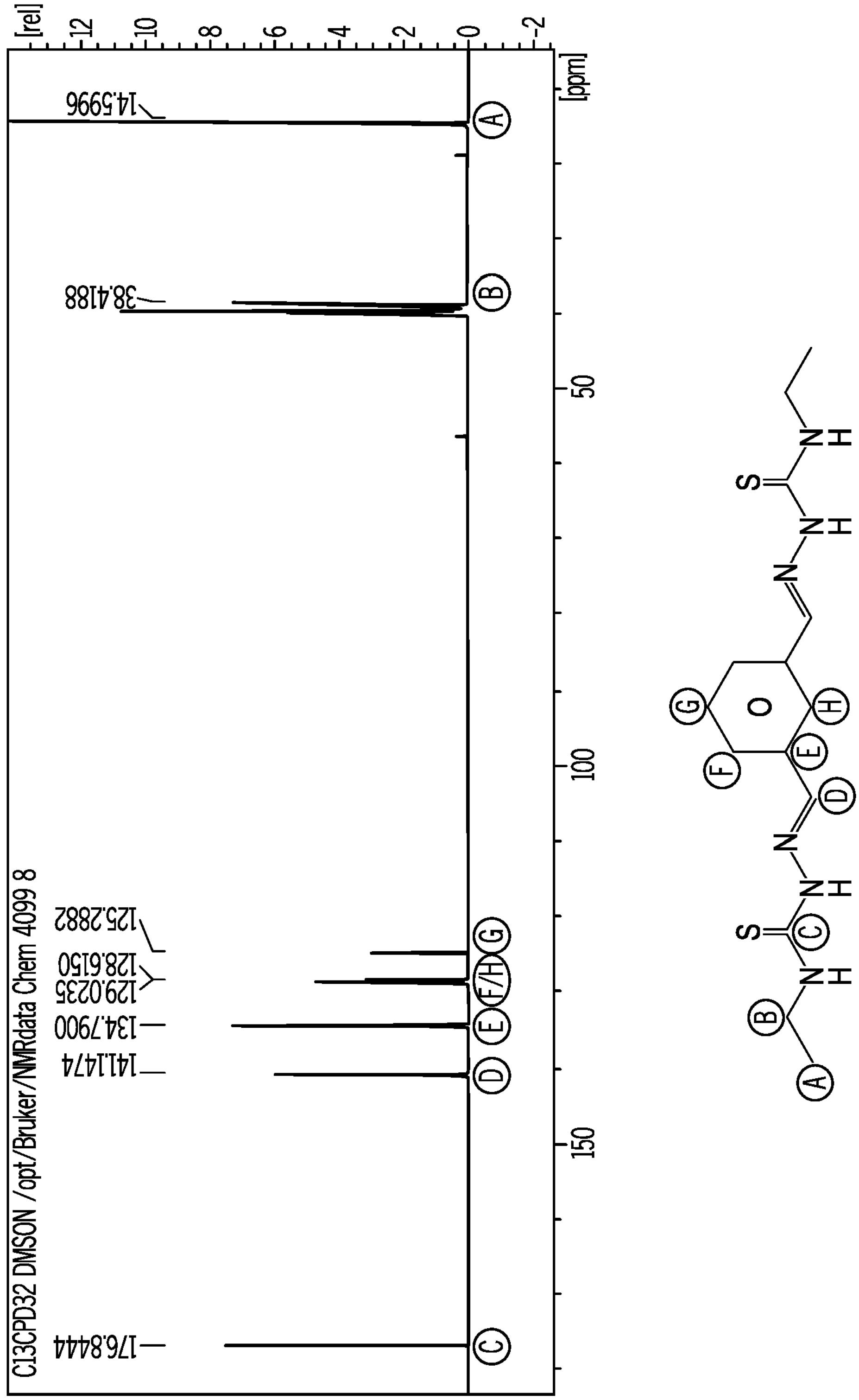
C13CPD32 DMSON /opt/Bruker/NMRdata Chem 4099 8
14.5996
38.4188
125.2882
128.6150
129.0235
134.7900
141.1474
176.8444
A
B
C
D
E
F/H
G
[rel]
12
10
8
6
4
2
0
-2
[ppm]
50
100
150

FIG. 30

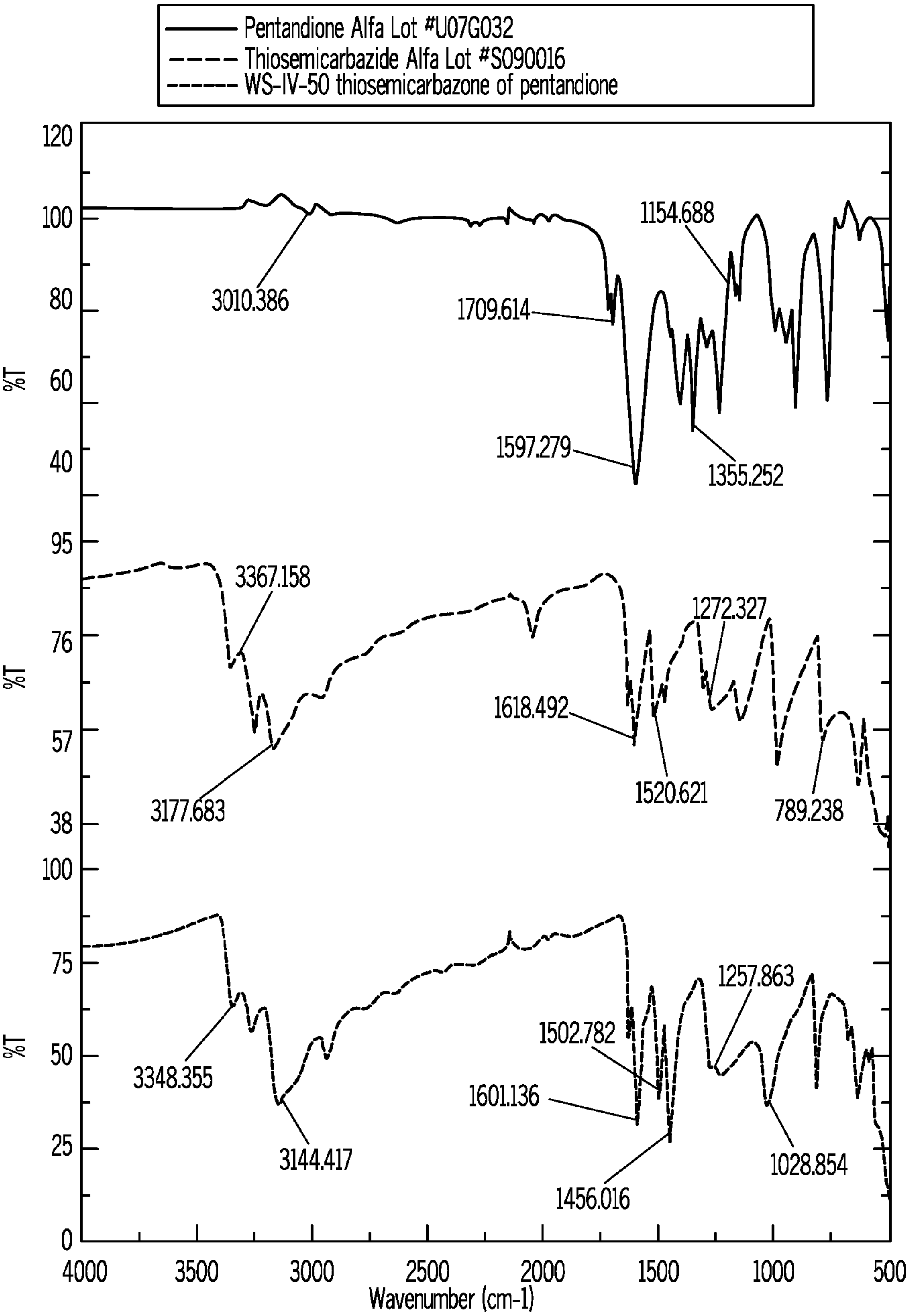
Pentandione Alfa Lot #U07G032
Thiosemicarbazide Alfa Lot #S090016
WS-IV-50 thiosemicarbazone of pentandione
120
100
80
60
40
95
76
57
38
100
75
50
25
0
%T
%T
%T
3010.386
1709.614
1154.688
1597.279
1355.252
3367.158
1272.327
1618.492
3177.683
1520.621
789.238
1257.863
1502.782
3348.355
1601.136
3144.417
1456.016
1028.854
4000
3500
3000
2500
2000
1500
1000
500
Wavenumber (cm-1)

FIG. 31

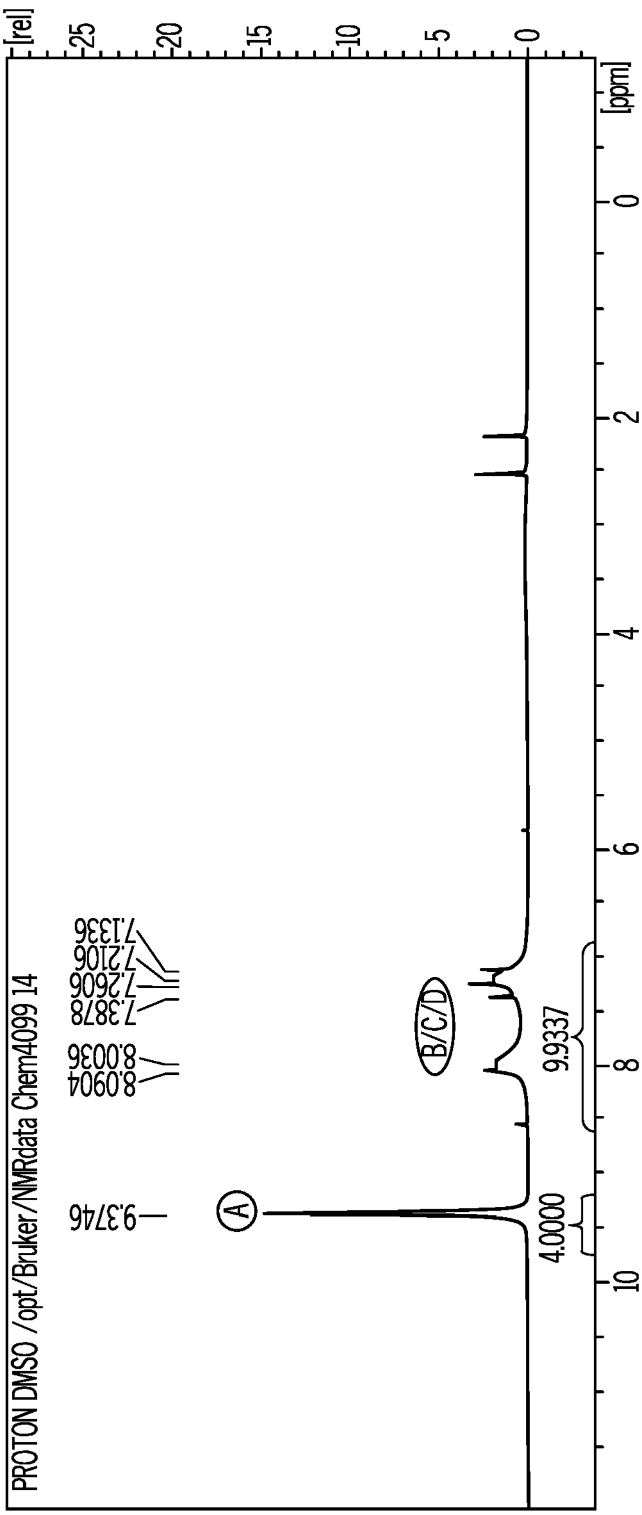
PROTON DMSO /opt/Bruker/NMRdata Chem4099 14
9.3746
8.0904
8.0036
7.3878
7.2606
7.2106
7.1336
A
B/C/D
4.0000
9.9337
[rel]
25
20
15
10
5
0
[ppm]
0
2
4
6
8
10

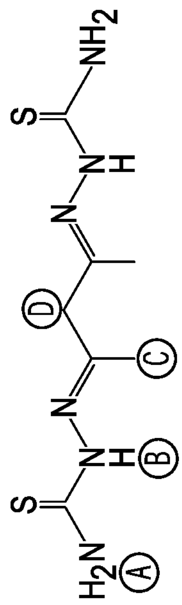

FIG. 32

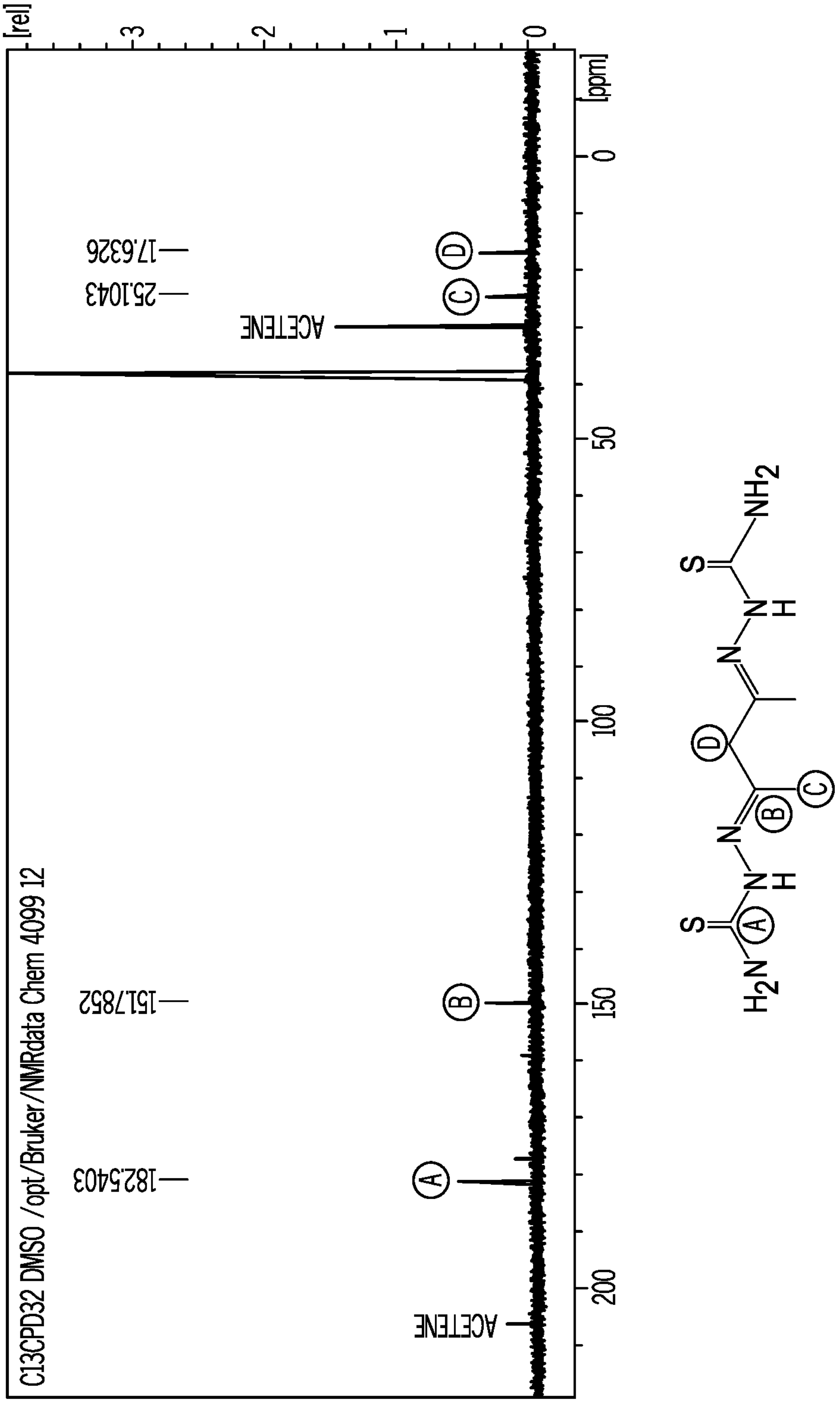
C13CPD32 DMSO /opt/Bruker/NMRdata Chem 4099 12
[rel]
3
2
1
0
[ppm]
200
150
100
50
0
ACETENE
182.5403
151.7852
25.1043
17.6326
ACETENE
A
B
C
D

FIG. 33

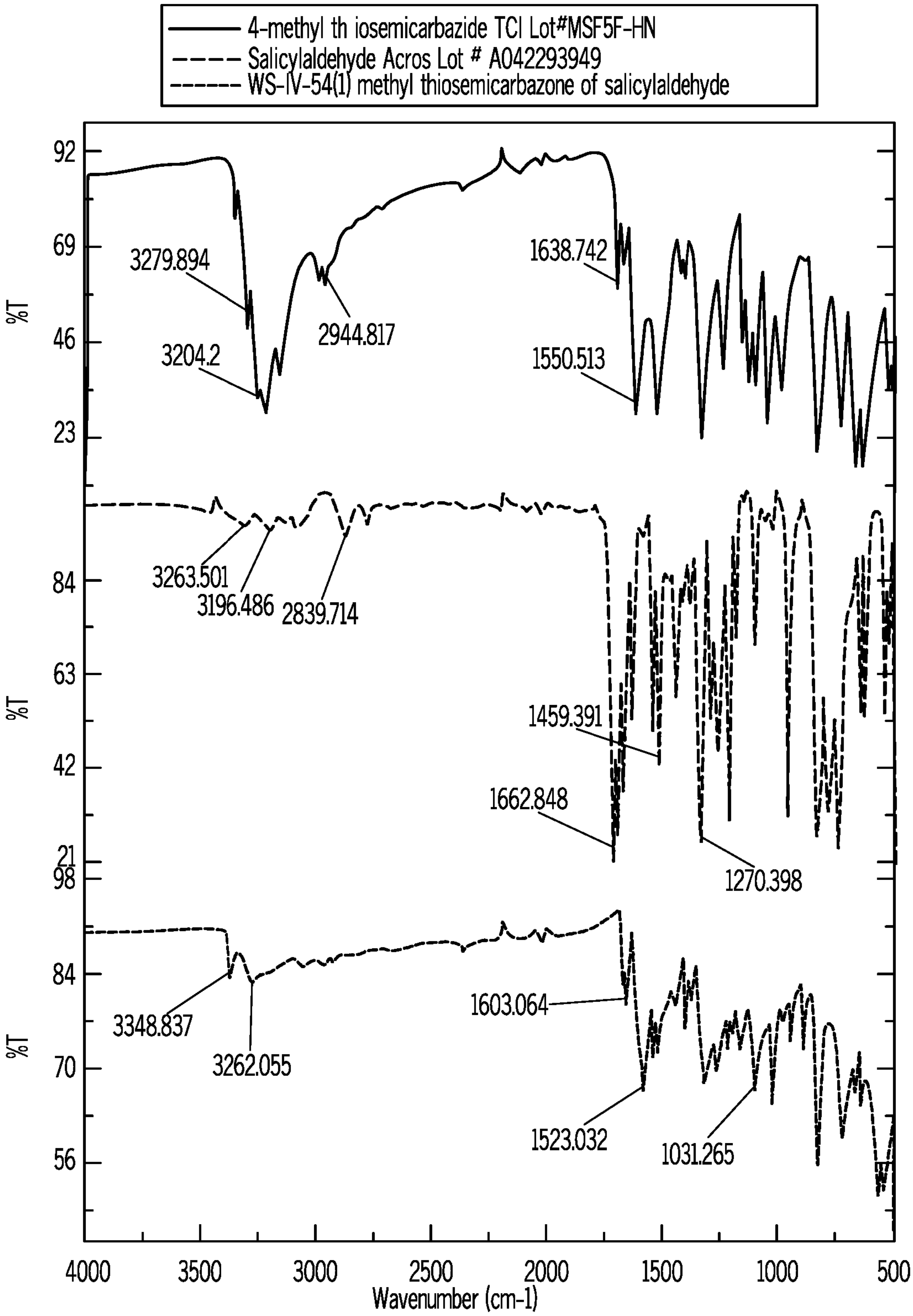
4-methyl th iosemicarbazide TCI Lot#MSF5F-HN
Salicylaldehyde Acros Lot # A042293949
WS-IV-54(1) methyl thiosemicarbazone of salicylaldehyde
92
69
46
23
%T
3279.894
3204.2
2944.817
1638.742
1550.513
84
63
42
21
3263.501
3196.486
2839.714
1459.391
1662.848
1270.398
98
84
70
56
3348.837
3262.055
1603.064
1523.032
1031.265
4000
3500
3000
2500
2000
1500
1000
500
Wavenumber (cm-1)

FIG. 34

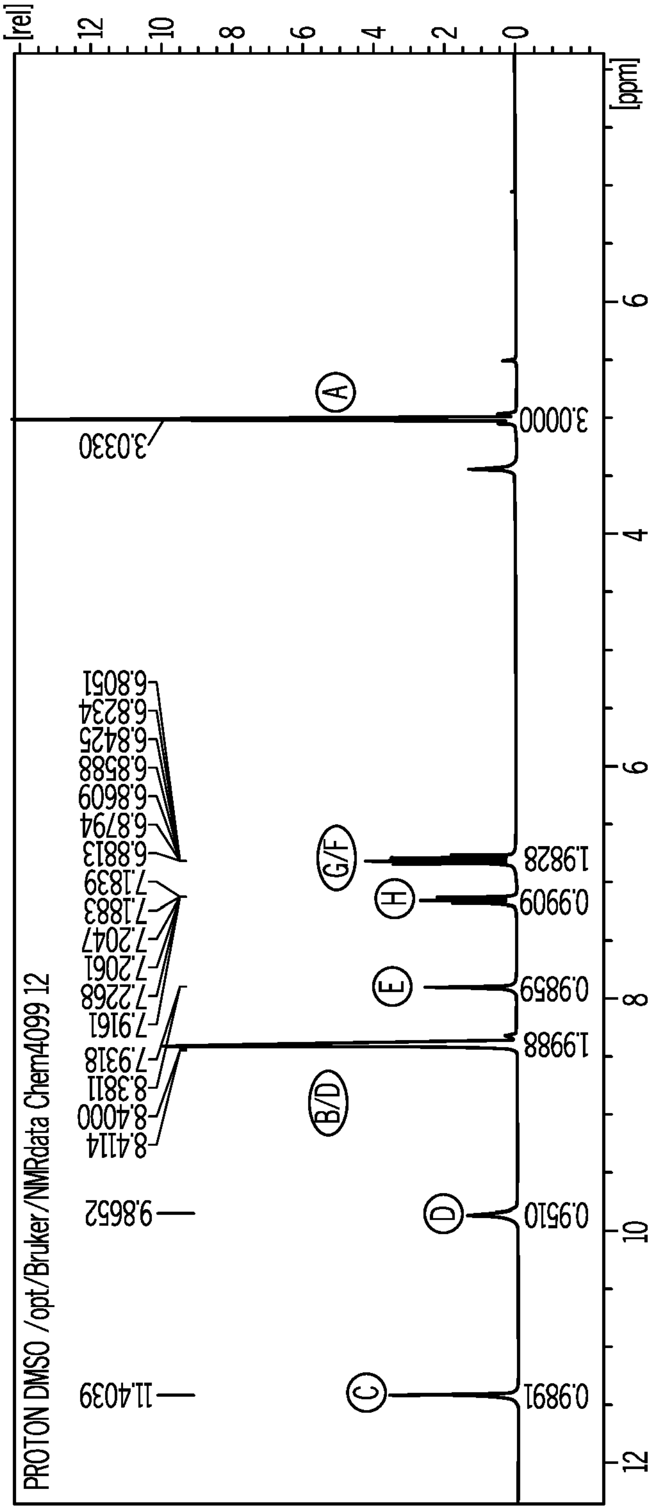
PROTON DMSO /opt/Bruker/NMRdata Chem4099 12
11.4039
9.8652
8.4114
8.4000
8.3811
7.9318
7.9161
7.2268
7.2061
7.2047
7.1883
7.1839
6.8813
6.8794
6.8609
6.8588
6.8425
6.8234
6.8051
3.0330
C
D
B/D
E
H
G/F
A
0.9891
0.9510
1.9988
0.9859
0.9909
1.9828
3.0000
[rel]
[ppm]

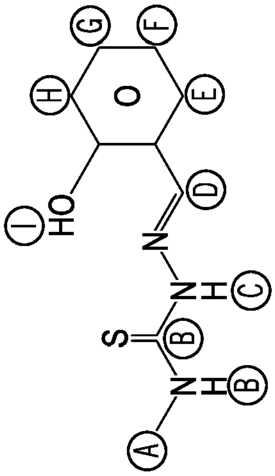

FIG. 35

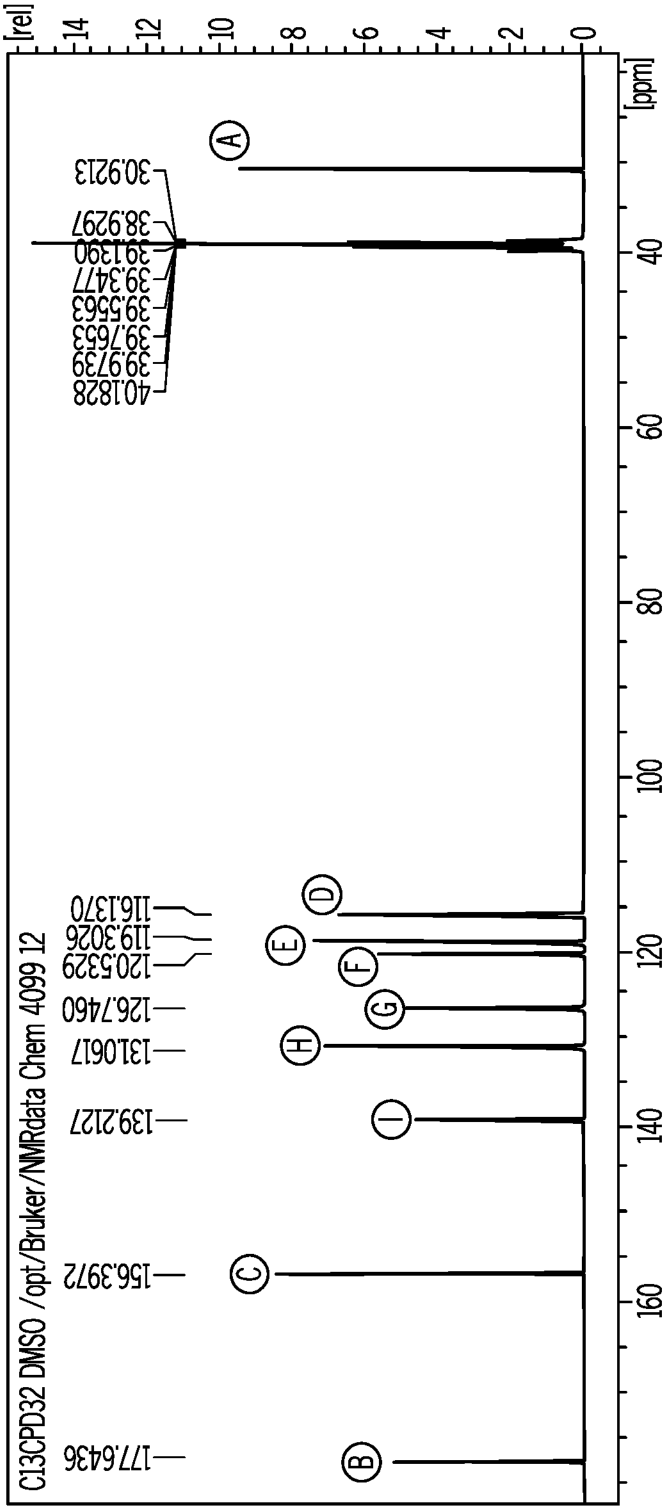
C13CPD32 DMSO /opt/Bruker/NMRdata Chem 4099 12
177.6436
156.3972
139.2127
131.0617
126.7460
120.5329
119.3026
116.1370
40.1828
39.9739
39.7653
39.5563
39.3477
39.1390
38.9297
30.9213
[rel]
[ppm]

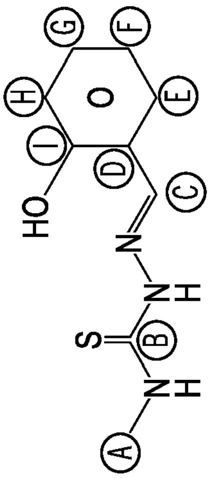

FIG. 36

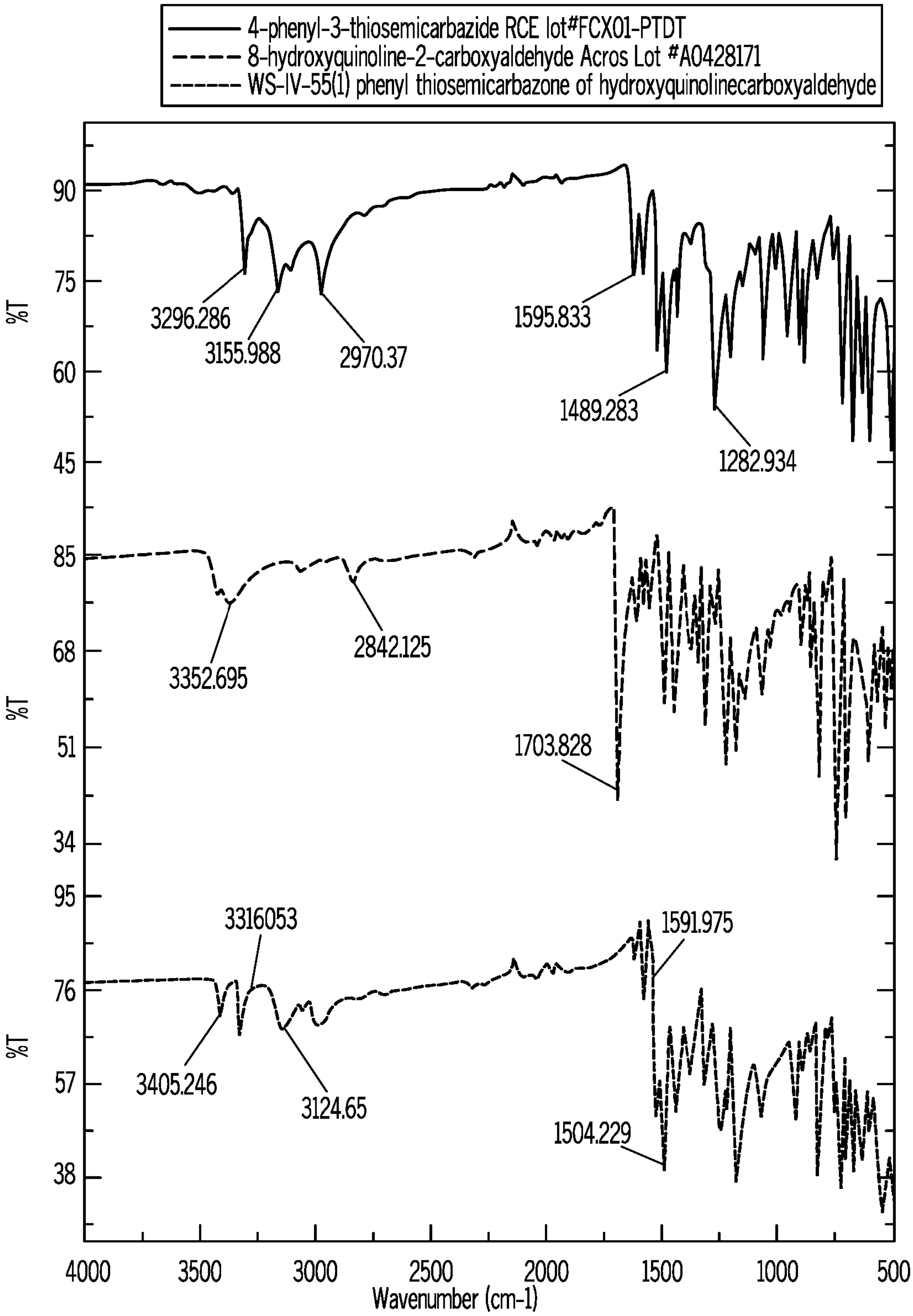
4-phenyl-3-thiosemicarbazide RCE lot#FCX01-PTDT
8-hydroxyquinoline-2-carboxyaldehyde Acros Lot #A0428171
WS-IV-55(1) phenyl thiosemicarbazone of hydroxyquinolinecarboxyaldehyde
%T
90
75
60
45
3296.286
3155.988
2970.37
1595.833
1489.283
1282.934
85
68
51
34
3352.695
2842.125
1703.828
95
76
57
38
3316053
1591.975
3405.246
3124.65
1504.229
4000
3500
3000
2500
2000
1500
1000
500
Wavenumber (cm-1)

FIG. 37

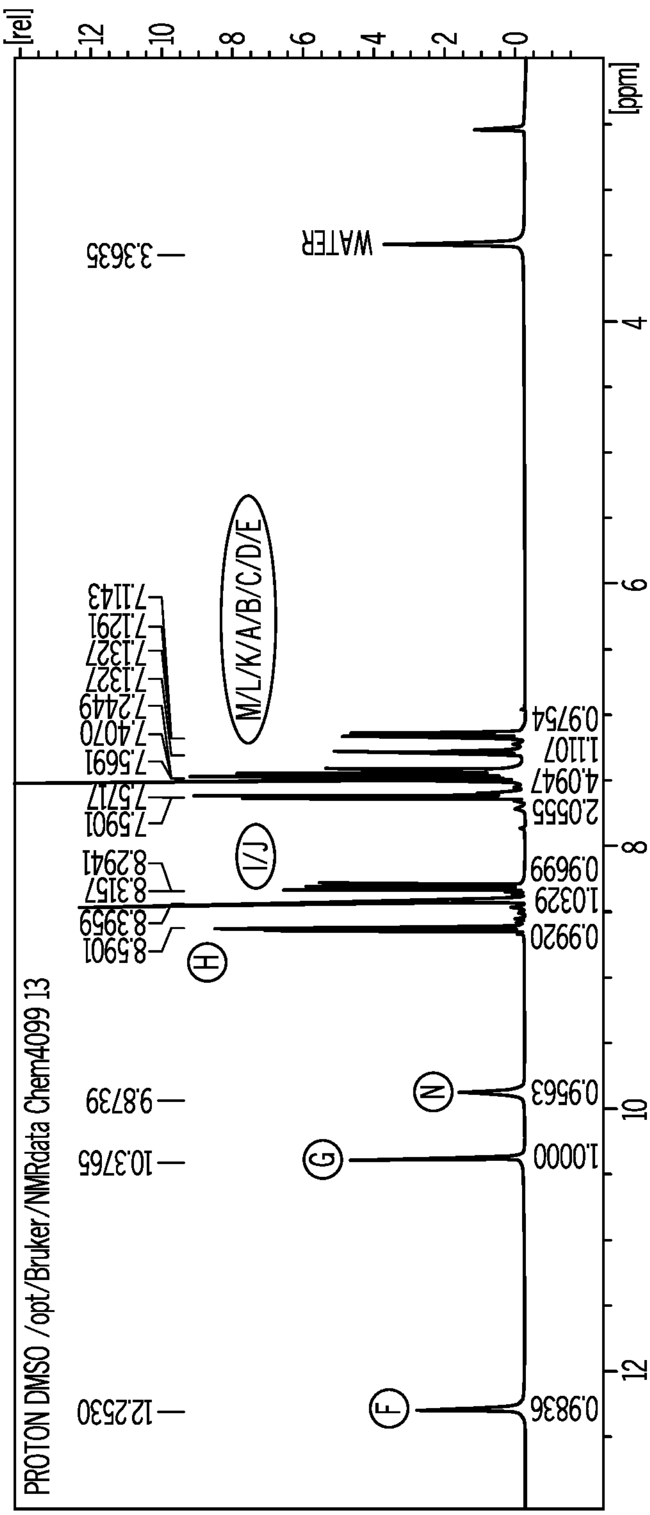
PROTON DMSO /opt/Bruker/NMRdata Chem4099 13
[rel]
[ppm]
12.2530
10.3765
9.8739
8.5901
8.3959
8.3157
8.2941
7.5901
7.5717
7.5691
7.4070
7.2449
7.1327
7.1327
7.1291
7.1143
3.3635
WATER
F
G
N
H
I/J
M/L/K/A/B/C/D/E
0.9836
1.0000
0.9563
0.9920
1.0329
0.9699
2.0555
4.0947
1.1107
0.9754

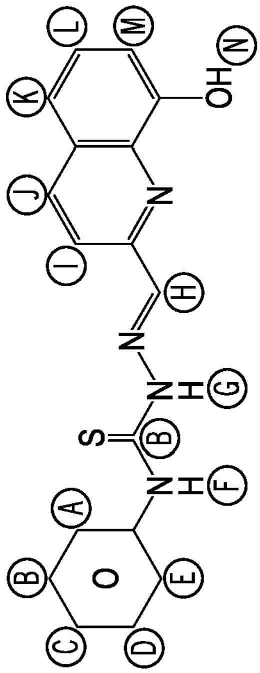

FIG. 38

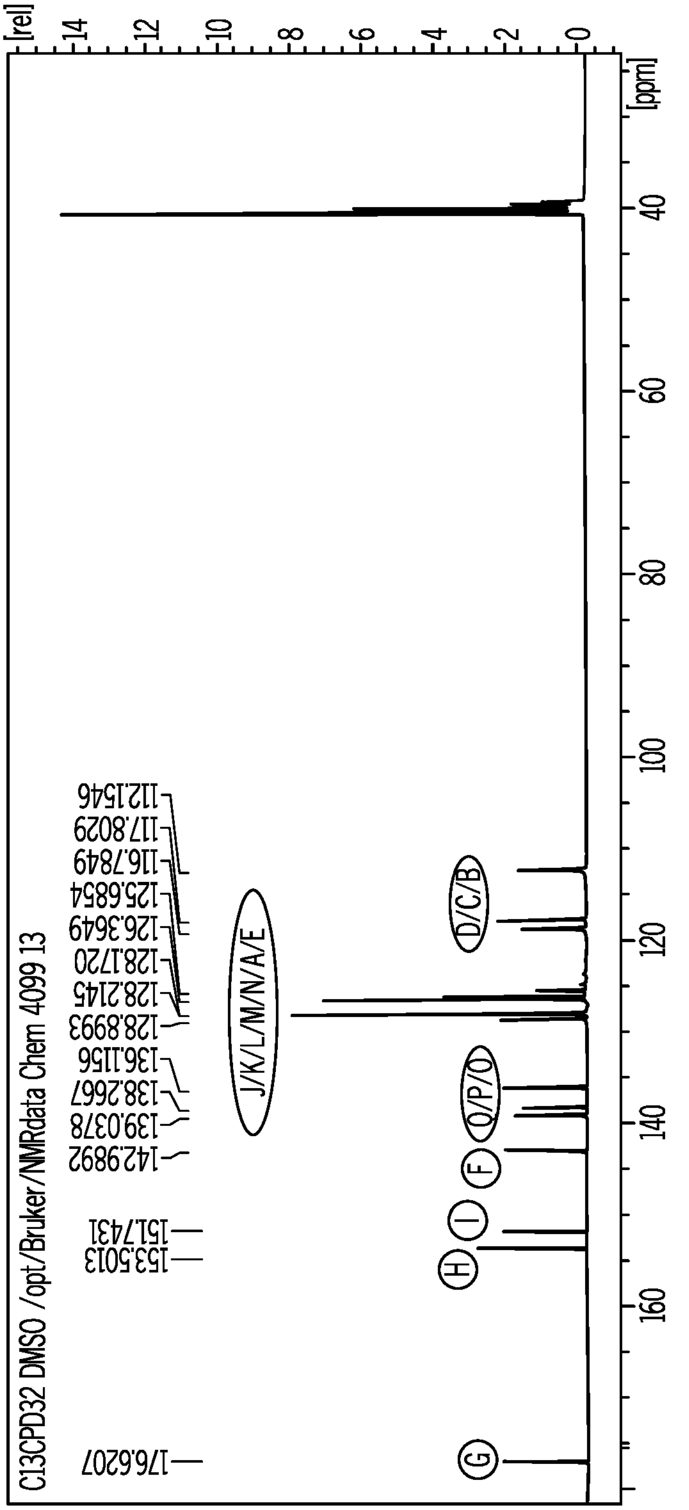
C13CPD32 DMSO /opt/Bruker/NMRdata Chem 4099 13
176.6207
153.5013
151.7431
142.9892
139.0378
138.2667
136.1156
128.8993
128.2145
128.1720
126.3649
125.6854
116.7849
117.8029
112.1546
G
H
I
F
O/P/Q
J/K/L/M/N/A/E
D/C/B
[rel]
[ppm]

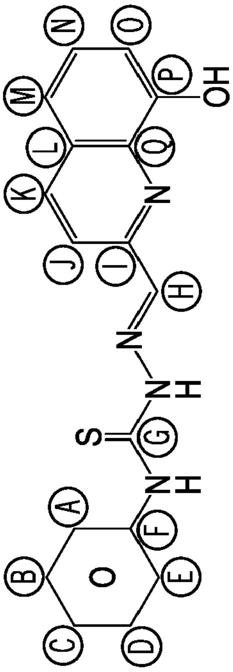

FIG. 39

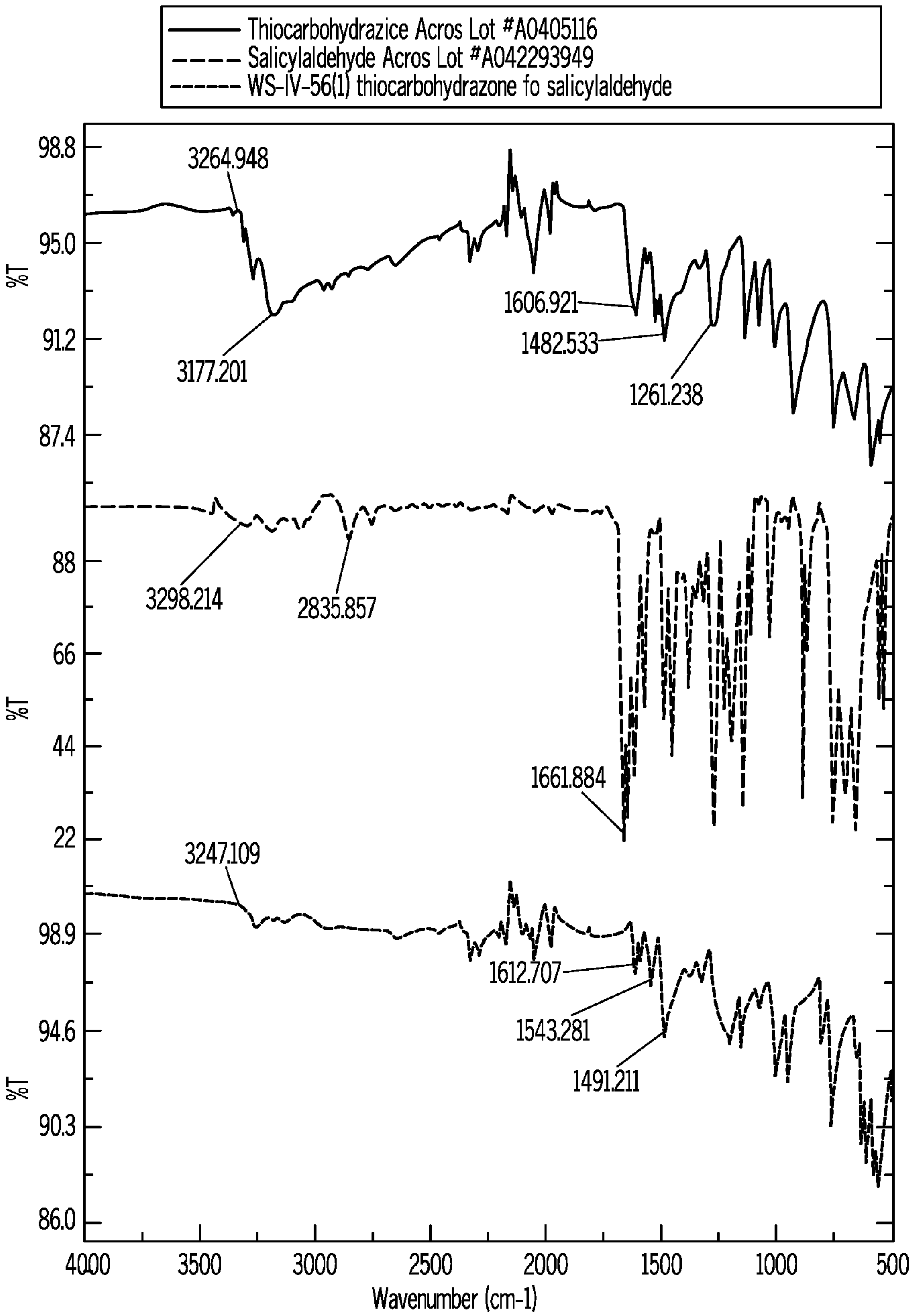
Thiocarbohydrazice Acros Lot #A0405116
Salicylaldehyde Acros Lot #A042293949
WS-IV-56(1) thiocarbohydrazone fo salicylaldehyde
98.8
95.0
91.2
87.4
%T
3264.948
3177.201
1606.921
1482.533
1261.238
88
66
44
22
%T
3298.214
2835.857
1661.884
98.9
94.6
90.3
86.0
%T
3247.109
1612.707
1543.281
1491.211
4000
3500
3000
2500
2000
1500
1000
500
Wavenumber (cm-1)

FIG. 40

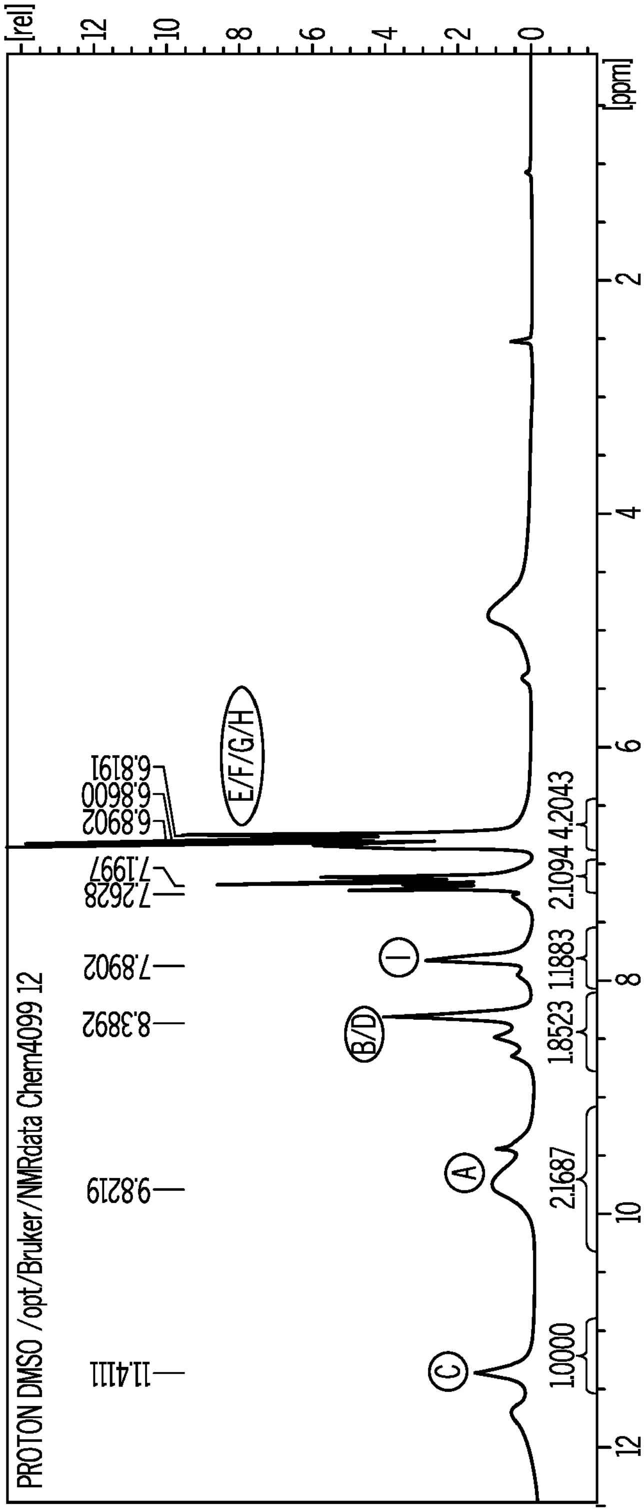
PROTON DMSO /opt/Bruker/NMRdata Chem4099 12
11.4111
9.8219
8.3892
7.8902
7.2628
7.1997
6.8902
6.8600
6.8191
C
A
B/D
I
E/F/G/H
1.0000
2.1687
1.8523
1.1883
2.1094
4.2043
[rel]
[ppm]

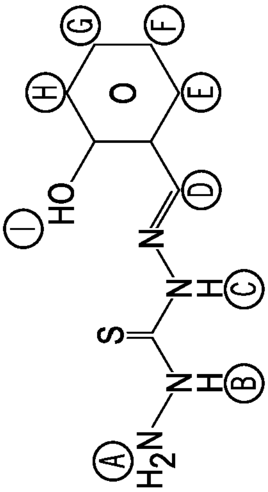

FIG. 41

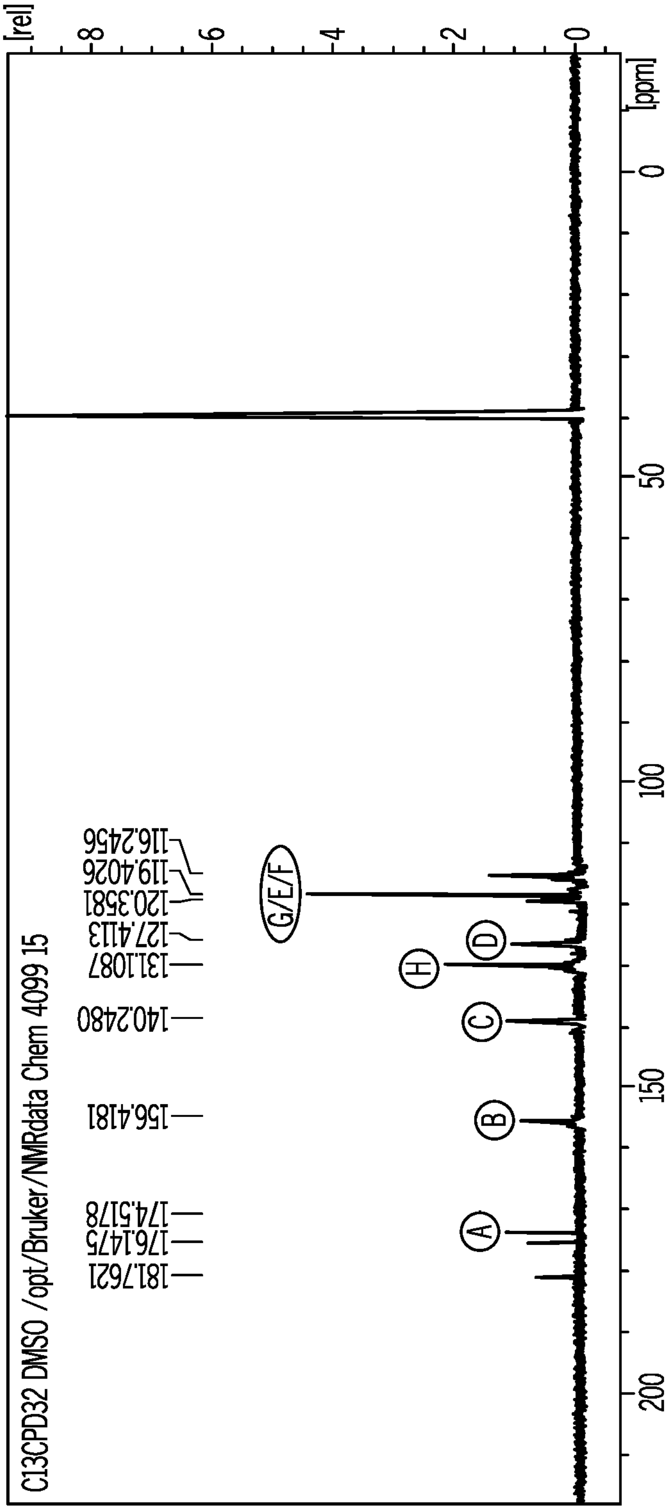
C13CPD32 DMSO /opt/Bruker/NMRdata Chem 4099 15
181.7621
176.1475
174.5178
156.4181
140.2480
131.1087
127.4113
120.3581
119.4026
116.2456
A
B
C
H
D
G/E/F
[rel]
8
6
4
2
0
[ppm]
0
50
100
150
200

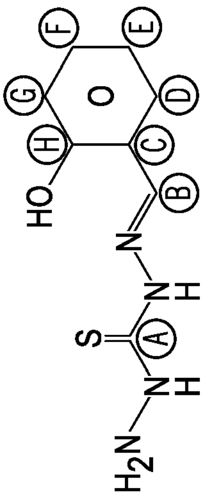

FIG. 42

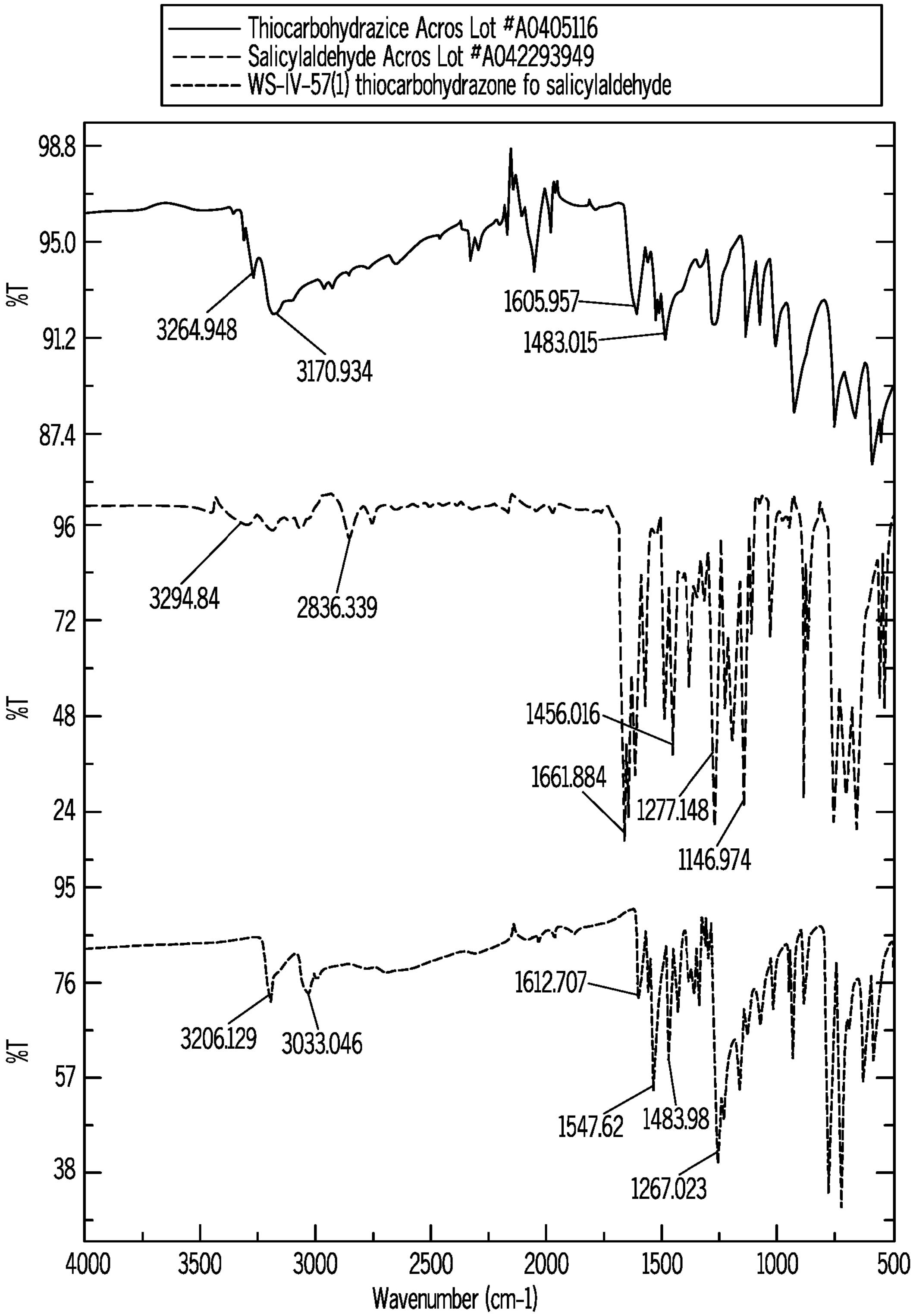
Thiocarbohydrazice Acros Lot #A0405116
Salicylaldehyde Acros Lot #A042293949
WS-IV-57(1) thiocarbohydrazone fo salicylaldehyde
98.8
95.0
91.2
87.4
%T
3264.948
3170.934
1605.957
1483.015
96
72
48
24
%T
3294.84
2836.339
1456.016
1661.884
1277.148
1146.974
95
76
57
38
%T
1612.707
3206.129
3033.046
1547.62
1483.98
1267.023
4000
3500
3000
2500
2000
1500
1000
500
Wavenumber (cm-1)

FIG. 43

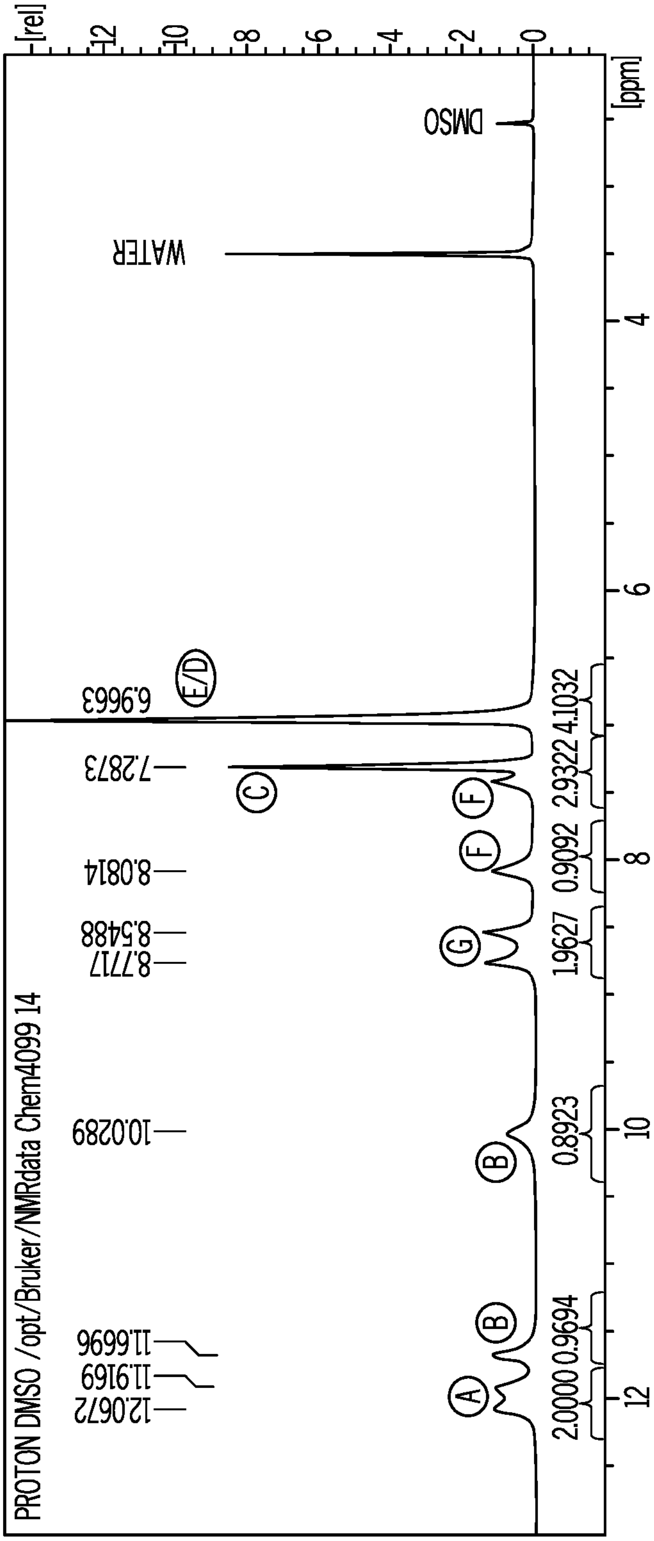
PROTON DMSO /opt/Bruker/NMRdata Chem4099 14
[rel]
12
10
8
6
4
2
0
[ppm]
DMSO
WATER
6.9663
E/D
7.2873
C
F
8.0814
F
8.5488
8.7717
G
10.0289
B
11.6696
11.9169
12.0672
B
A
4.1032
2.9322
0.9092
1.9627
0.8923
0.9694
2.0000
4
6
8
10
12

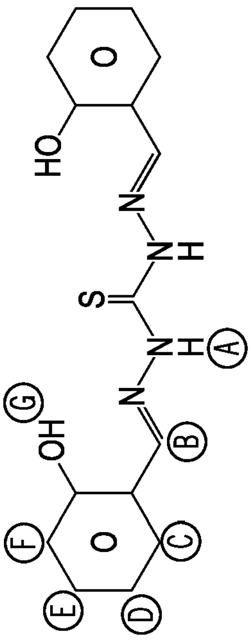

FIG. 44

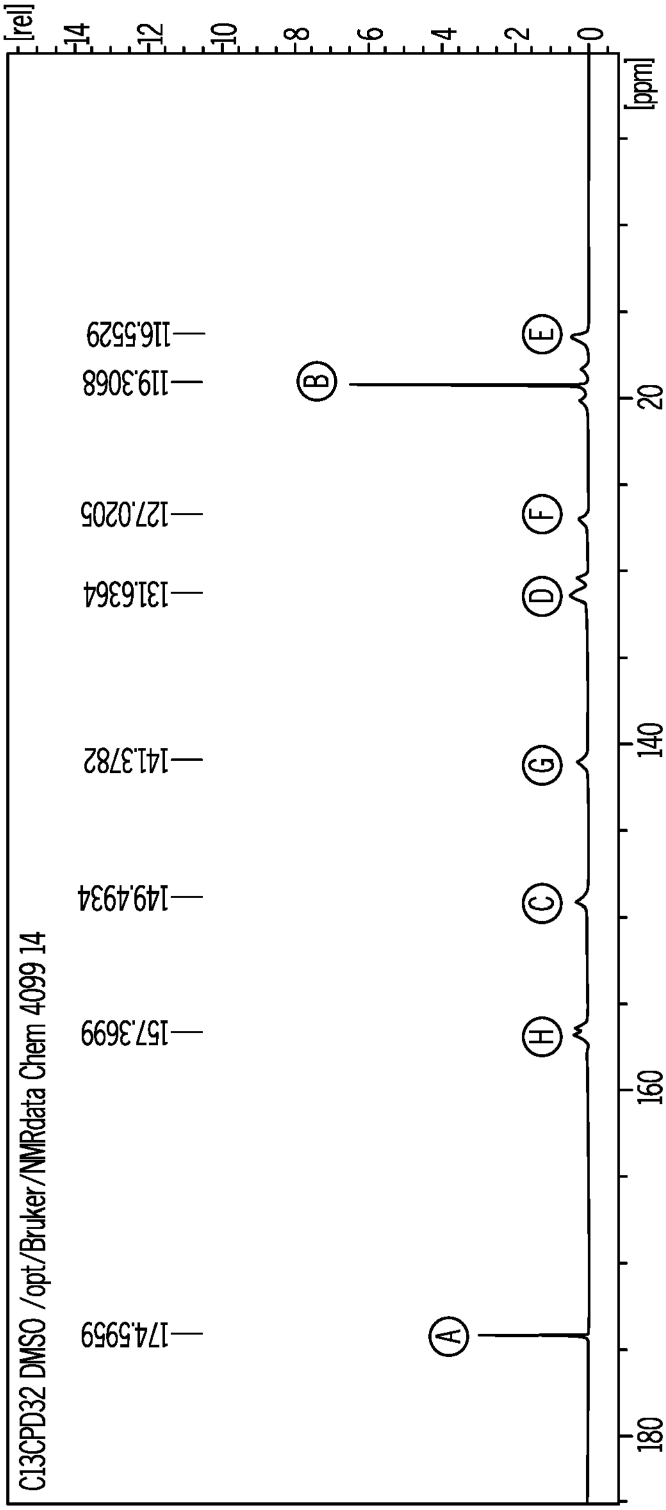
C13CPD32 DMSO /opt/Bruker/NMRdata Chem 4099 14
[rel]
14
12
10
8
6
4
2
0
[ppm]
180
160
140
20
174.5959
157.3699
149.4934
141.3782
131.6364
127.0205
119.3068
116.5529
A
H
C
G
D
F
B
E

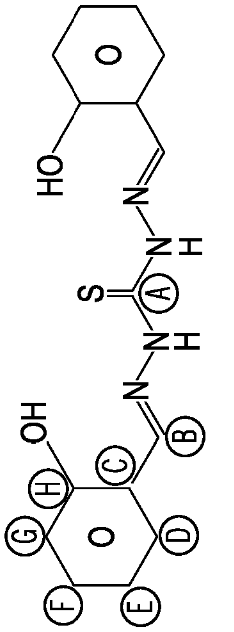

FIG. 45

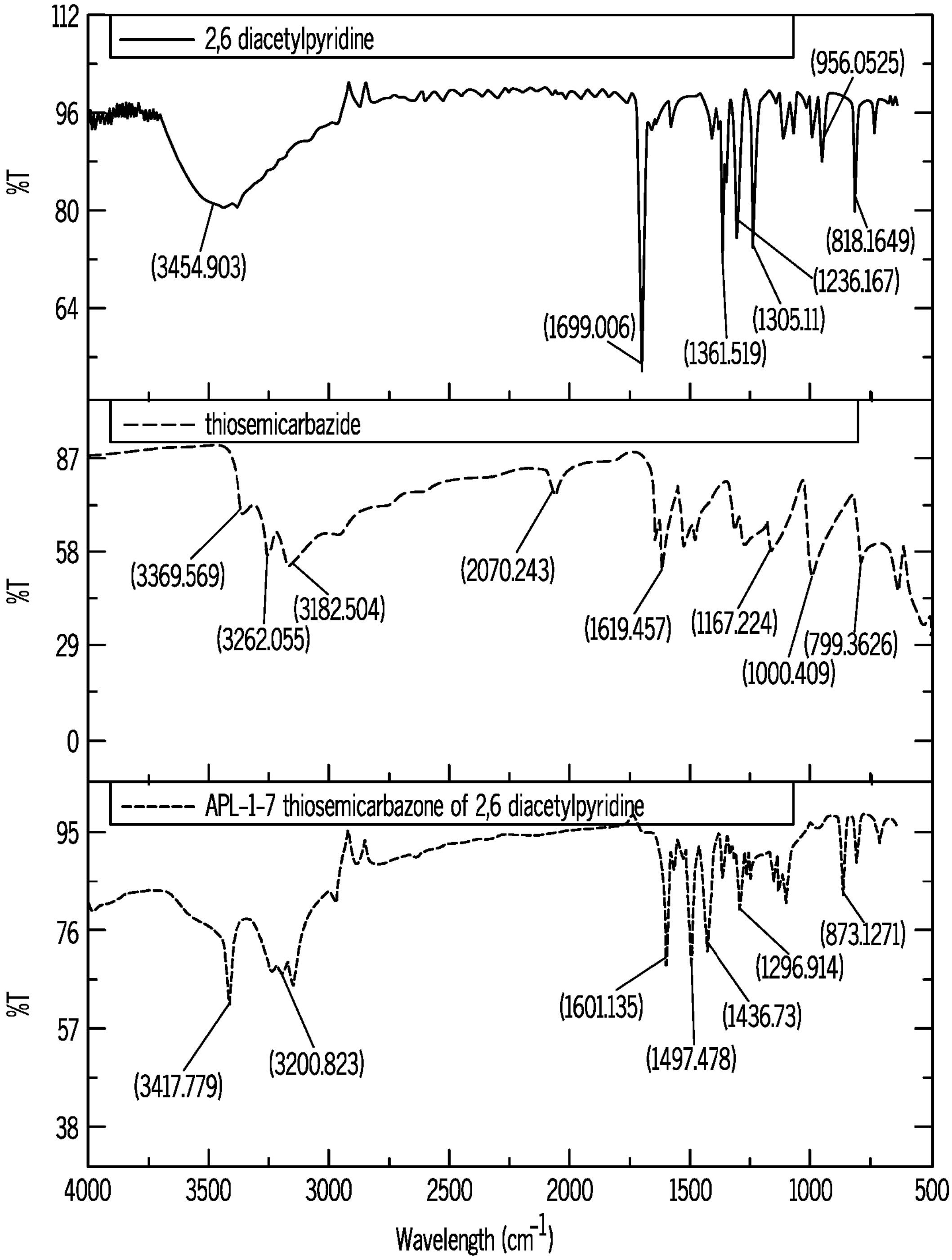
112
96
80
64
%T
2,6 diacetylpyridine
(956.0525)
(3454.903)
(818.1649)
(1236.167)
(1305.11)
(1699.006)
(1361.519)
thiosemicarbazide
87
58
29
0
%T
(3369.569)
(2070.243)
(3182.504)
(3262.055)
(1619.457)
(1167.224)
(799.3626)
(1000.409)
APL-1-7 thiosemicarbazone of 2,6 diacetylpyridine
95
76
57
38
%T
(873.1271)
(1296.914)
(1601.135)
(1436.73)
(1497.478)
(3200.823)
(3417.779)
4000
3500
3000
2500
2000
1500
1000
500
Wavelength (cm-1)

FIG. 46

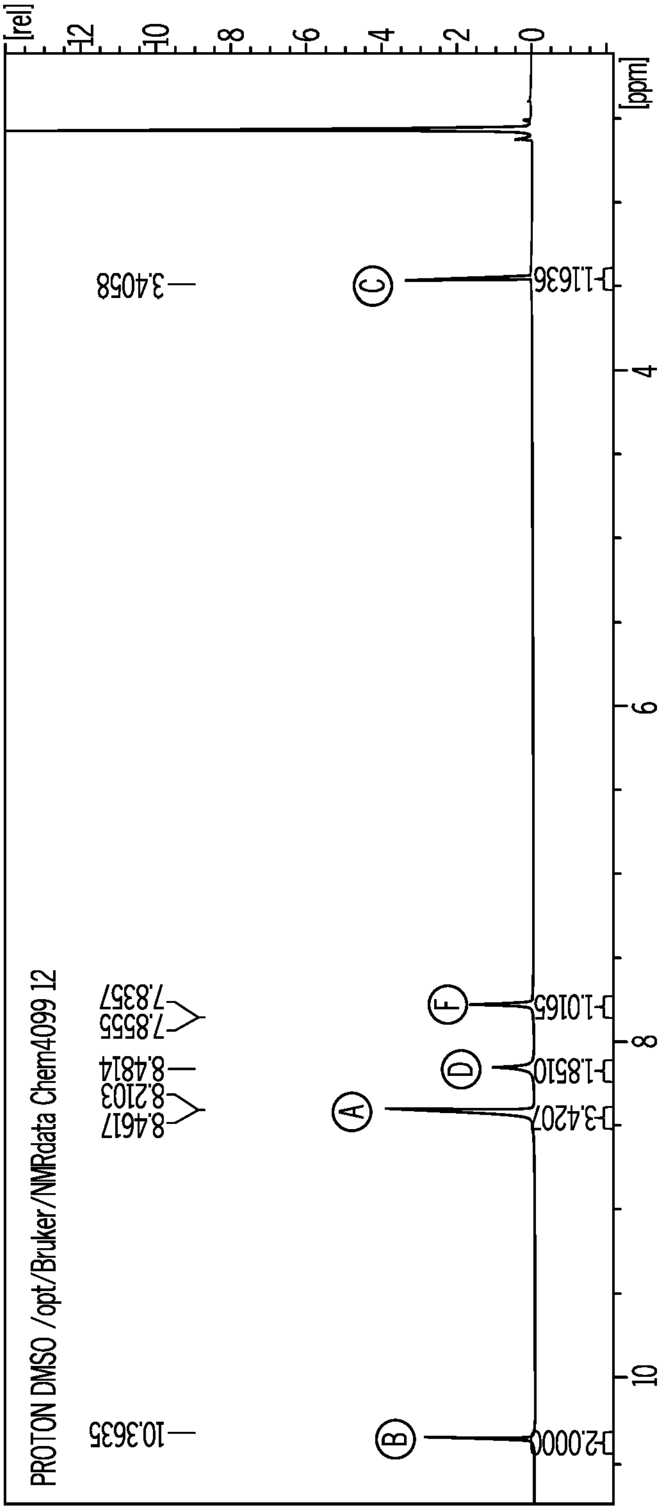
PROTON DMSO /opt/Bruker/NMRdata Chem4099 12
[rel]
[ppm]
10.3635
8.4617
8.2103
8.4814
7.8555
7.8357
3.4058
2.0000
3.4207
1.8510
1.0165
1.1636
A
B
C
D
F

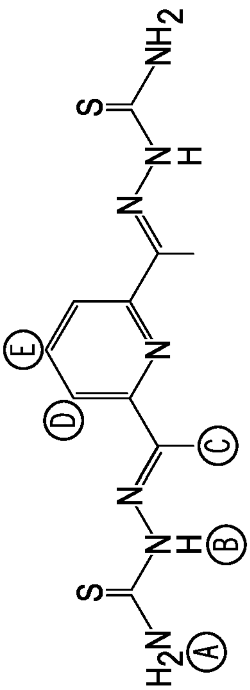

FIG. 47

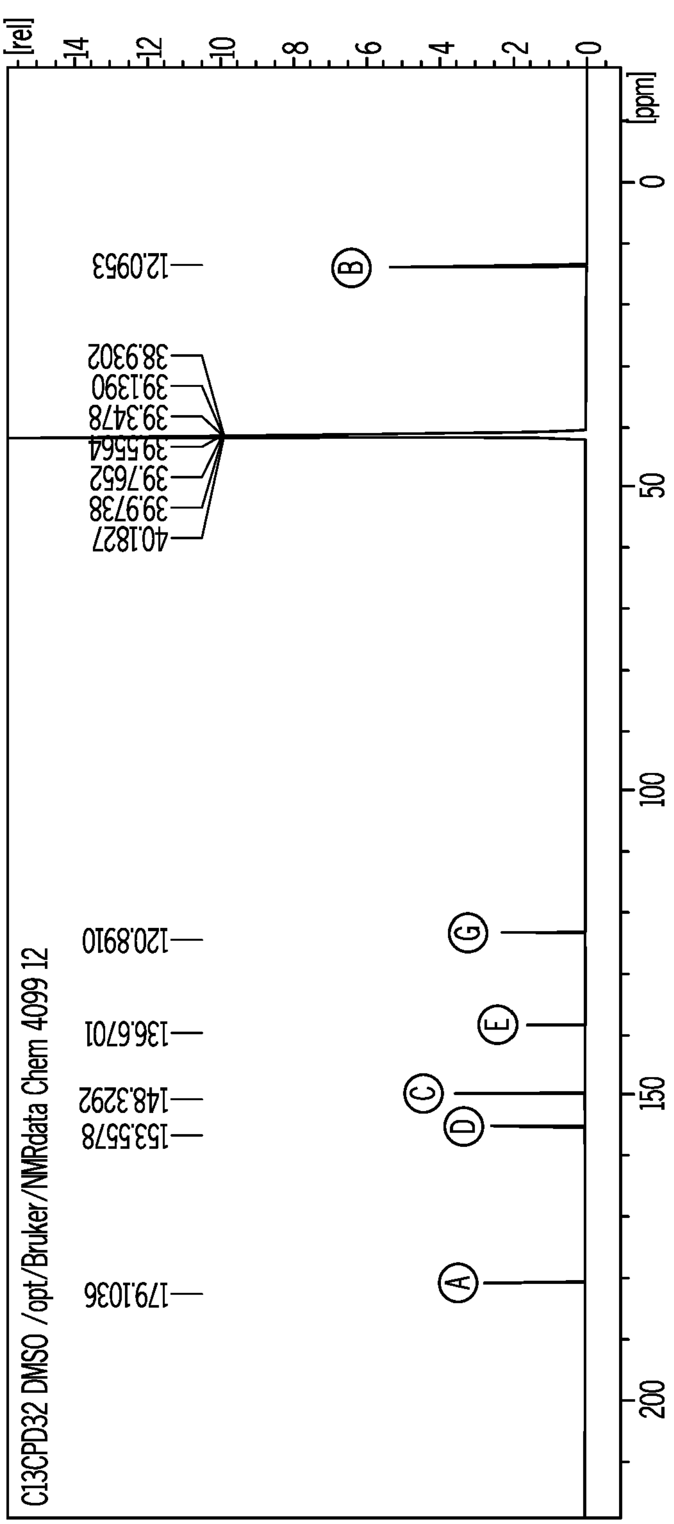
C13CPD32 DMSO /opt/Bruker/NMRdata Chem 4099 12
[rel]
14
12
10
8
6
4
2
0
[ppm]
0
50
100
150
200
12.0953
38.9302
39.1390
39.3478
39.5564
39.7652
39.9738
40.1827
120.8910
136.6701
148.3292
153.5578
179.1036
A
B
C
D
E
G

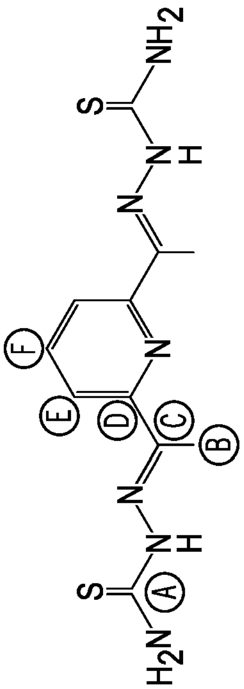

FIG. 48

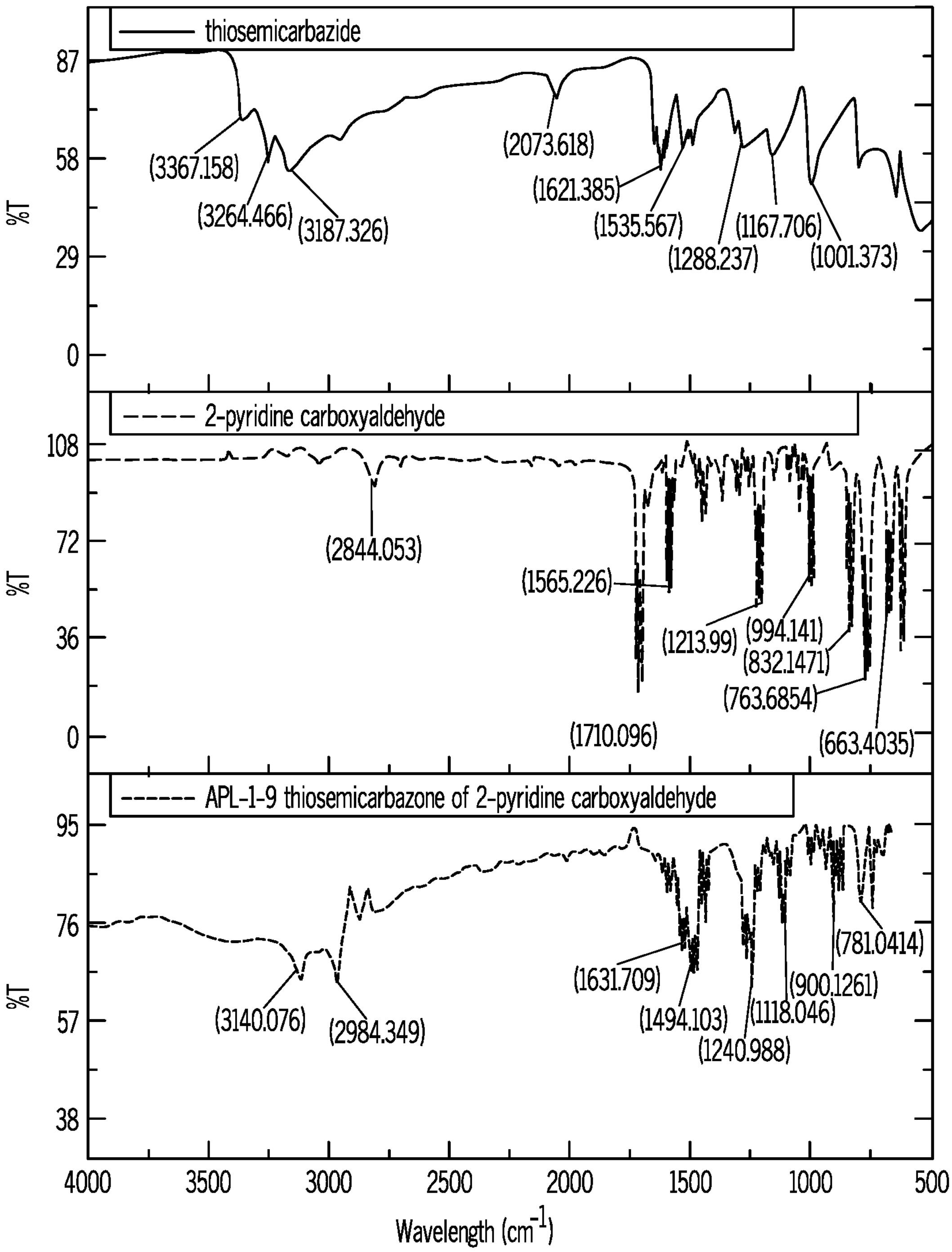
thiosemicarbazide
87
58
29
0
%T
(3367.158)
(3264.466)
(3187.326)
(2073.618)
(1621.385)
(1535.567)
(1288.237)
(1167.706)
(1001.373)
2-pyridine carboxyaldehyde
108
72
36
0
%T
(2844.053)
(1565.226)
(1213.99)
(994.141)
(832.1471)
(763.6854)
(1710.096)
(663.4035)
APL-1-9 thiosemicarbazone of 2-pyridine carboxyaldehyde
95
76
57
38
%T
(3140.076)
(2984.349)
(1631.709)
(1494.103)
(1240.988)
(1118.046)
(900.1261)
(781.0414)
4000
3500
3000
2500
2000
1500
1000
500
Wavelength (cm-1)

FIG. 49

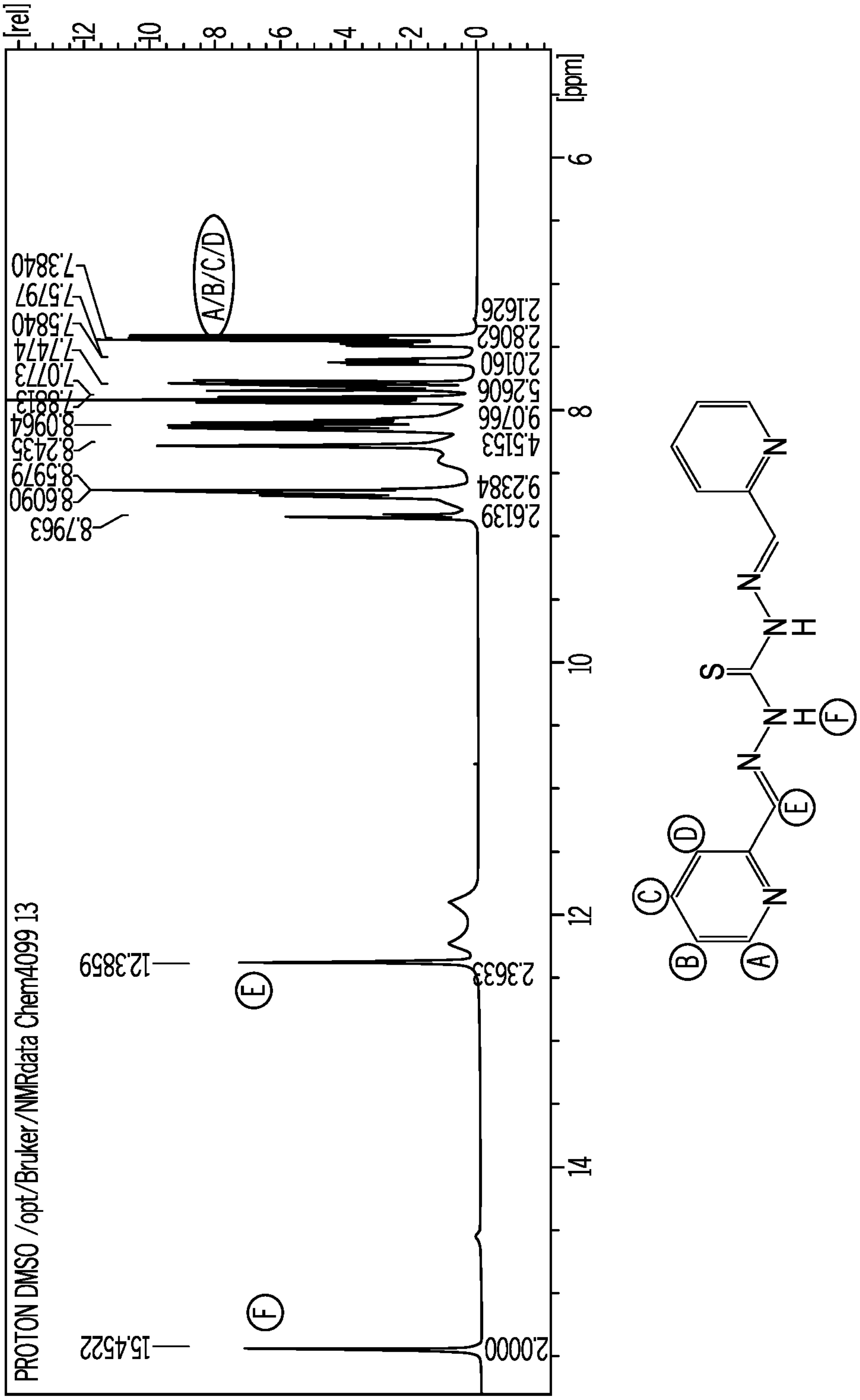
PROTON DMSO /opt/Bruker/NMRdata Chem4099 13
[rel]
12
10
8
6
4
2
0
[ppm]
6
8
10
12
14
A/B/C/D
E
F
7.3840
7.5797
7.5840
7.7474
7.0773
7.8813
8.0964
8.2435
8.5979
8.6090
8.7963
12.3859
15.4522
2.1626
2.8062
2.0160
5.2606
9.0766
4.5153
9.2384
2.6139
2.3633
2.0000

FIG. 50

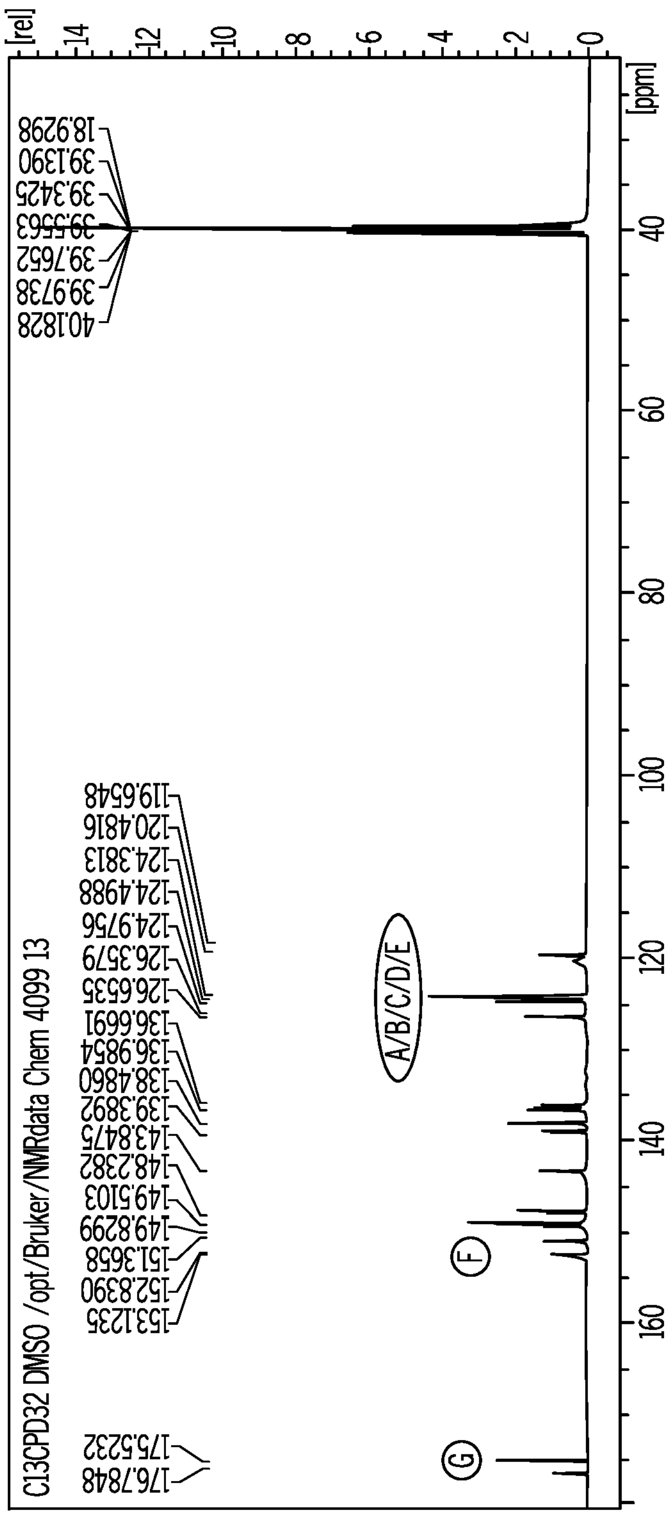
C13CPD32 DMSO /opt/Bruker/NMRdata Chem 4099 13
[rel]
14
12
10
8
6
4
2
0
[ppm]
40
60
80
100
120
140
160
18.9298
39.1390
39.3425
39.5563
39.7652
39.9738
40.1828
119.6548
120.4816
124.3813
124.4988
124.9756
126.3579
126.6535
136.6691
136.9854
138.4860
139.3892
143.8475
148.2382
149.5103
149.8299
151.3658
152.8390
153.1235
175.5232
176.7848
A/B/C/D/E
F
G

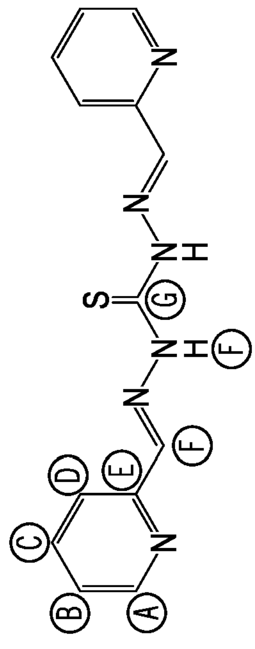

FIG. 51

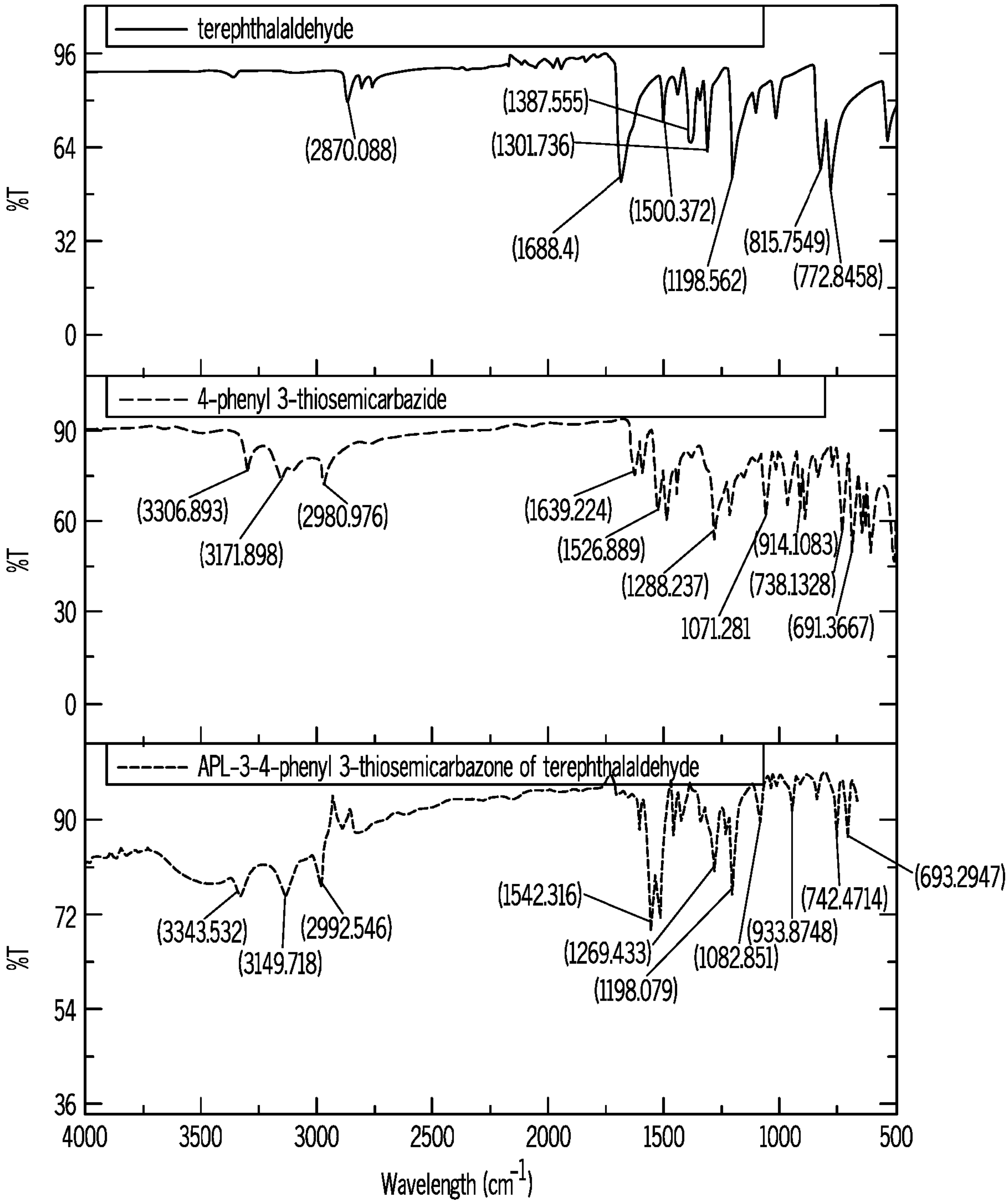
terephthalaldehyde
96
64
32
0
%T
(2870.088)
(1387.555)
(1301.736)
(1688.4)
(1500.372)
(1198.562)
(815.7549)
(772.8458)
4-phenyl 3-thiosemicarbazide
90
60
30
0
%T
(3306.893)
(3171.898)
(2980.976)
(1639.224)
(1526.889)
(1288.237)
1071.281
(914.1083)
(738.1328)
(691.3667)
APL-3-4-phenyl 3-thiosemicarbazone of terephthalaldehyde
90
72
54
36
%T
(3343.532)
(3149.718)
(2992.546)
(1542.316)
(1269.433)
(1198.079)
(1082.851)
(933.8748)
(742.4714)
(693.2947)
4000
3500
3000
2500
2000
1500
1000
500
Wavelength (cm-1)

FIG. 52

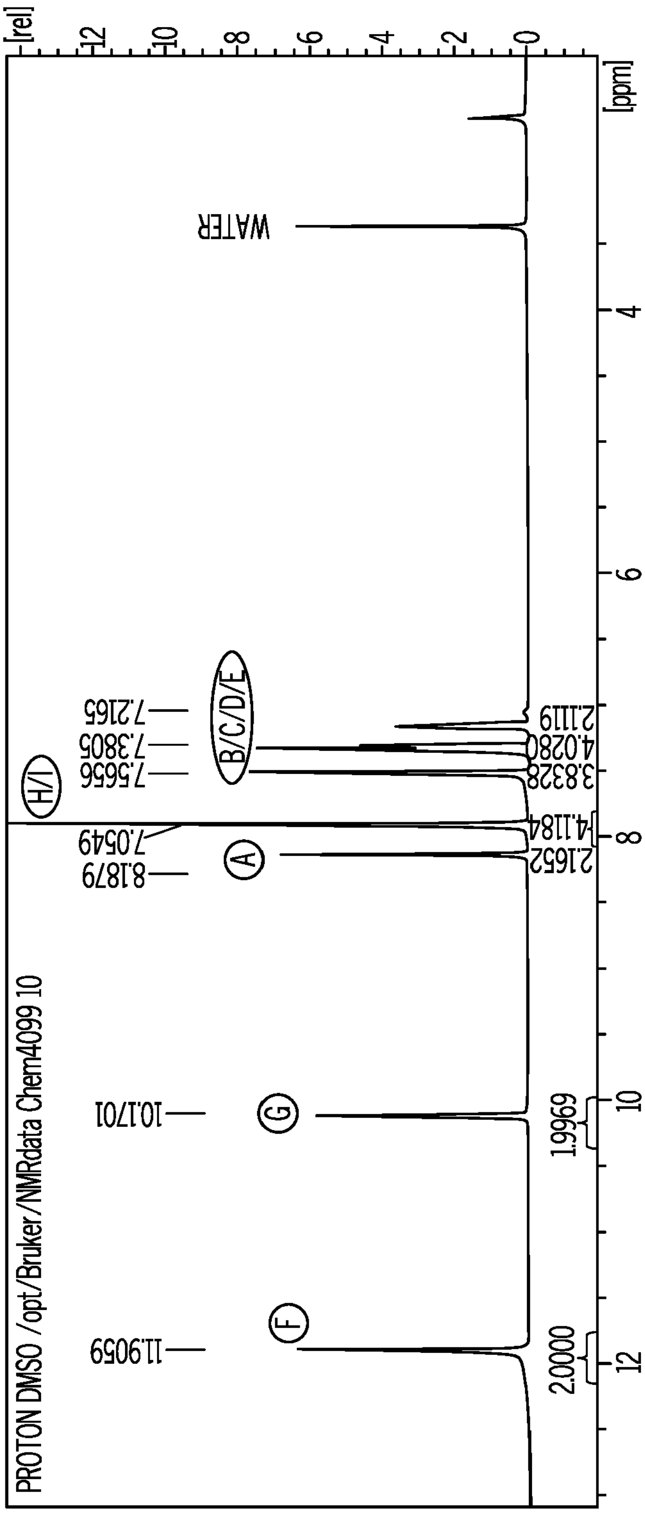
PROTON DMSO /opt/Bruker/NMRdata Chem4099 10
[rel]
12
10
8
6
4
2
0
[ppm]
WATER
7.2165
7.3805
7.5656
B/C/D/E
H/I
7.0549
A
8.1879
G
10.1701
F
11.9059
2.1119
4.0280
3.8328
4.1184
2.1652
1.9969
2.0000
4
6
8
10
12

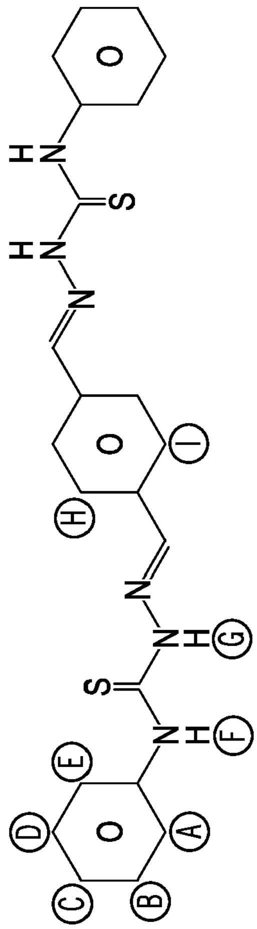

FIG. 53

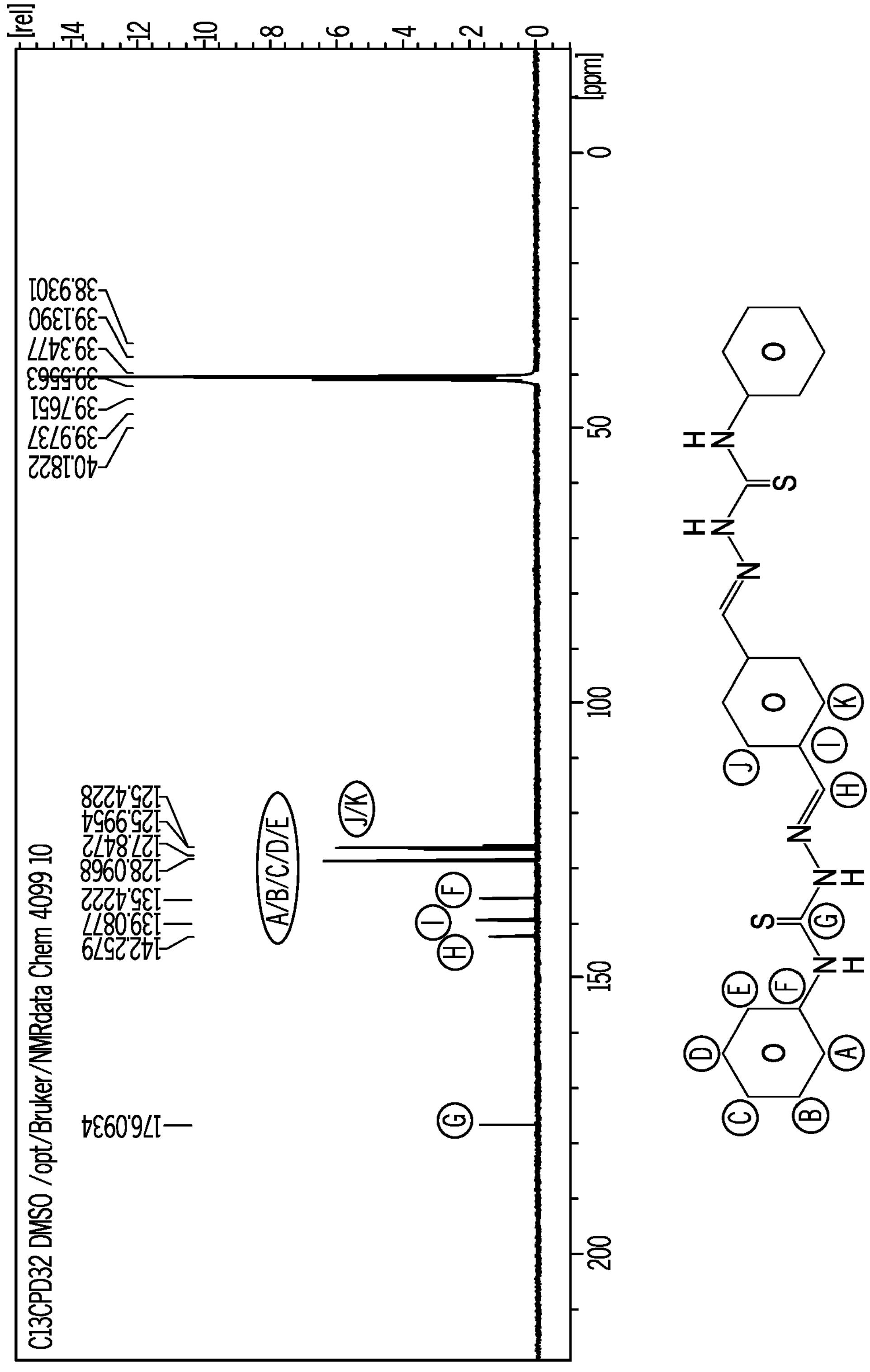
C13CPD32 DMSO /opt/Bruker/NMRdata Chem 4099 10
176.0934
142.2579
139.0877
135.4222
128.0968
127.8472
125.9954
125.4228
40.1822
39.9737
39.7651
39.5563
39.3477
39.1390
38.9301
G
H
I
F
A/B/C/D/E
J/K
[rel]
[ppm]
200
150
100
50
0

FIG. 54

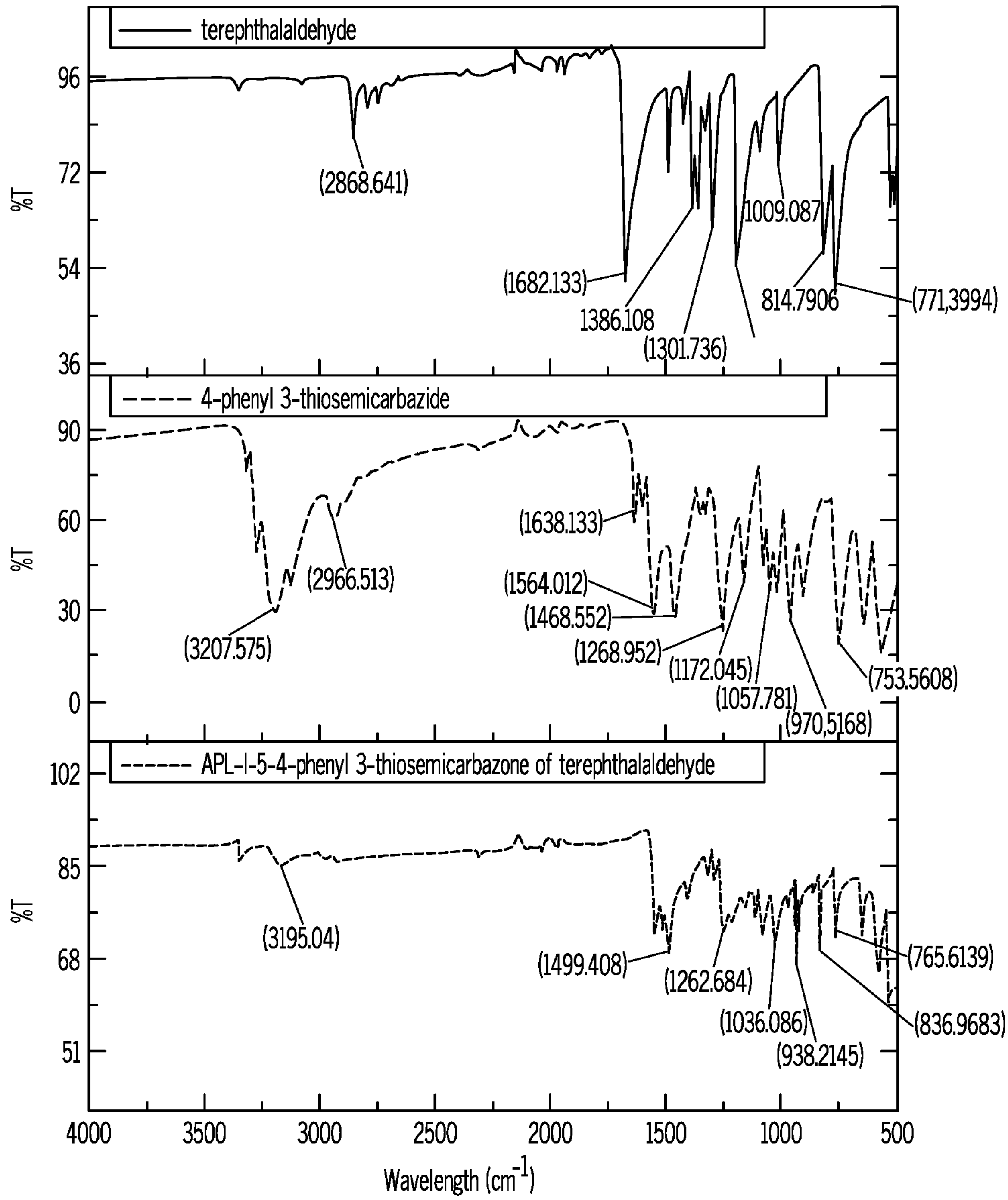
terephthalaldehyde
96
72
54
36
%T
(2868.641)
(1682.133)
1386.108
(1301.736)
1009.087
814.7906
(771,3994)
4-phenyl 3-thiosemicarbazide
90
60
30
0
%T
(3207.575)
(2966.513)
(1638.133)
(1564.012)
(1468.552)
(1268.952)
(1172.045)
(1057.781)
(970,5168)
(753.5608)
APL-I-5-4-phenyl 3-thiosemicarbazone of terephthalaldehyde
102
85
68
51
%T
(3195.04)
(1499.408)
(1262.684)
(1036.086)
(938.2145)
(836.9683)
(765.6139)
4000
3500
3000
2500
2000
1500
1000
500
Wavelength (cm-1)

FIG. 55

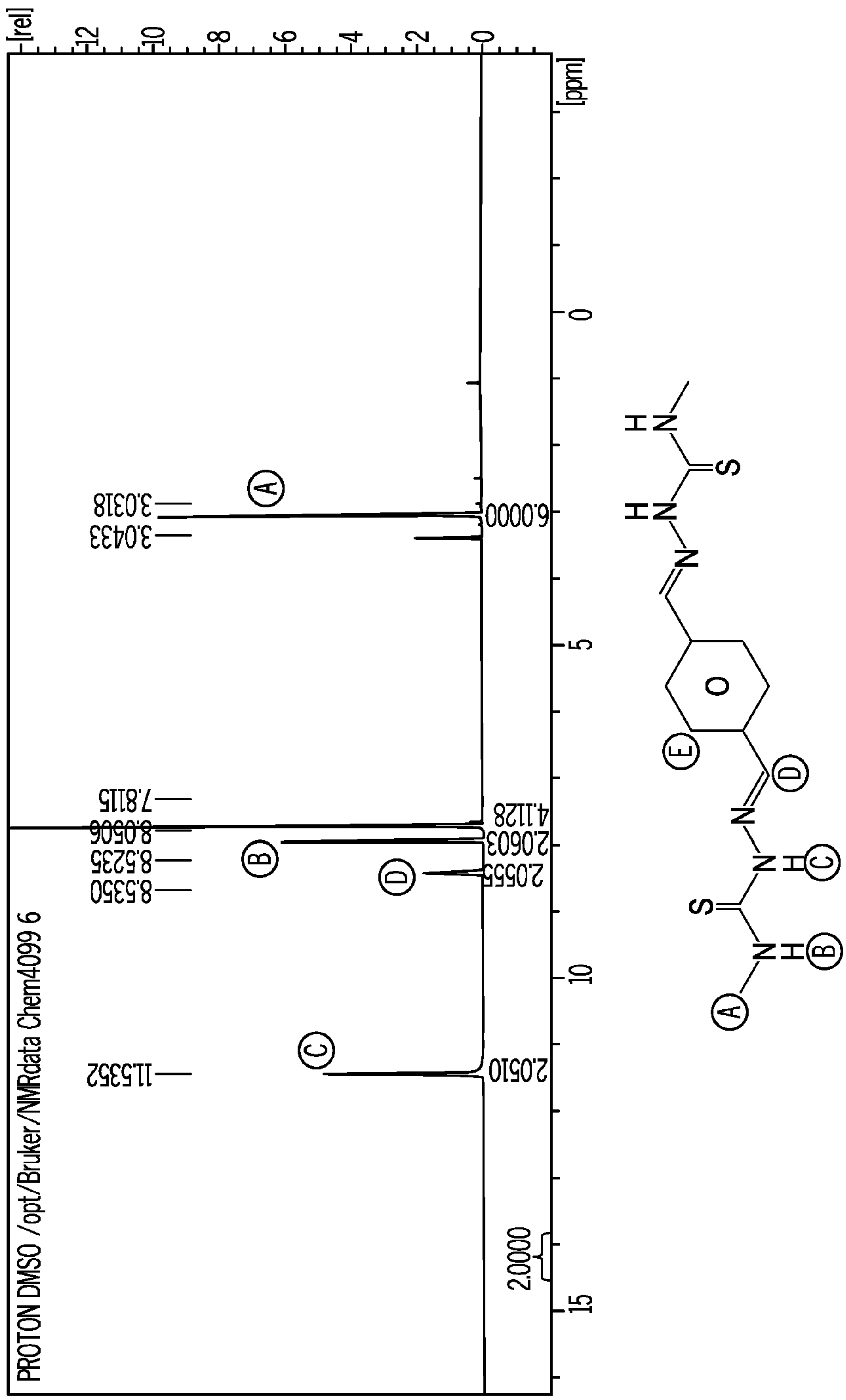
PROTON DMSO /opt/Bruker/NMRdata Chem4099 6
[rel]
12
10
8
6
4
2
0
[ppm]
0
5
10
15
3.0318
3.0433
7.8115
8.0506
8.5235
8.5350
11.5352
6.0000
4.1128
2.0603
2.0555
2.0510
2.0000
A
B
C
D

FIG. 56

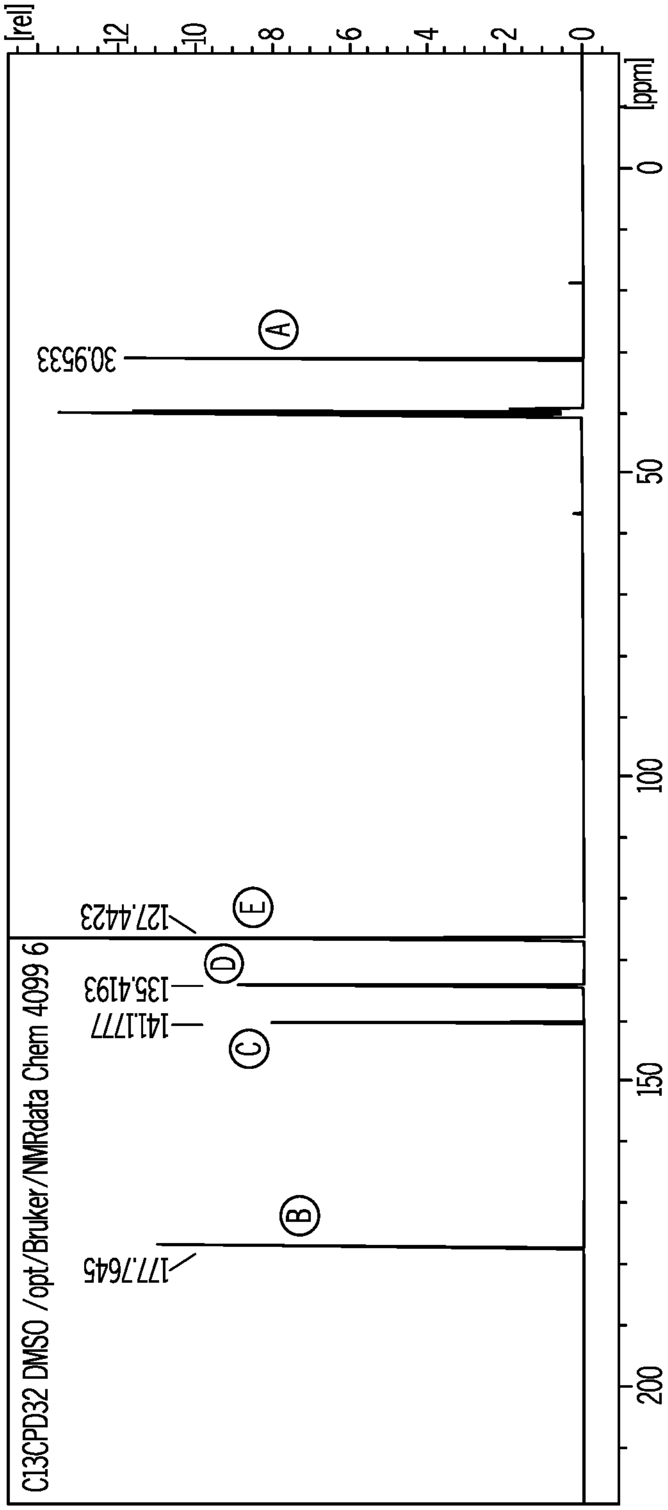
C13CPD32 DMSO /opt/Bruker/NMRdata Chem 4099 6
30.9533
127.4423
135.4193
141.1777
177.7645
[rel]
[ppm]


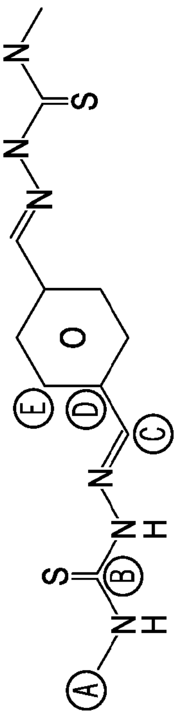

FIG. 57

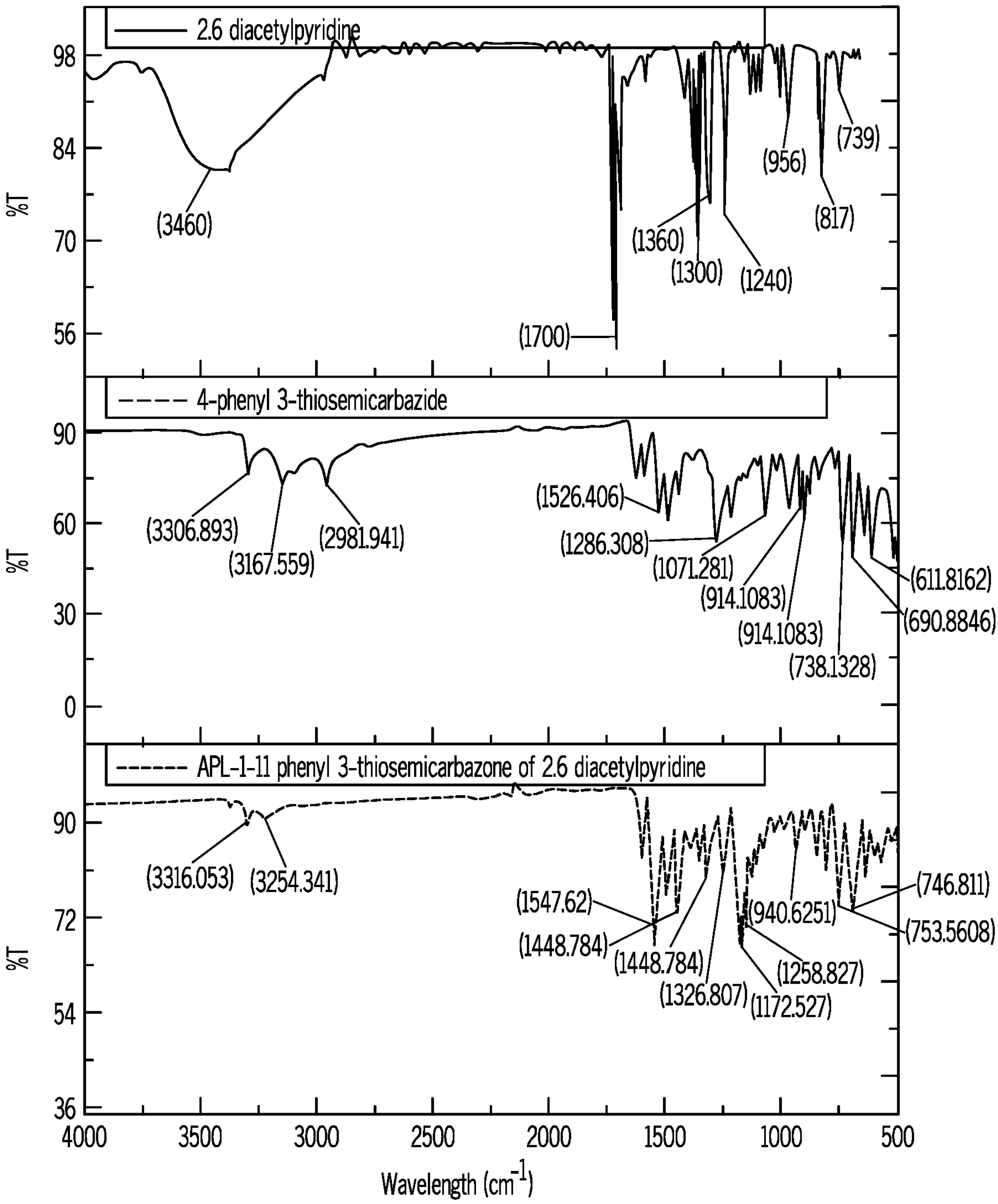

2.6 diacetylpyridine
98
84
70
56
%T
(3460)
(1700)
(1360)
(1300)
(1240)
(956)
(739)
(817)
4-phenyl 3-thiosemicarbazide
90
60
30
0
%T
(3306.893)
(3167.559)
(2981.941)
(1526.406)
(1286.308)
(1071.281)
(914.1083)
(914.1083)
(738.1328)
(611.8162)
(690.8846)
APL-1-11 phenyl 3-thiosemicarbazone of 2.6 diacetylpyridine
90
72
54
36
%T
(3316.053)
(3254.341)
(1547.62)
(1448.784)
(1448.784)
(1326.807)
(1172.527)
(1258.827)
(940.6251)
(746.811)
(753.5608)
4000
3500
3000
2500
2000
1500
1000
500
Wavelength (cm-1)


FIG. 58

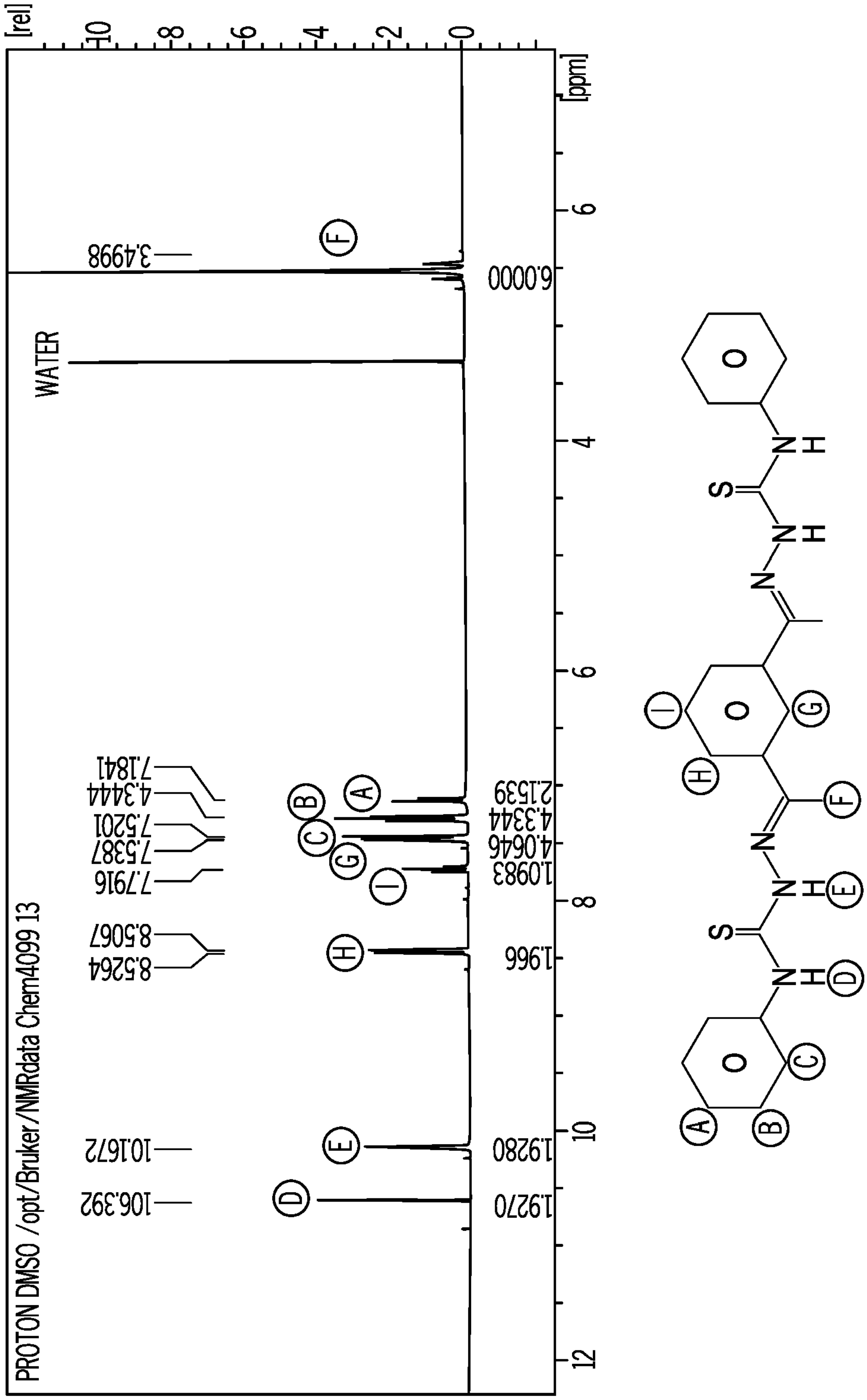


FIG. 59

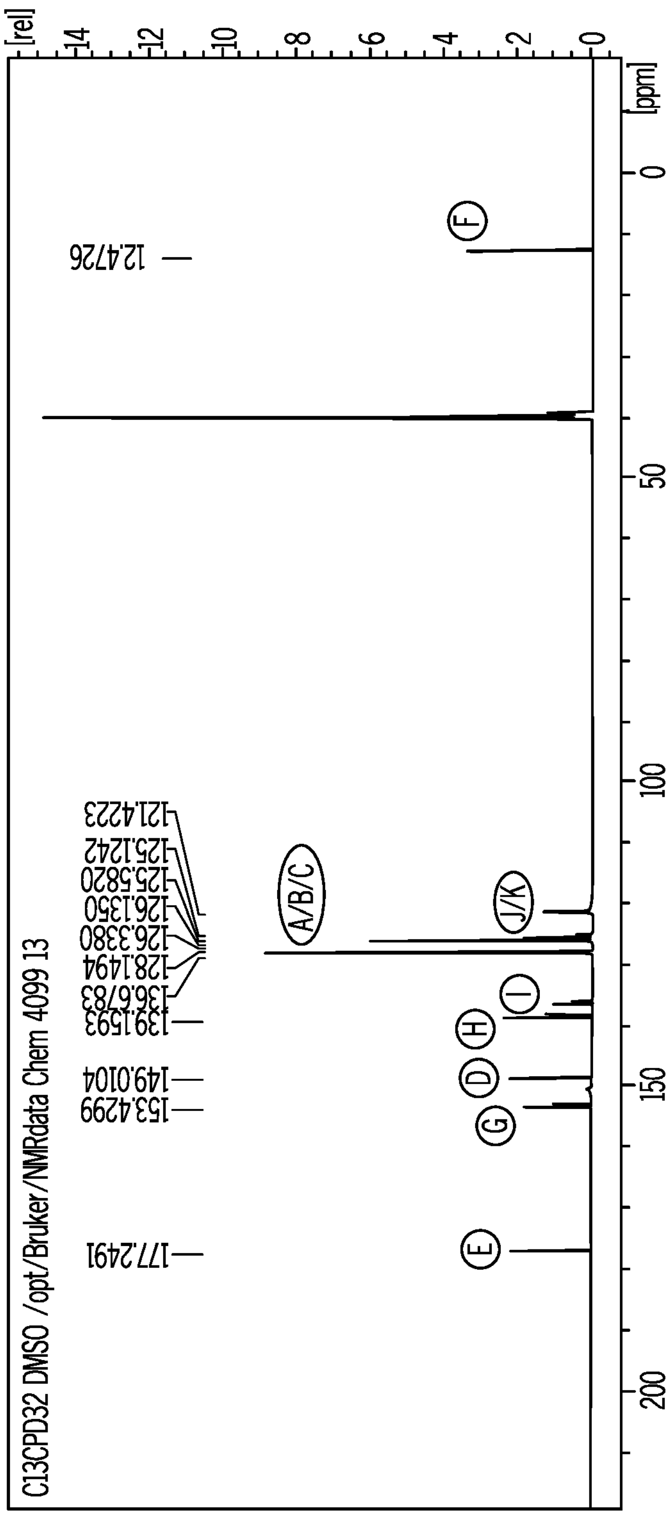
C13CPD32 DMSO /opt/Bruker/NMRdata Chem 4099 13
[rel]
[ppm]
12.4726
121.4223
125.1242
125.5820
126.1350
126.3380
128.1494
136.6783
139.1593
149.0104
153.4299
177.2491
F
A/B/C
J/K
I
H
D
G
E

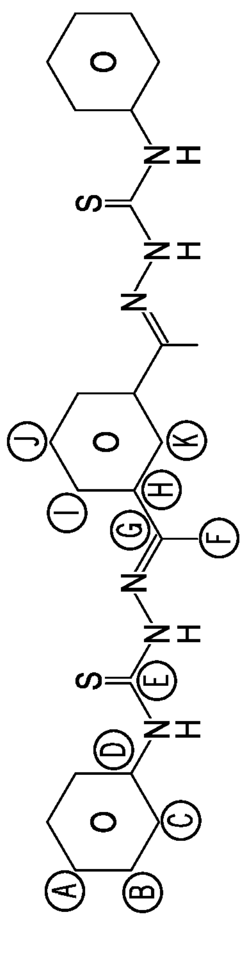

FIG. 60

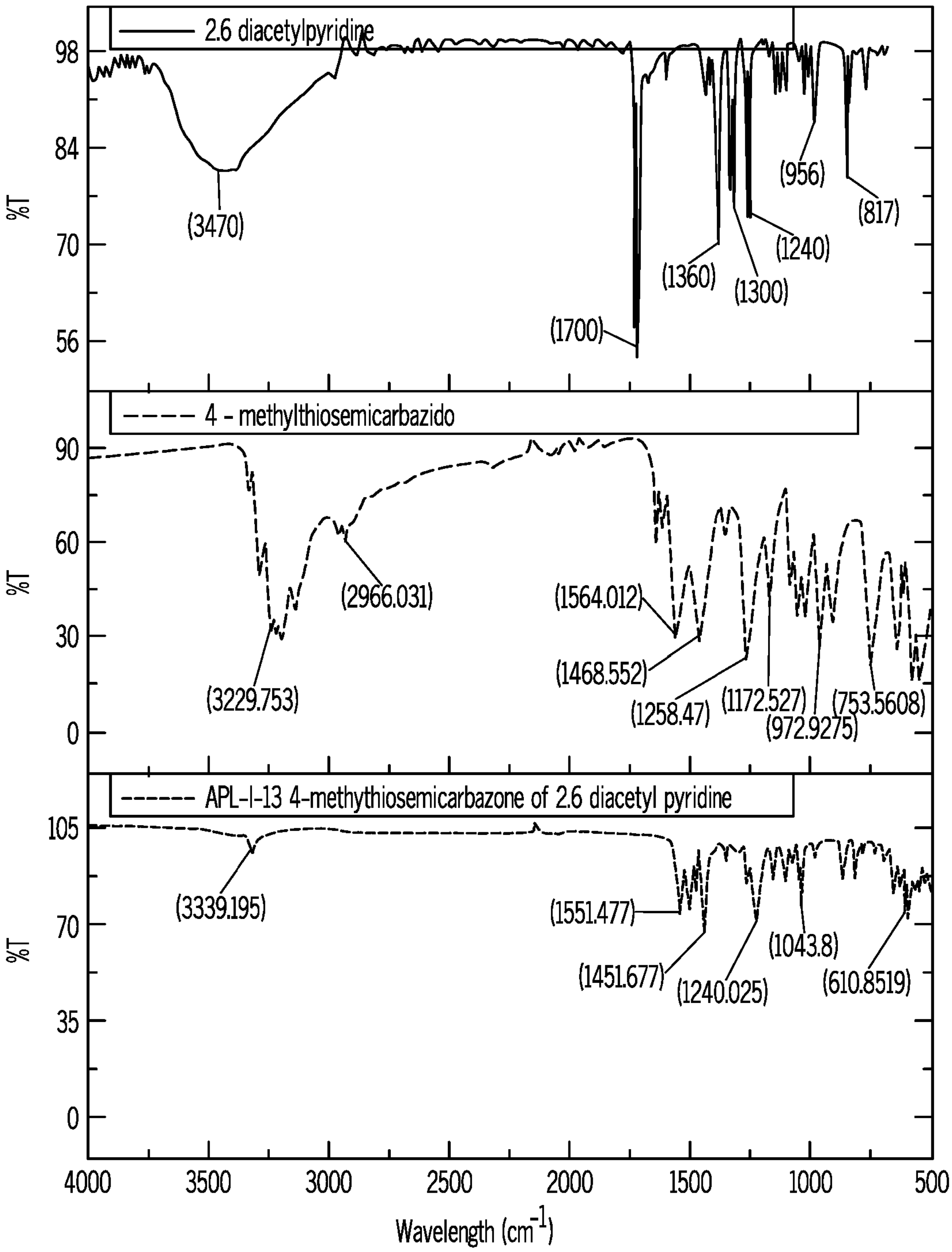
2.6 diacetylpyridine
98
84
70
56
%T
(3470)
(1700)
(1360)
(1300)
(1240)
(956)
(817)
4 - methylthiosemicarbazido
90
60
30
0
%T
(3229.753)
(2966.031)
(1564.012)
(1468.552)
(1258.47)
(1172.527)
(972.9275)
(753.5608)
APL-I-13 4-methythiosemicarbazone of 2.6 diacetyl pyridine
105
70
35
0
%T
(3339.195)
(1551.477)
(1451.677)
(1240.025)
(1043.8)
(610.8519)
4000
3500
3000
2500
2000
1500
1000
500
Wavelength (cm-1)

FIG. 61

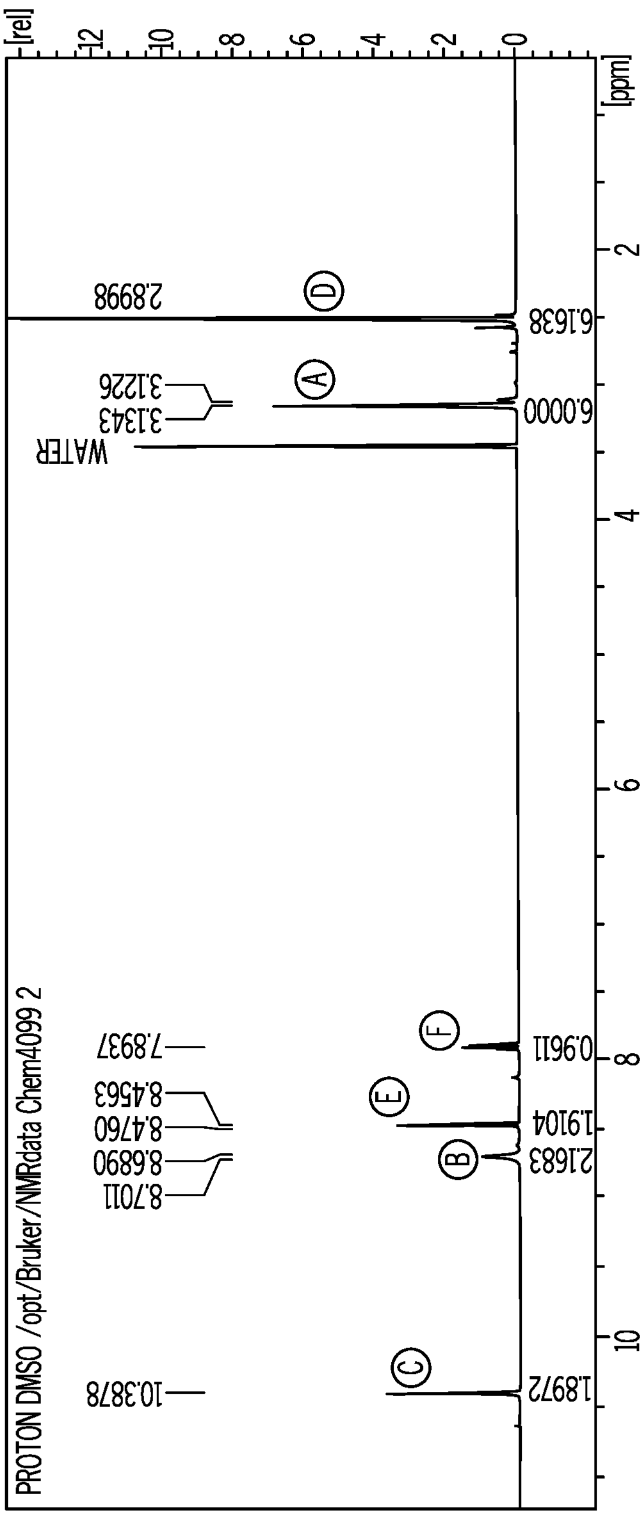
PROTON DMSO /opt/Bruker/NMRdata Chem4099 2
[rel]
12
10
8
6
4
2
0
[ppm]
2
4
6
8
10
2.8998
3.1226
3.1343
WATER
7.8937
8.4563
8.4760
8.6890
8.7011
10.3878
6.1638
6.0000
0.9611
1.9104
2.1683
1.8972
A
B
C
D
E
F

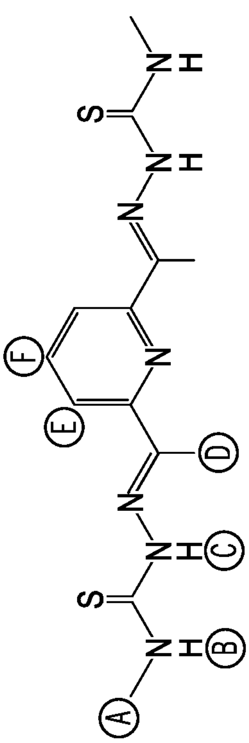

FIG. 62

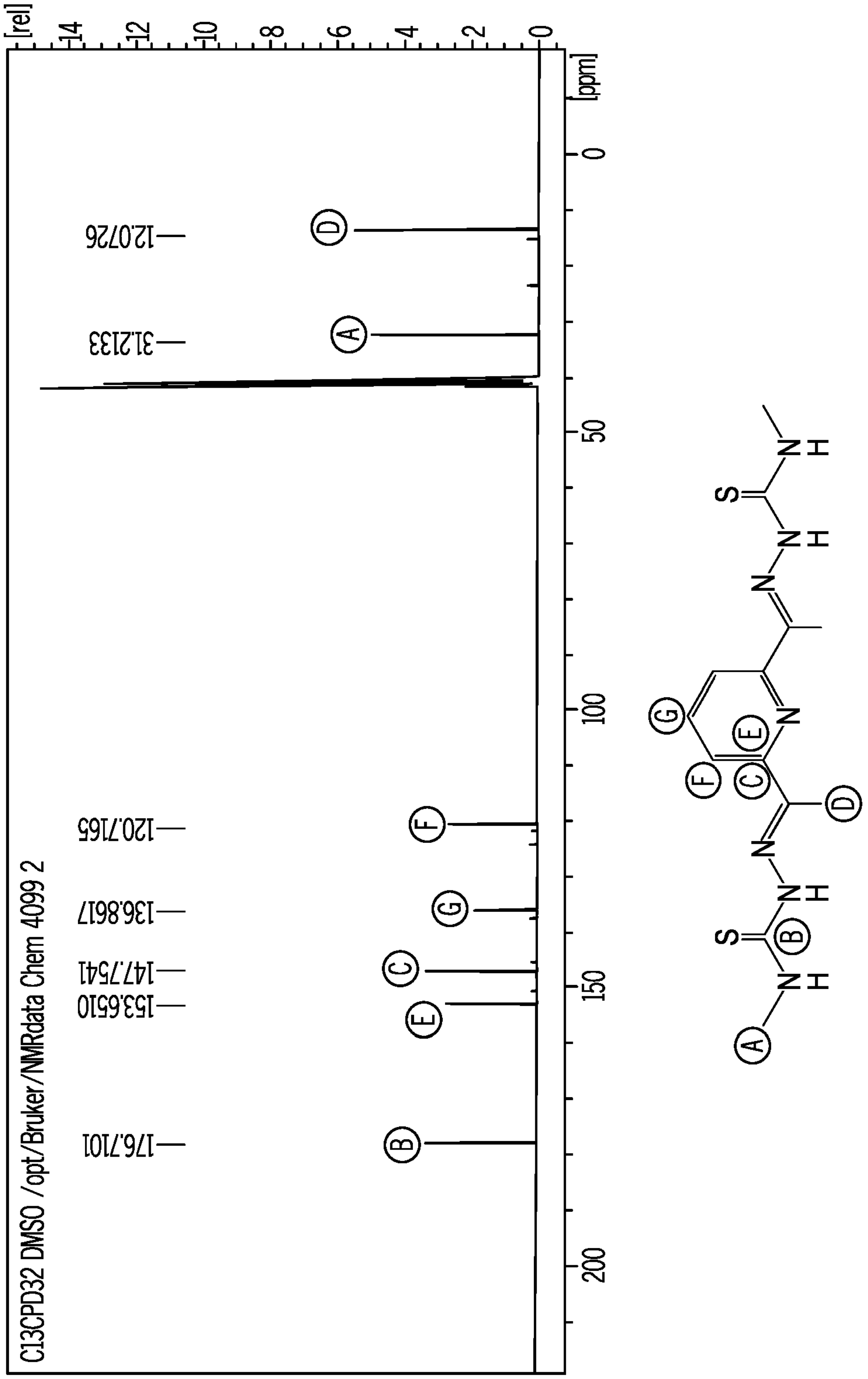
C13CPD32 DMSO /opt/Bruker/NMRdata Chem 4099 2
[rel]
14
12
10
8
6
4
2
0
[ppm]
0
50
100
150
200
12.0726
31.2133
120.7165
136.8617
147.7541
153.6510
176.7101

FIG. 63

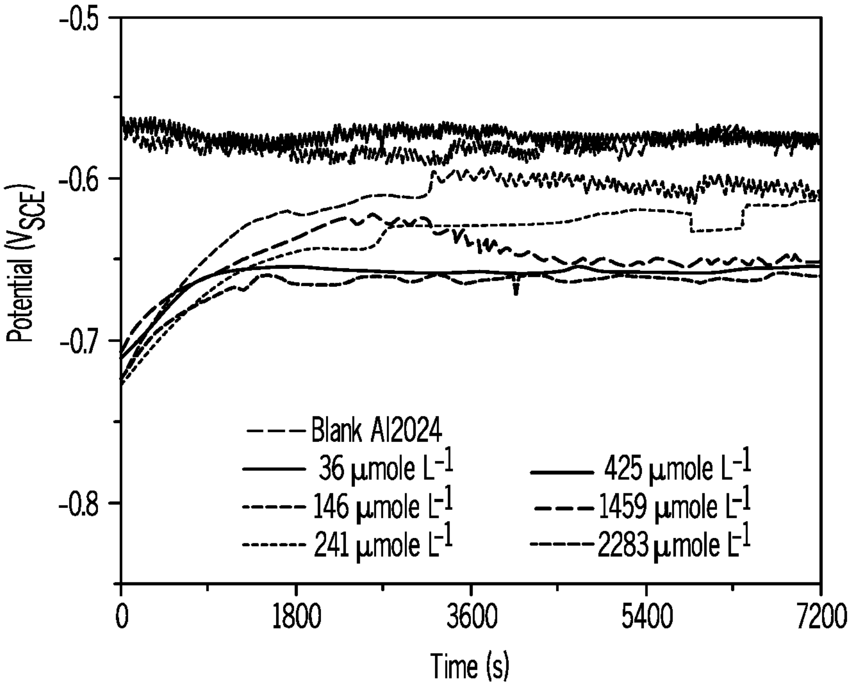
-0.5
-0.6
-0.7
-0.8
Potential ($V_{SCE}$)
0
1800
3600
5400
7200
Time (s)
Blank Al2024
36 μmole $L^{-1}$
146 μmole $L^{-1}$
241 μmole $L^{-1}$
425 μmole $L^{-1}$
1459 μmole $L^{-1}$
2283 μmole $L^{-1}$

FIG. 64

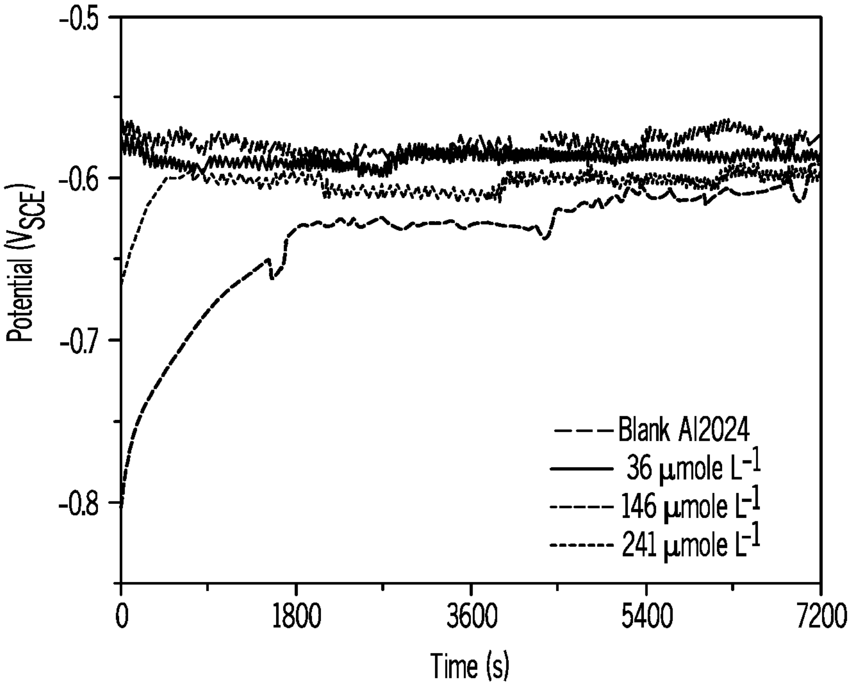
-0.5
-0.6
-0.7
-0.8
Potential ($V_{SCE}$)
0
1800
3600
5400
7200
Time (s)
Blank Al2024
36 μmole $L^{-1}$
146 μmole $L^{-1}$
241 μmole $L^{-1}$

FIG. 65

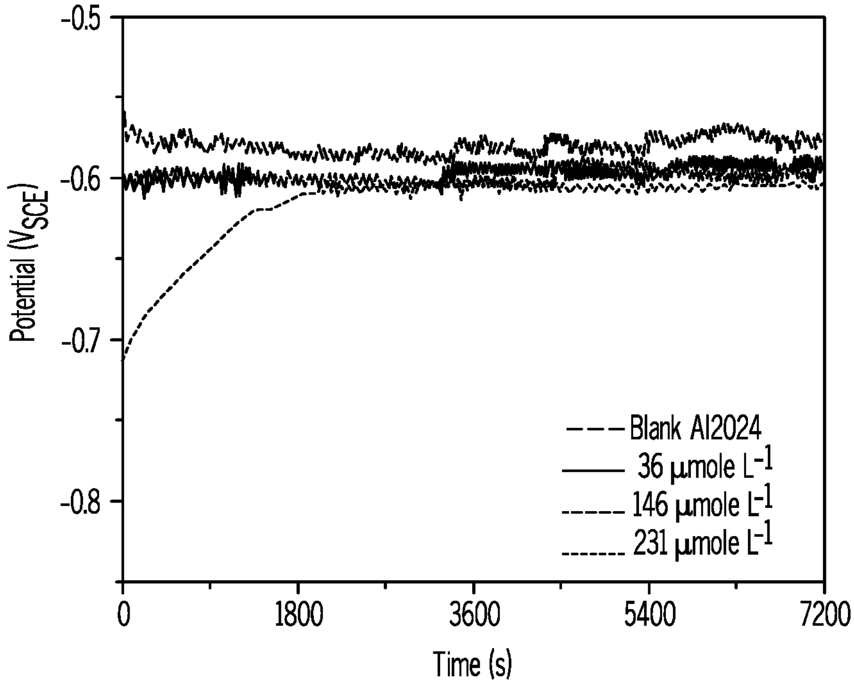
-0.5
-0.6
-0.7
-0.8
Potential (V_SCE)
Blank Al2024
36 μmole L-1
146 μmole L-1
231 μmole L-1
0
1800
3600
5400
7200
Time (s)

FIG. 66

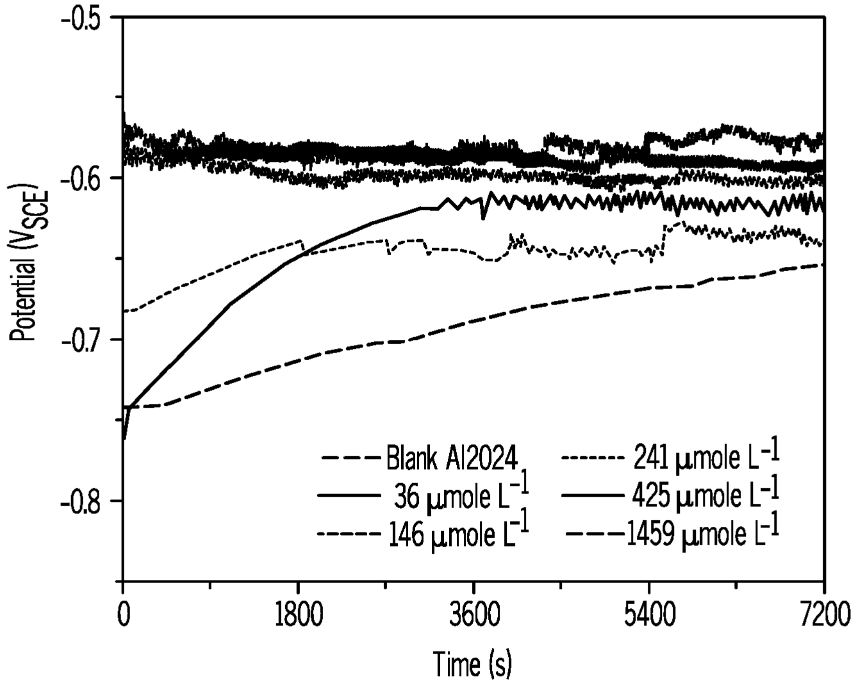
-0.5
-0.6
-0.7
-0.8
Potential (V_SCE)
Blank Al2024
36 μmole L-1
146 μmole L-1
241 μmole L-1
425 μmole L-1
1459 μmole L-1
0
1800
3600
5400
7200
Time (s)

FIG. 67

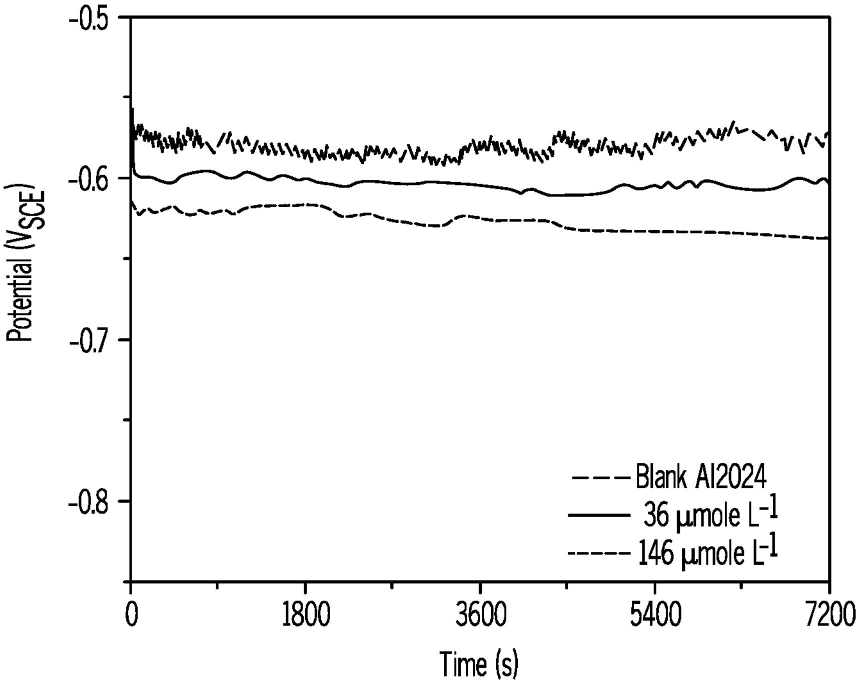
-0.5
-0.6
-0.7
-0.8
Potential (VSCE)
Blank Al2024
36 μmole L-1
146 μmole L-1
0
1800
3600
5400
7200
Time (s)

FIG. 68

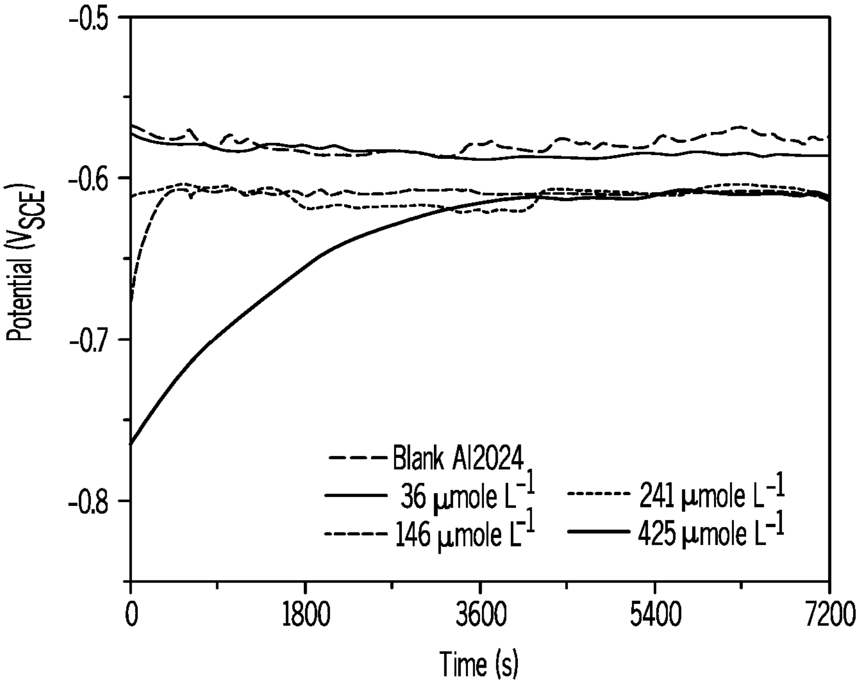
-0.5
-0.6
-0.7
-0.8
Potential (VSCE)
Blank Al2024
36 μmole L-1
146 μmole L-1
241 μmole L-1
425 μmole L-1
0
1800
3600
5400
7200
Time (s)

FIG. 69

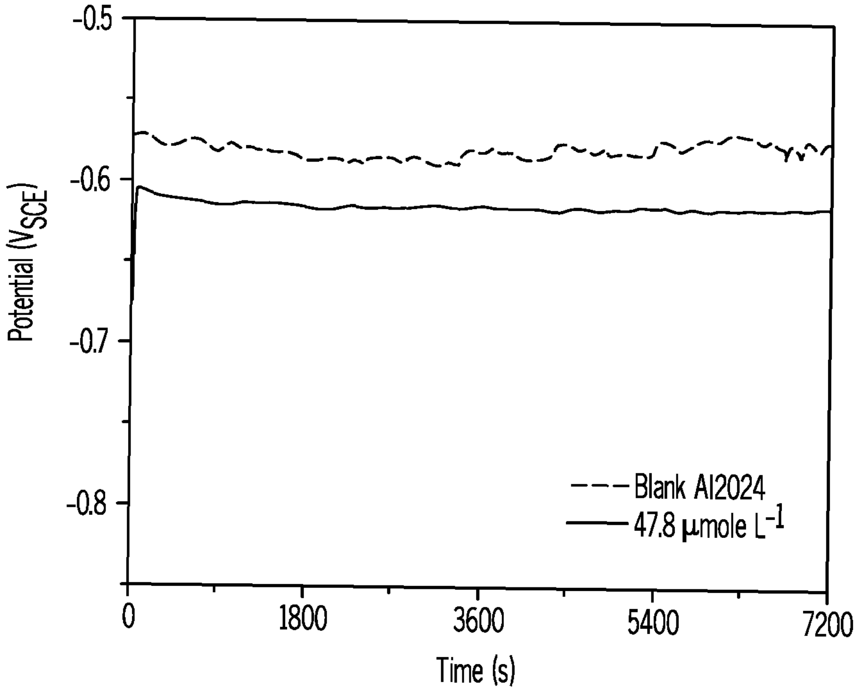
-0.5
-0.6
-0.7
-0.8
Potential ($V_{SCE}$)
Blank Al2024
47.8 μmole $L^{-1}$
0
1800
3600
5400
7200
Time (s)

FIG. 70

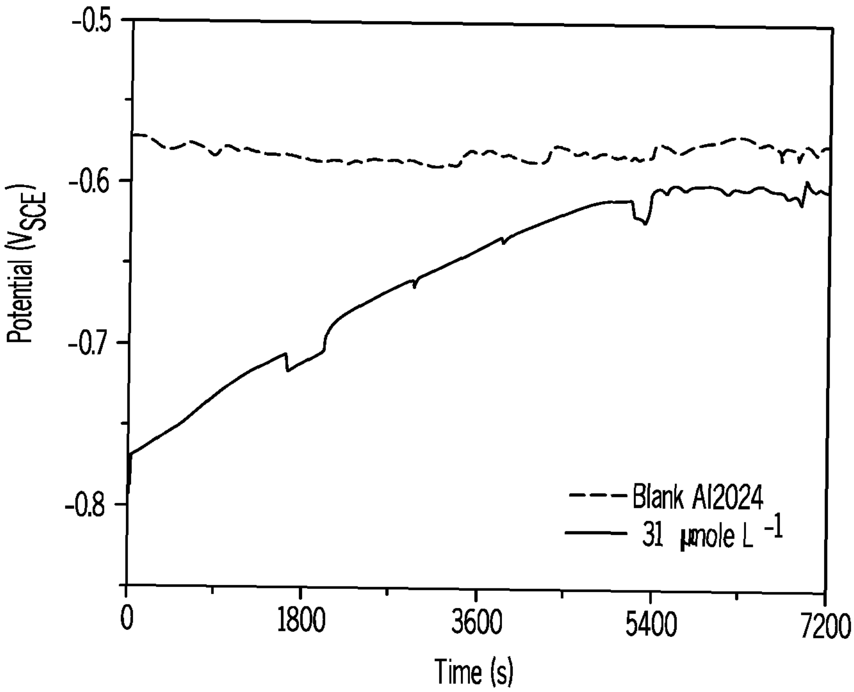
-0.5
-0.6
-0.7
-0.8
Potential ($V_{SCE}$)
Blank Al2024
31 μmole $L^{-1}$
0
1800
3600
5400
7200
Time (s)

FIG. 71

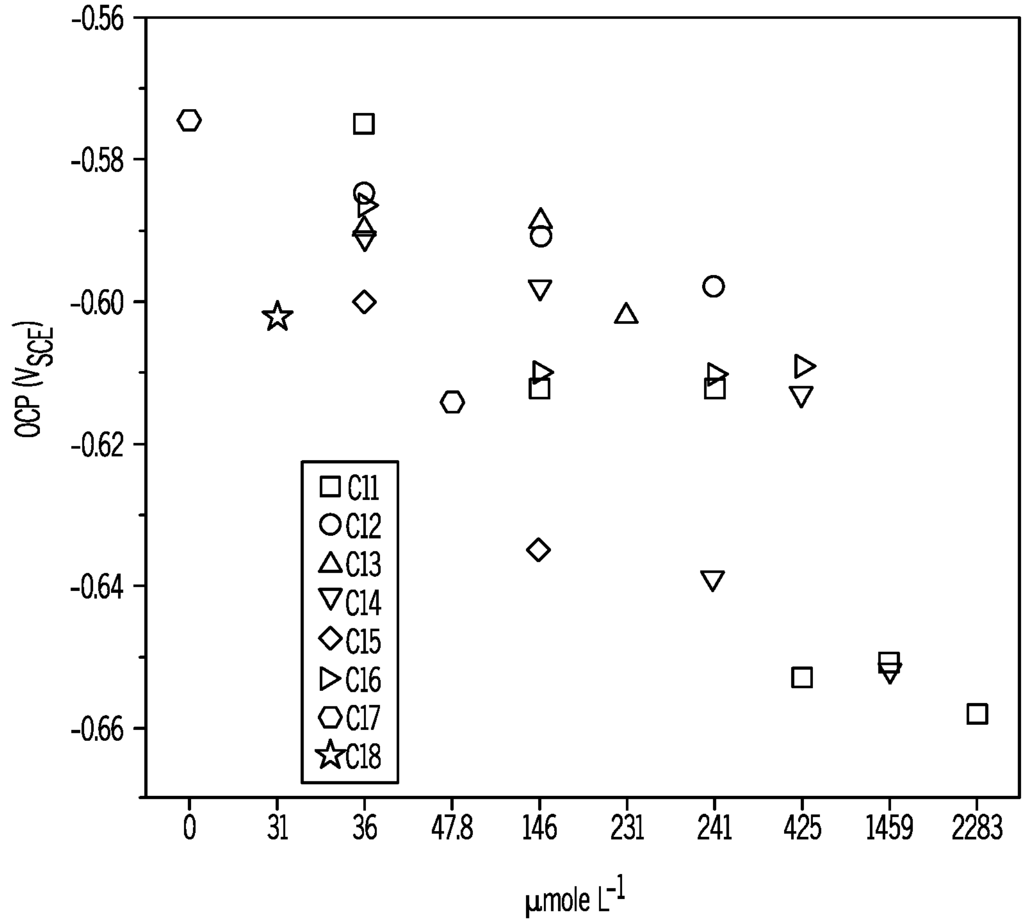
-0.56
-0.58
-0.60
-0.62
-0.64
-0.66
OCP (V_SCE)
C11
C12
C13
C14
C15
C16
C17
C18
0
31
36
47.8
146
231
241
425
1459
2283
μmole L-1

FIG. 72

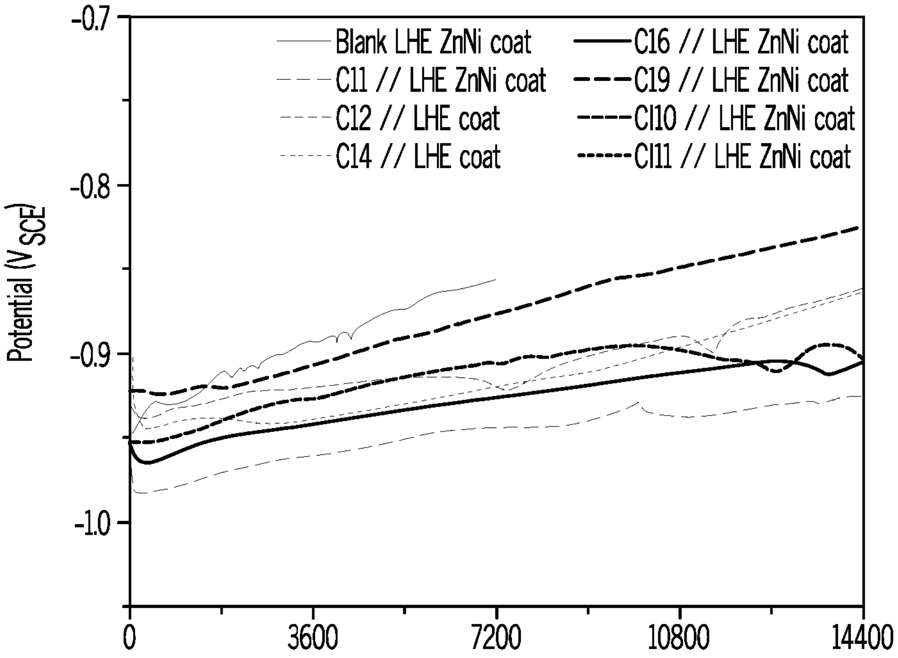

-0.7
-0.8
-0.9
-1.0
Potential (V SCE)
0
3600
7200
10800
14400
Blank LHE ZnNi coat
C11 // LHE ZnNi coat
C12 // LHE coat
C14 // LHE coat
C16 // LHE ZnNi coat
C19 // LHE ZnNi coat
CI10 // LHE ZnNi coat
CI11 // LHE ZnNi coat


FIG. 73

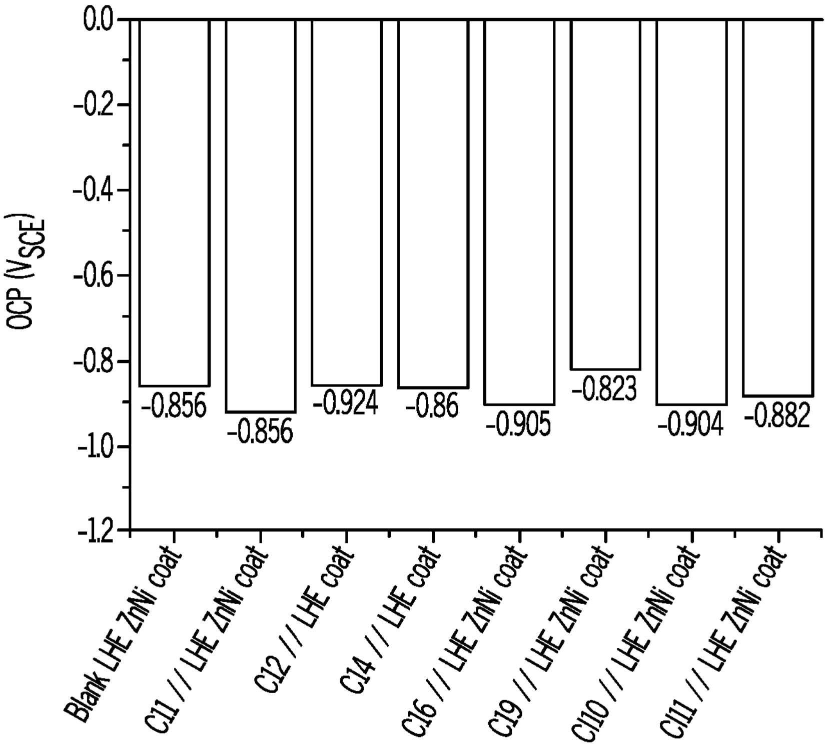

0.0
-0.2
-0.4
-0.6
-0.8
-1.0
-1.2
OCP (V SCE)
-0.856
-0.856
-0.924
-0.86
-0.905
-0.823
-0.904
-0.882
Blank LHE ZnNi coat
C11 // LHE ZnNi coat
C12 // LHE coat
C14 // LHE coat
C16 // LHE ZnNi coat
C19 // LHE ZnNi coat
CI10 // LHE ZnNi coat
CI11 // LHE ZnNi coat


FIG. 74

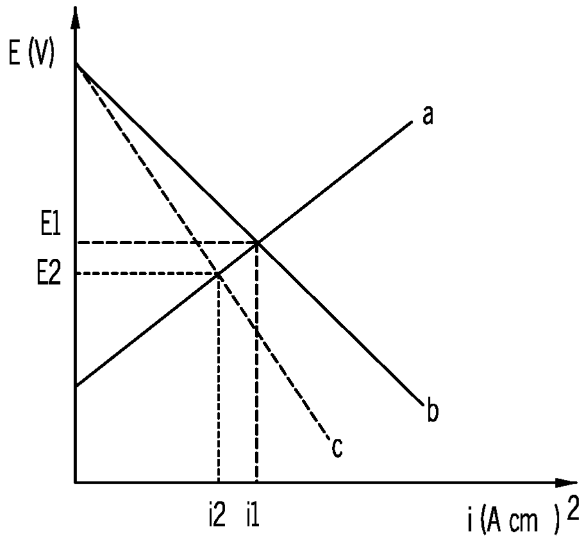


a = anodic line
b = cathodic line in the absence of cathodic inhibitor
c = cathodic line in the presence of cathodic inhibitor
E1 and i1 = corrosion potential and corrosion current density in the absence of cathodic inhibitor
E2 and i2 = corrosion potential and corrosion current density in the presence of cathodic inhibitor

FIG. 75

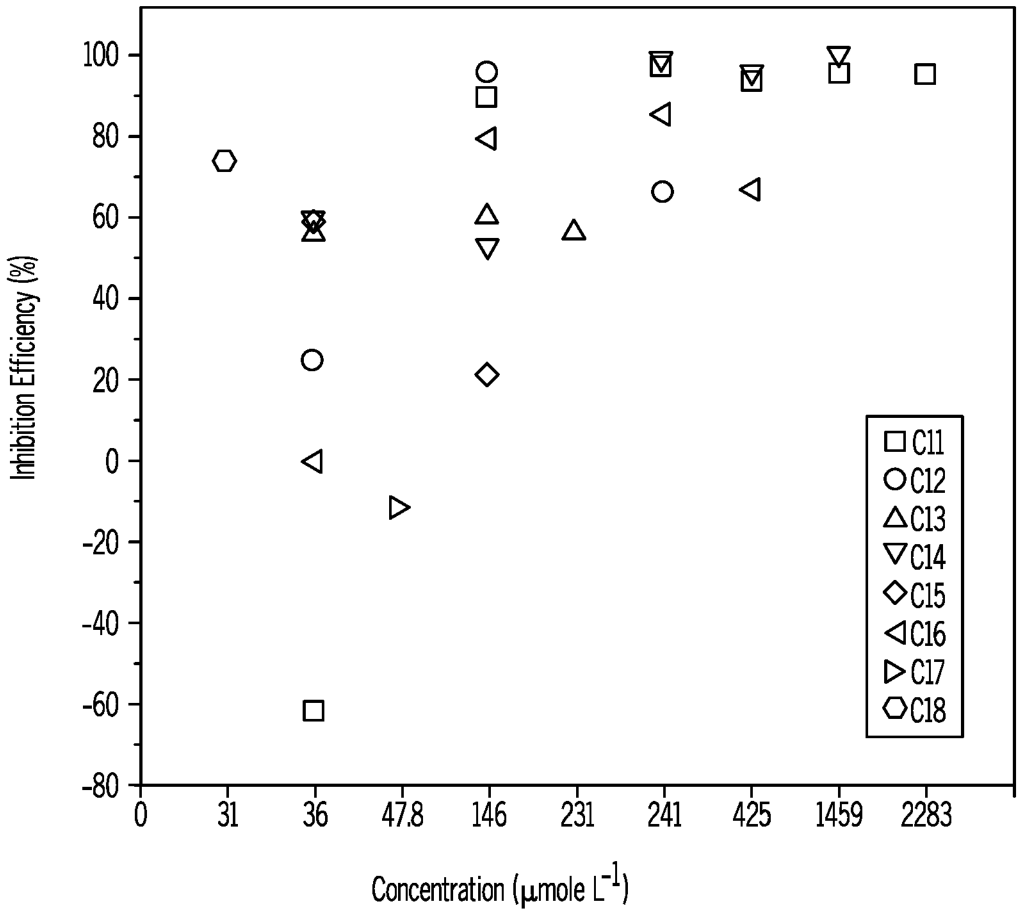
Inhibition Efficiency (%)
100
80
60
40
20
0
-20
-40
-60
-80
0
31
36
47.8
146
231
241
425
1459
2283
Concentration (μmole L-1)
C11
C12
C13
C14
C15
C16
C17
C18

FIG. 76

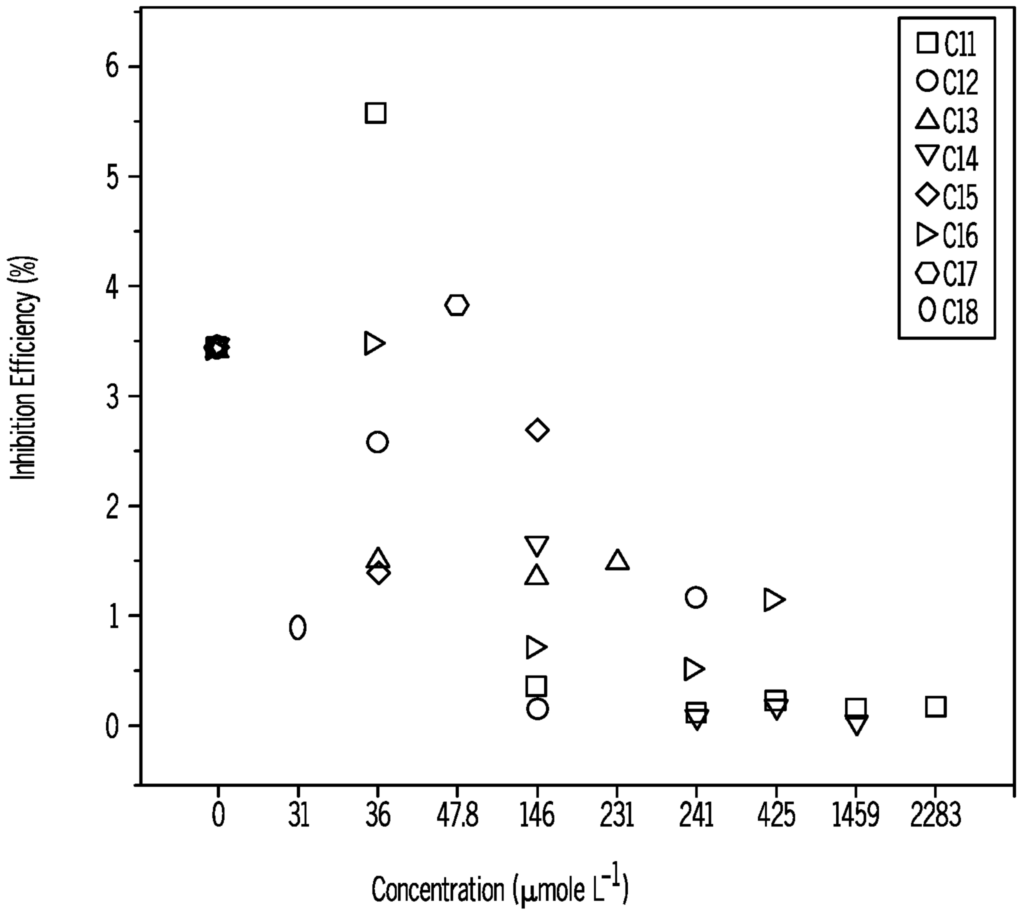
Inhibition Efficiency (%)
6
5
4
3
2
1
0
C11
C12
C13
C14
C15
C16
C17
C18
0
31
36
47.8
146
231
241
425
1459
2283
Concentration (μmole L-1)

FIG. 77

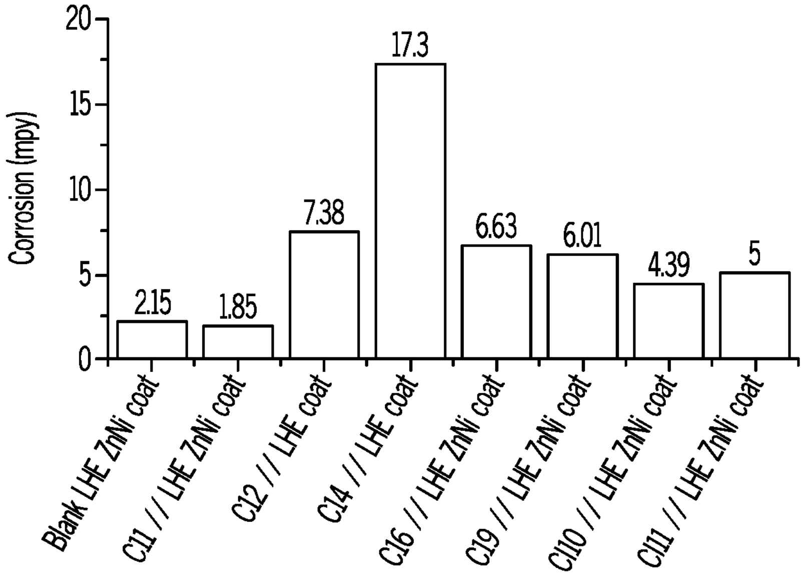
Corrosion (mpy)
20
15
10
5
0
2.15
1.85
7.38
17.3
6.63
6.01
4.39
5
Blank LHE ZnNi coat
C11 // LHE ZnNi coat
C12 // LHE coat
C14 // LHE coat
C16 // LHE ZnNi coat
C19 // LHE ZnNi coat
CI10 // LHE ZnNi coat
CI11 // LHE ZnNi coat

FIG. 78

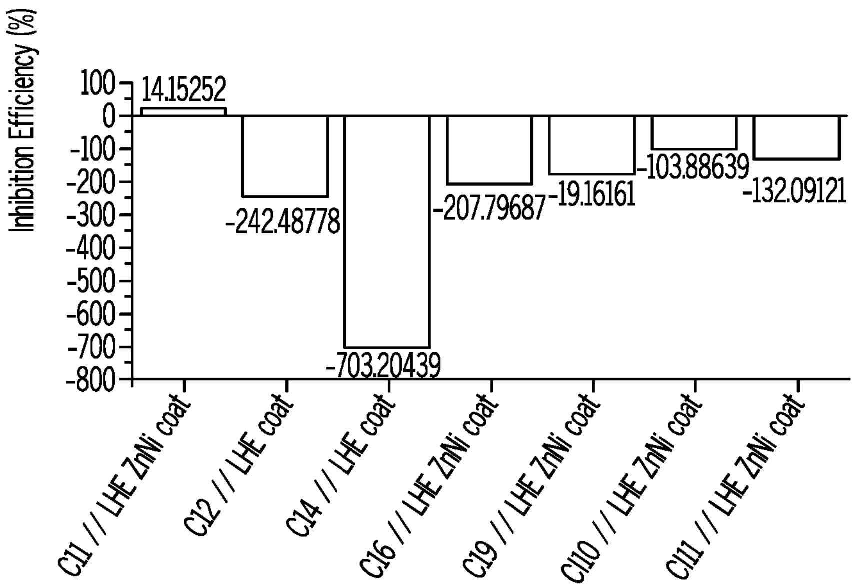
Inhibition Efficiency (%)
100
0
-100
-200
-300
-400
-500
-600
-700
-800
14.15252
-242.48778
-703.20439
-207.79687
-19.16161
-103.88639
-132.09121
C11 // LHE ZnNi coat
C12 // LHE coat
C14 // LHE coat
C16 // LHE ZnNi coat
C19 // LHE ZnNi coat
CI10 // LHE ZnNi coat
CI11 // LHE ZnNi coat

FIG. 79

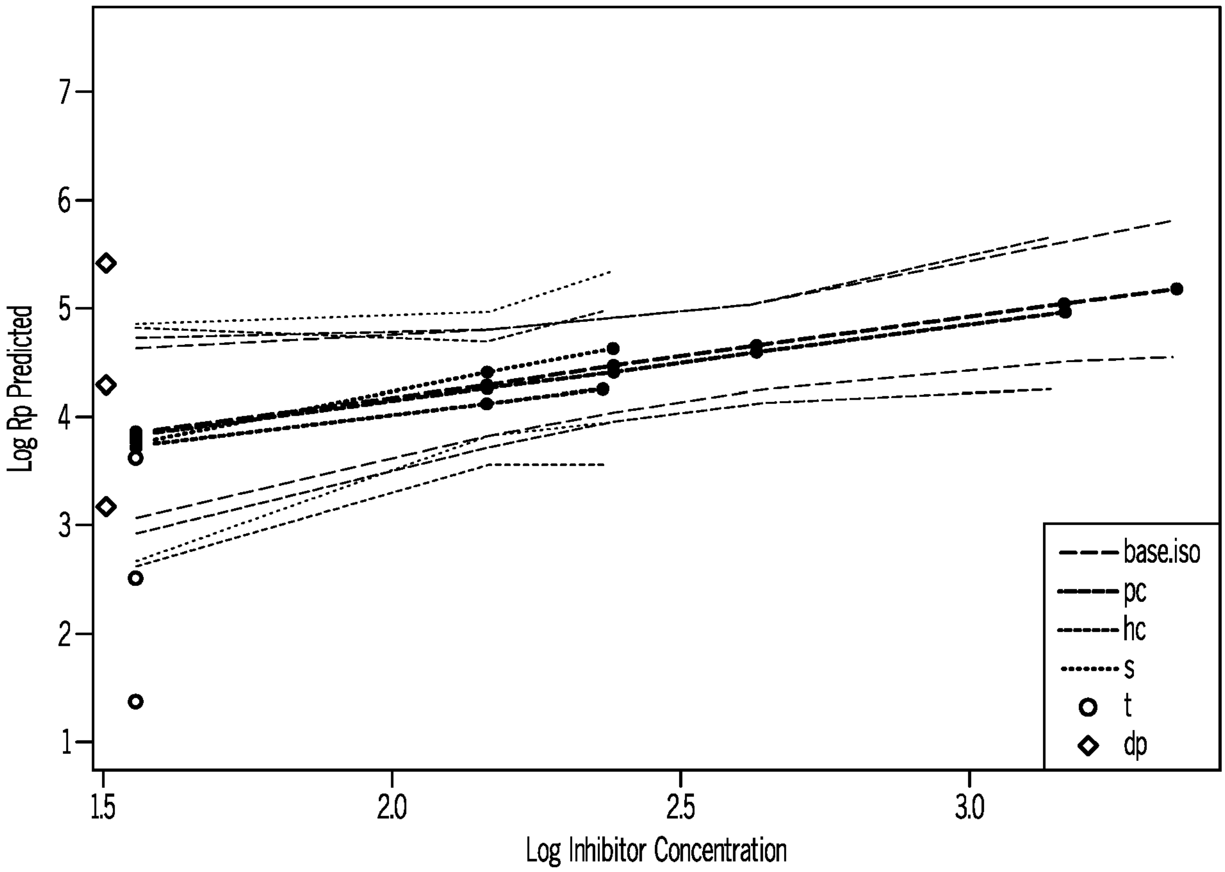
Log Rp Predicted
7
6
5
4
3
2
1
1.5
2.0
2.5
3.0
Log Inhibitor Concentration
base.iso
pc
hc
s
t
dp

FIG. 80

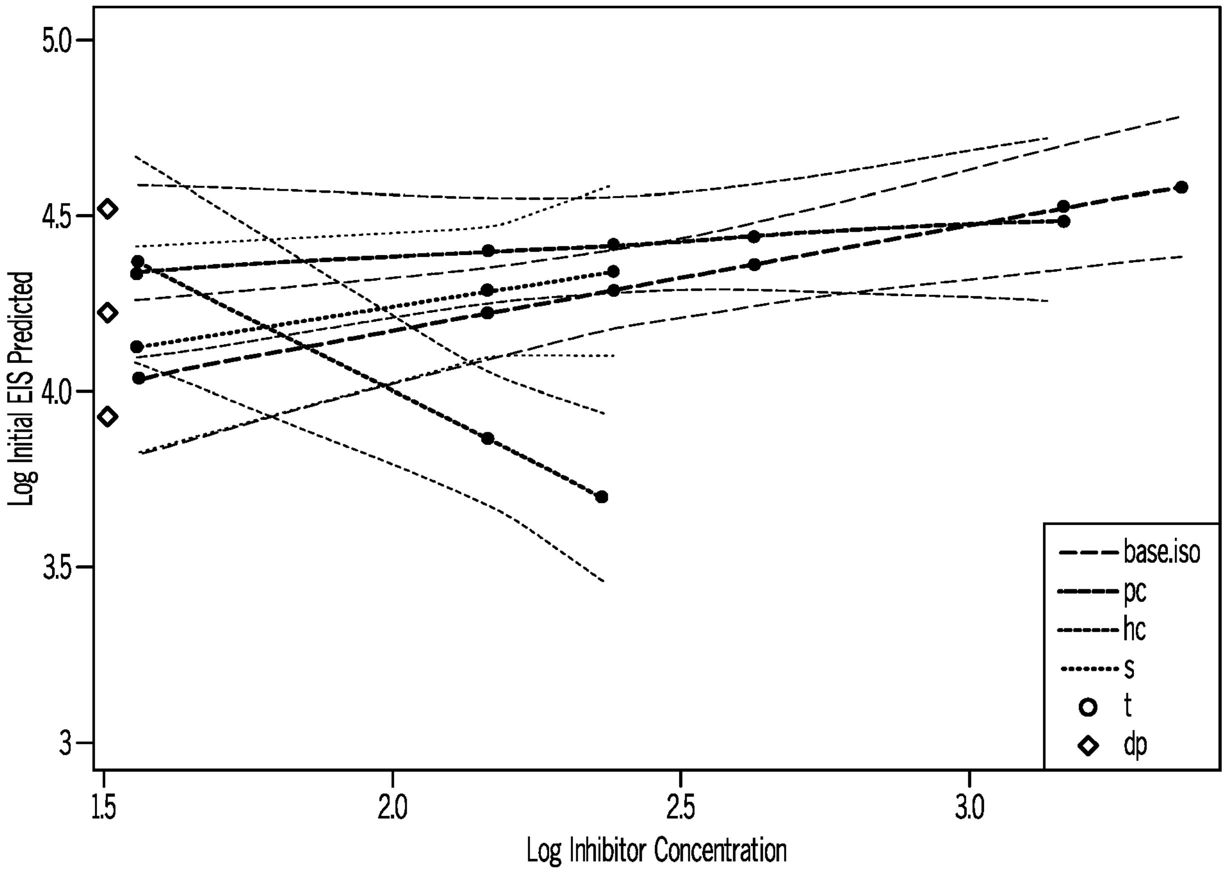
5.0
4.5
4.0
3.5
3
Log Initial EIS Predicted
1.5
2.0
2.5
3.0
Log Inhibitor Concentration
base.iso
pc
hc
s
t
dp

FIG. 81

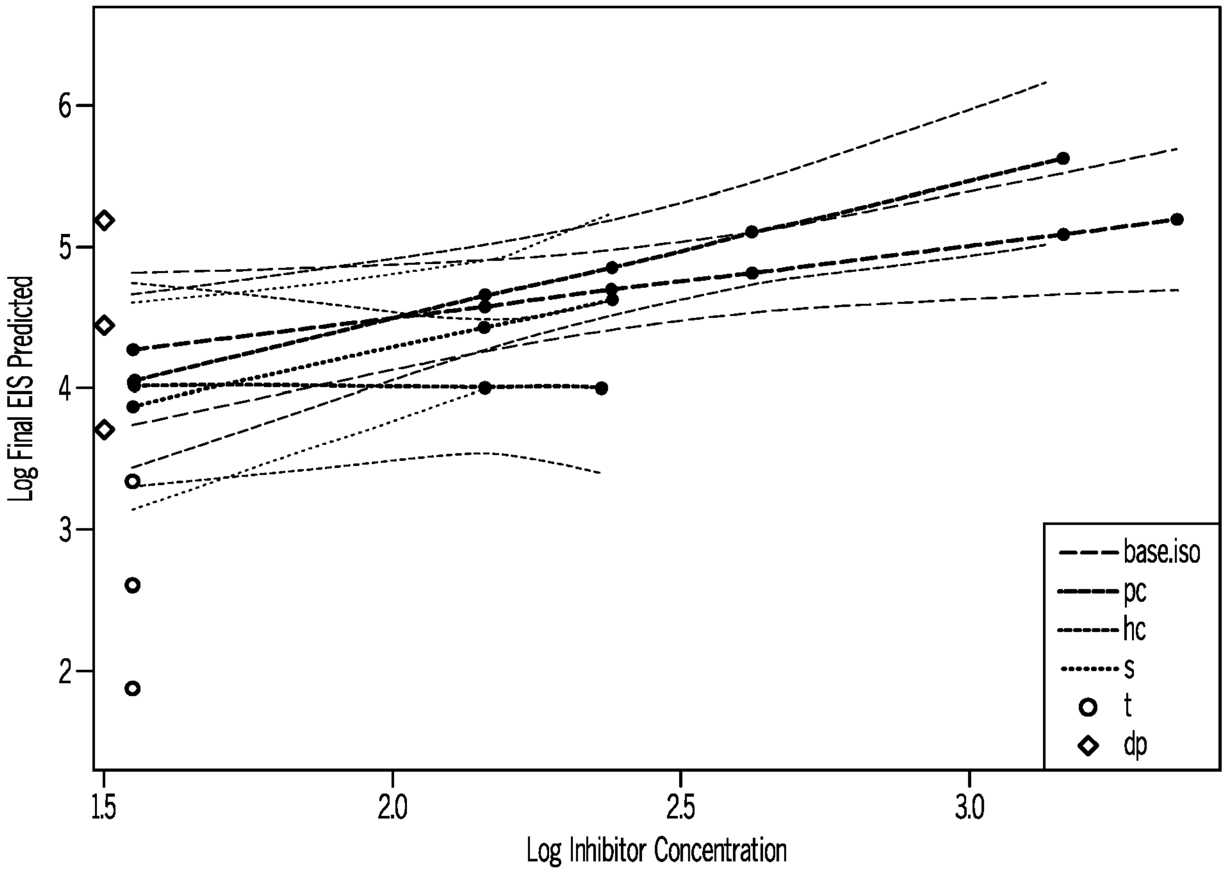
6
5
4
3
2
Log Final EIS Predicted
1.5
2.0
2.5
3.0
Log Inhibitor Concentration
base.iso
pc
hc
s
t
dp

FIG. 82

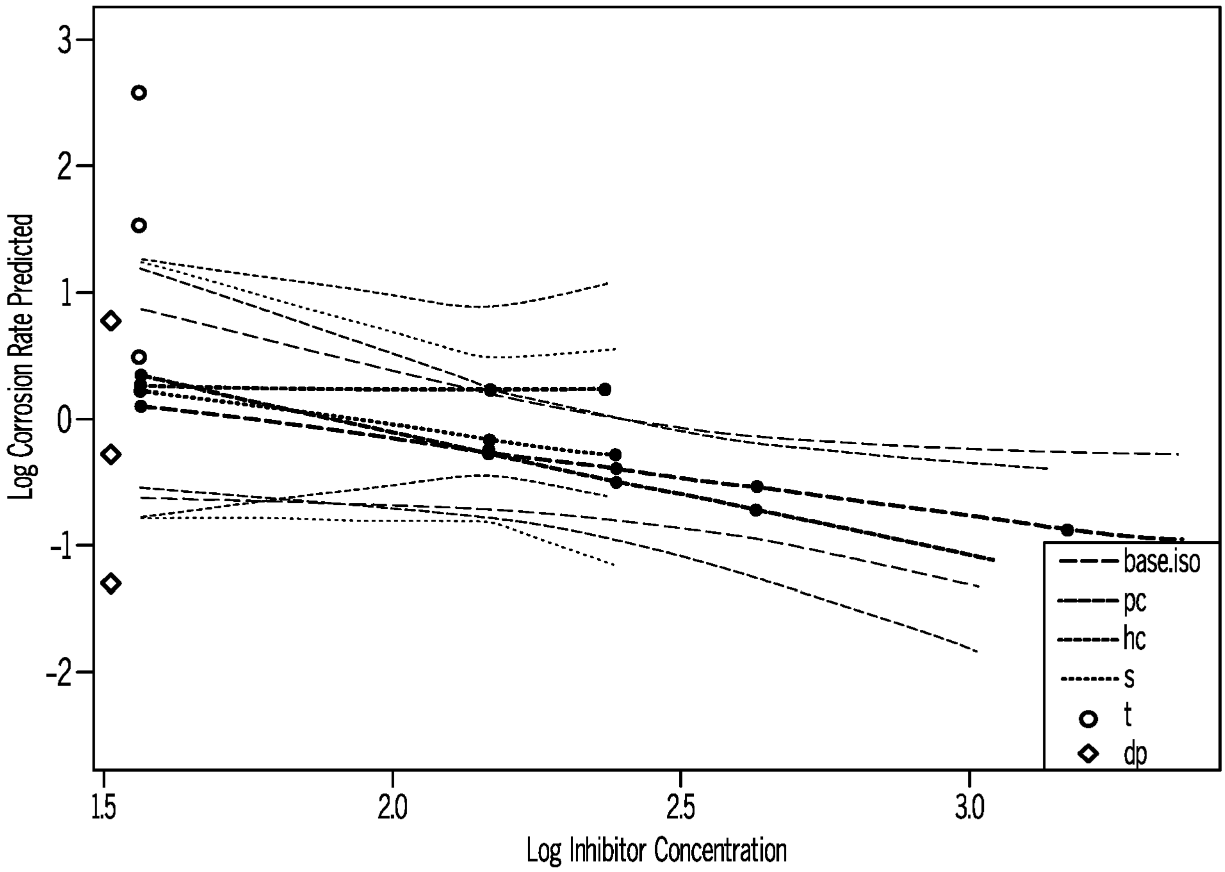

Log Corrosion Rate Predicted
3
2
1
0
-1
-2
1.5
2.0
2.5
3.0
Log Inhibitor Concentration
base.iso
pc
hc
s
t
dp


FIG. 83

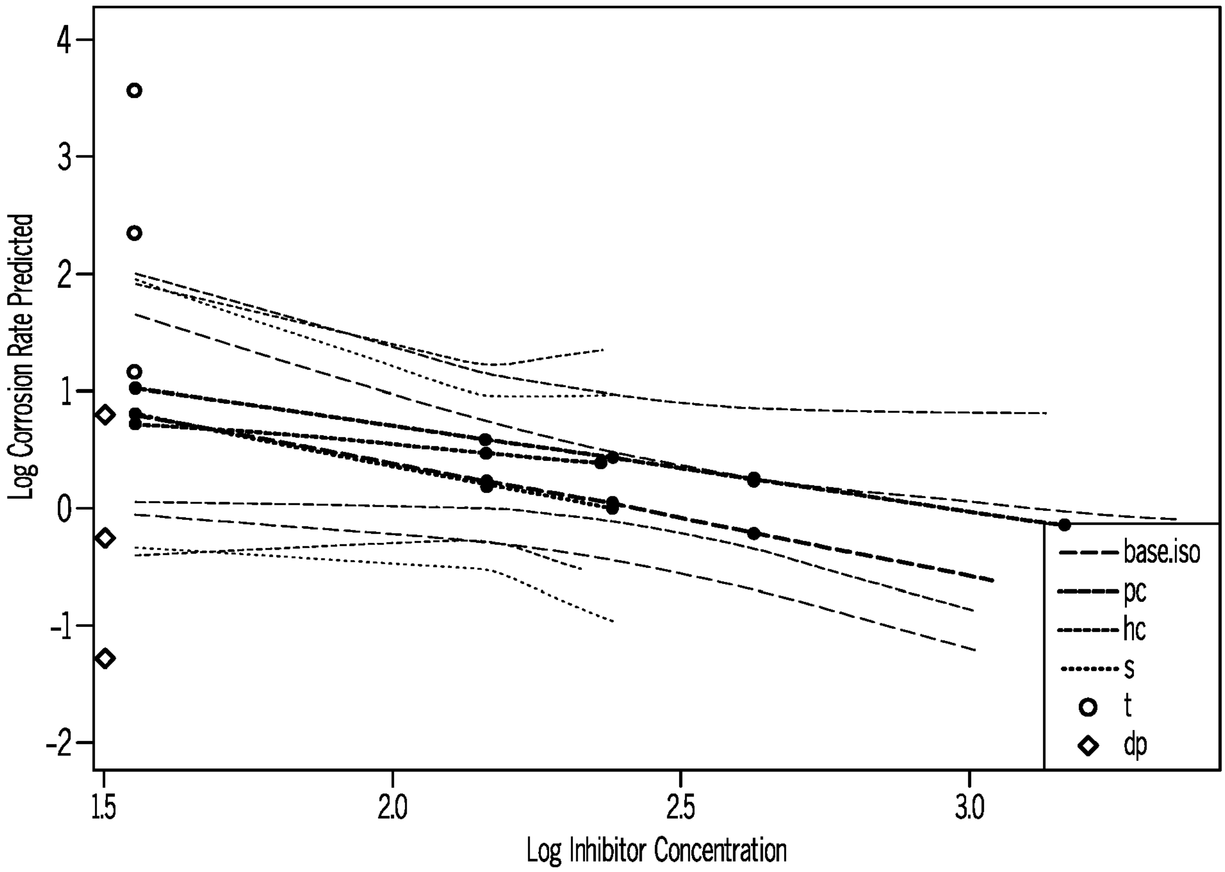
4
3
2
1
0
-1
-2
Log Corrosion Rate Predicted
1.5
2.0
2.5
3.0
Log Inhibitor Concentration
base.iso
pc
hc
s
t
dp

FIG. 84

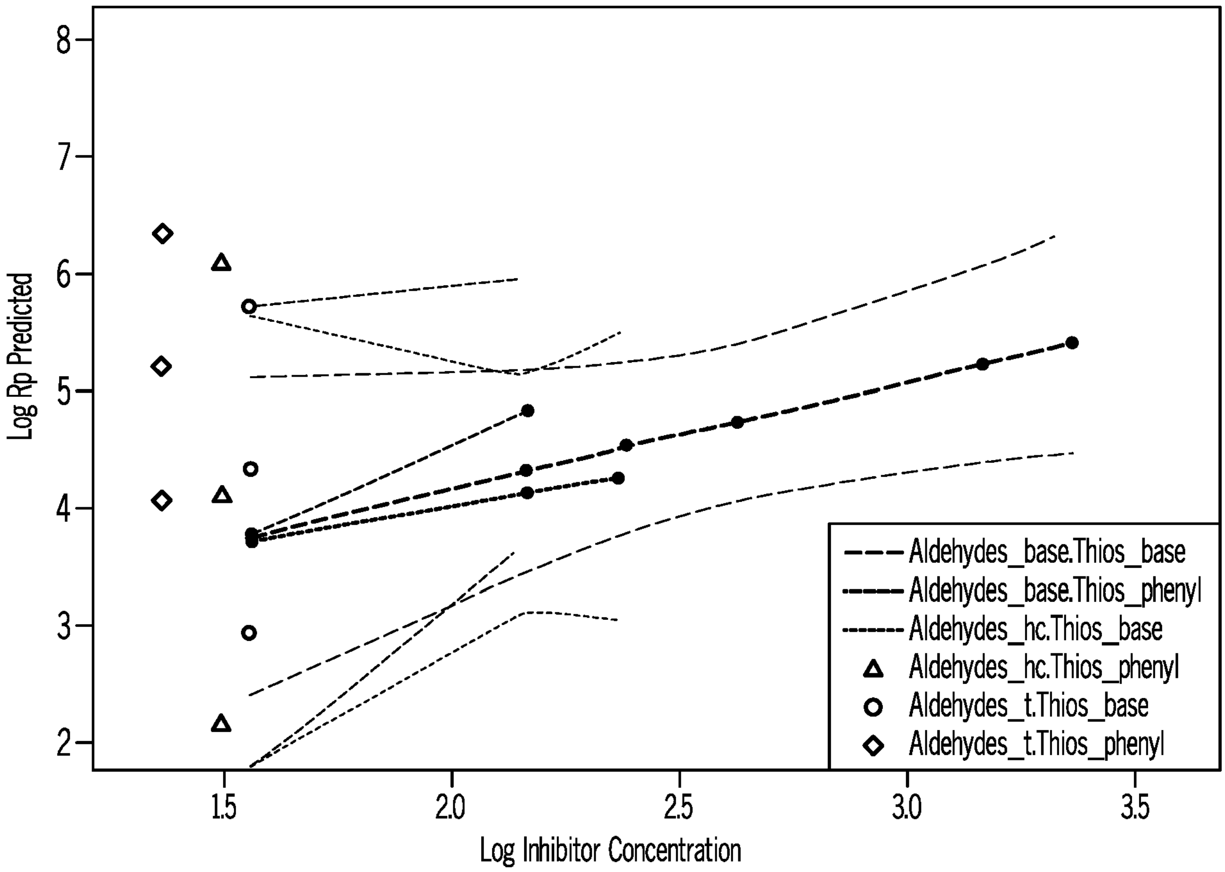
Log Rp Predicted
8
7
6
5
4
3
2
1.5
2.0
2.5
3.0
3.5
Log Inhibitor Concentration
Aldehydes_base.Thios_base
Aldehydes_base.Thios_phenyl
Aldehydes_hc.Thios_base
Aldehydes_hc.Thios_phenyl
Aldehydes_t.Thios_base
Aldehydes_t.Thios_phenyl

FIG. 85

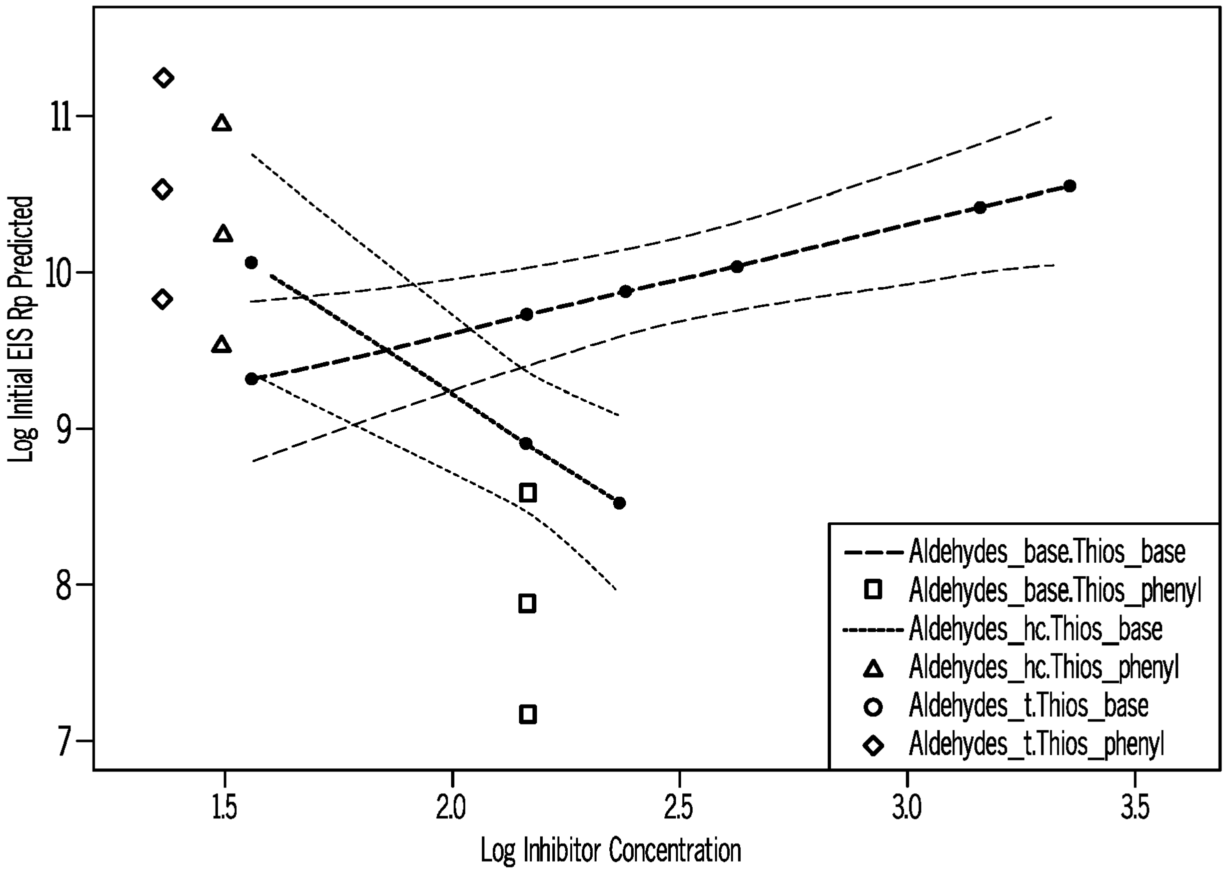
Log Initial EIS Rp Predicted
11
10
9
8
7
1.5
2.0
2.5
3.0
3.5
Log Inhibitor Concentration
Aldehydes_base.Thios_base
Aldehydes_base.Thios_phenyl
Aldehydes_hc.Thios_base
Aldehydes_hc.Thios_phenyl
Aldehydes_t.Thios_base
Aldehydes_t.Thios_phenyl

FIG. 86

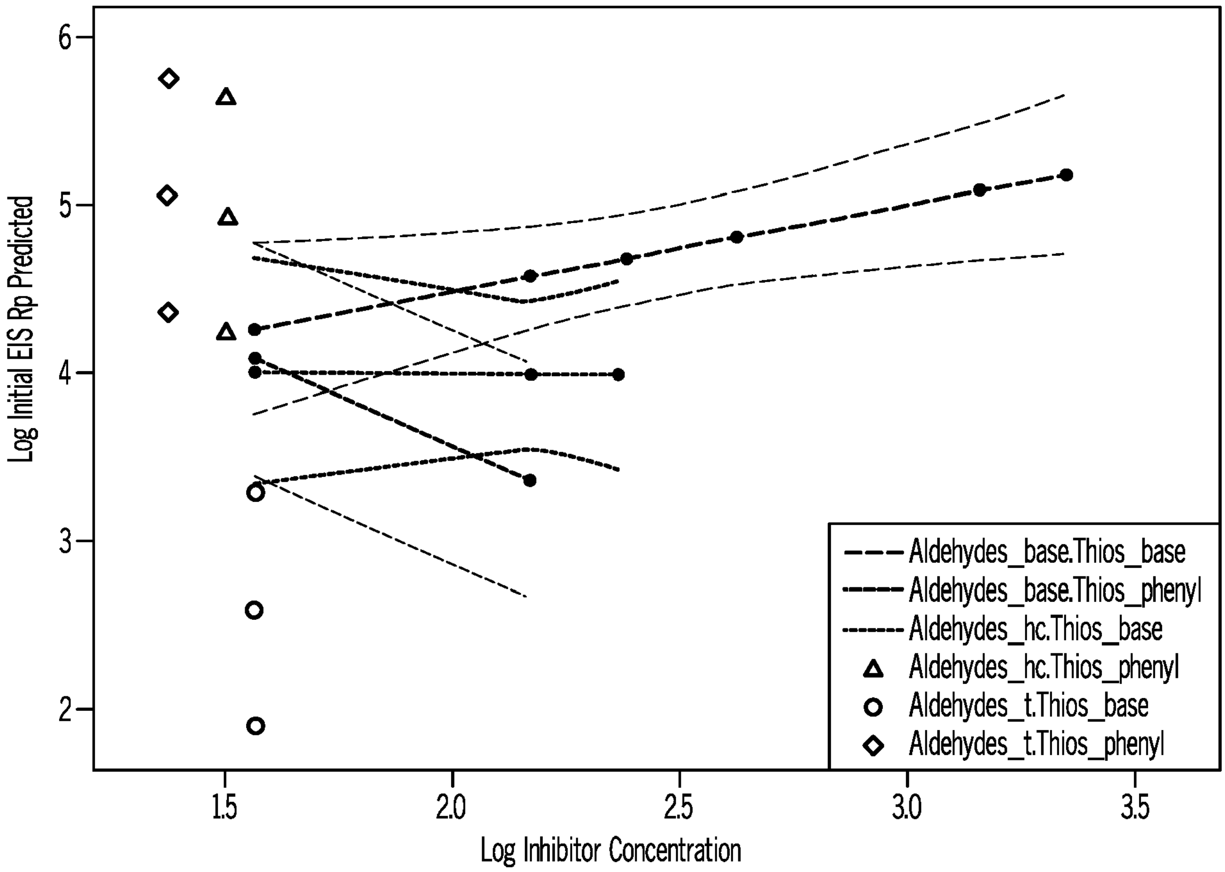
Log Initial EIS Rp Predicted
6
5
4
3
2
1.5
2.0
2.5
3.0
3.5
Log Inhibitor Concentration
Aldehydes_base.Thios_base
Aldehydes_base.Thios_phenyl
Aldehydes_hc.Thios_base
Aldehydes_hc.Thios_phenyl
Aldehydes_t.Thios_base
Aldehydes_t.Thios_phenyl

FIG. 87

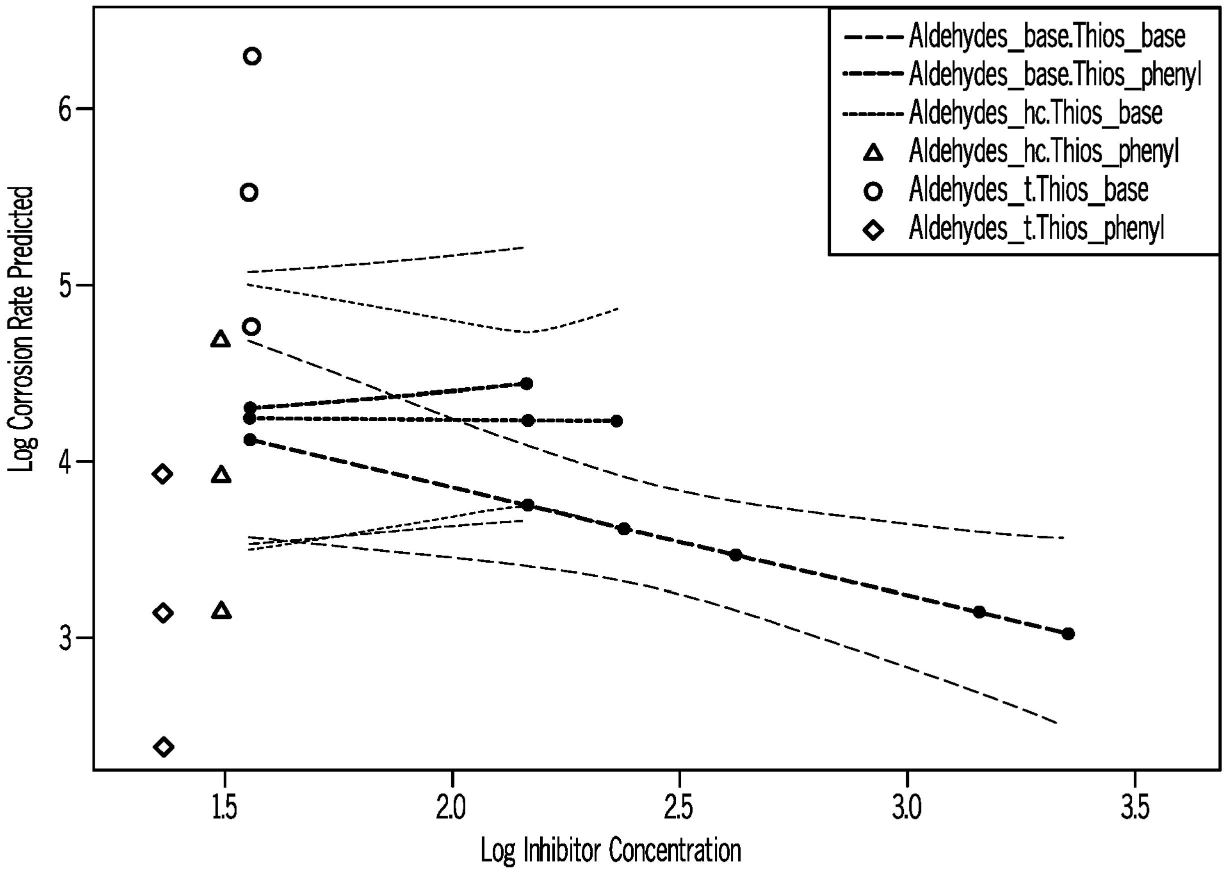
Aldehydes_base.Thios_base
Aldehydes_base.Thios_phenyl
Aldehydes_hc.Thios_base
Aldehydes_hc.Thios_phenyl
Aldehydes_t.Thios_base
Aldehydes_t.Thios_phenyl
6
5
4
3
Log Corrosion Rate Predicted
1.5
2.0
2.5
3.0
3.5
Log Inhibitor Concentration

FIG. 88

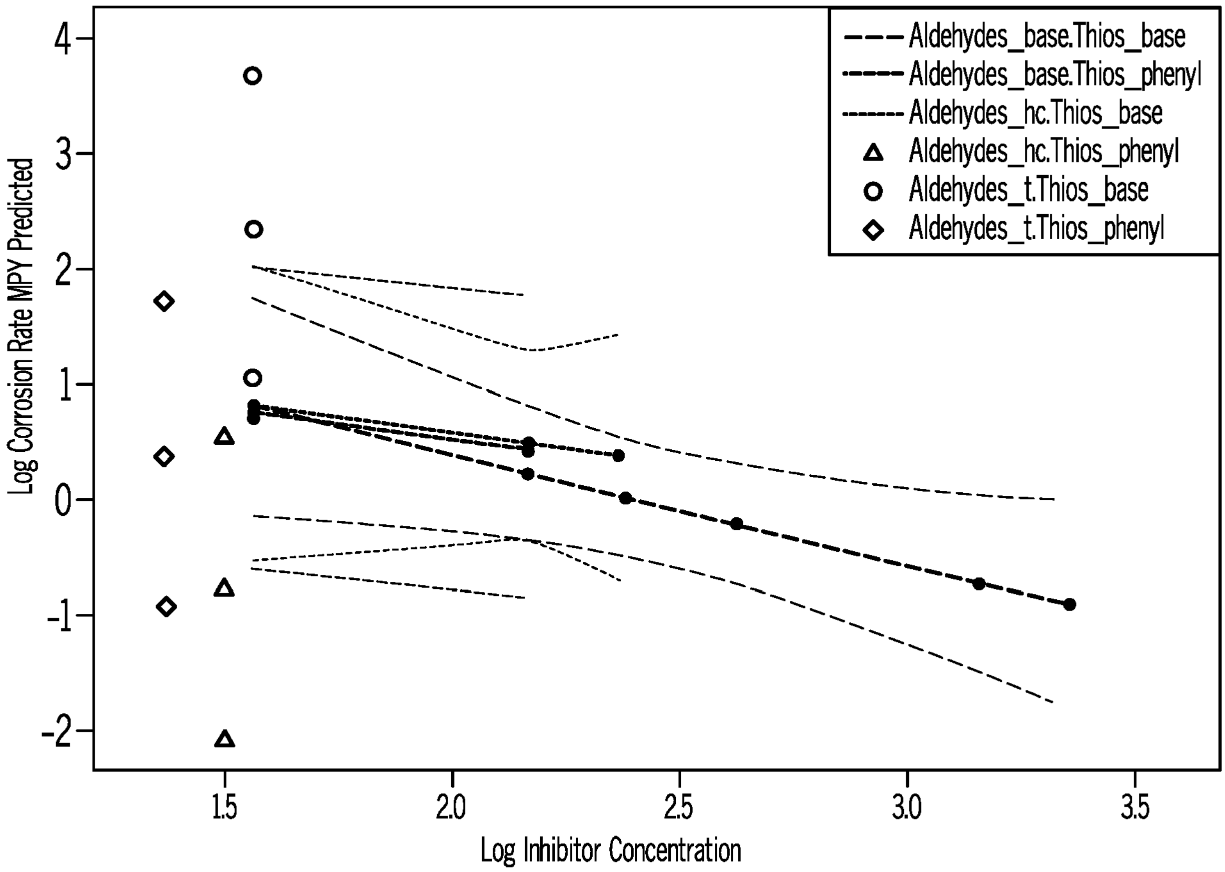
Aldehydes_base.Thios_base
Aldehydes_base.Thios_phenyl
Aldehydes_hc.Thios_base
Aldehydes_hc.Thios_phenyl
Aldehydes_t.Thios_base
Aldehydes_t.Thios_phenyl
Log Corrosion Rate MPY Predicted
4
3
2
1
0
-1
-2
1.5
2.0
2.5
3.0
3.5
Log Inhibitor Concentration

FIG. 89

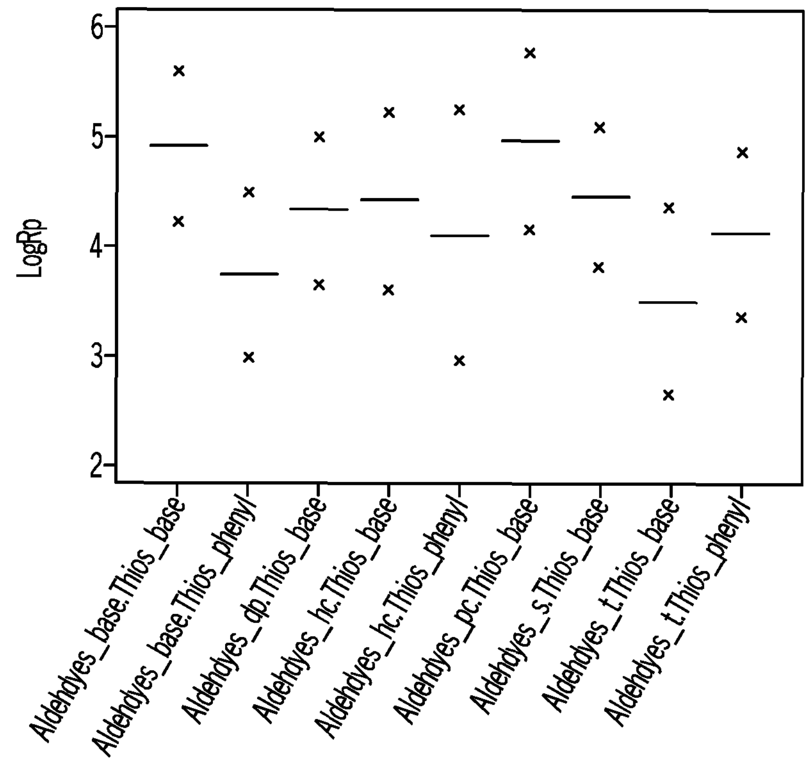

LogRp
6
5
4
3
2
Aldehdyes_base.Thios_base
Aldehdyes_base.Thios_phenyl
Aldehdyes_dp.Thios_base
Aldehdyes_hc.Thios_base
Aldehdyes_hc.Thios_phenyl
Aldehdyes_pc.Thios_base
Aldehdyes_s.Thios_base
Aldehdyes_t.Thios_base
Aldehdyes_t.Thios_phenyl


FIG. 90

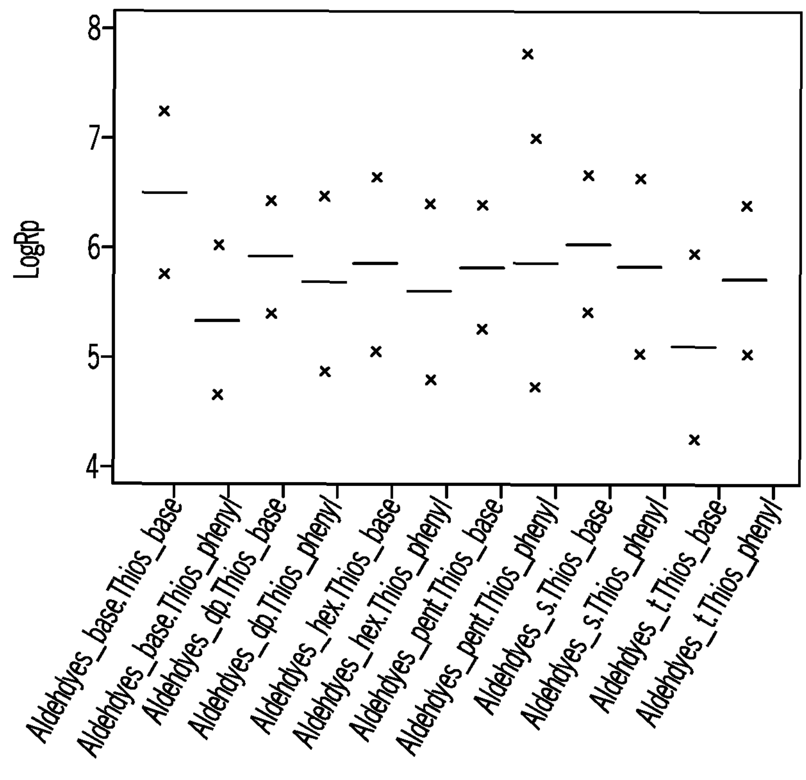

LogRp
8
7
6
5
4
Aldehdyes_base.Thios_base
Aldehdyes_base.Thios_phenyl
Aldehdyes_dp.Thios_base
Aldehdyes_dp.Thios_phenyl
Aldehdyes_hex.Thios_base
Aldehdyes_hex.Thios_phenyl
Aldehdyes_pent.Thios_base
Aldehdyes_pent.Thios_phenyl
Aldehdyes_s.Thios_base
Aldehdyes_s.Thios_phenyl
Aldehdyes_t.Thios_base
Aldehdyes_t.Thios_phenyl


FIG. 91

Europäisches Patentamt
European Patent Office
Office européen des brevets

# EUROPEAN SEARCH REPORT

Application Number
EP 25 16 6842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 112 776 A1 (BOEING CO [US]) 4 January 2023 (2023-01-04) * the whole document * | 1-15 | INV. C23F11/14 C09K8/54 C23F11/16 |
| X | CN 103 924 249 A (NANJING UNIVERSITY OF TECHNOLOGY) 16 July 2014 (2014-07-16) * the whole document * | 1,2,9, 10,12-14 | |
| X | CN 104 831 286 A (UNIV YANGTZE) 12 August 2015 (2015-08-12) * the whole document * | 1,9,12, 13 | |
| X | RAJESWARI VELAYUTHAM ET AL: "Inhibition of Cast Iron Corrosion in Acid, Base, and Neutral Media Using Schiff Base Derivatives", JOURNAL OF SURFACTANTS AND DETERGENTS : JSD ; A JOURNAL OF THE AMERICAN OIL CHEMISTS' SOCIETY, WILEY, vol. 16, no. 4, 30 January 2013 (2013-01-30), pages 571-580, XP035341210, ISSN: 1097-3958, DOI: 10.1007/S11743-013-1439-3 [retrieved on 2013-01-30] * the whole document * | 1,2,5-7, 9-14 | TECHNICAL FIELDS SEARCHED (IPC): C23F C09K |
| X | XU BIN ET AL: "Experimental and theoretical evaluation of two pyridinecarboxaldehyde thiosemicarbazone compounds as corrosion inhibitors for mild steel in hydrochloric acid solution", CORROSION SCIENCE, OXFORD, GB, vol. 78, 14 October 2013 (2013-10-14), pages 260-268, XP028778339, ISSN: 0010-938X, DOI: 10.1016/J.CORSCI.2013.10.007 * the whole document * | 1,2,9, 10,12-14 | |

-/--

1

The present search report has been drawn up for all claims

| Place of search | Date of completion of the search | Examiner |
|---|---|---|
| Munich | 31 July 2025 | Handrea-Haller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 16 6842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AYTAÇ A ET AL: "Experimental and theoretical study of the inhibition effects of some Schiff bases as corrosion inhibitors of aluminium in HCl", MATERIALS AND CORROSION, WILEY, HOBOKEN, USA, vol. 63, no. 8, 1 August 2012 (2012-08-01), pages 729-734, XP001579425, ISSN: 0947-5117, DOI: 10.1002/MACO.201106241 [retrieved on 2011-10-10] * the whole document * ----- | 1,2,9, 12,13,15 | |

TECHNICAL FIELDS SEARCHED (IPC)

The present search report has been drawn up for all claims

1

| Place of search | Date of completion of the search | Examiner |
|---|---|---|
| Munich | 31 July 2025 | Handrea-Haller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 25 16 6842

This annex lists the patent family members relating to the patent documents cited in the above-mentioned European search report. The members are as contained in the European Patent Office EDP file on
The European Patent Office is in no way liable for these particulars which are merely given for the purpose of information.

31-07-2025

| Patent document cited in search report | Publication date | Patent family member(s) | Publication date |
| --- | --- | --- | --- |
| EP 4112776 A1 | 04-01-2023 | EP 4112776 A1 | 04-01-2023 |
| | | US 2023052367 A1 | 16-02-2023 |
| CN 103924249 A | 16-07-2014 | NONE | |
| CN 104831286 A | 12-08-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 17366242 A